# EUROPEAN PATENT APPLICATION

(11) **EP 4 597 411 A1**
(43) Date of publication of application: **06.08.2025**
(21) Application number: 23873275.4
(22) Date of filing: 27.09.2023
(51) Int. Cl.: G06Q 50/12, G06Q 50/14, G06Q 10/083, G06Q 50/10, G06F 16/953, G06Q 10/10, G06Q 30/06

(54) **ACCOMMODATION SHARING DEVICE USING BLOCKCHAIN, AND OPERATION METHOD THEREFOR**

(30) Priority: 27.09.2022 KR 20220122410; 27.09.2022 KR 20220122423; 27.09.2022 KR 20220122452; 27.09.2022 KR 20220122458; 27.09.2022 KR 20220122464; 27.09.2022 KR 20220122670
(71) Applicant: Ceonguk EUI Seolgedo LC., Busan 49235 (KR)
(72) Inventor: KIM, Min Jae, Daegu 41418 (KR)
(74) Representative: IP HILLS NV
(86) International application number: PCT/KR2023/015145
(87) International publication number: WO 2024/072168

(57) **Abstract**

An electronic device according to an embodiment of the present disclosure that is an accommodation sharing device using a blockchain may include a communication module configured to perform open or closed communication with external electronic devices, a processor configured to control an operation of the communication module, and a memory operatively connected to the processor. The memory may include instructions. When the instructions are executed by the processor, the electronic device may generate a first CID including information on a first house or a room of the house provided by a first user. When the instructions are executed by the processor, the electronic device may generate a blockchain for a block of accommodations including specific tag information with which the first CID is able to be identified, in a pair if a security for securing provision of the first house or the room of the house is paid. When the instructions are executed by the processor, the electronic device may generate a blockchain for transferring a possession right of the first house or the room of the house in a form of a non-fungible token (NFT) and provides the NFT to the first user. In addition, various embodiments can be made.

## Description

### [Technical Field]

The present invention relates to an accommodation sharing device using a blockchain (for example, possession right encryption code) for enabling mutual sharing of houses or rooms of travelers, and an operation method therefor.

The present invention relates to an accommodation sharing device capable of block chaining a block of houses to enable mutual sharing of houses or rooms of travelers, and an operation method therefor.

The present invention relates to an accommodation sharing device using a blockchain (for example, possession right encryption code) for enabling mutual sharing of commercial accommodations such as hotels and houses or rooms of travelers, and an operation method therefor.

The present invention relates to an accommodation sharing device capable of blockchaining a block of houses to enable mutual sharing of commercial accommodations such as hotels and houses or rooms of travelers, and an operation method therefor.

The present invention relates to an accommodation sharing device including a door lock device having a possession right transfer function for accommodations with a blockchain (for example, possession right encryption code) to enable mutual sharing of houses or rooms of travelers, and an operation method therefor.

The present invention relates to an accommodation sharing device including a door lock device having a possession right transfer function with a blockchain (for example, possession right encryption code) to enable mutual sharing of houses or rooms of travelers and commercial accommodations such as hotels, and an operation method therefor.

### [Background Art]

With the rapid development of the Internet industry, people today live in various sharing economy environments. The sharing economy refers to economy based on collaborative consumption that many people share and use a product produced once, and means "sharing" in plain words. The sharing economy means an economy activity for maximizing resource utilization by sharing items or real state being less utilized such as vehicles, vacancies, or books with other people. The sharing economy refers to a consumption type that increases utilization efficiency of goods for possessors and allows purchasers to use goods at low cost. While the existing sharing economy is a system for an unspecified number of people, recently, residents in apartments use items or services together in the form of "community sharing economy".

For real estate, as a representative example that stands for an accommodation sharing service, Airbnb started in San Francisco August, 2008 is known; however, Airbnb is a guesthouse sale service, not an accommodation sharing service, and is a service in which people rent houses or rooms being used by other people while paying accommodation fees. On the other hand, the sharing economy is a concept that has newly arisen after the shock of the American economic crisis in 2008 and has been first created by Lawrence Lessig who is a Harvard Law School professor. The sharing economy is a concept that has arisen in contrast with the capitalistic economy in the 20th century characterized by mass production and mass consumption. That is, in accommodation (or real estate) sharing under the sharing economy, since people share and use accommodations with each other, sharing transactions should not create profits through sale basically. If profits are created through sale, accommodation sharing becomes accommodation sale under the market economy.

From this point, in regard to shared accommodations, for example, people who want to travel should be able to share houses (or rooms) of other people corresponding to desired positions and conditions with their accommodations without spending any costs, instead of renting houses or rooms while paying accommodation fees to commercially available accommodation facilities such as hotels or guesthouses. However, since smooth adjustment of demand and supply for accommodation sharing is difficult, there is a problem in that a sharing transaction itself is not established. The reason that smooth adjustment of demand and supply for accommodation sharing is difficult is because accommodation sharing cannot be established even when one of parties to accommodation sharing determines an accommodation according to desired conditions, and there are necessarily both parties to accommodation sharing simultaneously. Furthermore, accommodation sharing is established when various conditions such as a position of each party to an accommodation, date of use, and the number of bedrooms are all satisfied, and as a result, an accommodation sharing transaction itself is difficult to be accomplished even when any one condition is not satisfied. From this point, it is very difficult to construct an environment in which a sharing transaction for actually exchanging and using accommodations can be accomplished. Accordingly, there is a limitation that a current accommodation sharing environment does not escape from a simple guesthouse sale type.

As described above, to solve such problems and enable sharing of accommodations, since a likelihood that conditions of parties to accommodation sharing match each other increases when there are a large number of candidates for accommodations to be share first of all, it is preferential to secure a large number of candidate accommodations to increase a possibility of accomplishing a sharing transaction in all aspects. Incidentally, a problem is caused by a distance between accommodations. The reason is as follows. If positions of accommodations in areas that people want to visit for travel are in nearby towns or areas, the people visit the accommodations in advance to confirm whether the accommodations can be normally shared. However, actually, it is not necessary to share accommodations to visit nearby areas, and people can just visit the areas using cars. From this point, in general, in a case where people want to share accommodations at long distances for travel or business trip, accommodation sharing is required. Accordingly, most of accommodations at long distances are likely to be sharing candidates; however, it is very difficult in reality for people to visit the accommodations at long distances while spending costs to confirm whether the accommodations can be normally shared.

An existing digital door lock is mounted in a door, and corresponds to a technique that transmits an event (for example, when a password is input to a keypad provided in the door lock or when an electronic key with which the door lock can be unlocked is within a prescribed distance at which a locked state of the door lock is released) generated indoors or outdoors based on the door, which is an entrance of a room (or a house), to a related device in a wired or wireless manner, and unlocks a locking device of the door or restores the locking device to a locked state in response to the event.

The present invention is for enabling mutual sharing of rooms (or houses) of travelers, such that a purpose of an accommodation sharing transaction is ultimately achieved only when a possession right of an accommodation provided by the other party is acquired.

The present invention is for enabling mutual sharing of commercial accommodations such as hotels and rooms (or houses) of travelers, so that a purpose of an accommodation sharing transaction is ultimately achieved when a possession right of an accommodation provided from the other party is acquired.

A final purpose of an accommodation sharing transaction is possession right transfer. Meanwhile, in renting accommodations that are being used by people who do not know each other and are in foreign countries tens of thousands of miles away, a person should comply with an essential rule to surely provide his/her accommodation to the other party. To solve this problem, both parities need to give confidence simultaneously. The reason is because, for transfer of a real estate possession right, a person can acquire goods to be shared when a person enters and occupies an accommodation or a room (or a house). Accordingly, it is not right when only one party gives confidence, and means capable of acquiring conditions to be irreversibly recognizable between the parties simultaneously is necessarily provided.

Specifically, one party believes in the other party that the other party will provide the accommodation of the other party and provides his/her room (or house) to the other party on a day on which the other party will visit. Then, to use the accommodation of the other party in a foreign country tens of thousands of miles away, one party visits an area where there is an accommodation of the other party with spending a lot of airfare and time. However, when one party visits the accommodation of the other party, one party may not use the accommodation (regardless of whether the reason is intentional). In this case, it cannot be assumed that one party who provides the accommodation or the room (house) to the other party will not suffer harm.

To achieve accommodation sharing for implementing the present invention, rooms (or houses) of at least two travelers should be provided simultaneously, and in some cases, there may be more groups of travelers than two travelers as the members of the sharing transaction.

To achieve accommodation sharing for implementing the present invention, an accommodation of at least one hotel and a room (or a house) of at least one traveler should be provided simultaneously, and in some cases, there may be more groups of hotels or travelers than one hotel or traveler as the member of the sharing transaction.

An accommodation sharing transaction is characterized on the premise that all accommodations (or rooms) in one sharing group are provided to the members according to a designated schedule. Accordingly, when one member wants to change a day during a transaction, instead of slightly changing a check-in or check-out time, there is a problem in that a schedule for sequential visits (or use) of the accommodation of all members should be changed. For this reason, visits of the accommodation of all members in the same group may not be made.

The above information is presented as background information only to assist with an understanding of the disclosure. No determination has been made, and no assertion is made, as to whether any of the above might be applicable as prior art with regard to the disclosure.

### Summary of Invention

### [Technical Problem]

For commercial accommodation facilities such as hotels, owners of the commercial accommodation facilities provide accommodations in the accommodation facilities to people for the purpose of sharing the accommodations with travelers for travel. However, this is basically completely contrary to the purpose of operating the accommodation facilities.

Even when the owner of the commercial accommodation facility can share the accommodations with travelers, a room in the accommodation facility may be vacant or not in a period during which the room can be provided to be shared, in an entire period. Furthermore, from a point of the commercial accommodation facility, the room in the accommodation facility should not be left empty for a prescribed period only for sharing. For this reason, if real-time information on a period during which the room is left empty is not provided to travelers, there is a problem in that a likelihood of accomplishing a sharing transaction is reduced.

For accommodation sharing itself, since it is very difficult to form a group of members who provide accommodations for sharing and to conclude a contract between the members, to achieve the object, it is important to secure many candidate accommodations to be shared and to maximize a likelihood of accomplishing a transaction as described above.

In general, an existing technique for selling (renting) authority to use accommodations is a web posting method in which relevant information is provided to netizens through web pages and a web page is generated for each accommodation having an Internet address in a form of a URL for allowing netizens to purchase authority to use the accommodation.

According to such a method, since the web page is generated for each accommodation and the netizens access the web page for each accommodation to identify related information always, there is a problem in that the loss of network resources occurs due to traffic that is accumulated to increase a likelihood of accommodation sharing.

The technical subjects pursued in the disclosure are not limited to the above-described technical subjects, and other technical subjects that are not described will become apparent to those skilled in the art from the following descriptions.

### [Solution to Problem]

According to an embodiment of the present disclosure, there is provided an electronic device that is an accommodation sharing device, the electronic device including a communication module configured to perform open or closed communication with external electronic devices, a processor configured to control an operation of the communication module, and a memory operatively connected to the processor. The memory may include instructions. When the instructions are executed by the processor, the electronic device may be configured to generate a unique contents ID (CID) in linking with the Internet or a closed network. When the instructions are executed by the processor, the electronic device may be configured to generate at least two pieces of latitude information and two or more pieces of longitude information. When the instructions are executed by the processor, the electronic device may be configured to generate one unique CID corresponding to any one house or a room of the house positioned in coordinates corresponding one latitude and one longitude among the at least two pieces of latitude information and the two or more pieces of longitude information. When the instructions are executed by the processor, the electronic device may be configured to generate at least one piece of block data including specific service gates with which a position of specific block data on a network can be identified or specific tag information with which the specific service gates can be identified, in a pair.

According to an embodiment of the present disclosure, there is provided an electronic device that an accommodation sharing device using a blockchain, the electronic device including a communication module configured to perform open or closed communication with external electronic devices, a processor configured to control an operation of the communication module, and a memory operatively connected to the processor. The memory may include instructions. When the instructions are executed by the processor, the electronic device may be configured to generate a first CID including information on a first house or a room of the house provided by a first user. When the instructions are executed by the processor, the electronic device may be configured to generate a blockchain for block houses including specific tag information with which the first CID can be identified, in a pair if a first security for securing provision of the first house or the room of the house is paid. When the instructions are executed by the processor, the electronic device may be configured to provide a blockchain for transferring a possession right of the first house or the room of the house in a form of a non-fungible token (NFT) and provide the NFT to the first user.

According to an embodiment of the present disclosure, there is provided an electronic device that is an accommodation sharing device using a blockchain, the electronic device including a communication module configured to perform open or closed communication with external electronic devices, a processor configured to control an operation of the communication module, and a memory operatively connected to the processor. The memory may include instructions. When the instructions are executed by the processor, the electronic device may be configured to generate a first CID including information on a first house or a room of the house provided by a first user. When the instructions are executed by the processor, the electronic device may be configured to generate a blockchain for block houses including specific tag information with which the first CID can be identified, in a pair if a first security for securing provision of the first house or the room of the house is paid. When the instructions are executed by the processor, the electronic device may be configured to generate a blockchain for block houses including specific tag information with which the first CID can be identified, in a pair if a first security for securing provision of the first house or the room of the house is paid. When the instructions are executed by the processor, the electronic device may be configured to generate a blockchain for transferring a possession right of the first house or the room of the house in a form of an NFT. When the instructions are executed by the processor, the electronic device may be configured such that information for controlling an operation of a first door lock device of the first house or the room of the house is included in the NFT. When the instructions are executed by the processor, the electronic device may be configured to provide the NFT to the first user.

An electronic device 101 (for example, accommodation sharing system) (for example, accommodation sharing device) (for example, electronic device including web server) according to an embodiment of the present invention is presented.

The electronic device 101 (for example, accommodation sharing system) (for example, accommodation sharing device) (for example, electronic device including web server) may configure a service gate (for example, service gate 320 in FIGS. 3 and 5), an electronic device 101 (for example, accommodation sharing device) (for example, electronic device including web server), a shared accommodation management device 002, a block accommodation retrieval and access device (for example, block accommodation retrieval and access device 1810 in FIG. 18), and the like.

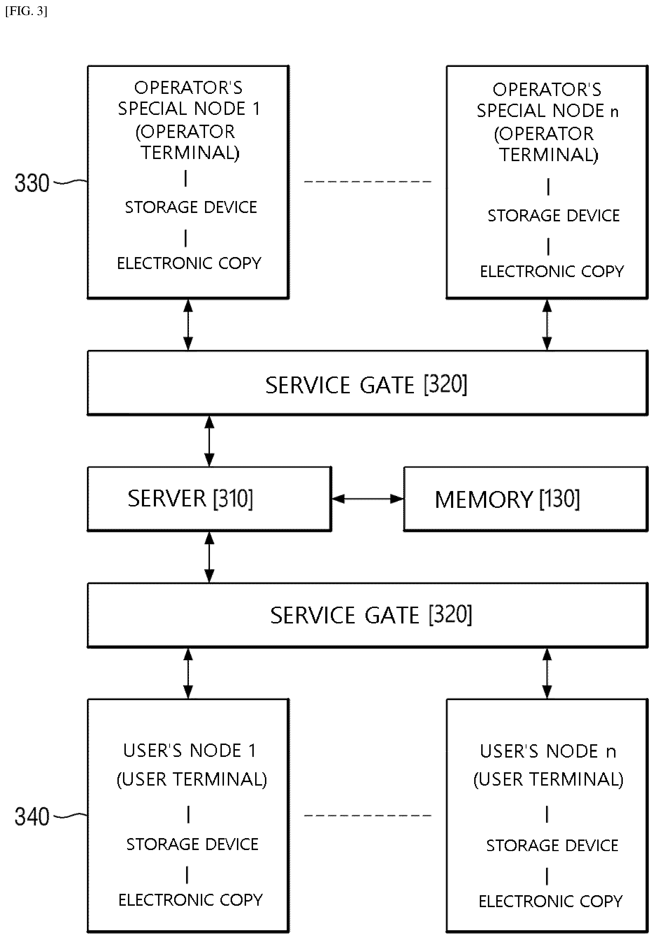

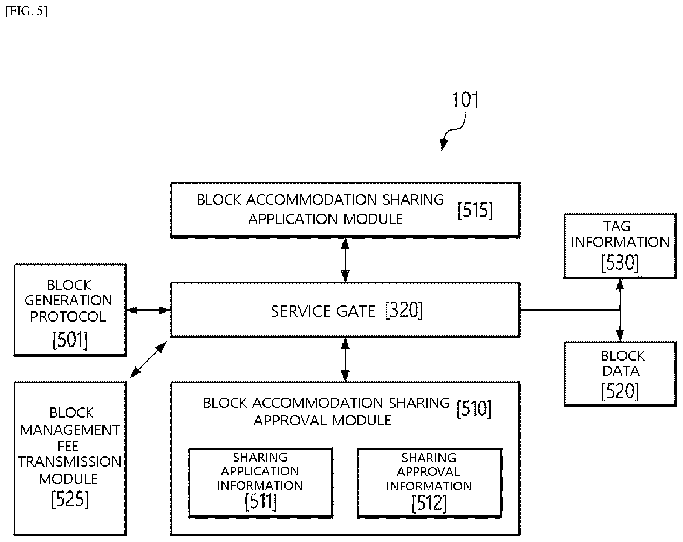

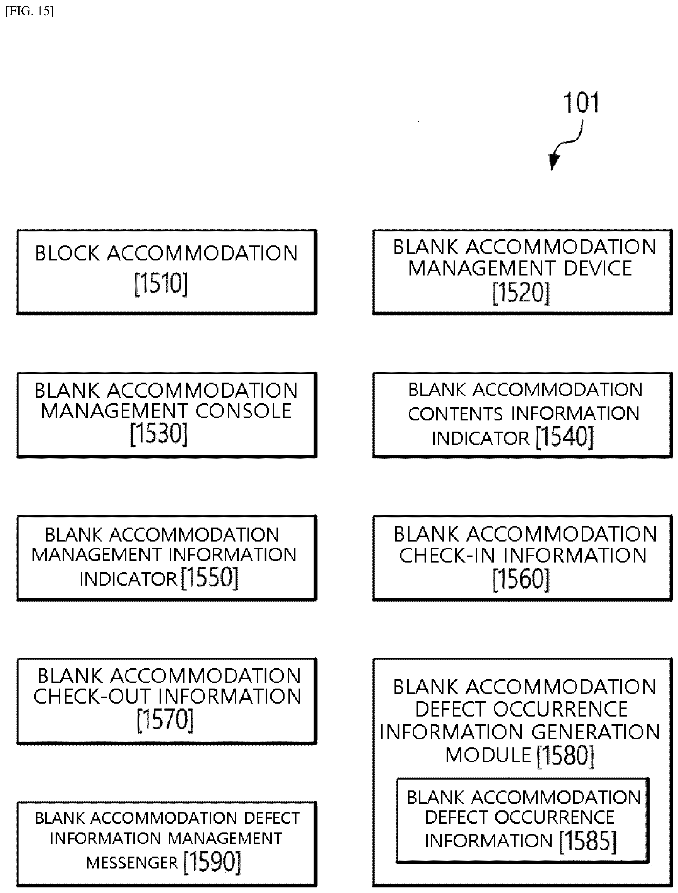

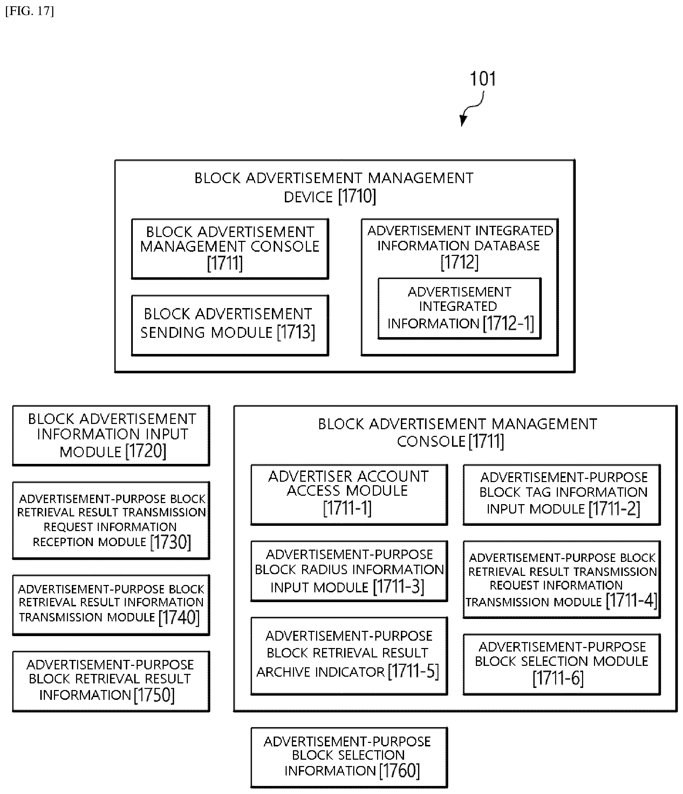

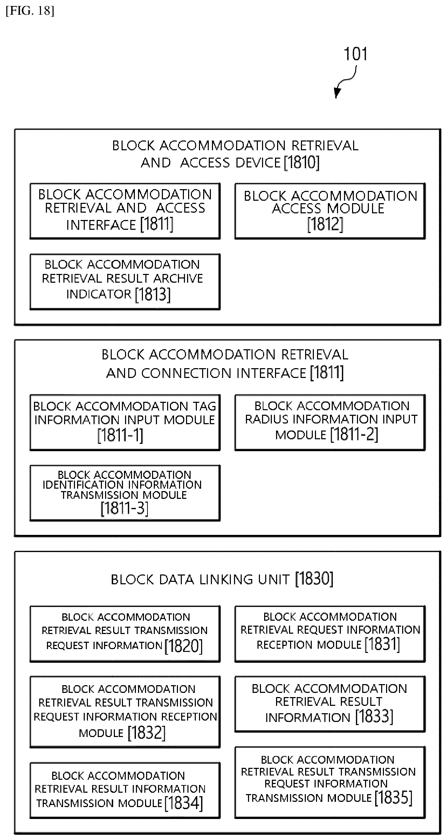

The electronic device 101 (for example, accommodation sharing system) (for example, accommodation sharing device) (for example, electronic device including web server) may configure a service gate (for example, service gate 320 in FIGS. 3 and 5), an electronic device 101 (for example, accommodation sharing device) (for example, electronic device including web server), a blank accommodation management device (for example, blank accommodation management device 1520 in FIG. 15), a hotel accommodation integrated information database (for example, accommodation integrated information database 550 in FIG. 5), a block advertisement management device (for example, block advertisement management device 1710 in FIG. 17), a block accommodation retrieval and access device (for example, block accommodation retrieval and access device 1810 in FIG. 18), and the like.

The electronic device 101 (for example, accommodation sharing system) (for example, accommodation sharing device) (for example, electronic device including web server) may further include a server that operates on the Internet or a prescribed network (closed or open), performs communication with a device or means for implementing the present invention, and includes a database configured to perform various calculations.

The service gate (for example, service gate 320 in FIGS. 3 and 5) may include a function for access of a terminal (a terminal of a netizen, an administrator, or the like) of a prescribed user to a web site for implementing the present invention or the above-described network, a function of an Internet address (or an access address on the network) for access to data on the web site or the like, a function of an IP address (an Internet protocol address) (for example, dynamic IP or fixed IP), a domain, or a uniform resource locator (URL), a function of an interplanetary file system (IPFS), and the like.

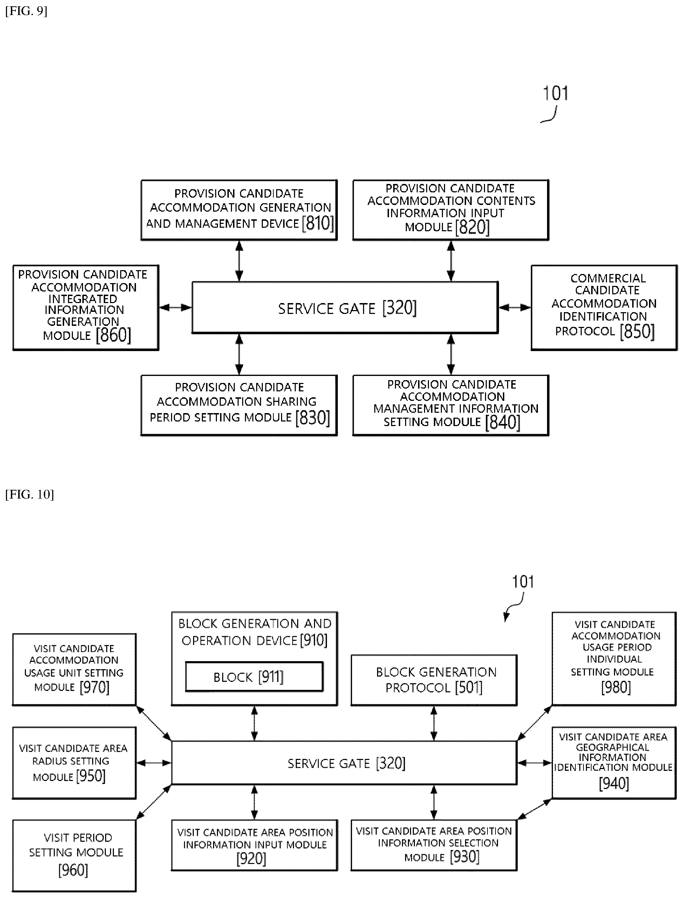

The electronic device 101 (for example, accommodation sharing device) (for example, electronic device including web server) for implementing the present invention may configure a provision candidate accommodation generation and management device (for example, provision candidate accommodation generation and management device 810 in FIG. 9), a block generation and operation device (for example, block generation and operation device 910 in FIG. 10), a block data linking device (for example, block data linking device 1830 in FIG. 18), and the like.

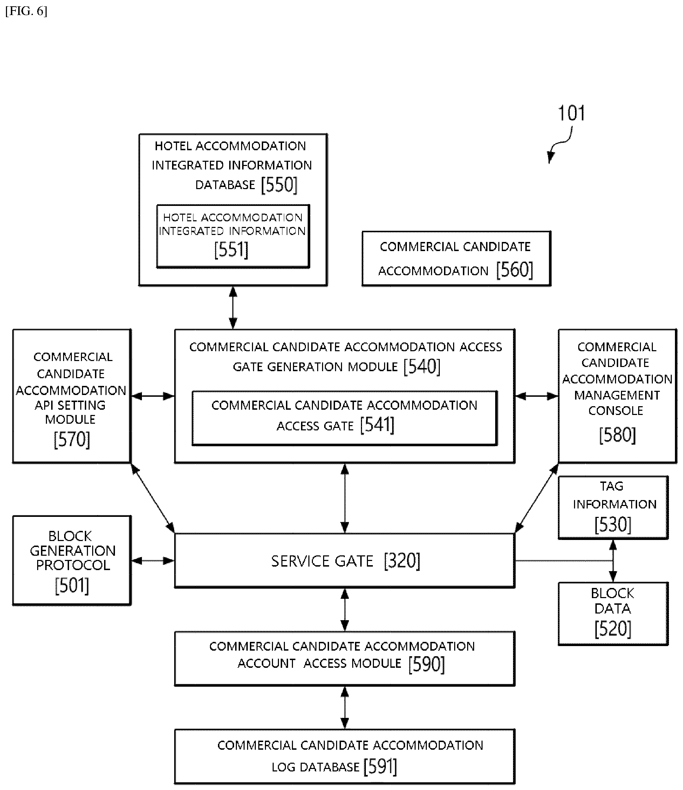

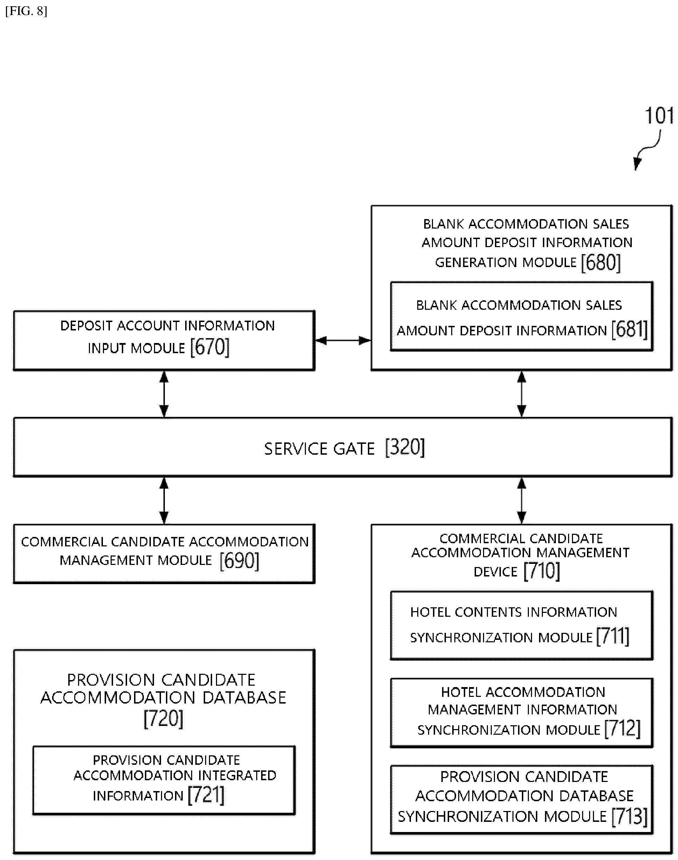

The electronic device 101 (for example, accommodation sharing device) (for example, electronic device including web server) for implementing the present invention may configure a commercial candidate accommodation access gate generation module (for example, commercial candidate accommodation access gate generation module 540 in FIG. 6), a commercial candidate accommodation management device (for example, commercial candidate accommodation management device 710 in FIG. 8), a commercial candidate accommodation log database (for example, commercial candidate accommodation log database 591 in FIG. 6), a provision candidate accommodation generation and management device (for example, provision candidate accommodation generation and management device 810 in FIG. 9), a block generation and operation device (for example, block generation and operation device 910 in FIG. 10), a block data linking device (for example, block data linking device 1830 in FIG. 18), and the like.

The commercial candidate accommodation management device (for example, commercial candidate accommodation management device 710 in FIG. 8) may configure a commercial candidate accommodation management console (for example, commercial candidate accommodation management console 580 in FIG. 6), a hotel accommodation contents information synchronization module (for example, hotel accommodation contents information synchronization module 711 in FIG. 8), a hotel accommodation management information synchronization module (for example, hotel accommodation management information synchronization module 712 in FIG. 8), a provision candidate accommodation database synchronization module (for example, provision candidate accommodation database synchronization module 713 in FIG. 8), and the like.

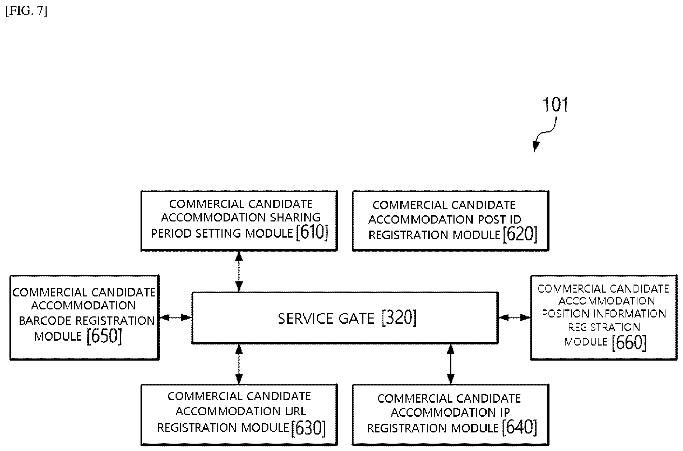

The commercial candidate accommodation management console (for example, commercial candidate accommodation management console 580 in FIG. 6) may configure a commercial candidate accommodation account access module (for example, commercial candidate accommodation account access module 590 in FIG. 6), a commercial candidate accommodation sharing period setting module (for example, commercial candidate accommodation sharing period setting module 610 in FIG. 7), a commercial candidate accommodation POST ID registration module (for example, commercial candidate accommodation POST ID registration module 620 in FIG. 7), a commercial candidate accommodation URL registration module (for example, commercial candidate accommodation URL registration module 630 in FIG. 7), a commercial candidate accommodation IP registration module (for example, commercial candidate accommodation IP registration module 640 in FIG. 7), a commercial candidate accommodation barcode registration module (for example, commercial candidate accommodation barcode registration module 650 in FIG. 7), a commercial candidate accommodation position information registration module (for example, commercial candidate accommodation position information registration module 660 in FIG. 7), a deposit account information input module (for example, deposit account information input module 680 in FIG. 8), a commercial candidate accommodation API setting module (for example, commercial candidate accommodation API setting module 570 in FIG. 6), a commercial candidate accommodation management module (for example, commercial candidate accommodation management module 680 in FIG. 8), and the like.

The provision candidate accommodation generation and management device (for example, provision candidate accommodation generation and management device 810 in FIG. 9) for implementing the present invention may configure a provision candidate accommodation contents information input module (for example, provision candidate accommodation contents information input module 820 in FIG. 9), a provision candidate accommodation sharing period setting module (for example, provision candidate accommodation sharing period setting module 830 in FIG. 9), a provision candidate accommodation management information setting module (for example, provision candidate accommodation management information setting module 840 in FIG. 9), a commercial candidate accommodation identification protocol (for example, commercial candidate accommodation identification protocol 850 in FIG. 9), a provision candidate accommodation integrated information generation module (for example, provision candidate accommodation integrated information generation module 860 in FIG. 9), a provision candidate accommodation database (for example, provision candidate accommodation database 720 in FIG. 8), and the like.

According to an embodiment, the provision candidate accommodation integrated information generation module (for example, provision candidate accommodation integrated information generation module 860 in FIG. 9) may configure a function of generating provision candidate accommodation integrated information (for example, provision candidate accommodation integrated information 721 in FIG. 8) to record information an accommodation input or set through the provision candidate accommodation contents information input module (for example, provision candidate accommodation contents information input module 820 in FIG. 9), the provision candidate accommodation sharing period setting module (for example, provision candidate accommodation sharing period setting module 830 in FIG. 9), and the provision candidate accommodation management information setting module (for example, provision candidate accommodation management information setting module 840 in FIG. 9), and recording the provision candidate accommodation integrated information in the provision candidate accommodation database (for example, provision candidate accommodation database 720 in FIG. 8, or the like.

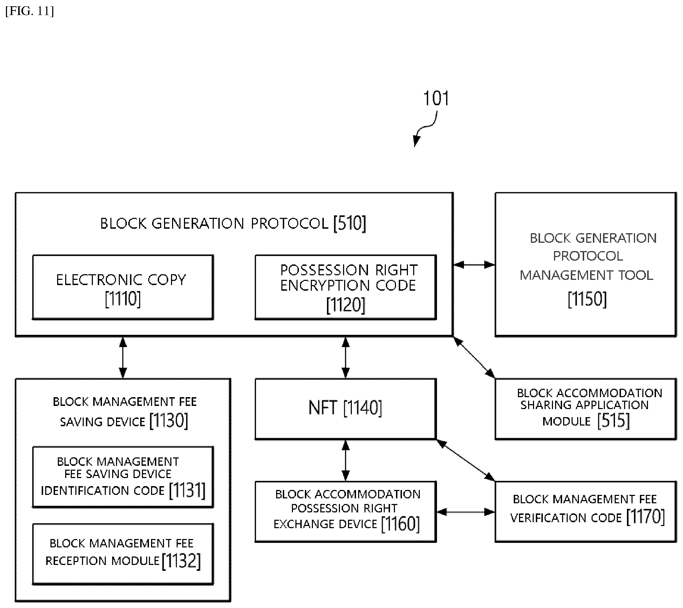

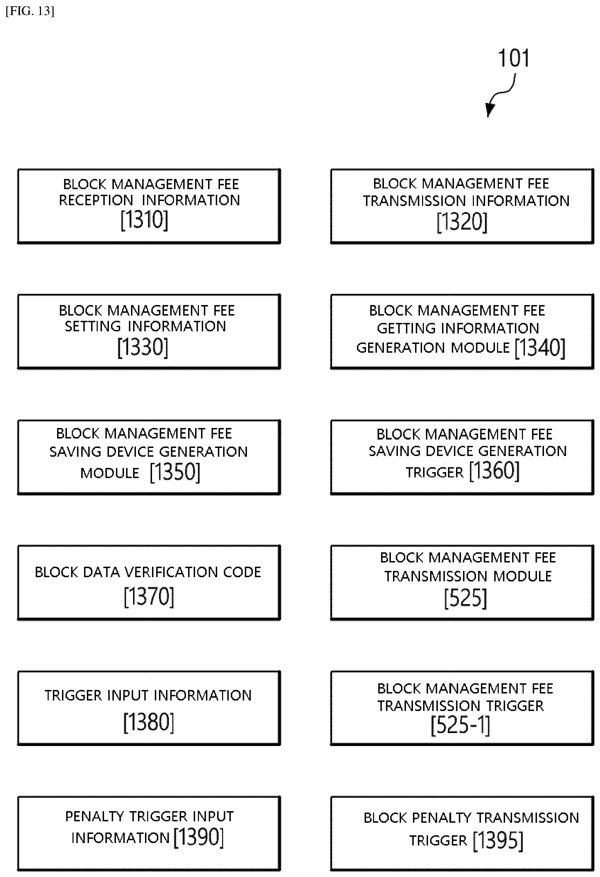

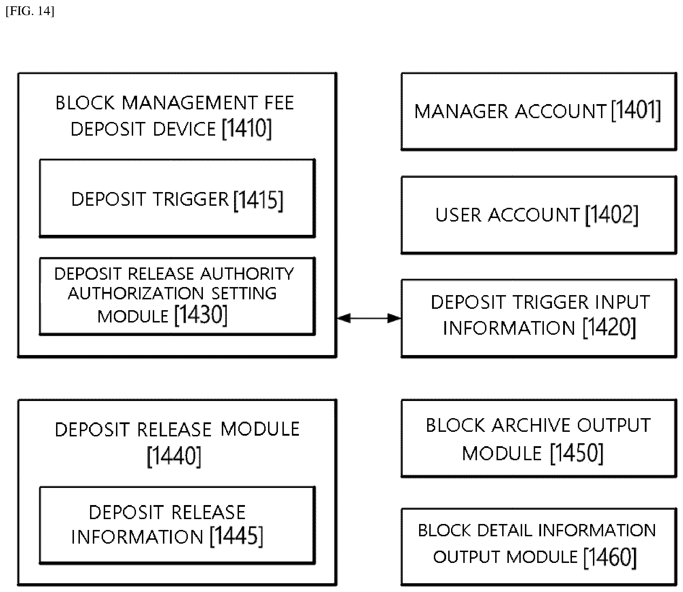

According to an embodiment, the block generation and operation device (for example, block generation and operation device 910 in FIG. 10) may configure a visit candidate area position information input module (for example, visit candidate area position information input module 920 in FIG. 10), a visit candidate area position information selection module (for example, visit candidate area position information selection module 930 in FIG. 10), a visit candidate area geographical information identification module (for example, visit candidate area geographical information identification module 940 in FIG. 10), a visit candidate area radius setting module (for example, visit candidate area radius setting module 950 in FIG. 10), a visit period setting module (for example, visit period setting module 960 in FIG. 10), a visit candidate accommodation usage unit setting module (for example, visit candidate accommodation usage unit setting module 970 in FIG. 10), a visit candidate accommodation usage period individual setting module (for example, visit candidate accommodation usage period individual setting module 980 in FIG. 10), a block generation protocol (for example, block generation protocol 501 in FIG. 5), a block indicator, a block management fee saving device (for example, block management fee saving device 1130 in FIG. 11), a block management fee unit setting module, a block management fee setting information generation module (for example, block management fee setting information generation module 1340 in FIG. 13), a block management fee transmission module (for example, block management fee transmission module 525 in FIGS. 5 and 13), a block management fee transmission trigger (for example, block management fee transmission trigger 525-1 in FIG. 13), a block penalty transmission trigger (for example, block penalty transmission trigger 1395 in FIG. 13), a block management fee reception module (for example, block management fee reception module 1132 in FIG. 11), a block management fee deposit device (for example, block management fee deposit device 1410 in FIG. 14), a deposit release module (for example, deposit release module 1440 in FIG. 14), and the like.

According to an embodiment, the block indicator may configure a block archive output module (for example, block archive output module 1450 in FIG. 14), a block detail information output module (for example, block detail information output module 1460 in FIG. 14), a block accommodation sharing application module (for example, block accommodation sharing application module 515 in FIGS. 5 and 11), a block accommodation sharing approval module (for example, block accommodation sharing approval module 510 in FIG. 5), and the like.

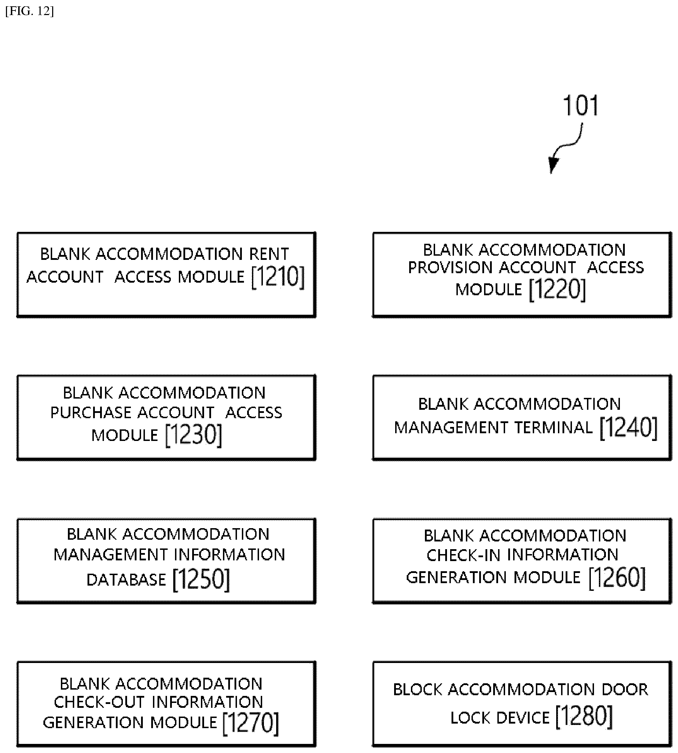

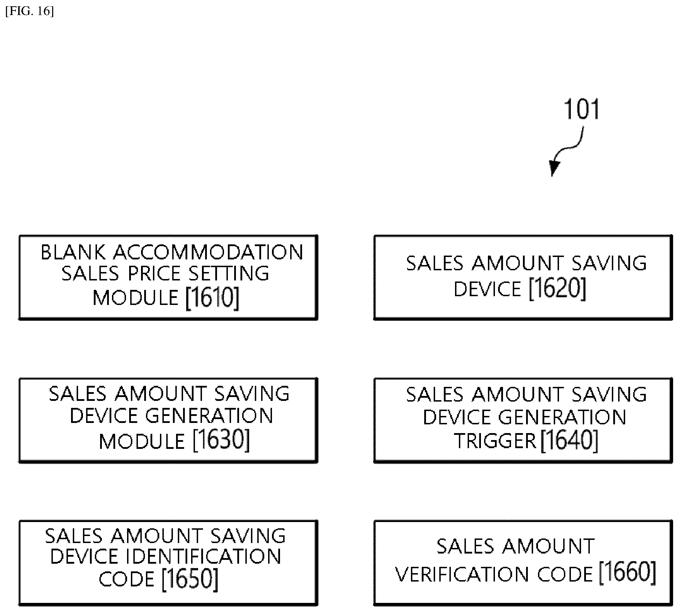

According to an embodiment, the blank accommodation management device (for example, blank accommodation management device 1520 in FIG. 15) may configure a blank accommodation management terminal (for example, blank accommodation management terminal 1240 in FIG. 12) (hereinafter, referred to as a blank terminal), a blank accommodation management information database (for example, blank accommodation management information database 1250 in FIG. 12), a sales amount saving device (for example, sales amount saving device 1620 in FIG. 16), and the like.

According to an embodiment, the blank accommodation management terminal (for example, blank accommodation management terminal 1240 in FIG. 12) may include (for example, operate including) a blank accommodation management console (for example, blank accommodation management console 1530 in FIG. 15), a blank accommodation rent (sale) account access module (for example, blank accommodation rent account access module 1210 in FIG. 12), a blank accommodation provision account access module (for example, blank accommodation provision account access module 1220 in FIG. 12), a blank accommodation purchase account access module (for example, blank accommodation purchase account access module 1230 in FIG. 12), a blank accommodation contents information indicator (for example, blank accommodation contents information indicator 1540 in FIG. 15), a blank accommodation management information indicator (for example, blank accommodation management information indicator 1550 in FIG. 15), a blank accommodation check-in information generation module (for example, blank accommodation check-in information generation module 1260 in FIG. 12), a blank accommodation check-out information generation module (for example, blank accommodation check-out information generation module 1270 in FIG. 12), a blank accommodation defect occurrence information generation module (for example, blank accommodation defect occurrence information generation module 1580 in FIG. 15), a blank accommodation defect occurrence information deletion module, a blank accommodation defect information management messenger (for example, blank accommodation defect information management messenger 1590 in FIG. 15), a blank accommodation sales price setting module (for example, blank accommodation sales price setting module 1610 in FIG. 16), a blank accommodation purchase module, and a blank accommodation sales amount deposit information generation module.

According to an embodiment, the blank accommodation defect occurrence information deletion module may provide related functions only when blank accommodation defect occurrence information (for example, blank accommodation defect occurrence information 1585 in FIG. 15) is generated, and may configure a function of deleting the blank accommodation defect occurrence information (for example, blank accommodation defect occurrence information 1585 in FIG. 15) generated through the blank accommodation defect occurrence information generation module (for example, blank accommodation defect occurrence information generation module 1580 in FIG. 15), generating blank accommodation defect occurrence information deletion information with which the deletion of the blank accommodation defect occurrence information can be identified, and transmitting the generated blank accommodation defect occurrence information deletion information to the blank accommodation management information indicator (for example, blank accommodation management information indicator 1550 in FIG. 15).

According to an embodiment, the shared accommodation management device may include (for example, operate including) a shared accommodation management terminal and a shared accommodation management information database.

According to an embodiment, the shared accommodation management terminal may include (for example, operate including) a shared accommodation management console, a shared accommodation provision account access module, a shared accommodation rental account access module, a shared accommodation contents information indicator, a shared accommodation management information indicator, a shared accommodation check-in information generation module, a shared accommodation check-out information generation module, a shared accommodation defect occurrence information generation module, a shared accommodation defect occurrence information deletion module, and a shared accommodation defect information management messenger.

According to an embodiment, the shared accommodation provision account access module may provide a function for access of a user account (for example, user account 1402 in FIG. 14) providing a room (or a house) to share a room (or a house) for implementing the present invention, and the shared accommodation rental account access module may further include (for example, operate including) a function for access of a user account (for example, user account 1402 in FIG. 14) renting a room (or a house) to share a room (or house) for implementing the present invention.

According to an embodiment, the shared accommodation defect occurrence information deletion module may provide related functions only when shared accommodation defect occurrence information is generated, and may operate including a function of deleting the shared accommodation defect occurrence information generated through the shared accommodation defect occurrence information generation module, generating shared accommodation defect occurrence information deletion information with which the deletion of the shared accommodation defect occurrence information can be identified, and transmitting the generated shared accommodation defect occurrence information deletion information to the shared accommodation management information indicator.

According to an embodiment of the present invention, as one of other accommodations sharing methods, more specifically, there is provided "a method for generating a block (for example, block 911 in FIG. 10) for shared accommodations" that generates a possession right encryption code (for example, possession right encryption code 1120 in FIG. 11) and/or block data (for example, block data 520 in FIG. 5) corresponding to the block (for example, block 911 in FIG. 10) including rooms (or houses) provided by at least two travelers in a pair to mutually share rooms (or houses) to be provided by travelers. The method includes a step of inputting either of an address or a zip code for identifying latitude and longitude on an area where a traveler will visit (travel), through a visit candidate area position information input module (for example, visit candidate area position information input module 920 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of selecting at least one address or zip code from the address list or the zip code list output on the screen of the user terminal, through a visit candidate area position information selection module (for example, visit candidate area position information selection module 930 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may perform a subsequent step through a visit candidate area geographical information identification module (for example, visit candidate area geographical information identification module 940 in FIG. 10), and may include a step of identifying latitude or longitude information on the address or the zip code selected by the visit candidate area position information selection module (for example, visit candidate area position information selection module 930 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of generating sharing application information (for example, sharing application information 511 in FIG. 5) for pairing rooms (or houses) mutually provided by travelers to share accommodations, through a block accommodation sharing application module (for example, block accommodation sharing application module 515 in FIGS. 5 and 11).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and generating and recording an encryption code and/or block data (for example, block data 520 in FIG. 5) corresponding to the block (for example, block 911 in FIG. 10) that includes tag information (for example, tag information 530 in FIG. 5) with which contents information on images, videos, audio, and the like related to rooms (or houses) to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or includes the contents information on the images, videos, audio, and the like and the management information on the names, list, position information, check-in/check-out, sharing period information, presence or absence of vacancy, states of repair and maintenance, and the like of the accommodations.

According to an embodiment of the present invention, as one of accommodation sharing methods, more specifically, there is provided "a check-in and check-out method" for a room or a house provided by a traveler. The method may include a step of identifying one ID and a unique ID for a user account (for example, user account 1402 in FIG. 14) of the traveler who provides the room or the house and a unique ID for a user account (for example, user account 1402 in FIG. 14) of a traveler who rents the room or the house provided by the traveler, permitting access for the identified user account (for example, user account 1402 in FIG. 14) on a network, and generating information on permission, through one or more access modules of a shared accommodation provision account access module and a shared accommodation rental account access module of a shared accommodation management terminal.

According to an embodiment, as one of accommodation sharing methods, "the check-in and check-out method" for the room or the house provided by the traveler may include a step of outputting, on a screen of a user terminal, contents information on images, videos, audio, and the like of rooms (or houses) to be identified by a possession right encryption code (for example, possession right encryption code 1120 in FIG. 11) and/or block data (for example, block data 520 in FIG. 5) for implementing the present invention, through a shared accommodation contents information indicator of the shared accommodation management terminal.

According to an embodiment, as one of accommodation sharing methods, "the check-in and check-out method" for the room or the house provided by the traveler may include a step of outputting, on the screen of the user terminal, information such as a list, position information, check-in/check-out, sharing period information, presence or absence of vacancy, states of repair and maintenance, and information on defect occurrence of rooms (or houses) to be identified by the possession right encryption code (for example, possession right encryption code 1120 in FIG. 11) and/or the block data (for example, block data 520 in FIG. 5) for implementing the present invention, through the shared accommodation management information indicator.

According to an embodiment, as one of accommodation sharing methods, "the check-in and check-out method" for the room or the house provided by the traveler may include a step of generating shared accommodation check-in information with which check-in to the room (or house) provided by the traveler can be identified, through a shared accommodation check-in information generation module and transmitting the generated shared accommodation check-in information to the shared accommodation management information indicator.

The method may include a step of transmitting shared accommodation check-out information with which check-out of the room (or house) to be identified by the possession right encryption code (for example, possession right encryption code 1120 in FIG. 11) and/or the block data (for example, block data 520 in FIG. 5) for implementing the present invention can be identified, through a shared accommodation check-out information generation module and transmitting the generated shared accommodation check-out information to the shared accommodation management information indicator.

According to an embodiment of the present invention, as one of accommodation sharing methods, more specifically, there is provided "a method for sharing a commercial accommodation in operation" that enables each device or means for implementing the present invention to identify an existing commercial accommodation in operation to be an accommodation eligible to be shared with a room (or a house) provided by a traveler. The method may include a step of identifying a unique ID for a user account (for example, user account 1402 in FIG. 14) of an operator of a commercial accommodation facility such as a hotel and, permitting access for the user account (for example, user account 1402 in FIG. 14) on a network, generating information on permission, and recording the generated information in a commercial accommodation log database, through a commercial candidate accommodation account access module (for example, commercial candidate accommodation account access module 590 in FIG. 6).

According to an embodiment, as one of accommodation sharing methods, "the method for sharing the commercial accommodation in operation" may include a step of providing the commercial accommodation such as a hotel to a traveler, setting a date or a period during which the commercial accommodation is not reserved, to conclude an accommodation sharing transaction between the commercial accommodation facility and the traveler, and recording information on the set date or period in the commercial accommodation log database, through a commercial candidate accommodation sharing period setting module (for example, commercial candidate accommodation sharing period setting module 610 in FIG. 7).

According to an embodiment, as one of accommodation sharing methods, "the method for sharing a commercial accommodation in operation" may include a step of setting prescribed information that allows each device or means for implementing the present invention to identify or access information on a unique ID of a web page related to the existing commercial accommodation in operation such as a hotel, and recording the set information in the commercial accommodation log database, through a commercial candidate accommodation POST ID registration module (for example, commercial candidate accommodation POST ID registration module 620 in FIG. 7). A URL and a dynamic or fixed IP address may be included in addition to the unique ID.

According to an embodiment, as one of accommodation sharing methods, "the method for sharing a commercial accommodation in operation" may include a step of setting prescribed information that allows each device or means for implementing the present invention to identify or access a position of the existing commercial accommodation in operation such as a hotel, and recording the set information in the commercial accommodation log database, through a commercial candidate accommodation position information registration module (for example, commercial candidate accommodation position information registration module 660 in FIG. 7). The information on the position may include Information on latitude and longitude, a height above sea level, a height from the ground, and a specific floor of a building.

According to an embodiment, as one of accommodation sharing methods, "the method for sharing the commercial accommodation in operation" may include a step of recording, in the commercial accommodation log database, a set value of an application program interface (API) for setting an operation rule of a commercial candidate accommodation access gate (for example, commercial candidate accommodation access gate 541 in FIG. 6) that provides a function of enabling each device or means for implementing the present invention to access or link contents information on images, videos, audio, and the like of existing accommodations in operation and management information on a list, position information, check-in/check-out, sharing period information, presence or absence of vacancy, states of repair and maintenance of accommodations stored in a hotel accommodation integrated information database (for example, hotel accommodation integrated information database 550 in FIG. 6) being managed in the accommodation facility such as a hotel via prescribed access information or the like, through a commercial candidate accommodation API setting module (for example, commercial candidate accommodation API setting module 570 in FIG. 6).

According to an embodiment, as one of accommodation sharing methods, "the method for sharing the commercial accommodation in operation" may include a step of transmitting a request signal for accessing the contents information on the images, videos, audio, and the like of the existing accommodations in operation and the management information on the list, position information, check-in/check-out, sharing period information, presence or absence of vacancy, states of repair and maintenance of the accommodations stored in the hotel accommodation integrated information database (for example, hotel accommodation integrated information database 550 in FIG. 6) being managed in the accommodation facility such as a hotel to the hotel accommodation integrated information database (for example, hotel accommodation integrated information database 550 in FIG. 5) through the commercial candidate accommodation access gate (for example, commercial candidate accommodation access gate 541 in FIG. 5) according to the operation rule of the commercial candidate accommodation access gate (for example, commercial candidate accommodation access gate 541 in FIG. 5).

According to an embodiment, as one of accommodation sharing methods, "the method for sharing the commercial accommodation in operation" may include a step of receiving, at the hotel accommodation integrated information database (for example, hotel accommodation integrated information database 550 in FIG. 5), a request signal for accessing the contents information on the images, videos, audio, and the like of the existing accommodations in operation and the management information such as the list, position information, check-in/check-out, sharing period information, presence or absence of vacancy, information on states of repair and maintenance of the accommodations from the commercial candidate accommodation access gate (for example, commercial candidate accommodation access gate 541 in FIG. 5), and permitting access from the commercial candidate accommodation access gate (for example, commercial candidate accommodation access gate 541 in FIG. 5).

According to an embodiment of the present invention, as one of accommodation sharing methods, more specifically, there is provided "a method for managing a defect of a shared accommodation" for the room or the house provided by the traveler may include a step of identifying a unique ID for a user account (for example, user account 1402 in FIG. 14) of the traveler, permitting access of the identified user account (for example, user account 1402 in FIG. 14) on a network, and generating information on permission, through one or more access modules of a shared accommodation provision account access module and a shared accommodation rental account access module of a shared accommodation management terminal.

According to an embodiment, as one of accommodation sharing methods, "the method for managing a defect of a shared accommodation" for the room or the house provided by the traveler may include a step of outputting, on a screen of a user terminal, contents information on images, videos, audio, and the like of rooms (or houses) to be identified by a possession right encryption code (for example, possession right encryption code 1120 in FIG. 11) and/or block data (for example, block data 520 in FIG. 5) for implementing the present invention, through a shared accommodation contents information indicator of the shared accommodation management terminal.

According to an embodiment, as one of accommodation sharing methods, "the method for managing a defect of a shared accommodation" for the room or the house provided by the traveler may include a step of outputting, on the screen of the user terminal, information such as a list, position information, check-in/check-out, sharing period information, presence or absence of vacancy, states of repair and maintenance, and information on the occurrence of defects for the rooms (or houses) to be identified by a possession right encryption code (for example, possession right encryption code 1120 in FIG. 11) and/or block data (for example, block data 520 in FIG. 5) for implementing the present invention, through the shared accommodation management information indicator.

According to an embodiment, as one of accommodation sharing methods, "the method for managing a defect of a shared accommodation" for the room or the house provided by the traveler may include a step of generating shared accommodation defect occurrence information with which the occurrence of defects for the rooms (or houses) to be identified by the possession right encryption code (for example, possession right encryption code 1120 in FIG. 11) and/or the block data (for example, block data 520 in FIG. 5) for implementing the present invention can be identified, and transmitting the generated shared accommodation defect occurrence information to the shared accommodation management information indicator, through a shared accommodation defect occurrence information generation module of the shared accommodation management terminal.

According to an embodiment, as one of accommodation sharing methods, "the method for managing a defect of a shared accommodation" for the room or the house provided by the traveler may include a step of generating shared accommodation defect occurrence information deletion information with which deletion of the defect occurrence information is deleted for the rooms (or houses) to be identified by sharing approval information (for example, sharing approval information 512 in FIG. 5) and the block data (for example, block data 520 in FIG. 5) can be identified, and transmitting the generated shared accommodation defect occurrence information deletion information to the shared accommodation management information indicator, through a shared accommodation defect occurrence information deletion module of the shared accommodation management terminal.

According to an embodiment, as one of accommodation sharing methods, "the method for managing a defect of a shared accommodation" for the room or the house provided by the traveler may include a step of generating shared accommodation defect occurrence information deletion information with which deletion of defect occurrence information for the rooms (or houses) to be identified by the possession right encryption code (for example, possession right encryption code 1120 in FIG. 11) and the block data (for example, block data 520 in FIG. 5) can be identified, and transmitting the generated shared accommodation defect occurrence information deletion information to the shared accommodation management information indicator, through the shared accommodation defect occurrence information deletion module of the shared accommodation management terminal.

According to an embodiment, as one of accommodation sharing methods, "the method for managing a defect of a shared accommodation" for the room or the house provided by the traveler may include a step of generating shared accommodation defect occurrence information with which the occurrence of defects for the rooms (or houses) to be identified by the possession right encryption code (for example, possession right encryption code 1120 in FIG. 11) and the block data (for example, block data 520 in FIG. 5) for implementing the present invention can be identified, and transmitting the generated shared accommodation defect occurrence information to the shared accommodation management information indicator, through the shared accommodation defect occurrence information generation module of the shared accommodation management terminal.

According to an embodiment, as one of accommodation sharing methods, "the method for managing a defect of a shared accommodation" for the room or the house provided by the traveler may include a step of generating shared accommodation defect occurrence information deletion information with which deletion of defect occurrence information for the rooms (or houses) to be identified by the possession right encryption code (for example, possession right encryption code 1120 in FIG. 11) and the block data (for example, block data 520 in FIG. 5) can be identified, and transmitting the generated shared accommodation defect occurrence information deletion information to the shared accommodation management information indicator, through the shared accommodation defect occurrence information deletion module of the shared accommodation management terminal.

According to an embodiment of the present invention, as one of other accommodation sharing methods, more specifically, there is provided "a method for generating a block (for example, block 911 in FIG. 10) of shared accommodations" that generates block data (for example, block data 520 in FIG. 5) corresponding to a block (for example, block 911 in FIG. 10) including an accommodation provided by at least one hotel and a room or a house provided by at least one traveler in a pair to mutually share existing commercial accommodations in operation and rooms or houses to be provided by travelers. The method may include a step of inputting either of an address or a zip code for identifying latitude and longitude for an area the traveler will visit (travel), through a visit candidate area position information input module (for example, visit candidate area position information input module 920 in FIG. 10).

According to an embodiment, as one of other accommodation sharing methods, "the method for generating a block (for example, block 911 in FIG. 10) of shared accommodations" may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional code, or a two-dimensional code).

According to an embodiment, as one of other accommodation sharing methods, "the method for generating a block (for example, block 911 in FIG. 10) of shared accommodations" may include a step of selecting at least one address or zip code from the address list or the zip code list output on the screen of the user terminal, through a visit candidate area position information selection module (for example, visit candidate area position information selection module 930 in FIG. 10).

According to an embodiment, as one of other accommodation sharing methods, "the method for generating a block (for example, block 911 in FIG. 10) of shared accommodations" may perform a subsequent step through a visit candidate area geographical information identification module (for example, visit candidate area geographical information identification module 940 in FIG. 10), and may include a step of identifying latitude or longitude information for the address or the zip code selected by the visit candidate area position information selection module (for example, visit candidate area position information selection module 930 in FIG. 10).

According to an embodiment, as one of other accommodation sharing methods, "the method for generating a block (for example, block 911 in FIG. 10) of shared accommodations" may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of other accommodation sharing methods, "the method for generating a block (for example, block 911 in FIG. 10) of shared accommodations" may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of other accommodation sharing methods, "the method for generating a block (for example, block 911 in FIG. 10) of shared accommodations" may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of other accommodation sharing methods, "the method for generating a block (for example, block 911 in FIG. 10) of shared accommodations" may include a step of generating sharing application information (for example, sharing application information 511 in FIG. 5) for pairing an accommodation provided by the hotel and a room (or a house) provided by the traveler to share accommodations, through a block accommodation sharing application module (for example, block accommodation sharing application module 515 in FIGS. 5 and 11).

According to an embodiment, as one of other accommodation sharing methods, "the method for generating a block (for example, block 911 in FIG. 10) of shared accommodations" may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of other accommodation sharing methods, "the method for generating a block (for example, block 911 in FIG. 10) of shared accommodations" may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and generating an encryption code and/or block data (for example, block data 520 in FIG. 5) corresponding to the block (for example, block 911 in FIG. 10) that includes tag information (for example, tag information 530 in FIG. 5) with which information on images, videos, audio, and the like related to the accommodation provided by at least one hotel and the room (or house) provided by at least one traveler to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or includes the contents information on the images, videos, audio, and the like and the management information on the names, list, position information, check-in/check-out, sharing period information, presence or absence of vacancy, states of repair and maintenance, and the like of the accommodations.

According to an embodiment of the present invention, as a method for retrieving and accessing block accommodations, more specifically, there is provided "a method for retrieving and accessing a block accommodation" that retrieves a list of information related to block data (for example, block data 520 in FIG. 5) corresponding to a block (for example, block 911 in FIG. 10) for identifying rooms (or houses) provided by at least two travelers as a single unit and accesses the list as a retrieval result or a web page of the related information. The method may perform a subsequent step through a block accommodation tag information input module (for example, block accommodation tag information input module in FIG. 18) of a block accommodation retrieval and access interface (for example, block accommodation retrieval and access interface 1811 in FIG. 18), and may include a step of inputting characters, numbers, special characters, a barcode, and the like and temporarily storing the characters, the numbers, the special characters, the barcode, and the like by input unit (that is, tagged input unit).

According to an embodiment, "the method for retrieving and accessing a block accommodation" that retrieves a list of information related to block data (for example, block data 520 in FIG. 5) corresponding to a block (for example, block 911 in FIG. 10) for identifying rooms (or houses) provided by at least two travelers and accesses the list as a retrieval result or a web page of the related information may perform a subsequent step through a block accommodation radius information input module (for example, block accommodation radius information input module in FIG. 18) of the block accommodation retrieval and access interface (for example, block accommodation retrieval and access interface 1811 in FIG. 18), and may include a step of inputting and temporarily storing information on latitude and longitude or a radius range from the latitude and longitude.

According to an embodiment, "the method for retrieving and accessing a block accommodation" that retrieves a list of information related to block data (for example, block data 520 in FIG. 5) corresponding to a block (for example, block 911 in FIG. 10) for identifying rooms (or houses) provided by at least two travelers and accesses the list as a retrieval result or a web page of the related information may perform a subsequent step through a block accommodation identification information transmission module (for example, block accommodation identification information transmission module 1811-3 in FIG. 18) of the block accommodation retrieval and access interface (for example, block accommodation retrieval and access interface 1811 in FIG. 18), and may include a step of identifying block data (for example, block data 520 in FIG. 5) having a value partially or wholly matching (or not matching) prescribed information (or the latitude and longitude or information on the radius range from the latitude and longitude) or partially or wholly including (or not including) the prescribed information (or the latitude and longitude or information on the radius range from the latitude and longitude) among information input from the block accommodation tag information input module (for example, block accommodation tag information input module in FIG. 18) or the block accommodation radius information input module (for example, block accommodation radius information input module in FIG. 18), generating block accommodation retrieval result transmission request information (for example, block accommodation retrieval result transmission request information 1820 in FIG. 18) to output a list of the identified block data (for example, block data 520 in FIG. 5) or relevant information on a screen of a user terminal, through a block accommodation retrieval result archive indicator (for example, block accommodation retrieval result archive indicator 1813 in FIG. 18), and transmitting the generated block accommodation retrieval result transmission request information (for example, block accommodation retrieval result transmission request information 1820 in FIG. 18) to a "block accommodation retrieval request information reception module (for example, block accommodation retrieval request information reception module 1831 in FIG. 18)" operating in linking with a "block archive database".

According to an embodiment, "the method for retrieving and accessing a block accommodation" that retrieves a list of information related to block data (for example, block data 520 in FIG. 5) corresponding to a block (for example, block 911 in FIG. 10) for identifying rooms (or houses) provided by at least two travelers and accesses the list as a retrieval result or a web page of the related information may perform a subsequent step through the block accommodation retrieval result archive indicator (for example, block accommodation retrieval result archive indicator 1813 in FIG. 18) of the block accommodation retrieval and access interface (for example, block accommodation retrieval and access interface 1811 in FIG. 18), and may include a step of receiving the block accommodation retrieval result transmission request information (for example, block accommodation retrieval result transmission request information 1820 in FIG. 18) transmitted from the block accommodation identification information transmission module (for example, block accommodation identification information transmission module 1811-3 in FIG. 18), and outputting a list of the block data (for example, block data 520 in FIG. 5) or the related information corresponding to the received block accommodation retrieval result transmission request information (for example, block accommodation retrieval result transmission request information 1820 in FIG. 18).

According to an embodiment, "the method for retrieving and accessing a block accommodation" that retrieves a list of information related to block data (for example, block data 520 in FIG. 5) corresponding to a block (for example, block 911 in FIG. 10) for identifying rooms (or houses) provided by at least two travelers and accesses the list as a retrieval result or a web page of the related information may include a step of accessing, if information on selection of the list of the block data (for example, block data 520 in FIG. 5) or the relevant information corresponding to the block accommodation retrieval result transmission request information (for example, block accommodation retrieval result transmission request information 1820 in FIG. 18) through an input device such as a mouse or a keyboard is generated, a web page of the list or the related information corresponding to the generated selection information.

According to an embodiment of the present invention, as one of accommodation sharing methods, more specifically, there is provided a method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers. The method may include a step of inputting either of an address or a zip code for identifying latitude and longitude on an area where a traveler will visit (travel), through a visit candidate area position information input module (for example, visit candidate area position information input module 920 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of selecting at least one address or zip code from the address list or the zip code list output on the screen of the user terminal, through a visit candidate area position information selection module (for example, visit candidate area position information selection module 930 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may perform a subsequent step through a visit candidate area geographical information identification module (for example, visit candidate area geographical information identification module 940 in FIG. 10). The method may include a step of identifying latitude or longitude information on the address or the zip code selected by the visit candidate area position information selection module (for example, visit candidate area position information selection module 930 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of generating sharing application information (for example, sharing application information 511 in FIG. 5) for pairing rooms (or houses) provided by travelers to share accommodations, through a block accommodation sharing application module (for example, block accommodation sharing application module 515 in FIGS. 5 and 11).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and recording, in a form of block data (for example, block data 520 in FIG. 5), tag information (for example, tag information 530 in FIG. 5) with which contents information on images, videos, audio, and the like related to rooms (or houses) provided by at least two travelers to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or the contents information on the images, videos, audio, and the like and the management information on the names, list, position information, check-in/check-out, sharing period information, presence or absence of vacancy, states of repair and maintenance, and the like of the accommodations.

According to an embodiment of the present invention, as one of accommodation sharing methods, more specifically, there is provided "a method for checking in to and checking out of a blank accommodation" for a room or a house to be provided to a hotel by a traveler and sold to a netizen. The method may include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permitting access for the identified user account (for example, user account 1402 in FIG. 14) on a network, and generating information on permission, through one or more access modules of a blank accommodation rent (sale) account access module (for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for checking in to and checking out of a blank accommodation" for the room or the house to be provided to the hotel by the traveler and sold to the netizen may include a step of outputting, on a screen of a user terminal, contents information on images, videos, audio, and the like for the room (or house) provided to the hotel by the traveler among accommodations or rooms (or houses) to be identified by sharing approval information (for example, sharing approval information 512 in FIG. 5) and block data (for example, block data 520 in FIG. 5), through a blank accommodation contents information indicator (for example, blank accommodation contents information indicator 1540 in FIG. 15) of the blank accommodation management terminal (for example, blank accommodation management terminal 1240 in FIG. 12).

According to an embodiment, as one of accommodation sharing methods, "the method for checking in to and checking out of a blank accommodation" for the room or the house to be provided to the hotel by the traveler and sold to the netizen may include a step of outputting, on the screen of the user terminal, information such as a list, position information, check-in/check-out, sharing period information, presence or absence of vacancy, states of repair and maintenance, and information on defect occurrence, sales price information, and sales amount deposit information of rooms (or houses) provided to the hotel by travelers among accommodations or rooms (or houses) to be identified by the sharing approval information (for example, sharing approval information 512 in FIG. 5) and the block data (for example, block data 520 in FIG. 5), through a blank accommodation management information indicator (for example, blank accommodation management information indicator 1550 in FIG. 15).

According to an embodiment, as one of accommodation sharing methods, "the method for checking in to and checking out of a blank accommodation" for the room or the house to be provided to the hotel by the traveler and sold to the netizen may include a step of generating, from a blank accommodation sales amount deposit information generation module (for example, blank accommodation sales amount deposit information generation module 680 in FIG. 8), blank accommodation check-in information (for example, blank accommodation check-in information 1560 in FIG. 15) with which check=in to the room (or house) provided to the hotel by the traveler among the accommodations or the rooms (or houses) to be identified by the sharing approval information (for example, sharing approval information 512 in FIG. 5) and the block data (for example, block data 520 in FIG. 5) can be identified, through a blank accommodation check-in information generation module (for example, blank accommodation check-in information generation module 1260 in FIG. 12), and transmitting the generated blank accommodation check-in information (for example, blank accommodation check-in information 1560 in FIG. 15) to the blank accommodation management information indicator (for example, blank accommodation management information indicator 1550 in FIG. 15).

According to an embodiment, as one of accommodation sharing methods, "the method for checking in to and checking out of a blank accommodation" for the room or the house to be provided to the hotel by the traveler and sold to the netizen may include a step of generating, from the blank accommodation sales amount deposit information generation module (for example, blank accommodation sales amount deposit information generation module 680 in FIG. 8), blank accommodation check-out information (for example, blank accommodation check-out information 1570 in FIG. 15) with which check-out of the room (or house) provided to the hotel by the traveler among the accommodations or the rooms (or houses) to be identified by the sharing approval information (for example, sharing approval information 512 in FIG. 5) and the block data (for example, block data 520 in FIG. 5) can be identified, through a blank accommodation check-out information generation module (for example, blank accommodation check-out information generation module 1270 in FIG. 12), and transmitting the generated blank accommodation check-out information (for example, blank accommodation check-out information 1570 in FIG. 15) to the blank accommodation management information indicator (for example, blank accommodation management information indicator 1550 in FIG. 15).

According to an embodiment of the present invention, as one of accommodation sharing methods, more specifically, there is provided "a method for managing detect of a blank accommodation" for a room or a house to be provided to a hotel by a traveler and sold to a netizen. The method may include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permitting access for the identified user account (for example, user account 1402 in FIG. 14) on a network, and generating information on permission, through one or more access modules of a blank accommodation rent (sale) account access module (for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of outputting, on a screen of a user terminal, contents information on images, videos, audio, and the like for the room (or house) provided to the hotel by the traveler among accommodations or rooms (or houses) to be identified by sharing approval information (for example, sharing approval information 512 in FIG. 5) and block data (for example, block data 520 in FIG. 5), through a blank accommodation contents information indicator (for example, blank accommodation contents information indicator 1540 in FIG. 15) of the blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the sharing approval information (for example, sharing approval information 512 in FIG. 5) and the block data (for example, block data 520 in FIG. 5), through a blank accommodation management information indicator (for example, blank accommodation management information indicator 1550 in FIG. 15).

According to an embodiment, as one of accommodation sharing methods, "the method for managing detect of a blank accommodation" for the room or the house to be provided to the hotel by the traveler and sold to the netizen may include a step of generating blank accommodation defect occurrence information (for example, blank accommodation defect occurrence information 1585 in FIG. 15) with which the occurrence of a defect for the room (or house) provided to the hotel by the traveler among the accommodations or the rooms (or houses) to be identified by the sharing approval information (for example, sharing approval information 512 in FIG. 5) and the block data (for example, block data 520 in FIG. 5) can be identified, and transmitting the generated blank accommodation defect occurrence information (for example, blank accommodation defect occurrence information 1585 in FIG. 15) to the blank accommodation management information indicator (for example, blank accommodation management information indicator 1550 in FIG. 15), through a blank accommodation defect occurrence information generation module (for example, blank accommodation defect occurrence information generation module 1580 in FIG. 15) of the blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of generating blank accommodation defect occurrence information deletion information with which deletion of defect occurrence information for the room (or house) provided to the hotel by the traveler among the accommodations or the rooms (or houses) to be identified by the sharing approval information (for example, sharing approval information 512 in FIG. 5) and the block data (for example, block data 520 in FIG. 5) can be identified, and transmitting the generated blank accommodation defect occurrence information deletion information to the blank accommodation management information indicator (for example, blank accommodation management information indicator 1550 in FIG. 15), through a blank accommodation defect occurrence information deletion module of the blank accommodation management terminal (for example, blank accommodation management terminal 1240 in FIG. 12).

According to an embodiment of the present invention, as one of accommodation sharing methods, more specifically, there is provided "a method for selling and purchasing a blank accommodation" for a room or a house to be provided to a hotel by a traveler and sold to a netizen. The method may include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permits access for the identified user account (for example, user account 1402 in FIG. 14) on a network, and generating information on permission, through one or more access modules of a blank accommodation rent (sale) account access module (for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the sharing approval information (for example, sharing approval information 512 in FIG. 5) and the block data (for example, block data 520 in FIG. 5), through a blank accommodation management information indicator (for example, blank accommodation management information indicator 1550 in FIG. 15) of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of setting a sales price of an authority to use the room (or house) provided to the hotel by the traveler among the accommodations or the rooms (or houses) to be identified by the sharing approval information (for example, sharing approval information 512 in FIG. 5) and the block data (for example, block data 520 in FIG. 5), through a blank accommodation sales price setting module (for example, blank accommodation sales price setting module 1610 in FIG. 16) of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of generating prescribed information for requesting purchase of an authority to use the room (or house) provided to the hotel by the traveler among the accommodations or the rooms (or houses) to be identified by the sharing approval information (for example, sharing approval information 512 in FIG. 5) and the block data (for example, block data 520 in FIG. 5), through a blank accommodation purchase module of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of receiving and storing real currency such as dollar, won, yen, or euro, and recording information for certification in a sales amount saving device (for example, sales amount saving device 1620 in FIG. 16).

According to an embodiment, as one of accommodation sharing methods, "the method for selling and purchasing a blank accommodation" for the room or the house to be provided to the hotel by the traveler and sold to the netizen may include a step of receiving an amount of money corresponding to blank accommodation sales amount deposit information (for example, blank accommodation sales amount deposit information 681 in FIG. 8) generated by a blank accommodation sales amount deposit information generation module (for example, blank accommodation sales amount deposit information generation module 680 in FIG. 8) in a deposit account corresponding to prescribed deposit account information input from a prescribed used for implementing the present invention.

According to an embodiment, as one of accommodation sharing methods, "the method for selling and purchasing a blank accommodation" for the room or the house to be provided to the hotel by the traveler and sold to the netizen may include a step of generating, when an amount of money according to the sales price set by the blank accommodation sales price setting module (for example, blank accommodation sales price setting module 1610 in FIG. 16) is deposited into a sales amount saving device (for example, sales amount saving device 1620 in FIG. 16) configured to deposit the amount of money according to the sales price, "blank accommodation sales amount deposit information (for example, blank accommodation sales amount deposit information 681 in FIG. 8)" with which information corresponding to the deposited amount of money can be identified, through the blank accommodation sales amount deposit information generation module (for example, blank accommodation sales amount deposit information generation module 680 in FIG. 8) of the blank accommodation management terminal (for example, blank accommodation management terminal 1240 in FIG. 12).

According to an embodiment of the present invention, as a method for retrieving and accessing a block accommodation, more specifically, there is provided "a method for retrieving and accessing a block accommodation" that retrieves a list of information related to block data (for example, block data 520 in FIG. 5) corresponding to a block (for example, block 911 in FIG. 10) for identifying an accommodation provided by at least one hotel and a room (or a house) provided by at least one traveler as a single unit and accesses the list as a retrieval result or a web page of the related information. The method may perform a subsequent step through a block accommodation tag information input module (for example, block accommodation tag information input module in FIG. 18) of a block accommodation retrieval and access interface (for example, block accommodation retrieval and access interface 1811 in FIG. 18), and may include a step of inputting characters, numbers, special characters, a barcode, and the like and temporarily storing the characters, the numbers, the special characters, the barcode, and the like by input unit (that is, tagged input unit).

According to an embodiment, as a method for retrieval and accessing a block accommodation, "the method for retrieving and accessing a block accommodation" that retrieves the list of information related to the block data (for example, block data 520 in FIG. 5) corresponding to the block (for example, block 911 in FIG. 10) for identifying the accommodation provided by at least one hotel and the room (or house) provided by at least one traveler as a single unit and accesses the list as a retrieval result or the web page of the related information may perform a subsequent step through a block accommodation radius information input module (for example, block accommodation radius information input module in FIG. 18) of the block accommodation retrieval and access interface (for example, block accommodation retrieval and access interface 1811 in FIG. 18), and may include a step of inputting and temporarily storing information on latitude and longitude or a radius range from the latitude and longitude.

According to an embodiment, as a method for retrieval and accessing a block accommodation, "the method for retrieving and accessing a block accommodation" that retrieves the list of information related to the block data (for example, block data 520 in FIG. 5) corresponding to the block (for example, block 911 in FIG. 10) for identifying the accommodation provided by at least one hotel and the room (or house) provided by at least one traveler as a single unit and accesses the list as a retrieval result or the web page of the related information may perform a subsequent step through a block accommodation identification information transmission module (for example, block accommodation identification information transmission module 1811-3 in FIG. 18) of the block accommodation retrieval and access interface (for example, block accommodation retrieval and access interface 1811 in FIG. 18), and may include a step of identifying block data (for example, block data 520 in FIG. 5) having a value partially or wholly matching (or not matching) prescribed information (or the latitude and longitude or information on the radius range from the latitude and longitude) to be identified by a possession right encryption code (for example, possession right encryption code 1120 in FIG. 11) and block data (for example, block data 520 in FIG. 5) for implementing the present invention or partially or wholly including (or not including) the prescribed information (or the latitude and longitude or information on the radius range from the latitude and longitude) among information input from the block accommodation tag information input module (for example, block accommodation tag information input module in FIG. 18) or the block accommodation radius information input module (for example, block accommodation radius information input module in FIG. 18), generating block accommodation retrieval result transmission request information (for example, block accommodation retrieval result transmission request information 1820 in FIG. 18) for outputting, on a screen of a user terminal, a list of the identified block data (for example, block data 520 in FIG. 5) or related information through a block accommodation retrieval result archive indicator (for example, block accommodation retrieval result archive indicator 1813 in FIG. 18), and transmitting the generated block accommodation retrieval result transmission request information (for example, block accommodation retrieval result transmission request information 1820 in FIG. 18) to a "block accommodation retrieval request information reception module (for example, block accommodation retrieval request information reception module 1831 in FIG. 18)" configured to operate in linking with the "block archive database".

According to an embodiment, as a method for retrieval and accessing a block accommodation, "the method for retrieving and accessing a block accommodation" that retrieves the list of information related to the block data (for example, block data 520 in FIG. 5) corresponding to the block (for example, block 911 in FIG. 10) for identifying the accommodation provided by at least one hotel and the room (or house) provided by at least one traveler as a single unit and accesses the list as a retrieval result or the web page of the related information may perform a subsequent step through a block accommodation retrieval result archive indicator (for example, block accommodation retrieval result archive indicator 1813 in FIG. 18) of the block accommodation retrieval and access interface (for example, block accommodation retrieval and access interface 1811 in FIG. 18), and may include a step of receiving the block accommodation retrieval result transmission request information (for example, block accommodation retrieval result transmission request information 1820 in FIG. 18) transmitted from the block accommodation identification information transmission module (for example, block accommodation identification information transmission module 1811-3 in FIG. 18), and outputting a list of the block data (for example, block data 520 in FIG. 5) or the related information corresponding to the received block accommodation retrieval result transmission request information (for example, block accommodation retrieval result transmission request information 1820 in FIG. 18).

According to an embodiment, as a method for retrieval and accessing a block accommodation, "the method for retrieving and accessing a block accommodation" that retrieves the list of information related to the block data (for example, block data 520 in FIG. 5) corresponding to the block (for example, block 911 in FIG. 10) for identifying the accommodation provided by at least one hotel and the room (or house) provided by at least one traveler as a single unit and accesses the list as a retrieval result or the web page of the related information may include a step of accessing, if information on selection of the list of the block data (for example, block data 520 in FIG. 5) or the relevant information corresponding to the block accommodation retrieval result transmission request information (for example, block accommodation retrieval result transmission request information 1820 in FIG. 18) through an input device such as a mouse or a keyboard is generated, a web page of the list or the related information corresponding to the generated selection information.

According to an embodiment of the present invention, as one of accommodation sharing methods, more specifically, there is provided "a block advertisement method" that sends an advertisement on a screen of a user terminal at a position (or in an area within a prescribed radius around the position) or a room (or a house) provided by a traveler to be identified by block data (for example, block data 520 in FIG. 5) corresponding to a block (for example, block 911 in FIG. 10). The method may include a step of registering contents information on an image, a video, an audio, or the like through an advertisement information registration module of a block advertisement management device (for example, block advertisement management device 1710 in FIG. 17).

According to an embodiment, as one of accommodation sharing methods, "the block advertisement method" that sends the advertisement on the screen of the user terminal at the position (or in the area within the prescribed radius around the position) or the room (or house) provided by the traveler to be identified by the block data (for example, block data 520 in FIG. 5) corresponding to the block (for example, block 911 in FIG. 10) may perform a subsequent step through an advertisement block selection module of the block advertisement management device (for example, block advertisement management device 1710 in FIG. 17), and may include a step of selecting at least one block (for example, block 911 in FIG. 10) corresponding to block data (for example, block data 520 in FIG. 5) generated by an electronic device 101 (for example, accommodation sharing device) (for example, electronic device including web server), and generating "advertisement block selection information (for example, advertisement-purpose block selection information 1760 in FIG. 17)" to be identified by the block data (for example, block data 520 in FIG. 5) corresponding to the selected block (for example, block 911 in FIG. 10).

According to an embodiment, as one of accommodation sharing methods, "the block advertisement method" that sends the advertisement on the screen of the user terminal at the position (or in the area within the prescribed radius around the position) or the room (or house) provided by the traveler to be identified by the block data (for example, block data 520 in FIG. 5) corresponding to the block (for example, block 911 in FIG. 10) may perform a subsequent step through a block advertisement sending module (for example, block advertisement sending module 1713 in FIG. 17) of the block advertisement management device (for example, block advertisement management device 1710 in FIG. 17), and may include a step of sending an advertisement to a page of a web site (or an interface screen of a smartphone application) that is identified by block data (for example, block data 520 in FIG. 5) corresponding to a block (for example, block 911 in FIG. 10) to be identified by the advertisement block selection information (for example, advertisement-purpose block selection information 1760 in FIG. 17) generated by the advertisement block selection module, includes tag information on position information corresponding to a visit candidate area, or is displayed through a web browser installed on a prescribed PC or a user terminal at a position of the area (within a prescribed radius from the position).

According to an embodiment of the present invention, as one of accommodation sharing methods, more specifically, there is provided a method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers. The method include a step of inputting either of an address or a zip code for identifying latitude and longitude on an area where a traveler will visit (travel), through a visit candidate area position information input module (for example, visit candidate area position information input module 920 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of selecting at least one address or zip code from the address list or the zip code list output on the screen of the user terminal, through a visit candidate area position information selection module (for example, visit candidate area position information selection module 930 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may perform a subsequent step through a visit candidate area geographical information identification module (for example, visit candidate area geographical information identification module 940 in FIG. 10), and may include a step of identifying latitude or longitude information on the address or the zip code selected by the visit candidate area position information selection module (for example, visit candidate area position information selection module 930 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of generating sharing application information (for example, sharing application information 511 in FIG. 5) for pairing the room (or house) provided by the hotel and the room (or house) provided by the traveler to share accommodations, through a block accommodation sharing application module (for example, block accommodation sharing application module 515 in FIGS. 5 and 11).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and recording, in a form of block data (for example, block data 520 in FIG. 5), tag information (for example, tag information 530 in FIG. 5) with which contents information on images, videos, audio, and the like related to the accommodation provided by at least one hotel and the room (or house) provided by at least one traveler to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or the contents information on the images, videos, audio, and the like and the management information on the names, list, position information, check-in/check-out, sharing period information, presence or absence of vacancy, states of repair and maintenance, and the like of the accommodations.

According to an embodiment of the present invention, as one of accommodation sharing methods, more specifically, there is provided a method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers. The method may include a step of inputting either of an address or a zip code for identifying latitude and longitude on an area where a traveler will visit (travel), through a visit candidate area position information input module (for example, visit candidate area position information input module 920 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of selecting at least one address or zip code from the address list or the zip code list output on the screen of the user terminal, through a visit candidate area position information selection module (for example, visit candidate area position information selection module 930 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may perform a subsequent step through a visit candidate area geographical information identification module (for example, visit candidate area geographical information identification module 940 in FIG. 10). The method may include a step of identifying latitude or longitude information on the address or the zip code selected by the visit candidate area position information selection module (for example, visit candidate area position information selection module 930 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of generating sharing application information (for example, sharing application information 511 in FIG. 5) for pairing rooms (or houses) provided by travelers to share accommodations, through a block accommodation sharing application module (for example, block accommodation sharing application module 515 in FIGS. 5 and 11).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and recording, in a form of block data (for example, block data 520 in FIG. 5), tag information (for example, tag information 530 in FIG. 5) with which contents information on images, videos, audio, and the like related to rooms (or houses) provided by at least two travelers to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or includes the contents information on the images, videos, audio, and the like and the management information on the names, list, position information, check-in/check-out, sharing period information, presence or absence of vacancy, states of repair and maintenance, and the like of the accommodations or generating a possession right encryption code (for example, possession right encryption code 1120 in FIG. 11) and a non-fungible token (NFT) (for example, NFT 1140 in FIG. 11) according to the possession right encryption code (for example, possession right encryption code 1120 in FIG. 11).

According to an embodiment of the present invention, as one of other accommodation sharing methods, more specifically, there is provided "a method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers. The method may include a step of inputting either of an address or a zip code for identifying latitude and longitude on an area where a traveler will visit (travel), through a visit candidate area position information input module (for example, visit candidate area position information input module 920 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of selecting at least one address or zip code from the address list or the zip code list output on the screen of the user terminal, through a visit candidate area position information selection module (for example, visit candidate area position information selection module 930 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may perform a subsequent step through a visit candidate area geographical information identification module (for example, visit candidate area geographical information identification module 940 in FIG. 10), and may include a step of identifying latitude or longitude information on the address or the zip code selected by the visit candidate area position information selection module (for example, visit candidate area position information selection module 930 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of generating sharing application information (for example, sharing application information 511 in FIG. 5) for pairing an accommodation provided by the hotel and a room (or a house) provided by the traveler to share accommodations, through a block accommodation sharing application module (for example, block accommodation sharing application module 515 in FIGS. 5 and 11).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and generating a possession right encryption code (for example, possession right encryption code 1120 in FIG. 11) and/or a data block corresponding to a block (for example, block 911 in FIG. 10) that includes tag information (for example, tag information 530 in FIG. 5) with which contents information on images, videos, audio, and the like related to the accommodation provided by at least one hotel and the room (or house) provided by at least one traveler to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or includes the contents information on the images, videos, audio, and the like and the management information on the names, list, position information, check-in/check-out, sharing period information, presence or absence of vacancy, states of repair and maintenance, and the like of the accommodations.

According to an embodiment of the present invention, as one of accommodation sharing methods, more specifically, there is provided "a method for checking in to and checking out of a blank accommodation" for a room or a house to be provided to a hotel by a traveler and sold to a netizen. The method include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permitting access for the identified user account (for example, user account 1402 in FIG. 14) on a network, and generating information on permission, through one or more access modules of a blank accommodation rent (sale) account access module(for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for checking in to and checking out of a blank accommodation" for the room or the house to be provided to the hotel by the traveler and sold to the netizen may include a step of outputting, on a screen of a user terminal, contents information on images, videos, audio, and the like for the room (or house) provided to the hotel by the traveler among accommodations or rooms (or houses) to be identified by a possession right encryption code (for example, possession right encryption code 1120 in FIG. 11) and block data (for example, block data 520 in FIG. 5) for implementing the present invention, through a blank accommodation contents information indicator (for example, blank accommodation contents information indicator 1540 in FIG. 15) of the blank accommodation management terminal (for example, blank accommodation management terminal 1240 in FIG. 12).

According to an embodiment, as one of accommodation sharing methods, "the method for checking in to and checking out of a blank accommodation" for the room or the house to be provided to the hotel by the traveler and sold to the netizen may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the possession right encryption code (for example, possession right encryption code 1120 in FIG. 11) and the block data (for example, block data 520 in FIG. 5) for implementing the present invention, through the blank accommodation management information indicator (for example, blank accommodation management information indicator 1550 in FIG. 15).

According to an embodiment, as one of accommodation sharing methods, "the method for checking in to and checking out of a blank accommodation" for the room or the house to be provided to the hotel by the traveler and sold to the netizen may include a step of generating, from a blank accommodation sales amount deposit information generation module (for example, blank accommodation sales amount deposit information generation module 680 in FIG. 8), blank accommodation check-in information (for example, blank accommodation check-in information 1560 in FIG. 15) with which check=in to the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention can be identified, through a blank accommodation check-in information generation module (for example, blank accommodation check-in information generation module 1260 in FIG. 12), and transmitting the generated blank accommodation check-in information (for example, blank accommodation check-in information 1560 in FIG. 15) to the blank accommodation management information indicator (for example, blank accommodation management information indicator 1550 in FIG. 15).

According to an embodiment, as one of accommodation sharing methods, "the method for checking in to and checking out of a blank accommodation" for the room or the house to be provided to the hotel by the traveler and sold to the netizen may include a step of generating, from the blank accommodation sales amount deposit information generation module (for example, blank accommodation sales amount deposit information generation module 680 in FIG. 8), blank accommodation check-out information (for example, blank accommodation check-out information 1570 in FIG. 15) with which check-out of the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention can be identified, through a blank accommodation check-out information generation module (for example, blank accommodation check-out information generation module 1270 in FIG. 12), and transmitting the generated blank accommodation check-out information (for example, blank accommodation check-out information 1570 in FIG. 15) to the blank accommodation management information indicator (for example, blank accommodation management information indicator 1550 in FIG. 15).

According to an embodiment of the present invention, as one of accommodation sharing methods, more specifically, there is provided "a method for managing detect of a blank accommodation" for a room or a house to be provided to a hotel by a traveler and sold to a netizen. The method include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permitting access for the identified user account (for example, user account 1402 in FIG. 14) on a network, and generating information on permission, through one or more access modules of a blank accommodation rent (sale) account access module (for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of outputting, on a screen of a user terminal, contents information on images, videos, audio, and the like for the room (or house) provided to the hotel by the traveler among accommodations or rooms (or houses) to be identified by a possession right encryption code (for example, possession right encryption code 1120 in FIG. 11) and block data (for example, block data 520 in FIG. 5) for implementing the present invention, through a blank accommodation contents information indicator (for example, blank accommodation contents information indicator 1540 in FIG. 15) of the blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the possession right encryption code (for example, possession right encryption code 1120 in FIG. 11) and the block data (for example, block data 520 in FIG. 5) for implementing the present invention, through a blank accommodation management information indicator (for example, blank accommodation management information indicator 1550 in FIG. 15).

According to an embodiment, as one of accommodation sharing methods, "the method for managing detect of a blank accommodation" for the room or the house to be provided to the hotel by the traveler and sold to the netizen may include a step of generating blank accommodation defect occurrence information (for example, blank accommodation defect occurrence information 1585 in FIG. 15) with which the occurrence of a defect for the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention can be identified, and transmitting the generated blank accommodation defect occurrence information (for example, blank accommodation defect occurrence information 1585 in FIG. 15) to the blank accommodation management information indicator (for example, blank accommodation management information indicator 1550 in FIG. 15), through a blank accommodation defect occurrence information generation module (for example, blank accommodation defect occurrence information generation module 1580 in FIG. 15) of the blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of generating blank accommodation defect occurrence information deletion information with which deletion of defect occurrence information for the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention can be identified, and transmitting the generated blank accommodation defect occurrence information deletion information to the blank accommodation management information indicator (for example, blank accommodation management information indicator 1550 in FIG. 15), through a blank accommodation defect occurrence information deletion module of the blank accommodation management terminal (for example, blank accommodation management terminal 1240 in FIG. 12).

According to an embodiment of the present invention, as one of accommodation sharing methods, more specifically, there is provided "the method for selling and purchasing a blank accommodation" for the room or the house to be provided to the hotel by the traveler and sold to the netizen may include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permitting access for the identified user account (for example, user account 1402 in FIG. 14) on a network, and generating information on permission, through one or more access modules of a blank accommodation rent (sale) account access module (for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the possession right encryption code (for example, possession right encryption code 1120 in FIG. 11) and the block data (for example, block data 520 in FIG. 5) for implementing the present invention, through the blank accommodation management information indicator (for example, blank accommodation management information indicator 1550 in FIG. 15) of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of setting a sales price of an authority to use the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention, through a blank accommodation sales price setting module (for example, blank accommodation sales price setting module 1610 in FIG. 16) of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of generating prescribed information for requesting purchase of an authority to use the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention, through a blank accommodation purchase module of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of receiving and storing real currency such as dollar, won, yen, or euro and recording information for certification or receiving and storing an NFT (for example, NFT 1140 in FIG. 11) corresponding to the possession right encryption code (for example, possession right encryption code 1120 in FIG. 11) for implementing the present invention or an NFT (for example, NFT 1140 in FIG. 11) with a different kind of blockchain and recording information for certification in a sales amount saving device (for example, sales amount saving device 1620 in FIG. 16) that is a device configured to record information for certification.

According to an embodiment, as one of accommodation sharing methods, "the method for selling and purchasing a blank accommodation" for the room or the house to be provided to the hotel by the traveler and sold to the netizen may include a step of receiving an amount of money corresponding to blank accommodation sales amount deposit information (for example, blank accommodation sales amount deposit information 681 in FIG. 8) generated by a blank accommodation sales amount deposit information generation module (for example, blank accommodation sales amount deposit information generation module 680 in FIG. 8) in a deposit account corresponding to prescribed deposit account information input from a prescribed used for implementing the present invention.

According to an embodiment, as one of accommodation sharing methods, "the method for selling and purchasing a blank accommodation" for the room or the house to be provided to the hotel by the traveler and sold to the netizen may include a step of generating, when an amount of money according to the sales price set by the blank accommodation sales price setting module (for example, blank accommodation sales price setting module 1610 in FIG. 16) is deposited into a sales amount saving device (for example, sales amount saving device 1620 in FIG. 16) configured to deposit the amount of money according to the sales price, "blank accommodation sales amount deposit information (for example, blank accommodation sales amount deposit information 681 in FIG. 8)" with which information corresponding to the deposited amount of money can be identified, through the blank accommodation sales amount deposit information generation module (for example, blank accommodation sales amount deposit information generation module 680 in FIG. 8) of the blank accommodation management terminal (for example, blank accommodation management terminal 1240 in FIG. 12).

According to an embodiment of the present invention, as one of accommodation sharing methods, more specifically, there is provided a method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers. The method may include a step of inputting either of an address or a zip code for identifying latitude and longitude on an area where a traveler will visit (travel), through a visit candidate area position information input module (for example, visit candidate area position information input module 920 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of selecting at least one address or zip code from the address list or the zip code list output on the screen of the user terminal, through a visit candidate area position information selection module (for example, visit candidate area position information selection module 930 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may perform a subsequent step through a visit candidate area geographical information identification module (for example, visit candidate area geographical information identification module 940 in FIG. 10). The method may include a step of identifying latitude or longitude information on the address or the zip code selected by the visit candidate area position information selection module (for example, visit candidate area position information selection module 930 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of generating sharing application information (for example, sharing application information 511 in FIG. 5) for pairing the room (or house) provided by the hotel and the room (or house) provided by the traveler to share accommodations, through a block accommodation sharing application module (for example, block accommodation sharing application module 515 in FIGS. 5 and 11).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and recording, in a form of block data (for example, block data 520 in FIG. 5), tag information (for example, tag information 530 in FIG. 5) with which contents information on images, videos, audio, and the like related to the accommodation provided by at least one hotel and the room (or house) provided by at least one traveler to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or the contents information on the images, videos, audio, and the like and the management information on the names, list, position information, check-in/check-out, sharing period information, presence or absence of vacancy, states of repair and maintenance, and the like of the accommodations or generating a possession right encryption code (for example, possession right encryption code 1120 in FIG. 11) and an NFT (for example, NFT 1140 in FIG. 11) according to the possession right encryption code (for example, possession right encryption code 1120 in FIG. 11).

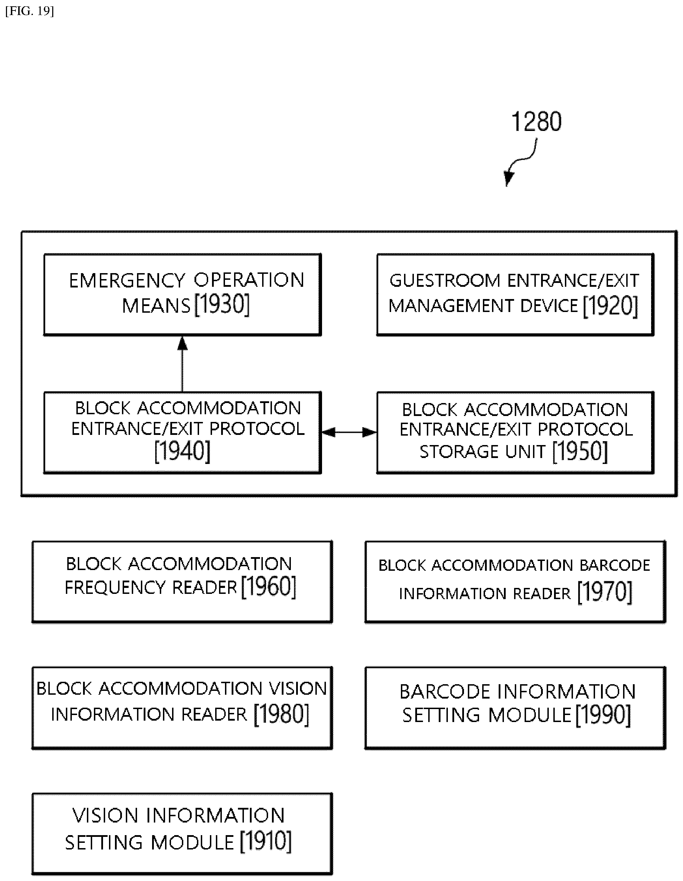

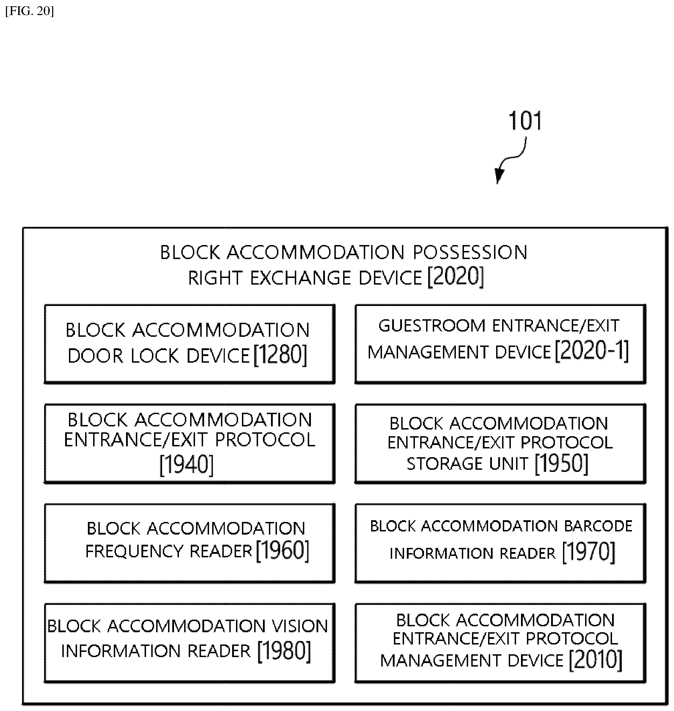

According to an embodiment, a block accommodation possession right exchange device (for example, block accommodation possession right exchange device 1160 in FIG. 11) may configure a block accommodation door lock device (for example, block accommodation door lock device 1280 in FIG. 12), a block accommodation entrance/exit protocol (for example, block accommodation entrance/exit protocol 1940 in FIG. 19), block accommodation entrance/exit protocol (for example, block accommodation entrance/exit protocol 1940 in FIG. 19), a block accommodation frequency reader (for example, block accommodation frequency reader 1960 in FIG. 19), a block accommodation barcode information reader (for example, block accommodation barcode information reader 1970 in FIG. 19), a block accommodation vision information reader (for example, block accommodation vision information reader 1980 in FIG. 19), a block accommodation entrance/exit protocol management device (for example, block accommodation entrance/exit protocol management device 2010 in FIG. 20), and the like.

According to an embodiment, the block accommodation possession right exchange device (for example, block accommodation possession right exchange device 1160 in FIG. 11) may configure a guestroom entrance/exit management device (for example, guestroom entrance/exit management device 1920 in FIG. 19), a block accommodation door lock device (for example, block accommodation door lock device 1280 in FIG. 12), a block accommodation entrance/exit protocol (for example, block accommodation entrance/exit protocol 1940 in FIG. 19), a block accommodation entrance/exit protocol (for example, block accommodation entrance/exit protocol 1940 in FIG. 19), a block accommodation frequency reader (for example, block accommodation frequency reader 1960 in FIG. 19), a block accommodation barcode information reader (for example, block accommodation barcode information reader 1970 in FIG. 19), a block accommodation vision information reader (for example, block accommodation vision information reader 1980 in FIG. 19), a block accommodation entrance/exit protocol management device (for example, block accommodation entrance/exit protocol management device 2010 in FIG. 20), and the like.

### [Advantageous Effects of the Invention]

According to the present invention, since travelers for travel purposes mutually provide rooms (or houses) for free, there is an effect of allowing people to share their houses (or rooms) that are blank during travel.

With a function of making two or more rooms (or houses) as a single accommodation, even for a shared accommodation having more rooms (or houses), since a single web page is generated per shared accommodation configured as a single accommodation, there is an effect of further reducing the loss of network resources compared to the related art in which a web page is generated per individual accommodation.

There is an effect of preventing unilateral information change on the usage conditions of rooms (or houses) while travelers are moving to rooms (or houses) at long distances by airplane to visit the rooms (or house) or are using the rooms (or houses) after a transaction of mutual sharing rooms (or houses) provided by the travelers is concluded.

As described above, according to the present invention, it can be understood that commercial hotels or the like are intended to provide accommodations to people who use the facilities for fees, and are not basically intended to share accommodations with houses (or rooms) of people for travel purposes.

Nevertheless, according to the present invention, since accommodation facilities such as commercial hotels provide rooms to people for travel purposes for free, there is an effect of allowing people to share their houses (or rooms) that are blank during travel, with rooms of commercial accommodation facilities such as hotels.

Furthermore, there is an effect of allowing travelers with rooms from a hotel to have the hotel sell their houses (or rooms) that are blank during travel, as guesthouses.

When an accommodation facility such as a commercial hotel provides rooms to travelers for free, there is significant social impact, and the hotel can obtain enormous public relations effects during which the rooms are provided to the travelers.

In addition, the hotel can obtain public relations effect not only in an area where the hotels are located, but also in each area where the house (or room) provided by the traveler is located or each time the hotel uses the room (or house) provided by the traveler.

Moreover, the hotel can cover part of the cost of guestrooms provided to people by the hotel by selling the rooms (or houses) provided to the hotel by the travelers as guesthouses or can obtain a profit in some cases.

There is an effect of preventing unilateral information change on the usage conditions of rooms (or houses) while travelers are moving to rooms (or houses) at long distances by airplane to visit the rooms (or house) or are using the rooms (or houses) after a transaction of sharing rooms (or houses) mutually provided by the travelers is concluded.

There is an effect of reducing the loss of network resources due to advanced computer calculation required to interpret cryptography for maintaining an electronic copy of a blockchain stored at each of several nodes as the same information to prevent unilateral information change or forgery and falsification.

There is an effect of preventing unilateral information change or forgery and falsification on the usage conditions of accommodations or rooms (or houses) while travelers are moving to accommodations or rooms (or houses) at long distances by airplane or are using the accommodations or the rooms (or houses) after a transaction for sharing accommodations provided by a hotel and rooms (or houses) provided by travelers is concluded.

There is an effect of reducing the loss of network resources due to advanced computer calculation required to interpret cryptography for maintaining an electronic copy of a blockchain stored at each of several nodes as the same information to prevent unilateral information change or forgery and falsification.

According to the present invention, since travelers for travel purposes mutually provide rooms for free, there is an effect of allowing people to share their houses (or rooms) that are blank during travel.

Furthermore, there is an effect of simply transferring the whole or a part of an available period through an NFT (for example, NFT 1140 in FIG. 11) with respect to a possession right of a room (or a house) for sharing.

In addition, there is an effect of allowing a person to simply enter a door lock of a room (or a house) for sharing through means capable of carrying an NFT (for example, NFT 1140 in FIG. 11).

Moreover, there is an effect of reducing the loss of network resources with consumption of advanced computer calculation ability required to interpret cryptography for electronic copies mutually connected.

There is an effect of transferring the whole or a part of an available period to another person through an NFT (for example, NFT 1140 in FIG. 11) with respect to a possession right of an accommodation provided by a hotel or a room (or a house) provided by a traveler for sharing.

There is an effect of allowing a person to simply enter an accommodation using a function of unlocking or locking a door lock of an accommodation or a room (or a house) for sharing through a prescribed terminal in which an NFT (for example, NFT 1140 in FIG. 11) is stored.

Effects that may be obtained from the present disclosure are not limited to the effects described above, and other effects that are not described herein will become apparent to those skilled in the art from the following description.

In addition, various effects that are ascertained directly or indirectly from the present disclosure may be provided.

### [Brief Description of Drawings]

In the description of the drawings, the same or similar components can be represented by the same or similar reference numerals.

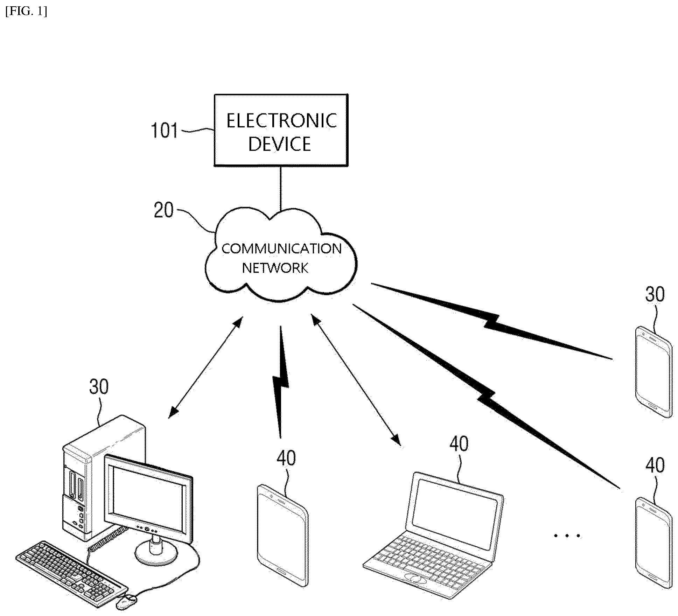

FIG. 1 is a diagram illustrating an accommodation sharing system including an electronic device (for example, accommodation sharing device) in a network environment according to an embodiment of the present disclosure.

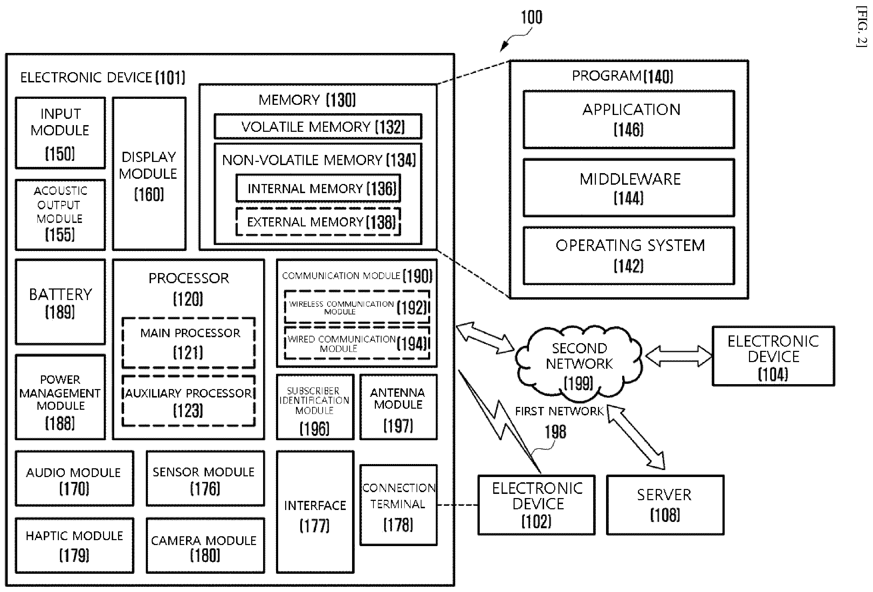

FIG. 2 is a block diagram of the electronic device (for example, smartphone, tablet PC, notebook PC, or desktop PC) in the network environment according to the embodiment of the present disclosure.
FIG. 3 is a diagram illustrating connection of the electronic device (for example, accommodation sharing device) (for example, electronic device including web server) according to the embodiment of the present disclosure, operator's special nodes, and user's nodes.

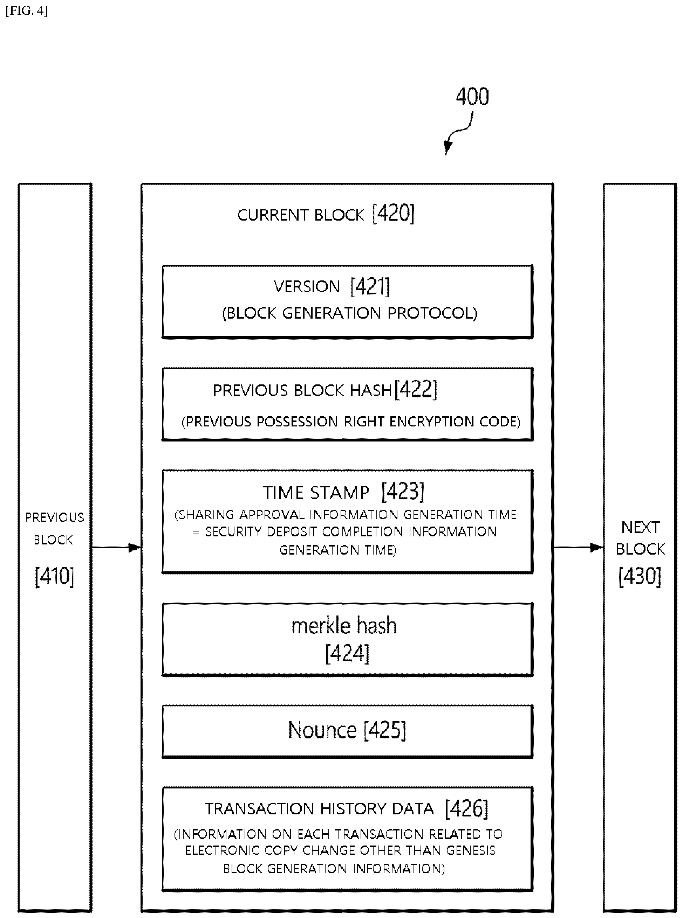

FIG. 4 is a diagram illustrating a blockchain for house sharing that is generated in the electronic device (for example, accommodation sharing device) (for example, electronic device including web server) of the present disclosure.
FIG. 5 is a diagram illustrating the electronic device (for example, accommodation sharing device) (for example, electronic device including web server) according to the embodiment of the present disclosure.
FIG. 6 is a diagram illustrating an electronic device (for example, accommodation sharing device) (for example, electronic device including web server) according to an embodiment of the present disclosure.
FIG. 7 is a diagram illustrating an electronic device (for example, accommodation sharing device) (for example, electronic device including web server) according to an embodiment of the present disclosure.
FIG. 8 is a diagram illustrating an electronic device (for example, accommodation sharing device) (for example, electronic device including web server) according to an embodiment of the present disclosure.
FIG. 9 is a diagram illustrating an electronic device (for example, accommodation sharing device) (for example, electronic device including web server) according to an embodiment of the present disclosure.
FIG. 10 is a diagram illustrating an electronic device (for example, accommodation sharing device) (for example, electronic device including web server) according to an embodiment of the present disclosure.
FIG. 11 is a diagram illustrating generation of an electronic copy and a possession right encryption code in which a part or the whole of the electronic copy is encrypted, in an electronic device (for example, accommodation sharing device) (for example, electronic device including web server) according to an embodiment of the present disclosure.
FIG. 12 is a diagram illustrating an electronic device (for example, accommodation sharing device) (for example, electronic device including web server) according to an embodiment of the present disclosure.
FIG. 13 is a diagram illustrating an operation method for an electronic device (for example, accommodation sharing device) (for example, electronic device including web server) according to an embodiment of the present disclosure.
FIG. 14 is a diagram illustrating an electronic device (for example, accommodation sharing device) (for example, electronic device including web server) according to an embodiment of the present disclosure.
FIG. 15 is a diagram illustrating an electronic device (for example, accommodation sharing device) (for example, electronic device including web server) according to an embodiment of the present disclosure that generates block accommodations.
FIG. 16 is a diagram illustrating an electronic device (for example, accommodation sharing device) (for example, electronic device including web server) according to an embodiment of the present disclosure.
FIG. 17 is a diagram illustrating an electronic device (for example, accommodation sharing device) (for example, electronic device including web server) according to an embodiment of the present disclosure.
FIG. 18 is a diagram illustrating an electronic device (for example, accommodation sharing device) (for example, electronic device including web server) according to an embodiment of the present disclosure.
FIG. 19 is a diagram illustrating a door lock system that is operated by an electronic device (for example, accommodation sharing device) (for example, electronic device including web server) according to an embodiment of the present disclosure.
FIG. 20 is a diagram illustrating an electronic device (for example, accommodation sharing device) (for example, electronic device including web server) according to an embodiment of the present disclosure.

It should be noted that the same reference numerals are used to represent the same or similar elements, functions, and structures throughout the drawings.

### Description of Embodiments

The following description referring to the accompanying drawings is provided to assist in a comprehensive understanding of various embodiments of the present disclosure as defined by the claims and equivalents thereof. Various specific details to assist in understanding are included but these are to be regarded as merely exemplary. Accordingly, those skilled in the art will recognize that various changes and modifications can be made to various embodiments described in the present specification without departing from the scope and spirit of the present disclosure. In additions, description of well-known functions and configurations may be omitted for clarity and conciseness.

The terms and words used in the following description and the claims are not limited to bibliographical meanings, but are merely used by the inventor to enable clear and consistent understanding of the present disclosure. Accordingly, it should be apparent to those skilled in the art that the following description of various embodiments of the present disclosure is provided for illustration purpose only and is not intended to limit the present disclosure as defined by the appended claims and equivalents thereof.

It is to be understood that the singular forms include plural referents unless the context clearly dictates otherwise. Thus, for example, reference to "a component surface" includes reference to one or more of such surfaces.

FIG. 1 is a diagram illustrating an accommodation sharing system including an electronic device (for example, accommodation sharing device) in a network environment according to an embodiment of the present disclosure.

Referring to FIG. 1, travelers can access an electronic device 101 (for example, accommodation sharing device) (for example, electronic device including web server) (for example, electronic device 101 of FIG. 2) for providing an accommodation facility sharing service according to an embodiment of the present invention using electronic devices 30 (for example, clients) via a communication network 20. Then, the travelers can browse information on accommodation facilities provided by the electronic device 101 (for example, accommodation sharing device) (for example, electronic device including web server) through web pages or windows provided by the electronic device 101 (for example, accommodation sharing device) (for example, electronic device including web server) or can transmit an application for use of an accommodation facility to the electronic device 101 (for example, accommodation sharing device) (for example, electronic device including web server).

The travelers can access the electronic device 101 (for example, accommodation sharing device) (for example, electronic device including web server) via the communication network 20 using the electronic devices 30 (for example, clients) and can transmit various messages necessary for implementing the embodiments of the present invention to the electronic device 101 (for example, accommodation sharing device) (for example, electronic device including web server). The electronic device 101 (for example, accommodation sharing device) (for example, electronic device including web server) can include various kinds of software/programs that are installed on a hardware platform and executed to provide an accommodation sharing service according to the embodiments of the present invention. The electronic device 101 (for example, accommodation sharing device) (for example, electronic device including web server) can be implemented by one or more server grade computers that may include one or more proxy servers.

In an embodiment, the electronic device 101 (for example, accommodation sharing device) (for example, electronic device including web server) can be implemented by a PC-cluster based server such as a load balancing PC-cluster server. In an embodiment, the electronic device 101 (for example, accommodation sharing device) (for example, electronic device including web server) can be implemented by a collocated server such as a dedicated server, a hosting server, or a cloud server.

In the present disclosure, the electronic device 30 (for example, client) is used to refer to a client terminal, but the electronic device 30 may refer to an owner of an accommodation facility and/or a traveler who uses a client terminal, depending on the context.

In an embodiment, the electronic device 30 (for example, client) may include a desktop or laptop PC including a radio LAN module and/or a wired LAN module, a portable terminal such as a tablet PC, a notebook, or a notepad, various kinds of handheld based radio communication devices such as a smartphone, a workstation, or a smart TV such as an Internet protocol television (IPTV), an Internet television (Internet TV), a terrestrial TV, or a cable TV, but the type of the client is not limited thereto.

An administrator terminal 40 may be a terminal that is operated in travel areas where the travelers who receive a web service according to an embodiment of the present invention travel, that is, areas near places where there are accommodation facilities.

The administrator terminal 40 is a terminal that that is carried with an administrator who is operating the electronic device 101 (for example, accommodation sharing device) (for example, electronic device including web server) or a person under the control of the administrator, and may be used in transmitting a message including identification information that the traveler inputs to identify himself/herself, to the electronic device 101 (for example, accommodation sharing device) (for example, electronic device including web server). The administrator terminal 40 may include a portable terminal such as a tablet PC, a notebook, or a notepad, or various kinds of handheld based radio communication devices such as a smartphone, but the type of administrator is not limited thereto.

In an embodiment, the electronic device 30 (for example, client) may have a web browser and may be configured to access the electronic device 101 (for example, accommodation sharing device) (for example, electronic device including web server) via the communication network 20 to browse and retrieve web pages provided by the electronic device 101 (for example, accommodation sharing device) (for example, electronic device including web server) using the web browser.

The web browser installed on the electronic device 30 (for example, client) may include a web browser for a PC such as Opera, FireFox, Safari, Internet Explorer, Microsoft Edge, Google Chrome, or Navigator or a web browser for a mobile device such as Opera Mini, Firefox Mobile, Mobile Safari, or Google Mobile.

The electronic device 30 (for example, client) may include an application program or a plug-in that is supplied from the electronic device 101 (for example, accommodation sharing device) (for example, electronic device including web server) via the communication network 20 and executed therein.

The communication network 20 may include all kinds of wire/wireless networks including as a mobile communication network such as the Internet, a WiFi network, a local area network (LAN), a wide area network (WAN), a value added network (VAN), a personal area network (PAN), a personal communication system (PCS) network, a global system for mobile communication (GSM) network, a personal digital cellular (PDC) network, a personal handy-phone system (PHS) network, a personal digital assistant (PDA) network, an international mobile telecommunication (IMT)-2000 network, a code division multiple access (CDMA)-2000 network, a wideband code division multiple access (W-CDMA) network, a wireless broadband Internet (Wibro) network, or a 4G (LTE/LTE-Advanced) network and a satellite communication network, and the type of the communication network 20 is not limited thereto.

Fig. 2 is a block diagram illustrating an electronic device 101 (for example, smartphones, tablets, laptops, desktop PCs) in a network environment 100 according to various embodiments.

Referring to Fig. 2, the electronic device 101 (for example, accommodation sharing device, electronic device including web server) in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 (for example, accommodation sharing device, electronic device including web server) may communicate with the electronic device 104 via the server 108. According to an embodiment, the electronic device 101 (for example, accommodation sharing device, electronic device including web server) may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101 (for example, accommodation sharing device, electronic device including web server), or one or more other components may be added in the electronic device 101 (for example, accommodation sharing device, electronic device including web server). In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 (for example, accommodation sharing device, electronic device including web server) coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 (for example, accommodation sharing device, electronic device including web server) includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101 (for example, accommodation sharing device, electronic device including web server), instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 (for example, accommodation sharing device, electronic device including web server) where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101 (for example, accommodation sharing device, electronic device including web server). The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101 (for example, accommodation sharing device, electronic device including web server), from the outside (e.g., a user) of the electronic device 101 (for example, accommodation sharing device, electronic device including web server). The input module 150 may include, for example, a microphone, a mouse, a keyboard, a key (e.g., a button), or a digital pen (e.g., a stylus pen).

The sound output module 155 may output sound signals to the outside of the electronic device 101 (for example, accommodation sharing device, electronic device including web server). The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101 (for example, accommodation sharing device, electronic device including web server). The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101 (for example, accommodation sharing device, electronic device including web server).

The sensor module 176 may detect an operational state (e.g., power or temperature) of the electronic device 101 (for example, accommodation sharing device, electronic device including web server) or an environmental state (e.g., a state of a user) external to the electronic device 101 (for example, accommodation sharing device, electronic device including web server), and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 (for example, accommodation sharing device, electronic device including web server) to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 (for example, accommodation sharing device, electronic device including web server) may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101 (for example, accommodation sharing device, electronic device including web server). According to one embodiment, the power management module 188 may be implemented as at least part of, for example, a power management integrated circuit (PMIC).

The battery 189 may supply power to at least one component of the electronic device 101 (for example, accommodation sharing device, electronic device including web server). According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 (for example, accommodation sharing device, electronic device including web server) and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 (for example, accommodation sharing device, electronic device including web server) in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101 (for example, accommodation sharing device, electronic device including web server), an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101 (for example, accommodation sharing device, electronic device including web server). According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 (for example, accommodation sharing device, electronic device including web server) and the external electronic device 104 via the server 108 coupled with the second network 199. Each of the electronic devices 102 or 104 may be a device of a same type as, or a different type, from the electronic device 101 (for example, accommodation sharing device, electronic device including web server). According to an embodiment, all or some of operations to be executed at the electronic device 101 (for example, accommodation sharing device, electronic device including web server) may be executed at one or more of the external electronic devices 102, 104, or 108. For example, if the electronic device 101 (for example, accommodation sharing device, electronic device including web server) should perform a function or a service automatically, or in response to a request from a user or another device, the electronic device 101 (for example, accommodation sharing device, electronic device including web server), instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101 (for example, accommodation sharing device, electronic device including web server). The electronic device 101 (for example, accommodation sharing device, electronic device including web server) may provide the outcome, with or without further processing of the outcome, as at least part of a reply to the request. To that end, a cloud computing, distributed computing, mobile edge computing (MEC), or client-server computing technology may be used, for example. The electronic device 101 (for example, accommodation sharing device, electronic device including web server) may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 (for example, accommodation sharing device, electronic device including web server) may be applied to intelligent services (e.g., smart home, smart city, smart car, or healthcare) based on 5G communication technology or IoT-related technology.

The electronic device 101 (for example, accommodation sharing device) (for example, electronic device including web server) according to the embodiment of the present disclosure may include a memory 130 as a database.

According to an embodiment, the memory 130 may store information on a plurality of accommodation facilities.

Each of the electronic devices 30 (for example, clients) of FIG. 1 may upload information on an accommodation facility to be provided, to the electronic device 101 (for example, accommodation sharing device) (for example, electronic device including web server) using a web page/window provided in the electronic device 101 (for example, accommodation sharing device) (for example, electronic device including web server). If information on the accommodation facility is uploaded to the electronic device 101 (for example, accommodation sharing device) (for example, electronic device including web server), information on the accommodation facility may be stored in the memory 130.

According to an embodiment, the accommodation facility may be a house where the client himself/herself resides or at least one room in the house, and the type of the accommodation facility is not limited thereto. Information on the accommodation facility provided by each client may include an area (a country/city or a specific address) to which the accommodation facility belongs, the type (a house, officetel, apartment, or the like) of the accommodation facility, a rental period (opening date and time and closing date and time) of the accommodation facility, equipment and/or a convenient facility in the accommodation facility, a video of the accommodation facility, and the like. In an embodiment, the memory 130 may be implemented by a disk drive, a magnetic disk, an optical disc, or other appropriate storage devices.

FIG. 3 is a diagram illustrating connection of the electronic device (for example, accommodation sharing device) (for example, electronic device including web server) according to the embodiment of the present disclosure, operator's special nodes, and user's nodes. FIG. 4 is a diagram illustrating a blockchain for house sharing that is generated in the electronic device (for example, accommodation sharing device) (for example, electronic device including web server) of the present disclosure.

Referring to FIGS. 3 and 4, the electronic device (for example, electronic device 101 in FIG. 1 or an electronic device 101 in FIG. 2) (for example, accommodation sharing device) (for example, electronic device including web server) according to an embodiment of the present disclosure may include a server 310 (for example, mainnet server), a memory 130 (for example, database), and a service gate 320.

According to the embodiment, the server 310 (for example, mainnet server) may include a processor (for example, processor 120 in FIG. 2), a program (for example, program 140 in FIG. 2), and a communication module (for example, communication module in FIG. 2).

According to the embodiment, the server 310 (for example, mainnet server) may be connected (for example, electrically connected) to the service gate 320.

According to the embodiment, the service gate 320 may be connected (for example, electrically connected) to the server 310 (for example, mainnet server) and a plurality of operator's special nodes 330.

According to the embodiment, the service gate 320 may be connected (for example, electrically connected) to the server 310 (for example, mainnet server) and a plurality of user's nodes 340.

According to the embodiment, the service gate 320 identifies a position on a network of a node at which an electronic copy is stored, is composed of a combination of a domain, a unique URL, and the like, and may be generated at the same time with generation of block data. An Internet address such as a unique URL for identifying a position on a network of a block management fee saving device (for example, block management fee saving device 1130 in FIG. 11) that is an electronic wallet may correspond to the service gate 320.

According to the embodiment, the electronic device (for example, accommodation sharing device) (for example, electronic device including web server) of the present disclosure may generate a blockchain 400 for house sharing.

For example, an electronic copy of a blockchain may be stored in terminals (for example, electronic devices) of users who participate in nodes for house sharing.

According to the embodiment, when a genesis block of a blockchain (for example, blockchain 400 in FIG. 4), only an electronic copy of a blockchain 400 of a node 1 may be generated.

For example, the blockchain 400 may have a previous block 410, a current block 420, and a next block 430 that are sequentially generated. Each of the previous block 410, the current block 420, and the next block 430 may include version 421, previous block hash 422, time stamp 423, merkle hash 424, Nounce 425, and/or transaction history data 426. For example, transaction data that is generated by change in information such as sharing target house information (or commercial accommodation information), latitude and longitude information, first usage start date and last usage end date information, radius range information, house (commercial accommodation) unique CID, sharing approval information, and tag information may be stored as transaction history data.

For example, when houses for sharing are one-to-one, an electronic copy of the blockchain 400 may be generated at nodes 1 and 2.

For example, when houses for sharing are one-to-three, the electronic copy of the blockchain 400 may be generated at nodes 1, 2, 3, and 4.

For example, when an operator's special node 330 is added by the block generation protocol, even when houses for sharing are one-to-one, after a security has been deposited, consensus from all nodes including the operator's special node is required for changing the content of the block. A rule for consensus of the block generation protocol (smart contract) may be set or changed in various forms such as consensus of 2/3 of the nodes through block generation protocol management means and a block according to the rule may be generated.

According to the embodiment, the server 310 (for example, mainnet server) may be broken and the operator's special node 330 and/or the user's node 340 may not be connected thereto. In this case, the electronic devices at the nodes may be directly connected in a wired or wireless manner through the possession right encryption code with which the position on the network or the like can be identified, to compare the electronic copies of the blockchain 400.

According to the embodiment, the memory (for example, memory 130 in FIG. 2 and memory 130 in FIG. 3) may include instructions for the processor (for example, processor 120 in FIG. 2 or server 130 in FIG. 3) to perform the operations illustrated in FIGS. 3 and 4.

FIG. 5 is a diagram illustrating the electronic device (for example, accommodation sharing device) (for example, electronic device including web server) according to the embodiment of the present disclosure.

Referring to FIGS. 3 and 5, the service gate 320 of the electronic device (for example, accommodation sharing device) (for example, electronic device including web server) according to the embodiment of the present disclosure may provide a function of allowing a terminal (for example, electronic devices 30 in FIG. 1 (for examples, clients) or administrator terminal 40 (for example, netizen terminal or operator terminal)) of a prescribed user to access a web site or a network (for example, communication network 20) for implementing the present invention.

According to the embodiment, the service gate 320 may further provide a function of an Internet address (or an access address on the network) for access to data of a prescribed database (or prescribed storage means) connected to the web site or the network for implementing the present invention, and the like.

According to the embodiment, the service gate 320 may further provide a function of an IP address (dynamic IP or fixed IP), a domain, or a URL for access to data of the prescribed database (or prescribed storage means) connected to the web site or the network for implementing the present invention, and the like.

According to the embodiment, the service gate 320 may further provide a function of an interplanetary file system (IPFS) for access to data of the prescribed database (for example, prescribed storage means) connected to the web site or the network for implementing the present invention, and the like.

For example, the IPFS means a distributed file system, is generally an address on the Internet for access, and may provide a function of a structure such as https://ipfs.io/ipfs/, and the like.

For example, the domain is a word that means territory, field, area, and range (for example, one's land and landownership (law)), but has a meaning of an Internet address and may provide a function of a structure such as https://domain.com, and the like.

According to the embodiment, when sharing approval information 512 with respect to sharing application information 511 is generated through a block accommodation sharing approval module 510, the service gate 320 may further include (for example, operate further including) a function of recording the generated sharing approval information 512 along with accommodation sharing related information in the form of block data 520.

When the sharing approval information 512 to the sharing application information 511 is generated through the block accommodation sharing approval module 510, the service gate 320 may further include (for example, operate further including) a function of recording tag information 530 with which the service gate 320 can be identified, along with the generated sharing approval information 512 and the accommodation sharing related information in the form of the block data 520.

According to the embodiment, a position on the network of the service gate 320 can be set according to an operation rule stored in a block generation protocol 501, and may further include display information on a position of a root on the network connected to a prescribed device or means for implementing the present invention.

For example, the position on the network of the service gate 320 may be https://servicegaet.com that is a position of a root, or the like.

According to the embodiment, the block data 520 may further include (for example, operate further including) a function of being recorded at each node (for example, operator's special nodes 330 and user's nodes 340 in FIG. 3) for implementing the present invention.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 5.

FIG. 6 is a diagram illustrating an electronic device (for example, accommodation sharing device) (for example, electronic device including web server) according to an embodiment of the present disclosure. An electronic device 101 of FIG. 6 may include all or at least some of the configurations of the electronic device 101 of FIG. 5.

Referring to FIGS. 3, 5, and 6, according to the embodiment, a commercial candidate accommodation access gate generation module 540 may include a function (for example, operate including a function) of generating, when an accommodation facility such as a commercial hotel shares accommodations with travelers, a commercial candidate accommodation access gate 541 that is operated by a protocol according to a prescribed standard for communication a hotel accommodation integrated information database 550 in which accommodation information of the hotel is stored and each device or means for implementing the present invention.

According to the embodiment, a commercial candidate accommodation 560 means a room provided by the hotel before a sharing transaction is confirmed in sharing rooms provided by a commercial accommodation facility such as a hotel and rooms provided by travelers to implement the present invention, and since the commercial candidate accommodation 560 is an accommodation before the sharing transaction is confirmed, information related to a candidate may be included.

According to the embodiment, the commercial candidate accommodation access gate 541 means a protocol according to a prescribed standard provided in the network for each device or means for implementing the present invention to access prescribed information of existing accommodations in operation stored in a hotel accommodation integrated information database (for example, hotel accommodation integrated information database 550 in FIG. 5) being managed by an accommodation facility such as a hotel through prescribed access information or the like, and may include (for example, operate including) a form such as an application program interface (API).

According to the embodiment, the commercial candidate accommodation access gate 541 may include a function (for example, operate including a function) of transmitting a request signal for accessing contents information on images, videos, audio, and the like of the existing accommodations in operation and management information on a list, position information, check-in/check-out, sharing period information, presence or absence of vacancy, states of repair and maintenance of the existing accommodations in operation stored in the hotel accommodation integrated information database 550 being managed by the accommodation facility such as a hotel to the hotel accommodation integrated information database 550 according to an operation rule set through the commercial candidate accommodation API setting module 570.

According to the embodiment, an image (for example, image file such as house photograph, accommodation photograph, room photograph, or hotel photograph) is a file in an image format such as jpg, gif, or bmp, a video is a video file in a format such as mov, mp4, or avi, and audio is a file in a format such as mp3 or wmv. These files may include (for example, operate including) functions of input, storage, transmission, and the like through a prescribed device, means, or the like of the present invention.

According to the embodiment, a commercial candidate accommodation management console 580 may provide a function for access of an operator who provides an accommodation of a commercial accommodation facility such as a hotel.

For example, the commercial candidate accommodation management console 580 may include an interface device that outputs hotel accommodation integrated information 551 of accommodations provided by the hotel recorded in the hotel accommodation integrated information database 550 on a screen provided in a terminal or the like connected to each device or means for implementing the present invention. The commercial candidate accommodation management console 580 may include a function (for example, operate including a function) of browsing contents information on images, videos, audio, and the like of accommodations provided to people by the hotel for sharing and management information on a list, position information, check-in/check-out, sharing period information, presence or absence of vacancy, states of repair and maintenance, and the like of the accommodations or linking, identifying, transmitting, receiving, generating, changing, deleting, and recording prescribed information of related block data (block data 520) through each device or means for the present invention.

According to the embodiment, a commercial candidate accommodation account access module 590 may provide a function of accessing a web site for implementing the present invention, a smartphone application, or the like to a user, and may include a function (for example, operate including a function) of identifying a unique ID or the like for a user account (for example, user account 1402 in FIG. 14) of an operator who provides an accommodation of a commercial accommodation facility such as a hotel, permitting access to a user account (for example, user account 1402 in FIG. 14) corresponding to the unique ID, generating information on permission, and recording the generated information in a commercial candidate accommodation log database 591.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 6.

FIG. 7 is a diagram illustrating an electronic device (for example, accommodation sharing device) (for example, electronic device including web server) according to an embodiment of the present disclosure. An electronic device 101 of FIG. 7 may include all or at least some of the configurations of the electronic device 101 of FIG. 5. The electronic device 101 of FIG. 7 may include all or at least some of the configurations of the electronic device 101 of FIG. 6.

Referring to FIGS. 3, 5, 6, and 7, according to the embodiment, a commercial candidate accommodation sharing period setting module 610 may provide, to a prescribed user account, a function for setting information on a whole period during which the commercial candidate accommodation (for example, commercial candidate accommodation 560 in FIG. 6) for implementing the present invention can be provided, and may include a function (for example, operate including a function) of recording information on the whole period set through the above-described function in the commercial candidate accommodation log database (for example, commercial candidate accommodation log database 591 in FIG. 6).

According to the embodiment, a commercial candidate accommodation POST ID registration module 620 may provide, to the user account, a function of inputting a POST ID with which a web page of a commercial candidate accommodation can be identified in a web site where the commercial candidate accommodation (for example, commercial candidate accommodation 560 in FIG. 6) for implementing the present invention is registered, and may include a function (for example, operate including a function) of recording information on the POST ID input through the above-described function in the commercial candidate accommodation log database (for example, commercial candidate accommodation log database 591 in FIG. 6).

According to the embodiment, a commercial candidate accommodation URL registration module 630 may provide, to the user account, a function of inputting a URL identifying the web page of the commercial candidate accommodation in the web site where the commercial candidate accommodation (for example, commercial candidate accommodation 560 in FIG. 6) for implementing the present invention is registered, and may include a function (for example, operate including a function) of recording information on the URL input through the above-described function in the commercial candidate accommodation log database (for example, commercial candidate accommodation log database 591 in FIG. 6).

According to the embodiment, a commercial candidate accommodation IP registration module 640 may provide, to the user account, a function of inputting an ID address with which the web page of the commercial candidate accommodation can be identified in the web site where the commercial candidate accommodation (for example, commercial candidate accommodation 560 in FIG. 6) for implementing the present invention is registered. The commercial candidate accommodation IP registration module 640 may include a function (for example, operate including a function) of recording information on the IP address input through the above-described function in the commercial candidate accommodation log database (for example, commercial candidate accommodation log database 591 in FIG. 6). For example, a function of directly registering a fixed IP address or capable of setting a dynamic ID address may be further included.

According to the embodiment, a commercial candidate accommodation barcode registration module 650 may provide, to the user account, a function of inputting a barcode with which the web page of the commercial candidate accommodation can be identified in the web site where the commercial candidate accommodation (for example, commercial candidate accommodation 560 in FIG. 6) for implementing the present invention is registered. The commercial candidate accommodation barcode registration module 650 may include a function (for example, operate including a function) of recording information on the barcode input through the above-described function in the commercial candidate accommodation log database (for example, commercial candidate accommodation log database 591 in FIG. 6). The barcode may further include (for example, operate including) a QR code, a one-dimensional barcode, or a two-dimensional barcode.

According to the embodiment, a commercial candidate accommodation position information registration module 660 may provide, to the user account, a function of inputting information with which a position of the commercial candidate accommodation can be identified in the web site where the commercial candidate accommodation (for example, commercial candidate accommodation 560 in FIG. 6) for implementing the present invention is registered. The commercial candidate accommodation position information registration module 660 may include a function (for example, operate including a function) of recording information on the position input through the above-described function in the commercial candidate accommodation log database (for example, commercial candidate accommodation log database 591 in FIG. 6). The information on the position may include (for example, operate including) latitude and longitude, a height from sea level, a height from the ground, or a specific floor in a building.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 7.

FIG. 8 is a diagram illustrating an electronic device (for example, accommodation sharing device) (for example, electronic device including web server) according to an embodiment of the present disclosure.

An electronic device 101 of FIG. 8 may include all or at least some of the configurations of the electronic device 101 of FIG. 5. The electronic device 101 of FIG. 8 may include all or at least some of the configurations of the electronic device 101 of FIG. 6. The electronic device 101 of FIG. 8 may include all or at least some of the configurations of the electronic device 101 of FIG. 7.

Referring to FIGS. 3, 5, 6, 7, and 8, a deposit account information input module 680 may provide a function of inputting deposit account information for receiving an amount of money corresponding to blank accommodation sales amount deposit information 681 generated by a blank accommodation sales amount deposit information generation module (for example, blank accommodation sales amount deposit information generation module 680 in FIG. 8). The deposit account information input module 680 may include a function (for example, operate including a function) of recording information input through the above-described function in the commercial candidate accommodation log database (for example, commercial candidate accommodation log database 591 in FIG. 6).

According to the embodiment, the commercial candidate accommodation API setting module (for example, commercial candidate accommodation API setting module 570 in FIG. 6) may include a function (for example, operate including a function) of recording, in the commercial candidate accommodation log database (for example, commercial candidate accommodation log database 591 in FIG. 6), a set value of an application program interface (API) capable of setting an operation rule of the commercial candidate accommodation access gate (for example, commercial candidate accommodation access gate 541 in FIG. 5) that provides the function of enabling each device or means for implementing the present invention, to access or link the contents information on the images, videos, audio, and the like of the existing accommodations in operation and the management information on the list, position information, check-in/check-out, sharing period information, presence or absence of vacancy, states of repair and maintenance of the accommodations stored in the hotel accommodation integrated information database (for example, hotel accommodation integrated information database 550 in FIG. 6) being managed in the accommodation facility such as a hotel through prescribed access information or the like.

For example, the application program interface (API) means an application program programming interface, and more specifically, refers to the specification on an interface device for interaction by defining a series of subprograms, protocols, and the like for creating a program.

According to the embodiment, a commercial candidate accommodation management module 680 may browse the hotel accommodation integrated information (for example, hotel accommodation integrated information 551 in FIG. 6) of the existing accommodations in operation stored in the hotel accommodation integrated information database (for example, hotel accommodation integrated information database 550 in FIG. 6) being managed in the accommodation facility such as a hotel, through the commercial candidate accommodation access gate (for example, commercial candidate accommodation access gate 541 in FIG. 5). Furthermore, the commercial candidate accommodation management module 680 may link, identify, transmit, receive, generate, change, delete, and record prescribed information of related block data (for example, block data 520 in FIG. 5) through each device, means, or the like for the present invention.

According to the embodiment, a hotel accommodation contents information synchronization module 711 of a commercial candidate accommodation management device 710 may include a function (for example, operate including a function) of browsing the contents information on the images, videos, audio, and the like of the accommodations provided to travelers by the hotel for sharing out of the prescribed information of the hotel accommodation integrated information (for example, hotel accommodation integrated information 551 in FIG. 6) stored in the hotel accommodation integrated information database (for example, hotel accommodation integrated information database 550 in FIG. 5), in the commercial candidate accommodation management console (for example, commercial candidate accommodation management console 580 in FIG. 6).

According to the embodiment, a hotel accommodation management information synchronization module 712 of the commercial candidate accommodation management device 710 may include a function (for example, operate including a function) of browsing the management information on the list, position information, check-in/check-out, sharing period information, presence or absence of vacancy, states of repair and maintenance, and the like of the accommodations provided to travelers by the hotel for sharing out of the prescribed information of the hotel accommodation integrated information (for example, hotel accommodation integrated information 551 in FIG. 6) stored in the hotel accommodation integrated information database (for example, hotel accommodation integrated information database 550 in FIG. 5), in the commercial candidate accommodation management console (for example, commercial candidate accommodation management console 580 in FIG. 6).

According to the embodiment, a provision candidate accommodation database synchronization module 713 of the commercial candidate accommodation management device 710 may include a function (for example, operate including a function) of generating prescribed information to be identified by provision candidate accommodation integrated information (for example, provision candidate accommodation integrated information 721 in FIG. 8) of the provision candidate accommodation database (for example, provision candidate accommodation database 720 in FIG. 8) to enable each device or means for implementing the present invention to identify that the accommodations provided to the travelers by the hotel, not the rooms (or houses) provided by the travelers for sharing, are accommodations entitled as a provision candidate accommodation or browsing the contents information on the images, videos, audio, and the like of the accommodations provided to the travelers by the hotel and the management information on the list, position information, check-in/check-out, sharing period information, presence or absence of vacancy, states of repair and maintenance, and the like of the accommodations through the commercial candidate accommodation management console (for example, commercial candidate accommodation management console 580 in FIG. 6).

According to the embodiment, the commercial candidate accommodation log database (for example, commercial candidate accommodation log database 591 in FIG. 6) of the electronic device (for example, accommodation sharing device) (for example, electronic device including web server) according to the embodiment of the present disclosure may include a function (for example, operate including a function) of recording a list obtained by linking (or a list obtained by identifying, transmitting, receiving, generating, changing, or deleting) prescribed information of block data (for example, block data 520 in FIG. 5) related to the hotel accommodation integrated information (for example, hotel accommodation integrated information 551 in FIG. 6) of the existing accommodations in operation stored in the hotel accommodation integrated information database (for example, hotel accommodation integrated information database 550 in FIG. 6) being managed in the accommodation facility such as a hotel, through each device, means, or the like for the present invention, through the commercial candidate accommodation access gate (for example, commercial candidate accommodation access gate 541 in FIG. 5).

On the other hand, the provision candidate accommodation database (for example, provision candidate accommodation database 720 in FIG. 8) and the commercial candidate accommodation log database (for example, commercial candidate accommodation log database 591 in FIG. 6) for implementing the present invention may include a function (for example, operate including a function) that both are implemented integrally, only one database is implemented, or more databases are implemented.

In addition, the commercial candidate accommodation log database (for example, commercial candidate accommodation log database 591 in FIG. 6) may further include (for example, operate including) a function of linking the contents information having a large capacity on the images, videos, audio, and the like out of information related to the accommodations provided by the accommodation facility such as a hotel along with an additional separate database.

The commercial candidate accommodation log database (for example, commercial candidate accommodation log database 591 in FIG. 6) may further include (for example, operate including) a function of linking other related information for implementing the present invention with an additional separate database in addition to the contents information related to the accommodations provided by the accommodation facility such as a hotel.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 8.

FIG. 9 is a diagram illustrating an electronic device (for example, accommodation sharing device) (for example, electronic device including web server) according to an embodiment of the present disclosure.

An electronic device 101 of FIG. 9 may include all or at least some of the configurations of the electronic device 101 of FIG. 5. The electronic device 101 of FIG. 9 may include all or at least some of the configurations of the electronic device 101 of FIG. 6. The electronic device 101 of FIG. 9 may include all or at least some of the configurations of the electronic device 101 of FIG. 7. The electronic device 101 of FIG. 9 may include all or at least some of the configurations of the electronic device 101 of FIG. 8.

Referring to FIGS. 3, 5, 6, 7, 8, and 9, according to the embodiment, a provision candidate accommodation generation and management device 810 of the electronic device 101 (for example, accommodation sharing device) (for example, electronic device including web server) according to the embodiment of the present disclosure may include a function of generating and managing information for resetting two different types of accommodations or rooms (or houses) provided by a hotel and travelers as accommodations having information conforming to a unified standard according to a prescribed protocol.

According to the embodiment, a provision candidate accommodation contents information input module (for example, provision candidate accommodation contents information input module 820 in FIG. 9) may provide a function of inputting contents information on images, videos, audio, and the like of rooms (or houses) provided by travelers, and may include a function (for example, operate including a function) of recording the input information in the provision candidate accommodation database (for example, provision candidate accommodation database 720 in FIG. 8).

According to the embodiment, a provision candidate accommodation sharing period setting module 830 may provide a function of inputting information on a date or a period in which a room (or a house) provided by a traveler is provided, and may include a function (for example, operate including a function) of recording the input information in the provision candidate accommodation database (for example, provision candidate accommodation database 720 in FIG. 8).

According to the embodiment, a provision candidate accommodation management information setting module 840 may provide a function of setting management information on a list, position information, check-in/check-out, sharing period information, presence or absence of vacancy, states of repair and maintenance, and the like of the rooms (or houses) provided by the travelers, and may further include (for example, operate further including) a function of recording the set information in the provision candidate accommodation database (for example, provision candidate accommodation database 720 in FIG. 8).

According to the embodiment, a commercial candidate accommodation identification protocol 850 may provide a following function, and may identify hotel accommodation integrated information (for example, hotel accommodation integrated information 551 in FIG. 6) of existing accommodations in operation stored in the hotel accommodation integrated information database (for example, hotel accommodation integrated information database 550 in FIG. 6) being managed in the accommodation facility such as a hotel, through the commercial candidate accommodation access gate (for example, commercial candidate accommodation access gate 541 in FIG. 5). The commercial candidate accommodation identification protocol 850 may generate prescribed information of the identified hotel accommodation integrated information (for example, hotel accommodation integrated information 551 in FIG. 6) as provision candidate accommodation integrated information (for example, provision candidate accommodation integrated information 721 in FIG. 8). The commercial candidate accommodation identification protocol 850 may include a function (for example, operate including a function) of recording, in the provision candidate accommodation database (for example, provision candidate accommodation database 720 in FIG. 8), the prescribed information of the identified hotel accommodation integrated information (for example, hotel accommodation integrated information 551 in FIG. 6) as the provision candidate accommodation integrated information (for example, provision candidate accommodation integrated information 721 in FIG. 8).

According to the embodiment, since the accommodations provided by the hotel among the different types of accommodations and rooms (or houses) provided by the hotel and the travelers for sharing are basically for sale, a provision candidate accommodation integrated information generation module 860 may generate prescribed information for enabling the device or means for implementing the present invention to identify that the accommodations provided by the hotel are accommodations entitled to be shared by the travelers, not for sale. The provision candidate accommodation integrated information generation module 860 may generate the provision candidate accommodation integrated information (for example, provision candidate accommodation integrated information 721 in FIG. 8) to record the generated prescribed information in the provision candidate accommodation database (for example, provision candidate accommodation database 720 in FIG. 8). The provision candidate accommodation integrated information generation module 860 may further include (for example, operate further including) a function of recording the generated provision candidate accommodation integrated information (for example, provision candidate accommodation integrated information 721 in FIG. 8) in the provision candidate accommodation database (for example, provision candidate accommodation database 720 in FIG. 8).

In relation of this, for the hotel accommodation integrated information (for example, hotel accommodation integrated information 551 in FIG. 6) stored in the hotel accommodation integrated information database (for example, hotel accommodation integrated information database 550 in FIG. 5), for example, the contents information on the images, videos, audio, and the like that occupy a large capacity is already stored in the hotel accommodation integrated information database (for example, hotel accommodation integrated information database 550 in FIG. 5). Accordingly, when the contents information is stored in the provision candidate accommodation database (for example, provision candidate accommodation database 720 in FIG. 8) again to implement the present invention, network resources are wasted.

To this end, the provision candidate accommodation integrated information generation module (for example, provision candidate accommodation integrated information generation module 860 in FIG. 9) may further include (for example, operate further including) a function of identifying the contents information on the images, videos, audio, and the like related to the hotel accommodation integrated information (for example, hotel accommodation integrated information 551 in FIG. 6) already stored in the hotel accommodation integrated information database (for example, hotel accommodation integrated information database 550 in FIG. 5) or recording the provision candidate accommodation integrated information (for example, provision candidate accommodation integrated information 721 in FIG. 8) through which access to the contents information can be made, in the provision candidate accommodation database (for example, provision candidate accommodation database 720 in FIG. 8).

Furthermore, the provision candidate accommodation database (for example, provision candidate accommodation database 720 in FIG. 8) may include (for example, operate including) a function of recording the prescribed information generated by the provision candidate accommodation integrated information generation module (for example, provision candidate accommodation integrated information generation module 860 in FIG. 9) or identified by the commercial candidate accommodation identification protocol (for example, commercial candidate accommodation identification protocol 850 in FIG. 9) or tag information (for example, tag information 530 in FIG. 5) with which the prescribed information can be identified, in the form of block data (for example, block data 520 in FIG. 5).

According to the embodiment, the provision candidate accommodation integrated information (for example, provision candidate accommodation integrated information 721 in FIG. 8) may include (for example, operate including) the contents information and the management information or may include the tag information for accessing or linking the contents information and the management information.

On the other hand, since the accommodations and the rooms (or houses) provided by the hotel and the travelers are different types, and the accommodations provided by the hotel are basically for sale, the provision candidate accommodation database (for example, provision candidate accommodation database 720 in FIG. 8) may provide another function, and may generate prescribed information for enabling the related device or means for the present invention to identify that the rooms (or houses) provided by the hotel are accommodations entitled to be shared by the travelers. For example, the provision candidate accommodation database (for example, provision candidate accommodation database 720 in FIG. 8) may include a database that may provide a function of generating the generated prescribed information.

For example, from a viewpoint that the provision candidate accommodation database (for example, provision candidate accommodation database 720 in FIG. 8) is a database that provides the function of recording the prescribed information, in implementing the present invention worldwide, the provision candidate accommodation database (for example, provision candidate accommodation database 720 in FIG. 8) may also provide a function of specifying a legal boundary on a country to which a physical position of a server including a database in which private information or related information is actually recorded or the database belongs, as one of data sovereignty. The provision candidate accommodation database (for example, provision candidate accommodation database 720 in FIG. 8) may further include (for example, operate including) a function of enabling the hotel to directly operate a separate database at a desired position, instead of a database provided by an operator for implementing the present invention when susceptible information such as private information of an accommodation user is generated or should be handled or stored in using the accommodations or the rooms (or houses) provided by the hotel or the travelers to implement the present invention.

According to the embodiment, a group including a pair of accommodations mutually provided is required for conclusion of an accommodation sharing transaction. The reason is because accommodation sharing has a function of two-way exchange, not one-way sale, and goods (accommodations) mutually provided by both parties needs to be simultaneously exchanged.

For example, when a person A will use a room of a person B, only in a case where the person B will use a room of the person A at the same time, both people can leave their accommodations vacant, and accommodation sharing can be accomplished.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 9.

FIG. 10 is a diagram illustrating an electronic device (for example, accommodation sharing device) (for example, electronic device including web server) according to an embodiment of the present disclosure.

An electronic device 101 of FIG. 10 may include all or at least some of the configurations of the electronic device 101 of FIG. 5. The electronic device 101 of FIG. 10 may include all or at least some of the configurations of the electronic device 101 of FIG. 6. The electronic device 101 of FIG. 10 may include all or at least some of the configurations of the electronic device 101 of FIG. 7. The electronic device 101 of FIG. 10 may include all or at least some of the configurations of the electronic device 101 of FIG. 8. The electronic device 101 of FIG. 10 may include all or at least some of the configurations of the electronic device 101 of FIG. 9.

Referring to FIGS. 3, 5, 6, 7, 8, 9, and 10, according to the embodiment, a block generation and operation device 910 of the electronic device 101 (for example, accommodation sharing device) (for example, electronic device including web server) according to the embodiment of the present disclosure may include a function (for example, operate including a function) of generating and recording, using the block generation protocol (for example, block generation protocol 501 in FIG. 5), block data (for example, block data 520 in FIG. 5) including prescribed information related to the accommodations provided by the commercial hotel or the like and the rooms (or houses) provided by the travelers as single data to form a pair of connected accommodations of at least one accommodation and at least one room (or house) provided by the hotel and the traveler through the block generation protocol (for example, block generation protocol 501 in FIGS. 5 and 10).

From this point, the block generation and operation device 910 may further include (for example, operate further including) a function of outputting at least one accommodation and at least one room (or house) as the pair of connected accommodations, into one block 911 on a screen of a prescribed user terminal at a time.

According to the embodiment, the visit candidate area position information input module 920 may provide a function of inputting one or more of an address and a zip code (QR code, barcode, or the like) for identifying position information on an area where the travelers will visit (travel), and may include (for example, operate including) a function of recording tag information (for example, tag information 530 in FIG. 5) with which the address or the zip code (QR code, barcode, or the like) input through the above-described function can be identified or the address or the zip code (QR code, barcode, or the like) in the form of block data (for example, block data 520 in FIG. 5).

According to the embodiment, a visit candidate area position information selection module 930 may output an address list or a zip code list on the address or the zip code (or QR code, barcode, or the like) input through the visit candidate area position information input module 920 on the screen of the prescribed user terminal. The visit candidate area position information selection module 930 may provide a function of selecting at least one address or zip code in the output address list or zip code list. The visit candidate area position information selection module 930 may include (for example, operate including) a function of recording tag information (for example, tag information 530 in FIG. 5) with which information selected through the above-described function can be identified or the selected information in the form of block data (for example, block data 520 in FIG. 5).

According to the embodiment, a visit candidate area geographical information identification module 940 may include a function (for example, operate including a function) of identifying latitude or longitude information on the address or the zip code selected through the visit candidate area position information selection module 930.

According to the embodiment, a visit candidate area radius setting module 950 may provide a function of setting a size of a radius around a position corresponding to the latitude or longitude identified through the visit candidate area geographical information identification module (for example, visit candidate area geographical information identification module 940 in FIG. 10), and may include (for example, operate including) a function of recording tag information (for example, tag information 530 in FIG. 5) with which information set through the above-described function can be identified, in the form of block data (for example, block data 520 in FIG. 5).

According to an embodiment, a visit period setting module 960 may provide a function of setting, when there are a plurality of sharing accommodations in visit areas or in an area, a usage start date of a first sharing accommodation and a usage end date of a last sharing accommodation. The visit period setting module 960 may provide a function of setting a usage start date and a last usage end date when there is a sharing accommodation. The visit period setting module 960 may include (for example, operate including) a function of recording tag information (for example, tag information 530 in FIG. 5) with which information set through the above-described function can be identified or the set information in the form of block data (for example, block data 520 in FIG. 5).

According to the embodiment, a visit period set through the visit period setting module 960 means a whole period during which the travelers who share the accommodations to implement the present invention will be traveling. The visit period setting module 960 may further include a function of freely setting the period taking into account a case where a user requires a lot of time to arrive at a position where an accommodation is located before a first usage date of the accommodation to use.

According to the embodiment, a visit candidate accommodation usage unit setting module 970 may provide a function of collectively applying, when there are a plurality of accommodations to be used by travelers who share accommodations to implement the present invention, a single unit usage period to all of the plurality of accommodations. The visit candidate accommodation usage unit setting module 970 may include (for example, operate including) a function of recording tag information (for example, tag information 530 in FIG. 5) with which information set through the above-described function can be identified or the set information in the form of block data (for example, block data 520 in FIG. 5).

According to the embodiment, a visit candidate accommodation usage period individual setting module 980 may provide a function of setting, when there are a plurality of accommodations to be used by travelers who shares accommodations to implement the present invention, a usage period to each of a plurality of individual accommodations the present invention. The visit candidate accommodation usage period individual setting module 980 may include (for example, operate including) a function of recording tag information (for example, tag information 530 in FIG. 5) with which information set through the above-described function can be identified or the set information in the form of block data (for example, block data 520 in FIG. 5).

According to the embodiment, prescribed information recorded in the form of the block data (for example, block data 520 in FIG. 5) through the visit candidate area geographical information identification module 940, the visit candidate area radius setting module 950, the visit period setting module 960, the visit period setting module 960, visit candidate accommodation usage unit setting module 970, and the visit candidate accommodation usage period individual setting module 980 is recorded according to the operation rule stored in the block generation protocol (for example, block generation protocol 501 in FIG. 5).

A block generation protocol (for example, block generation protocol 501 in FIG. 5) for implementing the present invention is presented.

According to the embodiment, the block generation protocol (for example, block generation protocol 501 in FIG. 5) may include (for example, operate including) a function of recording information set by (or input from) a prescribed device, means, or the like for implementing the present invention in the form of block data (for example, block data 520 in FIG. 5).

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 10.

FIG. 11 is a diagram illustrating generation of an electronic copy and a possession right encryption code in which a part or the whole of the electronic copy is encrypted, in an electronic device (for example, accommodation sharing device) (for example, electronic device including web server) according to an embodiment of the present disclosure.

An electronic device 101 of FIG. 11 may include all or at least some of the configurations of the electronic device 101 of FIG. 5. The electronic device 101 of FIG. 11 may include all or at least some of the configurations of the electronic device 101 of FIG. 6. The electronic device 101 of FIG. 11 may include all or at least some of the configurations of the electronic device 101 of FIG. 7. The electronic device 101 of FIG. 11 may include all or at least some of the configurations of the electronic device 101 of FIG. 8. The electronic device 101 of FIG. 11 may include all or at least some of the configurations of the electronic device 101 of FIG. 9. The electronic device 101 of FIG. 11 may include all or at least some of the configurations of the electronic device 101 of FIG. 10.

Description will be provided with reference to FIG. 11. According to the embodiment, the block generation protocol (for example, block generation protocol 501 in FIG. 5) may record, when the sharing approval information (for example, sharing approval information 512 in FIG. 5) to the sharing application information (for example, sharing application information 511 in FIG. 5) is generated through the block accommodation sharing approval module (for example, block accommodation sharing approval module 510 in FIG. 5), information for accommodation sharing related to the generated sharing approval information (for example, sharing approval information 512 in FIG. 5) in the form of block data (for example, block data 520 in FIG. 5). The block generation protocol (for example, block generation protocol 501 in FIG. 5) may further include (for example, operate further including) a function of generating an electronic copy 1110 in which the block data (for example, block data 520 in FIG. 5) is recorded and a possession right encryption code 1120 in which a part or the whole of the electronic copy 1110 is encrypted.

According to the embodiment, the electronic device 101 (for example, accommodation sharing device) (for example, electronic device including web server) according to the embodiment of the present disclosure may generate a block management fee saving device identification code (for example, block management fee saving device identification code 1131 in FIG. 11) with which a block management fee saving device (for example, block management fee saving device 1130 in FIG. 11) related to the sharing application information (for example, sharing application information 511 in FIG. 5) can be identified, in generating the possession right encryption code 1120.

According to the embodiment, the electronic device 101 (for example, accommodation sharing device) (for example, electronic device including web server) according to the embodiment of the present disclosure may further include (for example, operate further including) a function of recording the block management fee saving device identification code 1131 in the electronic copy 1110 in the form of block data (for example, block data 520 in FIG. 5).

According to the embodiment, the electronic device 101 (for example, accommodation sharing device) (for example, electronic device including web server) according to the embodiment of the present disclosure may further include (for example, operate further including) a function of generating an NFT 1140 (or FT) in generating the possession right encryption code 1120.

According to the embodiment, when the possession right encryption code 1120 is generated, the electronic device may further include a function (for example, operate further including a function) of generating a dedicated web page to which prescribed information of the block data (for example, block data 520 in FIG. 5) corresponding to the possession right encryption code 1120 is output.

According to the embodiment, a criterion for recording information for accommodation sharing related to the generated sharing approval information (for example, sharing approval information 512 in FIG. 5) in the form of block data (for example, block data 520 in FIG. 5) and changing information for accommodation sharing or for which information for accommodation sharing can be recorded in the form of block data (for example, block data 520 in FIG. 5) or changed may further include a function that can record (or change) information for accommodation sharing only when 100% of parties in the same group for an accommodation sharing transaction consent.

In the electronic device 101 (for example, accommodation sharing device) (for example, electronic device including web server) according to the embodiment of the present disclosure, as a criterion for recording related information in the generated electronic copy 1110 in the form of block data (for example, block data 520 in FIG. 5) and changing related information or for which block data (for example, block data 520 in FIG. 5) can be recorded in the electronic copy 1110 or changed may further include a function that can record (or change) related information only when 100% of parties in the same group for an accommodation sharing transaction consent. However, the present disclosure is not limited thereto, and the criterion may further include a function that related information can be recorded (or changed) even when more than 50% of the parties in the same group for an accommodation sharing transaction consent.

According to the embodiment, the 100% ratio may be changed by setting a related ratio of the operation rule stored in the block generation protocol (for example, block generation protocol 501 in FIG. 5) for implementing the present invention, and the electronic device may further include a function (for example, operate further including a function) of setting the ratio through block generation protocol management means (for example, 1150).

The electronic device may further include a function that can add a separate user account (for example, user account 1402 in FIG. 14) (for example, administrator account) for implementing the present invention in addition to all parties corresponding to 100%.

The parties in the group for implementing the present invention may mean users who provides accommodations of a hotel or the like or users corresponding to travelers who provide rooms (or houses), to be identified by the block data (for example, block data 520 in FIG. 5) recorded in the electronic copy 1110 and the possession right encryption code 1120.

As means to perform 100% consensus for implementing the present invention, the present invention may further include a relevant function through the block accommodation sharing approval module (for example, block accommodation sharing approval module 510 in FIG. 5) and the block accommodation sharing application module 515 (for example, block accommodation sharing application module 515 in FIG. 5).

According to the embodiment of the present disclosure, each electronic copy (for example, electronic copy 1110 in FIG. 11) that is generated for each node (for example, operator's special nodes 330 and user's nodes 340 in FIG. 3) is confined to a prescribed terminal (PC or the like) that accesses through the account of each of the parties in the group. Accordingly, when an operation of an advanced hash function is used to generate the possession right encryption code 1120, the nodes (for example, operator's special nodes 330 and user's nodes 340 in FIG. 3) for distributed storage of many unspecified electronic copies 1110 may not be operated. Therefore, there is an effect of reducing the loss of network resources for implementing the invention.

According to the embodiment, a function corresponding to the function that each electronic copy 1110 that is generated for each node (for example, operator's special nodes 330 and user's nodes 340 in FIG. 3) is confined to the prescribed terminal (PC or the like) that accesses through the account of each of the parties in the group may add a specific node in the operation rule stored in the block generation protocol (for example, block generation protocol 501 in FIG. 5) for implementing the present invention (for example, specific node designated by administrator). The electronic device may further include (for example, operate including) a function of adding the node through the block generation protocol management means 1150.

As an example of an embodiment for using an accommodation, an example where, when the electronic copy 1110 is generated in the electronic device 101 (for example, accommodation sharing device) (for example, electronic device including web server) of the present disclosure and/or the electronic devices of the users, related information is recorded in the generated electronic copy (for example, electronic copy 1110 in FIG. 11) in the form of block data (for example, block data 520 in FIG. 5), and the possession right encryption code (for example, possession right encryption code 1120 in FIG. 11), the NFT 1140 (or FT), and the block management fee saving device identification code 1131 are generated, a prescribed NFT 1140 and the like are transmitted to the block management fee reception module 1132 of a prescribed user, allowing the user who carries a prescribed device (a smartphone or the like) in which the block management fee reception module 1132 is provided, to use an accommodation through a block accommodation possession right exchange device 1160 of the accommodation.

First, to verify whether the NFT 1140 (or FT) or information for the sharing transaction related to the accommodation or the room (or house) recorded in the form of the block data (for example, block data 520 in FIG. 5) corresponding to the NFT 1140 (or FT) is falsified, the block management fee saving device identification code 1131 is recorded in the electronic copy 1110 generated by the block generation protocol (for example, block generation protocol 501 in FIG. 5) along with the block data (for example, block data 520 in FIG. 5). In the block data (for example, block data 520 in FIG. 5), the hash-encrypted possession right encryption code 1120 is generated.

The block management fee saving device 1130 provided in the prescribed device (smartphone or the like) executes a function of transmitting the NFT 1140 to the block management fee reception module 1132 of the block management fee saving device 1130 of another user (who will newly use the accommodation) through prescribed means for transmitting the NFT 1140 displayed on the screen.

According to the embodiment, information that requires an input of a block management fee verification code 1170 generated with the generation of the block management fee saving device 1130 is output on the screen of the prescribed terminal that transmits the NFT 1140.

According to the embodiment, if the block management fee verification code 1170 is input to input means on the screen, to identify whether the block management fee saving device 1130 in which the NFT 1140 is stored is the block management fee saving device 1130 corresponding to (matching) the block management fee verification code 1170, the electronic device 101 (for example, accommodation sharing device) (for example, electronic device including web server) may identify cryptography corresponding to the possession right encryption code 1120 according to a rule stored in the block generation protocol (for example, block generation protocol 501 in FIG. 5) (using coding, encoding, decoding, reverse hashing, and double hashing). Furthermore, the electronic device 101 (for example, accommodation sharing device) (for example, electronic device including web server) may verify whether the block management fee saving device identification code 1131 stored in the block data (for example, block data 520 in FIG. 5) of the electronic copy 1110 of the blockchain stored in each node (for example, operator's special nodes 330 and user's nodes 340 in FIG. 3) of the parties for for accommodation sharing corresponds to the input block management fee verification code 1170.

In this case, according to the embodiment of the present disclosure, instead of comparing all the electronic copies (for example, electronic copy 1110 in FIG. 11) of the blockchain stored at the nodes (for example, operator's special nodes 330 and user's nodes 340 in FIG. 3) of the parties who want to share the accommodations belonging to the block data (for example, block data 520 in FIG. 5), it should be sufficient that at least two of the electronic copies 1110 of the blockchain in which the same block data (for example, block data 520 in FIG. 5) is recorded can be identified.

The present disclosure is not limited thereto, and in a certain case, the electronic device 101 (for example, accommodation sharing device) (for example, electronic device including web server) may further include a function of setting the number of nodes (for example, operator's special nodes 330 and user's nodes 340 in FIG. 3) or the ratio of the nodes differently by setting the rule stored in the block generation protocol (for example, block generation protocol 501 in FIG. 5) to a different value in advance.

If the same block management fee saving device identification code (for example, block management fee saving device identification code 1131 in FIG. 11) is identified from the block data (for example, block data 520 in FIG. 5) recorded at least two nodes (for example, operator's special nodes 330 and user's nodes 340 in FIG. 3), the NFT (for example, NFT 1140 in FIG. 11) is transmitted to the block management fee reception module 1132 of the block management fee saving device 1130 provided in a prescribed device (smartphone or the like) carried with another user who wants to actually use an accommodation (who will use the accommodation), and the user who carries the prescribed device in which the block management fee saving device 1130 of the block management fee reception module 1132 that receives the NFT 1140 is provided can use the accommodation through the block accommodation possession right exchange device 1160 of the accommodation, in place of the user who transmits the NFT 1140.

According to the embodiment, when the block data (for example, block data 520 in FIG. 5) for implementing the present invention is recorded while the electronic copy 1110 is generated, for the purpose of improving the network performance, the electronic device may further include (for example, operate further including) a function of recording the block data in storage means of a prescribed server (or a load balancer or a cash server) or prescribed storage means provided in the network to perform the related function instead of the nodes (for example, operator's special nodes 330 and user's nodes 340 in FIG. 3).

The recording in the form of the block data (for example, block data 520 in FIG. 5) for implementing the present invention means that, when related information for accommodation sharing is recorded in a prescribed device, means, or the like for implementing the present invention, the related information is not information that is always generated from the same device or information that is always generated from the same hotel (or traveler) or accommodation (or room or house), related information to be recorded, the type of related information, or a subject that creates the information is changed. From this point, in the present invention, to set a boundary for identifying only recorded information when related information is recorded, related information may be specified as the block data (for example, block data 520 in FIG. 5).

The 100% consensus for implementing the present invention may be implemented through a prescribed device configured in such a manner that the sharing approval information (for example, sharing approval information 512 in FIG. 5) be generated from the block accommodation sharing approval module (for example, block accommodation sharing approval module 510 in FIG. 5) described below.

According to the embodiment, the block generation protocol (for example, block generation protocol 501 in FIG. 5) may further include (for example, operate including) a function of recording, in the form of block data (for example, block data 520 in FIG. 5), an ID (or tag information (for example, tag information 530 in FIG. 5) with which the ID can be identified) with which prescribed information of each piece of block data (for example, block data 520 in FIG. 5) can be identified on the network, a URL (or tag information (for example, tag information 530 in FIG. 5) with which the URL can be identified) with which prescribed information of each piece of block data (for example, block data 520 in FIG. 5) can be identified on the network, an IPFS (or tag information (for example, tag information 530 in FIG. 5) with which the IPFS can be identified) with which prescribed information of each piece of block data (for example, block data 520 in FIG. 5) can be identified on the network, an IP address (or tag information (for example, tag information 530 in FIG. 5) with which the IP address can be identified) with which prescribed information of each piece of block data (for example, block data 520 in FIG. 5) can be identified on the network, characters, numbers, symbols, and the like (or tag information (for example, tag information 530 in FIG. 5) with which the characters and the numbers can be identified) with which prescribed information of each piece of block data (for example, block data 520 in FIG. 5) can be identified on the network, a QR code (or another one-dimensional or two-dimensional barcode) (or tag information (for example, tag information 530 in FIG. 5) with which the QR code (or another one-dimensional or two-dimensional barcode) can be identified) with which prescribed information of each piece of block data (for example, block data 520 in FIG. 5) can be identified on the network, or a possession right encryption code (for example, possession right encryption code 1120 in FIG. 11) (or tag information (for example, tag information 530 in FIG. 5) with which the possession right encryption code (for example, possession right encryption code 1120 in FIG. 11) can be identified) with which prescribed information of each piece of block data (for example, block data 520 in FIG. 5) can be identified on the network.

For example, the IP address may further include (for example, operate further including) a fixed IP address or a dynamic IP address.

According to the embodiment, the block generation protocol (for example, block generation protocol 501 in FIG. 5) may further include (for example, operate further including) a function of generating, when the related information is recorded in the form of the block data (for example, block data 520 in FIG. 5) and the electronic copy (for example, electronic copy 1110 in FIG. 11) is generated, a possession right encryption code (for example, possession right encryption code 1120 in FIG. 11) with which the identification or the authenticity of the block data (for example, block data 520 in FIG. 5) can be verified through the electronic copy (for example, electronic copy 1110 in FIG. 11).

According to the embodiment, the block generation protocol (for example, block generation protocol 501 in FIG. 5) may further include a function of generating, when the related information is recorded in the form of the block data (for example, block data 520 in FIG. 5) and the electronic copy (for example, electronic copy 1110 in FIG. 11) is generated, the possession right encryption code (for example, possession right encryption code 1120 in FIG. 11) and an NFT (for example, NFT 1140 in FIG. 11) (or FT) with which the identification or the authenticity of the block data (for example, block data 520 in FIG. 5) can be verified through the electronic copy (for example, electronic copy 1110 in FIG. 11), storing the generated NFT (for example, NFT 1140 in FIG. 11) (or FT) in a prescribed block management fee saving device (for example, a block management fee saving device 1130 in FIG. 11), and transmitting the NFT between different block management fee saving devices (for example, block management fee saving device 1130 in FIG. 11).

For example, the possession right encryption code (for example, possession right encryption code 1120 in FIG. 11) may be cryptography (or post-quantum cryptography), may includes characters, numbers, symbols, and the like, or may further include a function (for example, operate further including a function) that is generated through a hash function.

In some cases, the possession right encryption code (for example, possession right encryption code 1120 in FIG. 11) may be implemented further including a function of cryptography having the post-quantum cryptography, and the post-quantum cryptography has an effect capable of preparing a case where the possession right encryption code (for example, possession right encryption code 1120 in FIG. 11) for implementing the present invention is disabled, through a quantum computer.

For example, the post-quantum cryptography may further include (for example, operate including) a quantum random number generator connected each device, means, or the like for implementing the present invention on the network.

For example, the possession right encryption code (for example, possession right encryption code 1120 in FIG. 11) may further include a function to be identified through a QR code (or one-dimensional or two-dimensional barcode) on the network connected to a prescribed terminal such as a camera or enabling the cryptography of the possession right encryption code (for example, possession right encryption code 1120 in FIG. 11) to be input through input means of the prescribed terminal.

For example, the hash function is a kind of summary computer encryption technology and is also called a summary function/message digest function. The hash function is an operation method for generating a fixed-length pseudorandom number from a given original sentence, and a generated value may be referred to as a "hash value". The hash function is also called a summary function/message digest function, and is an operation method for generating a fixed-length pseudorandom number in a given context. A generated value may be referred to as a "hash value".

The hash function is a function that receives a message having a freely selected length as input and outputs a fixed-length hash value. While a key is used in an encryption algorithm, the hash function does not use a key, and has the same output to the same input. A purpose of using such a function is to provide integrity that errors or falsification of the message can be detected by extracting an immutable evidence value to the input message.

When data is transferred via a communication line, it is possible to confirm whether data is changed in transferring data by obtaining the hash values of data at both ends of a path and comparing the values on a transmission side and a reception side.

Since the hash function includes an irreversible one-way function, it is not possible to reproduce the original sentence from the hash value. Furthermore, it is extremely difficult to create different data having the same hash value. Using such characteristics, the hash function can be applied to encryption assistance means for communication, user authentication, a digital signature, and the like.

The block generation protocol management means (for example, block generation protocol management means 1150 in FIG. 11) for implementing the present invention may further include a function capable of setting an operation rule of the hash function stored in the block generation protocol (for example, block generation protocol 501 in FIG. 5).

The block generation protocol management means (for example, block generation protocol management means 1150 in FIG. 11) may include (for example, operate further including) a function of setting, to set an environment at the time at which the related information is recorded at the nodes (for example, operator's special nodes 330 and user's nodes 340 in FIG. 3) in the form of block data (for example, block data 520 in FIG. 5) and the electronic copy (for example, electronic copy 1110 in FIG. 11) is generated, the number of NFTs (for example, NFTs 1140 in FIG. 11) (or FTs) corresponding to a specific possession right encryption code (for example, possession right encryption code 1120 in FIG. 11), the maximum number of NFTs (for example, NFTs 1140 in FIG. 11) (or FTs) in the specific possession right encryption code (for example, possession right encryption code 1120 in FIG. 11), or the like to allow a netizen to set, on the network, the number of NFT (for example, NFT 1140 in FIG. 11) (or FT) corresponding to the possession right encryption code (for example, possession right encryption code 1120 in FIG. 11) with which the block data (for example, block data 520 in FIG. 5) recorded in electronic copy (for example, electronic copy 1110 in FIG. 11) along with the block data (for example, block data 520 in FIG. 5) can be identified, setting prescribed sales amount deposit information as a criterion to calculate a unit price per NFT for the number of NFTs, or setting prescribed amount information for an accommodation provided by a traveler as a criterion to calculate a unit price for the number of NFTs, in the operation rule stored in the block generation protocol (for example, block generation protocol 501 in FIG. 5).

The NFT (for example, NFT 1140 in FIG. 11) (or FT) corresponding to the possession right encryption code (for example, possession right encryption code 1120 in FIG. 11) may further include a function of being stored in a prescribed block management fee saving device (for example, block management fee saving device 1130 in FIG. 11) or capable of being received and transmitted between different block management fee saving devices (for example, block management fee saving devices 1130 in FIG. 11).

According to the embodiment, the electronic device 101 (for example, accommodation sharing device) (for example, electronic device including web server) may store the NFTs (for example, NFT 1140 in FIG. 11) (or FT) corresponding to the possession right encryption code (for example, possession right encryption code 1120 in FIG. 11) in a prescribed block management fee saving device (for example, block management fee saving device 1130 in FIG. 11) or may enable the NFTs to be received or transmitted between different block management fee saving devices (for example, block management fee saving devices 1130 in FIG. 11). In this case, the electronic device 101 (for example, accommodation sharing device) (for example, electronic device including web server) may further include a function of storing, receiving, or transmitting all of the NFTs (for example, NFTs 1140 in FIG. 11) (or FTs) corresponding to the possession right encryption code (for example, possession right encryption code 1120 in FIG. 11) at a time or storing the NFTs (for example, NFTs 1140 in FIG. 11) (or FTs) in the prescribed block management fee saving device (for example, block management fee saving device 1130 in FIG. 11) or enabling the NFTs to be received or transmitted between different block management fee saving devices.

The NFT (for example, NFT 1140 in FIG. 11) corresponding to the possession right encryption code (for example, possession right encryption code 1120 in FIG. 11) for implementing the present invention means a non-fungible token, and since the NFT has a unique recognition value, it is possible to implement a function that is irreplaceable with other things (such as information) or uncopyable. For an accommodation or a room (or a house) for implementing the present invention, the accommodation that is a physical space or the sharing period is not changed and is definite, and due to the characteristics of the accommodation sharing transaction, a transaction is accomplished only when accommodations are provided between parties simultaneously. When the number of sharing accommodations increases to three or more, if an owner of any one accommodation will not or is not able to provide the accommodation to the third party at a promised time or period due to an intentional (unintentional) problem while accommodation sharing is attempted or while an accommodation sharing transaction is in progress, there is a setback to travel schedules (accommodation usage schedules) of all sharing members. From this point, parties who are responsible for accommodation sharing can be clarified on the network through the irreplaceable function, and there is an effect that only the accommodations or rooms (or houses) matching the block data (for example, block data 520 in FIG. 5) identified (and verified) by the possession right encryption code (for example, possession right encryption code 1120 in FIG. 11) can be used.

On the other hand, the FT for implementing the present invention means a fungible token, and through this function, a function of mutually trading FTs related to possession right encryption codes (for example, possession right encryption codes 1120 in FIG. 11) corresponding to accommodations of other users may be provided.

According to the embodiment, change may be made according to the operation rule stored in the block generation protocol (for example, block generation protocol 501 in FIG. 5), and for example, when the related information is recorded at the nodes (for example, operator's special nodes 330 and user's nodes 340 in FIG. 3) in the form of block data (for example, block data 520 in FIG. 5), and the electronic copy (for example, electronic copy 1110 in FIG. 11) is generated, the electronic device may include a function (for example, operate further including a function) of recording generation time (or recording time) information or tag information (for example, tag information 530 in FIG. 5) with which the time (or recording time) information can be identified, in the generated electronic copy (for example, electronic copy 1110 in FIG. 11) in the form of block data (for example, block data 520 in FIG. 5).

According to the embodiment, the time at which the electronic copy (for example, electronic copy 1110 in FIG. 11) is generated may be changed according to the change of the operation rule stored in the block generation protocol (for example, block generation protocol 501 in FIG. 5), and for example, the time may include (for example, operate including) a time at which the sharing approval information (for example, sharing approval information 512 in FIG. 5) of the present invention is generated.

According to the embodiment, the block generation protocol management means (for example, block generation protocol management means 1150 in FIG. 11) may further include a function (for example, operate further including a function) of setting a cycle (for example, an interval of five minutes or an interval of ten minutes) in which the electronic copy (for example, electronic copy 1110 in FIG. 11) is generated, in the operation rule stored in the block generation protocol (for example, block generation protocol 501 in FIG. 5).

According to the embodiment, the electronic copy (for example, electronic copy 1110 in FIG. 11) is a kind of distributed electronic database that creates copies of records storing the whole breakdown on storage, change, and the like of related information recorded at the nodes (for example, operator's special nodes 330 and user's nodes 340 in FIG. 3) in the form of block data (for example, block data 520 in FIG. 5) at regular intervals to implement the present invention, and stores the copies in a distributed manner, and may include (for example, operate including) a function of making forgery or falsification impossible since a ledger having related information is continuously generated cyclically and the history of all transactions is stored equally in all participating computers.

According to the embodiment, a criterion for recording information for accommodation sharing related to the generated sharing approval information (for example, sharing approval information 512 in FIG. 5) in the form of block data (for example, block data 520 in FIG. 5) and changing information for accommodation sharing or recording information for accommodation sharing in the form of block data (for example, block data 520 in FIG. 5) may further include a function that can record (or change) information only when 100% of parties in the same group for an accommodation sharing transaction consent.

In the electronic device 101 (for example, accommodation sharing device) (for example, electronic device including web server) of the present disclosure, a criterion capable of recording related information in the electronic copy (for example, electronic copy 1110 in FIG. 11) in the form of block data (for example, block data 520 in FIG. 5) and changing the related information may provide a function that can change related information only when 100% of the parties in the same group for an accommodation sharing transaction consent.

According to the embodiment, the 100% ratio may be changed by setting a related ratio of the operation rule stored in the block generation protocol (for example, block generation protocol 501 in FIG. 5) for implementing the present invention, and the electronic device may further include a function (for example, operate further including a function) of setting the ratio through block generation protocol management means (for example, block generation protocol management means 1150 in FIG. 11).

The electronic device may further include a function that can add a separate user account (for example, user account 1402 in FIG. 14) (for example, administrator account) for implementing the present invention in addition to all parties corresponding to 100%.

According to the embodiment, the block generation protocol management means (for example, block generation protocol management means 1150 in FIG. 11) may further include a function (for example, operate further including a function) of setting either of an NFT (for example, NFT 1140 in FIG. 11) or an FT to fungibility (or non-fungibility) of a possession right encryption code (for example, possession right encryption code 1120 in FIG. 11) generated when related information is recorded in the form of block data (for example, block data 520 in FIG. 5) while the electronic copy (for example, electronic copy 1110 in FIG. 11) is generated, in the operation rule stored in the block generation protocol (for example, block generation protocol 501 in FIG. 5).

According to the embodiment, the block generation protocol management means (for example, block generation protocol management means 1150 in FIG. 11) may provide a function of storing the block generation protocol (for example, block generation protocol 501 in FIG. 5) on the network, and may further include a function (for example, operate further including a function) of identifying, transmitting, receiving, changing, deleting, and recording information on the operation rule stored in the stored block generation protocol (for example, block generation protocol 501 in FIG. 5) and allowing access by account by restricting use authority such as allowing a specific user (for example, administrator) or a prescribed user account (for example, user account 1402 in FIG. 14) to use all or some of related functions for electronically setting or operating the function through a prescribed terminal.

According to the embodiment, the block generation protocol management means (for example, block generation protocol management means 1150 in FIG. 11) may generate "another block generation protocol" by copying the operation rule or a prescribed part of the operation rule stored in the stored block generation protocol (for example, block generation protocol 501 in FIG. 5), and the block generation protocol (for example, block generation protocol 501 in FIGS. 5 and 10) or "another block generation protocol" may further include (for example, operate including) a characteristic that is embodied as codes for a software program.

These functions have an effect that everyone can generate "another block generation protocol" capable of performing various functions through the block generation protocol (for example, block generation protocol 501 in FIG. 5) for implementing the present invention.

In this case, the block generation protocol management means (for example, block generation protocol management means 1150 in FIG. 11) may further include a function that can set a position (for example, URL or IP address) on the network to designate a prescribed, means, or the like for implementing the present invention using another device.

According to the embodiment, "another block generation protocol" may further include a function that can be operated along with a prescribed device or means for implementing the present invention similarly to the block generation protocol (for example, block generation protocol 501 in FIG. 5) for implementing the present invention.

According to the embodiment, the block (for example, block 911 in FIG. 10) for implementing the present invention may mean a unit for identifying each piece of block data (for example, block data 520 in FIG. 5) in which related data of accommodations to be shared in the same group is recorded and which includes information on a pair of accommodations or identifying (or measuring) on the network or identifying (or measuring) each piece of block data in mutually sharing accommodations provided by hotels and rooms (or houses) provided by travelers.

According to the embodiment, a pair refers to a form in which, for a sharing transaction for implementing the present invention, an accommodation provided by at least one hotel and a room (or house) provided by at least one traveler as essential elements are connected as a single accommodation.

In this case, a pair does not necessarily mean one accommodation provided by the hotel and one room (or house) provided by the traveler, and includes accommodations provided by two or more hotels and rooms (or houses) provided by two or more travelers.

The reason is as follows. The present invention is for an accommodation sharing transaction, and even when accommodations provided by two or more different hotels and rooms (or houses) provided by two or more different travelers are included in a single block (for example, block 911 in FIG. 10), owners of the accommodations should use the accommodations or the rooms (or houses) sequentially at set times. Accordingly, related accommodations or rooms (or houses) in the block (for example, block 911 in FIG. 10) are a single connected accommodation, and correspond to each block (for example, block 911 in FIG. 10) according to each piece of block data (for example, block data 520 in FIG. 5).

The tag information for implementing the present invention has a dictionary meaning of a tag and may provide the following functions.

A tag has been originally an identification tag that is attached to a mail, a cargo, and a parcel to indicate classification of a cargo, sender and recipient, and handle with care. Afterwards, the tag has been used for clothing and the like, and has also been similarly used for computer programs and the like.

The tag may be used to store or retrieve prescribed information in a database as a word or a keyword for supplementing a certain item, and may provide a function of acting as a kind of gateway that can identify or access prescribed data in an HTML document for a web page, for example.

From this point, the tag information for implementing the present invention is a kind of contents ID (CID) and means a medium with which prescribed information recorded in a prescribed database for implementing the present invention can be identified or means that can be utilized as a passage. For example, an image file, a video file, an audio file, and the like in prescribed information on an accommodation provided by a hotel for implementing the present invention are not recorded at the nodes (for example, operator's special nodes 330 and user's nodes 340 in FIG. 3) for the present invention in the form of block data (for example, block data 520 in FIG. 5), and the tag may provide a function that can act as a kind of gateway capable of identifying (or accessing) the files in a state of being recorded in another database or recording means of another network for implementing the present invention.

The reason that such a function is required is because an execution speed of the whole network may be slower when a file having a large capacity such as an image file, a video file, or an audio file is recorded at the node (for example, operator's special nodes 330 and user's node 340 in FIG. 3) in the form of block data (for example, block data 520 in FIG. 5).

In some cases, when an image file, a video file, an audio file, and the like for implementing the present invention should be stored with the generation of the NFT (for example, NFT 1140 in FIG. 11) or the like, the electronic device may further include (for example, operate including) a function of recording an image file, a video file, an audio file, and the like at the node (for example, operator's special nodes 330 and user's nodes 340 in FIG. 3), the IPFS, or the like in the form of block data (for example, block data 520 in FIG. 5).

Image files, video files, audio files, and the like in prescribed information on accommodations provided by hotels and accommodations provided by travelers for implementing the present invention are unique files and may further include a function that a unique contents ID (CID) is given to each file.

The tag information for implementing the present invention may be cryptograph (or post-quantum cryptography), may include characters, numbers, symbols, and the like, or may be implemented further including a function that is generated a hash function, and when the tag information is generated by a method using a hash function and used for the present invention, each piece of tag information is encrypted hash information and may further include a function for verification of forgery and falsification of block data (for example, block data 520 in FIG. 5).

In some cases, the tag information may be implemented further including a function of cryptography having the post-quantum cryptography function, and the post-quantum cryptography has an effect of preparing a case where the possession right encryption code (for example, possession right encryption code 1120 in FIG. 11) for implementing the present invention is disabled, through a quantum computer.

According to the embodiment, the post-quantum cryptography may further include (for example, operate including) a quantum random number generator that is connected to each device, means, or the like for implementing the present invention on the network.

According to the embodiment, the block generation protocol (for example, block generation protocol 501 in FIG. 5) may further include a function (for example, operate further including a function) of recording, to identify information on accommodations provided by hotels and rooms (or houses) provided by travelers, tag information (for example, tag information 530 in FIG. 5) or the like with which prescribed information of provision candidate accommodation integrated information (for example, provision candidate accommodation integrated information 721 in FIG. 8) stored in the provision candidate accommodation database (for example, provision candidate accommodation database 720 in FIG. 8) can be identified or the prescribed information of the provision candidate accommodation integrated information (for example, provision candidate accommodation integrated information 721 in FIG. 8) stored in the provision candidate accommodation database (for example, provision candidate accommodation database 720 in FIG. 8), in the form of block data (for example, block data 520 in FIG. 5).

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 11.

FIG. 12 is a diagram illustrating an electronic device (for example, accommodation sharing device) (for example, electronic device including web server) according to an embodiment of the present disclosure.

An electronic device 101 of FIG. 12 may include all or at least some of the configurations of the electronic device 101 of FIG. 5. The electronic device 101 of FIG. 12 may include all or at least some of the configurations of the electronic device 101 of FIG. 6. The electronic device 101 of FIG. 12 may include all or at least some of the configurations of the electronic device 101 of FIG. 7. The electronic device 101 of FIG. 12 may include all or at least some of the configurations of the electronic device 101 of FIG. 8. The electronic device 101 of FIG. 12 may include all or at least some of the configurations of the electronic device 101 of FIG. 9. The electronic device 101 of FIG. 12 may include all or at least some of the configurations of the electronic device 101 of FIG. 10. The electronic device 101 of FIG. 12 may include all or at least some of the configurations of the electronic device 101 of FIG. 11.

Referring to FIG. 12, according to the embodiment, the block generation protocol (for example, block generation protocol 501 in FIG. 5) of the electronic device 101 (for example, accommodation sharing device) (for example, electronic device including web server) may be implemented further including the following function, and may further include a function (for example, operate further including a function) of recording, to identify parties to an accommodation sharing transaction, tag information (for example, tag information 530 in FIG. 5) (or user account (for example, user account 1402 in FIG. 14) information) with which a user account (for example, user account 1402 in FIG. 14) that accesses through a blank accommodation rent (sale) account access module 1210 can be identified, tag information (for example, tag information 530 in FIG. 5) (or user account (for example, user account 1402 in FIG. 14) information) with which a user account (for example, user account 1402 in FIG. 14) that accesses a the blank accommodation provision account access module 1220 can be identified, or tag information (for example, tag information 530 in FIG. 5) (or user account (for example, user account 1402 in FIG. 14) information) with which a user account (for example, user account 1402 in FIG. 14) that accesses through a blank accommodation purchase account access module 1230 can be identified, in the form of block data (for example, block data 520 in FIG. 5).

According to the embodiment, the electronic copy (for example, electronic copy 1110 in FIG. 11), the block data (for example, block data 520 in FIG. 5), and the possession right encryption code (for example, possession right encryption code 1120 in FIG. 11) may further include a function (for example, operate further including a function) that is embodied by a block hash, a block body, a block header, and the like.

The block hash for implementing the present invention may further include a function (for example, operate further including a function) that is embodied by version information, which includes or is related to program version information or the like of the electronic copy (for example, electronic copy 1110 in FIG. 11), the block data (for example, block data 520 in FIG. 5), and the possession right encryption code (for example, possession right encryption code 1120 in FIG. 11), a previous block hash, a merkle root, a time, a difficulty target (bits, target), nonce, transaction count information, transaction content information, and the like.

On the other hand, as a verification algorithm of information for accommodation sharing, for authenticity on related information recorded in the form of block data (for example, block data 520 in FIG. 5). The electronic copy (for example, electronic copy 1110 in FIG. 11), the block data (for example, block data 520 in FIG. 5), and the possession right encryption code (for example, possession right encryption code 1120 in FIG. 11) for implementing the present invention, the block management fee saving device (for example, block management fee saving device 1130 in FIG. 11), the block management fee saving device identification code (for example, block management fee saving device identification code 1131 in FIG. 11), the block management fee verification code (for example, block management fee verification code 1170 in FIG. 11), and the like may provide a function that can verify forgery and falsification on whether the information recorded in the form of the block data (for example, block data 520 in FIG. 5) is really information on accommodations or rooms (or houses) provided by hotels or travelers.

The present invention is for accommodation sharing, and when the rooms (or houses) provided by the hotel or the travelers are located at a long distance, it is difficult for both parties to confirm whether the houses are actually present or whether there is a defect in a facility. Accordingly, when the parties visit areas where the other party's accommodations are located, without confirmation while paying expensive airfare, the parties may incur a considerable loss just in case.

In this case, when each party consents to deposit a prescribed amount of money to guarantee a promise to surely provide a room (or house) for accommodation sharing to the other party and is informed of the deposit (bank deposit, virtual currency transmission, or the like) of the prescribed amount of money via various kinds of means on the network, since the security has a property value as real or virtual currency, forgery and falsification of the deposit of the prescribed amount of money should be identified or the outflow of the deposited amount of money should be prevented. For this reason, a function for solving such problems should be included and provided.

From this point, the electronic copy (for example, electronic copy 1110 in FIG. 11), the block data (for example, block data 520 in FIG. 5), and the possession right encryption code (for example, possession right encryption code 1120 in FIG. 11) for implementing the present invention, the block management fee saving device (for example, block management fee saving device 1130 in FIG. 11), the block management fee saving device identification code (for example, block management fee saving device identification code 1131 in FIG. 11), the block management fee verification code (for example, block management fee verification code 1170 in FIG. 11), and the like provide a comparison function of information related on the deposited security with the original, and thus, may further include a function that can basically verify forgery and falsification clearly on the outflow of the deposit or change in the deposit in a state in which the security corresponding to the property value is deposited.

In operating accommodation sharing worldwide, since laws are different by country, and even when problems occur, it is difficult to claim compensation for the problems later through international litigation, a function that the NFT (for example, NFT 1140 in FIG. 11) (or FT) corresponding to the possession right encryption code (for example, possession right encryption code 1120 in FIG. 11) generated according to the block generation protocol (for example, block generation protocol 501 in FIG. 5), which is the related operation rule for the present invention, such that the property value of the amount of money deposited for accommodation sharing is safely protected to be free from such problems can be transmitted or received between netizens via the network may be further included.

The block data (for example, block data 520 in FIG. 5) recorded according to the block generation protocol (for example, block generation protocol 501 in FIG. 5) for implementing the present invention is recorded in the electronic copy (for example, electronic copy 1110 in FIG. 11) generated in a prescribed cycle or is recorded in all computers of the users related to accommodation sharing in a distributed manner. Accordingly, the electronic device may further include a function (for example, operate further including a function) of making forgery or falsification is impossible by dividing information on the breakdown of all transactions equally in several computer, instead of recording the breakdown of transactions related to accommodation sharing in one ledger.

When a commercial accommodation provided to a traveler by a hotel and a room (or house) provided to the hotel by the traveler for an accommodation sharing transaction are mutually provided for several months or more or for a comparatively long period, in this case, the NFT (for example, NFT 1140 in FIG. 11) (or FT) corresponding to the possession right encryption code (for example, possession right encryption code 1120 in FIG. 11) may be very usefully utilized.

This refers to usability or usefulness of the NFT (for example, NFT 1140 in FIG. 11) (or FT) corresponding to the possession right encryption code (for example, possession right encryption code 1120 in FIG. 11) in a form in which the hotel or the traveler leaves the accommodation or the room (or house) for a long period and provides the accommodation or the room (or house) to the other party. The NFT (for example, NFT 1140 in FIG. 11) (or FT) corresponding to the possession right encryption code (for example, possession right encryption code 1120 in FIG. 11) may be very usefully utilized as a medium for check-in to or check-out of the room (or house) for the period.

According to the embodiment, the block generation protocol (for example, block generation protocol 501 in FIG. 5) of the electronic device 101 (for example, accommodation sharing device) (for example, electronic device including web server) may further include (for example, may operation including) the following function.

For example, the block generation protocol may further include a function (for example, operate further including a function) of recording tag information (for example, tag information 530 in FIG. 5) with which prescribed information of a blank accommodation management information database 1250 in which each piece of information generated through each device, means, or the like of a blank accommodation management terminal 1240 is recorded can be identified or the prescribed information of the blank accommodation management information database 1250 in the form of block data (for example, block data 520 in FIG. 5).

According to the embodiment, for entrance or exit to an room (or house), a related device, means, or the like of the present invention may be implemented to identify whether entrance or exit to or from the room (or house) is successful through a blank accommodation check-out information generation module 1270 and a blank accommodation check-in information generation module 1260.

For entrance or exit from the room (or house), a block accommodation door lock device 1280 for implementing the present invention may include a function that a door can be opened through a prescribed electronic device (for example, smartphone NFC function, RFID card, or automobile key having similar function) in which the NFT (for example, NFT 1140 in FIG. 11) (or FT) corresponding to the possession right encryption code (for example, possession right encryption code 1120 in FIG. 11) of the present invention is stored.

As another aspect of usability or usefulness on the NFT (for example, NFT 1140 in FIG. 11) (or FT) corresponding to the possession right encryption code (for example, possession right encryption code 1120 in FIG. 11) for implementing the present invention, the NFT may further include (for example, operate including) a function of transferring the NFT (for example, NFT 1140 in FIG. 11) (or FT) to another person to allow another person who receives the NFT (for example, NFT 1140 in FIG. 11) (or FT) to have authority to use the accommodation.

According to the embodiment, for a remaining period after a person who is provided with an accommodation or a room (or house) is used for a partial period in the whole period during which the accommodation or the room (or house) will be used, it is possible to obtain an effect of selling (transferring) authority to use the accommodation or the room (or house) to the other party by transferring the NFT (for example, NFT 1140 in FIG. 11) (or FT) corresponding to the possession right encryption code (for example, possession right encryption code 1120 in FIG. 11) related to the accommodation. The NFT may further include a function that a person who receives the NFT (for example, NFT 1140 in FIG. 11) (or FT) can instantly obtain authority to use the accommodation.

That is, the embodiment of the present disclosure has an effect of performing sharing and selling in parallel through the NFT (for example, NFT 1140 in FIG. 11) (or FT) corresponding to the possession right encryption code (for example, possession right encryption code 1120 in FIG. 11).

The block generation protocol (for example, block generation protocol 501 in FIG. 5) for implementing the present invention may provide a function of generating, when each party deposits a prescribed amount of money for securing a promise to surely provide an accommodation or a room (or house) for conclusion of an accommodation sharing transaction, an electronic copy (for example, electronic copy 1110 in FIG. 11) of a blockchain in which block data (for example, block data 520 in FIG. 5) having related information on the amount of money is recorded, and an NFT (for example, NFT 1140 in FIG. 11) (or FT) corresponding to a possession right encryption code (for example, possession right encryption code 1120 in FIG. 11) for identifying and verifying the electronic copy.

In the present invention, the conclusion of the sharing contract may include recording, when the sharing approval information (for example, sharing approval information 512 in FIG. 5) to the sharing application information (for example, sharing application information 511 in FIG. 5) is generated, related information for accommodation sharing related to the generated sharing approval information (for example, sharing approval information 512 in FIG. 5) in the form of block data (for example, block data 520 in FIG. 5), through the block accommodation sharing approval module (for example, block accommodation sharing approval module 510 in FIG. 5). The conclusion of the sharing transaction refers to a time at which the electronic copy (for example, electronic copy 1110 in FIG. 11) of the blockchain in which the record is recorded is generated, and the time may further include a function that can be set through the operation rule stored in the block generation protocol (for example, block generation protocol 501 in FIG. 5).

According to the embodiment, the block accommodation sharing approval module (for example, block accommodation sharing approval module 510 in FIG. 5) of the electronic device 101 (for example, accommodation sharing device) (for example, electronic device including web server) may generate, when the sharing approval information (for example, sharing approval information 512 in FIG. 5) to the sharing application information (for example, sharing application information 511 in FIG. 5) is generated, related information for accommodation sharing related to the generated sharing approval information (for example, sharing approval information 512 in FIG. 5) to be identified by the possession right encryption code (for example, possession right encryption code 1120 in FIG. 11) and the block data (for example, block data 520 in FIG. 5). The block accommodation sharing approval module may include a function of storing copies of image files, video files, audio files, and the like of the accommodation provided by the hotel and the accommodation or the room (or house) provided by the traveler in the information in prescribed storage means for implementing the present invention. The block accommodation sharing approval module may further include a function (for example, operate further including a function) of storing the copies in the electronic copy (for example, electronic copy 1110 in FIG. 11) in the form of block data (for example, block data 520 in FIG. 5).

According to the embodiment, when the NFT (for example, NFT 1140 in FIG. 11) or the like corresponding to the possession right encryption code (for example, possession right encryption code 1120 in FIG. 11) generated when the accommodation sharing transaction is confirmed is additionally generated, a criterion for which related information can be changed after the related information is stored may further include a function that the related information can be changed only when 100% of all parties in the same group for the accommodation sharing transaction consent.

According to the embodiment, a criterion for recording information for accommodation sharing related to the generated sharing approval information (for example, sharing approval information 512 in FIG. 5) in the form of block data (for example, block data 520 in FIG. 5) and changing information for accommodation sharing or recording information for accommodation sharing in the form of block data (for example, block data 520 in FIG. 5) may further include a function that can record (or change) information only when 100% of parties in the same group for an accommodation sharing transaction consent.

According to the embodiment, the 100% ratio may be changed by setting a related ratio of the operation rule stored in the block generation protocol (for example, block generation protocol 501 in FIG. 5) for implementing the present invention, and the electronic device may further include a function (for example, operate further including a function) of setting the ratio through block generation protocol management means (for example, block generation protocol management means 1150 in FIG. 11).

The electronic device may further include a function that can add a separate user account (for example, user account 1402 in FIG. 14) (for example, administrator account) for implementing the present invention in addition to all parties corresponding to 100%.

A party should provide an accommodation or a room (or house) satisfying determined conditions to the other party in a determined order when a transaction for accommodation sharing is confirmed. Accordingly, when related information on a promised usage date, provision conditions, and the like for the accommodation or the room (or house) when the sharing transaction is confirmed is changed (or deleted), the other party may suffer harm. For this reason, such a function may provide a function of preventing such a problem.

According to the embodiment, the electronic device 101 (for example, accommodation sharing device) (for example, electronic device including web server) may generate, when the sharing approval information (for example, sharing approval information 512 in FIG. 5) to the sharing application information (for example, sharing application information 511 in FIG. 5) is generated, related information for accommodation sharing related to the generated sharing approval information (for example, sharing approval information 512 in FIG. 5) in the form of block data (for example, block data 520 in FIG. 5) by generating an electronic copy (for example, electronic copy 1110 in FIG. 11), through the block accommodation sharing approval module (for example, block accommodation sharing approval module 510 in FIG. 5). The electronic device may further include a function (for example, operate further including a function) of recording, in the electronic copy (for example, electronic copy 1110 in FIG. 11), information on times at which the electronic copy (for example, electronic copy 1110 in FIG. 11) and the block data (for example, block data 520 in FIG. 5) are generated.

Information on each time may further include (for example, operate including) year, month, day, hour, minute, second, and the like.

On the other hand, when a person carries a user terminal (smartphone or the like) that is provided with the block management fee saving device (for example, block management fee saving device 1130 in FIG. 11) in which the NFT (for example, NFT 1140 in FIG. 11) (or FT) corresponding to the possession right encryption code (for example, possession right encryption code 1120 in FIG. 11) for implementing the present invention is stored, the person may simply perform check-in and check-out for entrance and exit to and from an accommodation through the block accommodation possession right exchange device (for example, block accommodation possession right exchange device 1160 in FIG. 11). Accordingly, when the invention is implemented worldwide, there is an effect that many people in areas can sell possession right (authority to use) of accommodations using a simple method.

Sale (rent) of authority to use a commercial accommodation facility in an existing market may be affected by fluctuation in sales price (for example, rise and fall of sales price) of accommodations in an area by season due to the characteristics of the transaction.

From this point, the embodiment of the present disclosure may be implemented including a function that, when a traveler provides a room (or house) to a hotel while a sharing transaction is in progress, and allows another person to use an accommodation provided by the hotel instead of directly using the accommodation provided by the hotel, authority to use an accommodation can be traded through possession right transfer. Accordingly, in some cases, there may be a situation in which a profit can obtained according to sales price in the transaction.

This case may correspond to, for example, a case where the hotel and the traveler conclude an accommodation sharing transaction, the traveler wants to use an accommodation of an acquaintance or another accommodation for a period not using the room provided by the hotel.

From this point, the embodiment of the present disclosure may be implemented including a function that, when the traveler provides the room (or house) to the hotel while the sharing transaction is in progress, and allows another person to use the accommodation provided by the hotel instead of directly using the accommodation provided by the hotel, authority to use the accommodation can be traded through the transfer of the NFT (for example, NFT 1140 in FIG. 11) (or FT) corresponding to the possession right encryption code (for example, possession right encryption code 1120 in FIG. 11). Accordingly, in some cases, there may be a situation in which a profit can be obtained according to the sales price of the NFT (for example, NFT 1140 in FIG. 11) (or FT) corresponding to the possession right encryption code (for example, possession right encryption code 1120 in FIG. 11) for the transaction.

This case may correspond to, for example, a case where the hotel and the traveler conclude an accommodation sharing transaction, and in a state in which the NFT (for example, NFT 1140 in FIG. 11) (or FT) corresponding to the possession right encryption code (for example, possession right encryption code 1120 in FIG. 11) is generated, the traveler wants to use an accommodation of an acquaintance or another accommodation for a period not using the room provided by the hotel.

On the other hand, if the NFT (for example, NFT 1140 in FIG. 11) (or FT) corresponding to the possession right encryption code (for example, possession right encryption code 1120 in FIG. 11) is generated for the conclusion of the accommodation sharing transaction, while the traveler is still highly likely to do an activity to sell the room provided by the hotel during a sharing period, the hotel has an opportunity to further utilize means that is the NFT (for example, NFT 1140 in FIG. 11) (or FT) corresponding to possession right. Accordingly, for example, since the price of the accommodation rises and falls by season, the hotel can obtain the possibility of selling the NFT (for example, NFT 1140 in FIG. 11) (or FT) at a higher price than the price in the season.

In another aspect, since there is no guarantee that the accommodation will be sold every day for the whole period, if authority of use for the whole sharing period of the accommodation will be sold through the NFT (for example, NFT 1140 in FIG. 11) (or FT) corresponding to the possession right encryption code (for example, possession right encryption code 1120 in FIG. 11), liquidity may be completely secured. Accordingly, if the hotel purchases the authority of use for the whole sharing period of the accommodation, and after the accommodation is used for a partial period, sells the NFT (for example, NFT 1140 in FIG. 11) (or FT) to another person, there is an effect that the hotel is given a refund of an amount of money for the partial period with respect to the purchased authority to use the accommodation. From the perspective of the hotel, it is possible to obtain a change of completing the sale of the whole sharing period in selling the accommodation.

It is almost impossible to forge or falsify the NFT (for example, NFT 1140 in FIG. 11) (or FT) corresponding to the possession right encryption code (for example, possession right encryption code 1120 in FIG. 11) for the accommodation sharing transaction of the present invention. For this reason, if the NFT (for example, NFT 1140 in FIG. 11) (or FT) corresponding to the possession right encryption code (for example, possession right encryption code 1120 in FIG. 11) for implementing the present invention is stored in the block accommodation possession right exchange device (for example, block accommodation possession right exchange device 1160 in FIG. 11) provided in the user terminal such as a smartphone, check-in to and check-out of the accommodation can be simply made through the device. Accordingly, it is possible to simply trade authority to use in real time through NFTs (for example, NFT 1140 in FIG. 11) (or FT) corresponding to many different accommodations or rooms (or houses) around the world. Therefore, many people can participate in an accommodation sharing transaction with confidence around the world, and as a result, it is possible to dramatically increase a likelihood of the conclusion of an accommodation sharing transaction as the object of the present invention.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 12.

FIG. 13 is a diagram illustrating an operation method for an electronic device (for example, accommodation sharing device) (for example, electronic device including web server) according to an embodiment of the present disclosure.

An electronic device 101 of FIG. 13 may include all or at least some of the configurations of the electronic device 101 of FIG. 5. The electronic device 101 of FIG. 13 may include all or at least some of the configurations of the electronic device 101 of FIG. 6. The electronic device 101 of FIG. 13 may include all or at least some of the configurations of the electronic device 101 of FIG. 7. The electronic device 101 of FIG. 13 may include all or at least some of the configurations of the electronic device 101 of FIG. 8. The electronic device 101 of FIG. 13 may include all or at least some of the configurations of the electronic device 101 of FIG. 9. The electronic device 101 of FIG. 13 may include all or at least some of the configurations of the electronic device 101 of FIG. 10. The electronic device 101 of FIG. 13 may include all or at least some of the configurations of the electronic device 101 of FIG. 11. The electronic device 101 of FIG. 13 may include all or at least some of the configurations of the electronic device 101 of FIG. 12.

Referring to FIG. 13, according to the embodiment, the block management fee saving device (for example, block management fee saving device 1130 in FIG. 11) of the electronic device 101 (for example, accommodation sharing device) (for example, electronic device including web server) may receive real currency such as dollar, yen, or euro through a bank account using an electronic method and may record information for certification as block management fee reception information 1310.

According to the embodiment, the block management fee saving device (for example, block management fee saving device 1130 in FIG. 11) may include a function (for example, operate including a function) of receiving real currency such as dollar, won, yen, or euro through a bank account using an electronic method and recording information for certification or receiving (or transmitting) the NFT (for example, NFT 1140 in FIG. 11) (or FT) corresponding to the possession right encryption code (for example, possession right encryption code 1120 in FIG. 11) and recording information for certification in the block management fee reception information 1310 or block management fee transmission information 1320.

The block management fee saving device may include a function (for example, operate including a function) of receiving (or transmitting) an NFT (for example, NFT 1140 in FIG. 11) (or FT) with a different kind of blockchain other than the present invention and recording information for certification in the block management fee reception information (for example, block management fee reception information 1310 in FIG. 13) or the block management fee transmission information (for example, block management fee transmission information 1320 in FIG. 13).

According to the embodiment, the block management fee saving device (for example, block management fee saving device 1130 in FIG. 11) may further include a function (for example, operate further including a function) of recording, in receiving (or transmitting) block management fee setting information 1330 or an amount of money (or NFT (for example, NFT 1140 in FIG. 11)) related to the NFT (for example, NFT 1140 in FIG. 11) (or FT) corresponding to the possession right encryption code (for example, possession right encryption code 1120 in FIG. 11), information for certification in the block management fee reception information 1310 or the block management fee transmission information 1320.

According to the embodiment, the block management fee reception information 1310 and the block management fee transmission information 1320 may further include a function (for example, operate further including a function) of recording tag information (for example, tag information 530 in FIG. 5) with which an account (or user account (for example, user account 1402 in FIG. 14)) of a user for deposit and withdrawal (or transmission and reception) of a prescribed amount of money or the NFT (for example, NFT 1140 in FIG. 11) (or FT) corresponding to the possession right encryption code (for example, possession right encryption code 1120 in FIG. 11) or relevant information can be identified.

According to the embodiment, the block management fee reception information (for example, block management fee reception information 1310 in FIG. 13) and the block management fee transmission information (for example, 1320) may further include a function (for example, operate further including a function) of recording included information or tag information (for example, tag information 530 in FIG. 5) with which relevant information can be identified, in the form of block data (for example, block data 520 in FIG. 5).

According to the embodiment, the block management fee saving device (for example, block management fee saving device 1130 in FIG. 11) may further include a function (for example, operate further including a function) of setting a security per night or per prescribed hour for the accommodation provided by the hotel and the room (or house) provided by the traveler or a security for the whole sharing period to be identified through a block management fee setting information generation module (for example, block management fee setting information generation module 1340 in FIG. 13).

According to the embodiment, the block management fee saving device (for example, block management fee saving device 1130 in FIG. 11) may further include a function (for example, operate further including a function) that is generated by a block management fee saving device generation module 1350 and a block management fee saving device generation trigger 1360 or is generated along with a block management fee saving device identification code (for example, block management fee saving device identification code 1131 in FIG. 11) with which the block management fee saving device (for example, block management fee saving device 1130 in FIG. 11) can be identified, according to the rule stored in the block generation protocol (for example, block generation protocol 501 in FIGS. 5 and 10).

According to the embodiment, the block management fee saving device identification code (for example, block management fee saving device identification code 1131 in FIG. 11) may be cryptography (or post-quantum cryptography), may include characters, numbers, symbols, and the like, and may further include a function (for example, operate further including a function) that is generated through a hash function. The related cryptography may further include a function (for example, operate further including a function) that is generated according to the rule stored in the block generation protocol (for example, block generation protocol 501 in FIGS. 5 and 10).

In some cases, the block management fee saving device identification code (for example, block management fee saving device identification code 1131 in FIG. 11) may be implemented further including a function of cryptography having the post-quantum cryptography, and the post-quantum cryptography has an effect capable of preparing a case where the possession right encryption code (for example, possession right encryption code 1120 in FIG. 11) for implementing the present invention is disabled, through a quantum computer.

According to the embodiment, the post-quantum cryptography may further include (for example, operate including) a quantum random number generator that is connected to each device, means, or the like for implementing the present invention on the network.

According to the embodiment, the block management fee saving device (for example, block management fee saving device 1130 in FIG. 11) may further include a function (for example, operate further including a function) of generating the block management fee saving device identification code (for example, block management fee saving device identification code 1131 FIG. 11) along with the block management fee verification code (for example, block management fee verification code 1170 in FIG. 11) for verifying the authenticity of the block data (for example, block data 520 in FIG. 5) in which information related to the block management fee saving device (for example, block management fee saving device 1130 in FIG. 11) is recorded.

According to the embodiment, the block management fee saving device (for example, block management fee saving device 1130 in FIG. 11) may provide a function that can access through a prescribed terminal on the network, and a relevant access path may further include a function that can access through a URL, an IP address, a QR code (or one-dimensional or two-dimensional barcode), or the like.

The block management fee saving device (for example, block management fee saving device 1130 in FIG. 11) may further include a function (for example, operate further including a function) of setting an NFT (for example, NFT 1140 in FIG. 11) (or FT) according to a possession right encryption code (for example, possession right encryption code 1120 in FIG. 11) corresponding to the security per night or prescribed time for the accommodation provided by the hotel and the room (or house) provided by the traveler or an NFT (for example, NFT 1140 in FIG. 11) (or FT) according to a possession right encryption code (for example, possession right encryption code 1120 in FIG. 11) corresponding to the security for the whole sharing period to be identified through the block management fee setting information generation module (for example, block management fee setting information generation module 1340 in FIG. 13).

According to the embodiment, a block management fee saving device generation module 1350 and a block management fee saving device generation trigger 1360 for implementing the present invention are presented.

According to the embodiment, the block management fee saving device generation trigger 1360 refers to an interface device that is output through a screen of a prescribed terminal (PC, smartphone terminal, or the like) connected on the network, and may transmit, if a signal such as a click on the trigger occurs through an input device (keyboard, mouse, a screen touch sensor, or the like) mounted in a prescribed terminal, the signal to the block management fee saving device generation module 1350. The block management fee saving device generation module 1350 that receives the signal may generate the block management fee saving device identification code (for example, block management fee saving device identification code 1131 FIG. 11) with which the block management fee saving device (for example, block management fee saving device 1130 in FIG. 11) can be identified, a block data verification code (for example, block data verification code 1370 in FIG. 13), and the block management fee saving device (for example, block management fee saving device 1130 in FIG. 11) on the network.

For example, in the generation of the block management fee saving device (for example, block management fee saving device 1130 in FIG. 11), the block management fee saving device (for example, block management fee saving device 1130 in FIG. 11) may be generated including, for example, a unique URL (or IP address) such as https://servicegaet.com/4783845935265329569258959265629.bsv or ipfs://ipfs.io/ipfs/servicegaet-com/4783845935265329569258959265629.bsv.

According to the embodiment, the block management fee setting information generation module 1340 may generate information on an NFT (for example, NFT 1140 in FIG. 11) (or FT) according to a possession right encryption code (for example, possession right encryption code 1120 in FIG. 11) corresponding to an amount of money obtained by multiplying the security per night or prescribed time for the accommodation or the room (or house) set through the block management fee saving device (for example, block management fee saving device 1130 in FIG. 11) by the relevant sharing period or an NFT (for example, NFT 1140 in FIG. 11) (or FT) according to the possession right encryption code (for example, possession right encryption code 1120 in FIG. 11) corresponding to the security for the whole sharing period as block management fee setting information (for example, block management fee setting information 1330 in FIG. 13). The block management fee setting information generation module 1340 may include a function (for example, operate including a function) of recording tag information (for example, tag information 530 in FIG. 5) with which the block management fee setting information can be identified or the block management fee setting information (for example, block management fee setting information 1330 in FIG. 13) in the form of block data (for example, block data 520 in FIG. 5).

According to the embodiment, the block management fee setting information generation module 1340 may further include a function (for example, operate further including a function) of identifying the sharing period set through the visit period setting module (for example, visit period setting module 960 in FIG. 10) to identify the sharing period of the accommodation or the room (or house).

According to the embodiment, the block management fee transmission module 525 (for example, block management fee transmission module 525 in FIGS. 5 and 13) may receive trigger input information (for example, trigger input information 1380 in FIG. 13) or penalty trigger input information (for example, penalty trigger input information 1390 in FIG. 13). The block management fee transmission module 525 (for example, block management fee transmission module 525 in FIGS. 5 and 13) may include a function (for example, operate including a function) of transmitting an NFT (for example, NFT 1140 in FIG. 11) (or FT) according to a possession right encryption code (for example, possession right encryption code 1120 in FIG. 11) corresponding to the received trigger input information (for example, trigger input information 1380 in FIG. 13) or penalty trigger input information (for example, penalty trigger input information 1390 in FIG. 13) to the block management fee reception module (for example, block management fee reception module 1132 in FIG. 11) of a relevant user account (for example, user account 1402 in FIG. 14).

In this case, the block management fee transmission module (for example, block management fee transmission module 525 in FIGS. 5 and 13) can identity tag information with which an account of a user who will receive a prescribed amount of money or a user account (for example, user account 1402 in FIG. 14) capable of accessing a prescribed network to receive a prescribed amount of money, related to the trigger input information (for example, trigger input information 1380 in FIG. 13) or the penalty trigger input information (for example, penalty trigger input information 1390 in FIG. 13). The block management fee transmission module (for example, block management fee transmission module 525 in FIGS. 5 and 13) may include a function that can identify the account of the user who will receive the prescribed amount of money or the user account (for example, user account 1402 in FIG. 14) capable of accessing the prescribed network to receive the prescribed amount of money, related to the trigger input information (for example, trigger input information 1380 in FIG. 13) or the penalty trigger input information (for example, penalty trigger input information 1390 in FIG. 13).

According to the embodiment, a block management fee transmission trigger 525-1 may be provided in a prescribed user terminal. The block management fee transmission trigger 525-1 may include a function (for example, operate including a function) of generating the trigger input information (for example, trigger input information 1380 in FIG. 13) when detection of an input of prescribed information through a mouse or a keyboard of a prescribed user terminal (for example, PC) or prescribed information input means or a prescribed region of a screen of a portable device (tablet computer, smartphone, or the like) or a pressure from a pressure detection sensor due to the occurrence of a pressure caused by a touch on the screen is identified, and transmitting the generated trigger input information (for example, trigger input information 1380 in FIG. 13) to the block management fee transmission module (for example, block management fee transmission module 525 in FIGS. 5 and 13).

According to the embodiment, the trigger input information 1380 may include (for example, operate including), when access to the prescribed user account (for example, user account 1402 in FIG. 14) for implementing the present invention has been made through the prescribed user terminal in which the prescribed information input means or the screen serving as a medium upon generation is mounted, tag information (for example, tag information 530 in FIG. 5) for identifying the user account (for example, user account 1402 in FIG. 14) or information on the user account (for example, user account 1402 in FIG. 14).

According to the embodiment, the block penalty transmission trigger 1395 may be provided in a prescribed terminal, and may generate penalty trigger input information 1390 when detection of an input of prescribed information through a mouse or a keyboard of a prescribed terminal (for example, PC) or prescribed information input means or a prescribed region of a screen of a portable device (tablet computer, smartphone, or the like) or a pressure from a pressure detection sensor due to the occurrence of a pressure caused by a touch on the screen is identified. The block penalty transmission trigger 1395 may include a function (for example, operate including a function) of transmitting the generated penalty trigger input information 1390 to the block management fee transmission module 525 (for example, block management fee transmission module 525 in FIG. 5).

According to the embodiment, the penalty trigger input information 1390 may include (for example, operate including), when access to the prescribed user account (for example, user account 1402 in FIG. 14) for implementing the present invention has been made through the prescribed user terminal in which the prescribed information input means or the screen serving as a medium upon generation is mounted, tag information (for example, tag information 530 in FIG. 5) for identifying the user account (for example, user account 1402 in FIG. 14) or information on the user account (for example, user account 1402 in FIG. 14).

According to the embodiment, the trigger input information 1380 or the penalty trigger input information 1390 may include a function (for example, operate including a function) that can identify the NFT (for example, NFT 1140 in FIG. 11) (or FT) according to the possession right encryption code (for example, possession right encryption code 1120 in FIG. 11) corresponding to the security per night or prescribed time for the accommodation provided by the hotel and the room (or house) provided by the traveler or the NFT (for example, NFT 1140 in FIG. 11) (or FT) according to the possession right encryption code (for example, possession right encryption code 1120 in FIG. 11) corresponding to the security for the whole sharing period to be identified through block management fee setting information generation module 1340 or includes tag information (for example, tag information 530 in FIG. 5) with which the NFT can be identified.

On the other hand, the trigger input information 1380 generated through the block management fee transmission trigger 525-1 may include (for example, operate including) a function of transmitting an amount of money (or NFT (for example, NFT 1140 in FIG. 11)) for securing the provision of the accommodation to the other party for accommodation sharing as described above when a related problem occurs.

According to the embodiment, the penalty trigger input information 1390 generated through the block penalty transmission trigger 1395 may include (for example, operate including) a function of transmitting an amount of money (or NFT (for example, NFT 1140 in FIG. 11)) for covering a loss or the like due to the occurrence of a defect in the accommodation to the other party when a related problem occurs.

According to the embodiment, the block management fee reception module (for example, block management fee reception module 1132 in FIG. 11) may include a function that is provided in the prescribed user terminal capable of accessing the prescribed user account (for example, user account 1402 in FIG. 14) for implementing the present invention, and may include a function (for example, operate including a function) of receiving a prescribed amount of money (NFT (for example, NFT 1140 in FIG. 11)) corresponding to the trigger input information 1380 or the penalty trigger input information 1390 transmitted from the block management fee transmission module (for example, block management fee transmission module 525 in FIGS. 5 and 13).

According to the embodiment, the block management fee reception module (for example, block management fee reception module 1132 in FIG. 11) may include a function that is provided in the prescribed user terminal capable of accessing the prescribed user account (for example, user account 1402 in FIG. 14) for implementing the present invention, and may include a function (for example, operate including a function) of receiving the prescribed amount of money or the NFT (for example, NFT 1140 in FIG. 11) (or FT) according to the possession right encryption code (for example, possession right encryption code 1120 in FIG. 11) corresponding to the trigger input information 1380 or the penalty trigger input information 1390 transmitted from the block management fee transmission module (for example, block management fee transmission module 525 in FIGS. 5 and 13).

The block management fee reception module (for example, block management fee reception module 1132 in FIG. 11) may further include a function (for example, operate further including a function) that includes a virtual deposit account in linking with a deposit account of a financial institute such as a prescribed bank, for receiving the prescribed amount of money corresponding to the trigger input information 1380 or the penalty trigger input information 1390.

According to the embodiment, the block management fee transmission trigger 525-1 or the block penalty transmission trigger 1395 may operate (for example, be implemented) in the form of being provided in a prescribed interface device that is provided in a prescribed user terminal for implementing the present invention or being provided with a function for linking with a related device (or means).

According to the embodiment, the block management fee transmission trigger 525-1 or the block penalty transmission trigger 1395 may be further implemented in the form of being provided at any one position or being provided at several positions on the prescribed interface device that is provided in the prescribed user terminal for implementing the present invention.

According to the embodiment, the block management fee transmission trigger 525-1 or the block penalty transmission trigger 1395 may further include a function (for example, operate further including a function) that, when each trigger is provided in the form of a button or the like on which a user can click, in an interface of a user terminal screen, the trigger input information 1380 or the penalty trigger input information 1390 is generated if the button is clicked (or touched) through an input device such as a mouse.

In this case, the button is clicked (or touched) through a terminal that an operator of a hotel or the like or a traveler for implementing the present invention accesses, and, for example, if the button is clicked through the terminal that the operator of the hotel or the like accesses, each trigger may further include a function (for example, operate further including a function) of identifying a user account of the traveler as the other party.

In another case, the button is clicked (or touched) through the terminal that the traveler for implementing the present invention accesses, and in this case, each trigger may further include a function (for example, operate further including a function) of identifying a user account of the operator of the hotel or the like as the other party.

In still another case, the button is clicked through the terminal that the operator of the hotel or the like for implementing the present invention accesses, and each trigger may further include a function (for example, operate further including a function) of identifying a user account of an operator of a different hotel or the like.

In this case, each trigger may provide a function of transmitting a prescribed amount of money or an NFT (for example, NFT 1140 in FIG. 11) (or FT) corresponding to the block management fee setting information 1330 between hotel operators in the same category as necessary, and may include (for example, operate including) a function of first selecting a user account (for example, user account 1402 in FIG. 14) of a different hotel operator as a user account (for example, user account 1402 in FIG. 14) of the other party, and enabling each device or means for implementing the present invention to identify the selected information, through means capable of selecting prescribed information before the trigger input information 1380 or the penalty trigger input information 1390 is generated.

In the example as above, in the peak season, while one hotel operator may not have an accommodation having a size or matching a condition necessary for business, another hotel may have the accommodation. During such a time, to make up for each other's shortcomings, the hotel operators can sell accommodations together while sharing the accommodations.

In addition, each trigger may provide a function of transmitting the prescribed amount of money or the NFT (for example, NFT 1140 in FIG. 11) (or FT) corresponding to the block management fee setting information 1330 between travelers as necessary, and may be similarly implemented including a function of first selecting a user account (for example, user account 1402 in FIG. 14) of a different traveler as a user account (for example, user account 1402 in FIG. 14) of the other party, and enabling each device or means for implementing the present invention to identify the selected information, through means capable of selecting prescribed information before the trigger input information 1380 or the penalty trigger input information 1390.

On the other hand, a procedure by which the trigger input information 1380 or the penalty trigger input information 1390 is generated through the block management fee transmission trigger 525-1 or the block penalty transmission trigger 1395 is one-sided, and if the procedure progresses, the prescribed amount of money or the NFT (for example, NFT 1140 in FIG. 11) (or FT) corresponding to the possession right encryption code (for example, possession right encryption code 1120 in FIG. 11) is transmitted to the block management fee reception module (for example, block management fee reception module 1132 in FIG. 11) of the other party. Accordingly, if the other party is a foreigner who has been far away and whom a traveler has met on the network for the first time, not an acquaintance that the traveler usually knows, the traveler may encounter a complicated problem when it is necessary to restore an original condition.

To solve such a problem, the electronic device 101 (for example, accommodation sharing device) (for example, electronic device including web server) of the present disclosure may include (for example, operate including) a block management fee deposit device (for example, block management fee deposit device 1410 in FIG. 14).

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 13.

FIG. 14 is a diagram illustrating an electronic device (for example, accommodation sharing device) (for example, electronic device including web server) according to an embodiment of the present disclosure.

An electronic device 101 of FIG. 14 may include all or at least some of the configurations of the electronic device 101 of FIG. 5. The electronic device 101 of FIG. 14 may include all or at least some of the configurations of the electronic device 101 of FIG. 6. The electronic device 101 of FIG. 14 may include all or at least some of the configurations of the electronic device 101 of FIG. 7. The electronic device 101 of FIG. 14 may include all or at least some of the configurations of the electronic device 101 of FIG. 8. The electronic device 101 of FIG. 14 may include all or at least some of the configurations of the electronic device 101 of FIG. 9. The electronic device 101 of FIG. 14 may include all or at least some of the configurations of the electronic device 101 of FIG. 10. The electronic device 101 of FIG. 14 may include all or at least some of the configurations of the electronic device 101 of FIG. 11. The electronic device 101 of FIG. 14 may include all or at least some of the configurations of the electronic device 101 of FIG. 12. The electronic device 101 of FIG. 14 may include all or at least some of the configurations of the electronic device 101 of FIG. 13.

Referring to FIG. 14, a block management fee deposit device 1410 of the electronic device 101 (for example, accommodation sharing device) (for example, electronic device including web server) of the present disclosure block management fee setting information (for example, block management fee setting information 1330 in FIG. 13) may temporarily store, to transmit a prescribed amount of money, an NFT (for example, NFT 1140 in FIG. 11), or the like, the prescribed amount of money or the NFT (for example, NFT 1140 in FIG. 11) (or FT) corresponding to the possession right encryption code (for example, possession right encryption code 1120 in FIG. 11) before the prescribed amount of money, the NFT (for example, NFT 1140 in FIG. 11), or the like is transferred or transmitted to the other party after the trigger input information (for example, trigger input information 1380 in FIG. 13) or the penalty trigger input information (for example, penalty trigger input information 1390 in FIG. 13) is generated. The block management fee deposit device 1410 may include (for example, operated including) a deposit trigger 1415 that can store the prescribed amount of money or the NFT (for example, NFT 1140 in FIG. 11) (or FT) corresponding to the possession right encryption code (for example, possession right encryption code 1120 in FIG. 11).

According to the embodiment, the block management fee deposit device 1410 may further include a function that the block management fee deposit device 1410 can be implemented to be integrated with the block management fee saving device (for example, block management fee saving device 1130 in FIG. 11) or several block management fee deposit devices 1410 can be collectively implemented.

According to the embodiment, the block management fee deposit device 1410 may further include a function (for example, operate further including a function) of receiving real currency such as dollar, won, yen, or euro through a bank account using an electronic method and recording prescribed information for certification, and receiving the NFT (for example, NFT 1140 in FIG. 11) (or FT) corresponding to the possession right encryption code (for example, possession right encryption code 1120 in FIG. 11) and recording prescribed information for certification.

According to the embodiment, the block management fee deposit device 1410 may further include a function (for example, operate further including a function) of receiving an NFT (for example, NFT 1140 in FIG. 11) (or FT) with a different kind of blockchain other than the present invention and recording prescribed information for certification.

As an example, the deposit trigger 1415 may operate (for example, be implemented) in the form of being provided in a prescribed interface device that is provided in a prescribed user terminal for implementing the present invention or being provided with a function for linking with a related device (or means).

According to the embodiment, the deposit trigger 1415 may operate (for example, be implemented) in the form of being provided at any one position or being provided at several positions on the prescribed interface device that is provided in the prescribed user terminal for implementing the present invention.

For example, the deposit trigger 1415 may be provided in the form of a button or the like on which a user can click, in an interface device of a user terminal screen, and when the button is clicked through an input device such as a mouse, deposit trigger input information 1420 may be generated.

According to the embodiment, the block management fee deposit device 1410 may include (for example, operate including) a function of storing, if the deposit trigger input information 1420 is generated, when the trigger input information (for example, trigger input information 1380 in FIG. 13) or the penalty trigger input information (for example, penalty trigger input information 1390 in FIG. 13) is generated, the amount of money corresponding to the deposit trigger input information 1420 until a prescribed condition is satisfied (or before the prescribed condition is satisfied), instead of transmitting a prescribed amount of money corresponding to the trigger input information (for example, trigger input information 1380 in FIG. 13) or the penalty trigger input information (for example, penalty trigger input information 1390 in FIG. 13) directly to the block management fee reception module (for example, block management fee reception module 1132 in FIG. 11) of the other party.

According to the embodiment, the block management fee deposit device 1410 may include (for example, operate including) a function of storing, if the deposit trigger input information 1420 is generated, when the trigger input information (for example, trigger input information 1380 in FIG. 13) or the penalty trigger input information (for example, penalty trigger input information 1390 in FIG. 13) is generated, the amount of money corresponding to the deposit trigger input information 1420 or the NFT (for example, NFT 1140 in FIG. 11) (or FT) according to the possession right encryption code (for example, possession right encryption code 1120 in FIG. 11) until a prescribed condition is satisfied (or before the prescribed condition is satisfied), instead of transmitting the prescribed amount of money or the NFT (for example, NFT 1140 in FIG. 11) (or FT) according to to the possession right encryption code (for example, possession right encryption code 1120 in FIG. 11) corresponding to the trigger input information (for example, trigger input information 1380 in FIG. 13) or the penalty trigger input information (for example, penalty trigger input information 1390 in FIG. 13) directly to the block management fee reception module (for example, block management fee reception module 1132 in FIG. 11) of the other party.

The prescribed condition for the present invention may be information on a prescribed time in the past, at present, or in the future from the generation time of the deposit trigger input information 1420 or may include a function (for example, operate including a function) of selecting a user account (for example, user account 1402 in FIG. 14) for which some or all of the functions of the generated deposit trigger input information 1420 are released.

For example, the deposit trigger input information 1420 may include (for example, operate including) tag information (for example, tag information 530 in FIG. 5) with which the prescribed amount of money or the NFT (for example, NFT 1140 in FIG. 11) (or FT) corresponding to the possession right encryption code (for example, possession right encryption code 1120 in FIG. 11) can be identified.

For example, the deposit trigger input information 1420 may further include a function (for example, operate further including a function) that is recorded at the node (for example, operator's special nodes 330 and user's nodes 340 in FIG. 3) in the form of block data (for example, block data 520 in FIG. 5).

According to the embodiment, the block management fee deposit device 1410 may further include (for example, operate including) a release authority setting module 1430.

According to the embodiment, the release authority setting module 1430 may store, when the deposit trigger input information 1420 is generated, the prescribed amount of money or the NFT (for example, NFT 1140 in FIG. 11) (or FT) corresponding to the possession right encryption code (for example, possession right encryption code 1120 in FIG. 11) until the prescribed condition is satisfied (or before the prescribed condition is satisfied), instead of transmitting the prescribed amount of money or the NFT (for example, NFT 1140 in FIG. 11) (or FT) to the other party. From such a point, to transmit the prescribed amount of money or the NFT (for example, NFT 1140 in FIG. 11) (or FT) corresponding to the possession right encryption code (for example, possession right encryption code 1120 in FIG. 11) stored in the block management fee deposit device 1410 to the other party, the above-described related function of the deposit trigger input information 1420 should be released. Accordingly, the release authority setting module 1430 may include (for example, operate including) a function of selecting one or more of a prescribed administrator account 1401 or a prescribed user account 1402 to select an account for which the release authority is executed.

An electronic device 101 (for example, accommodation sharing device) (for example, electronic device including web server) according to an embodiment of the present invention may include (for example, operate including) a deposit release module 1440 described below that can release the above-described related function of the deposit trigger input information 1420 for the administrator account 1401 or the user account 1402 to transmit the prescribed amount of money or the NFT (for example, NFT 1140 in FIG. 11) (or FT) corresponding to the possession right encryption code (for example, possession right encryption code 1120 in FIG. 11) stored in the block management fee deposit device 1410.

According to the embodiment, when the release authority is set for the prescribed administrator account 1401 or the prescribed user account 1402 through the deposit release authority setting module 1430, the prescribed amount of money or the NFT (for example, NFT 1140 in FIG. 11) (or FT) corresponding to the possession right encryption code (for example, possession right encryption code 1120 in FIG. 11) may be transmitted to the other party only through the deposit release module 1440 of the administrator account or the user account 1402.

This is to solve a problem caused by incorrect determination or erroneous transfer (transmission) when the prescribed amount of money or the NFT (for example, NFT 1140 in FIG. 11) (or FT) is large, and is to provide a function that can secure safety by giving authority to a credible third party (for example, a main operator who implements the present invention) even when the user account 1402 having authority may be set as the user himself.

In more detail, as described above, accommodations provided by a hotel and accommodations or rooms (or houses) provided by travelers for accommodation sharing are located at a long distance, it is difficult for both parties to confirm whether or not the houses are actually present or whether there is a defect in a facility. Accordingly, when the parties visit areas where the other party's accommodations are located, without confirmation while paying expensive airfare, the parties may incur a considerable loss just in case.

In this case, when each party consents to deposit a prescribed amount of money to guarantee a promise to surely provide a room (or house) for accommodation sharing to the other party and is informed of the deposit (bank deposit, virtual currency transmission, or the like) of the prescribed amount of money via various kinds of means on the network, since the security has a property value as real or virtual currency, instead of transmitting the prescribed amount of money or the NFT (for example, NFT 1140 in FIG. 11) (or FT) corresponding to the possession right encryption code (for example, possession right encryption code 1120 in FIG. 11) to the other party, one more procedure is added for final transfer or transmission to the credible third party, thereby solving a problem caused by incorrect determination or erroneous transfer (transmission).

According to the embodiment, the electronic device may include (for example, operate including) a function that a software program or a protocol according to a prescribed operation rule is prepared in advance, and when a prescribed release condition of the software program or the protocol according to the prescribed operation rule is satisfied, the prescribed amount of money or the NFT (for example, NFT 1140 in FIG. 11) (or FT) corresponding to the possession right encryption code (for example, possession right encryption code 1120 in FIG. 11) is automatically transmitted to the block management fee reception module (for example, block management fee reception module 1132 in FIG. 11) of the user account (for example, user account 1402 in FIG. 14), instead of allowing the administrator or the user set by the deposit release authority setting module 1430 to manually transmit the prescribed amount of money or the NFT (for example, NFT 1140 in FIG. 11) (or FT) corresponding to the possession right encryption code (for example, possession right encryption code 1120 in FIG. 11) through the deposit release module 1440.

According to the embodiment, the electronic device of the present invention may include the deposit release module 1440 to the prescribed amount of money or the NFT (for example, NFT 1140 in FIG. 11) (or FT) stored in the block management fee deposit device 1410 to the block management fee reception module (for example, block management fee reception module 1132 in FIG. 11) of the user account 1402 in a state in which the deposit trigger input information 1420 is generated.

According to the embodiment, the deposit release module 1440 may operate (for example, be implemented) in the form of being provided in a prescribed interface device that is provided in an administrator or user terminal for implementing the present invention or being provided with a function for linking with a related device (or means) or the like.

According to the embodiment, the deposit release module 1440 may operate (for example, be implemented) in the form of being provided at any one position or being provided at several positions on the prescribed interface device that is provided in the prescribed user terminal for implementing the present invention.

According to the embodiment, the deposit release module 1440 is provided in the form of a button or the like on which the administrator or the user can click, in an interface device of an administrator or user terminal screen, and if the button is clicked through an input device such as a mouse, deposit release information (for example, deposit release information 1445) may be generated.

That is, when the deposit release information 1445 is generated in a state in which the deposit trigger input information 1420 is generated, the prescribed amount of money, the NFT (for example, NFT 1140 in FIG. 11), or the like stored in the block management fee deposit device 1410 may be transmitted to the block management fee reception module (for example, block management fee reception module 1132 in FIG. 11) of the user account 1402.

According to the embodiment, a block archive output module 1450 may output a list of blocks (for example, block 911 in FIG. 10) on a screen of a user terminal in the form of being identifiable by netizens. The block archive output module 1450 may include a function (for example, operate including a function) of receiving selection information on selection of one or more blocks block (for example, block 911 in FIG. 10) in the output list of blocks (for example, block 911 in FIG. 10) from the user terminal or outputting prescribed information of the block (for example, block 911 in FIG. 10) corresponding to the received selection information.

According to the embodiment, the block detail information output module 1460 may include a function (for example, operate including a function) that can identify detail information of block data (for example, block data 520 in FIG. 5) corresponding to the block (for example, block 911 in FIG. 10) or outputs the detail information on the screen of the user terminal.

According to the embodiment, the block accommodation sharing application module (for example, block accommodation sharing application module 515 in FIGS. 5 and 11) may generate sharing application information (for example, sharing application information 511 in FIG. 5) for pairing accommodations to share accommodations provided by the hotel or rooms (or houses) provided by the travelers related to the provision candidate accommodation integrated information (for example, provision candidate accommodation integrated information 721 in FIG. 8) stored in the provision candidate accommodation database (for example, provision candidate accommodation database 720 in FIG. 8) in information related to the block data (for example, block data 520 in FIG. 5) corresponding to the block (for example, block 911 in FIG. 10). The block accommodation sharing application module (for example, block accommodation sharing application module 515 in FIGS. 5 and 11) may include a function (for example, operate including a function) of transmitting the generated sharing application information (for example, sharing application information 511 in FIG. 5) to the block accommodation sharing approval module (for example, block accommodation sharing approval module 510 in FIG. 5).

According to the embodiment, the block accommodation sharing approval module (for example, block accommodation sharing approval module 510 in FIG. 5) may receive the sharing application information (for example, sharing application information 511 in FIG. 5) for accommodation sharing from the block accommodation sharing application module (for example, block accommodation sharing application module 515 in FIGS. 5 and 11). The block accommodation sharing approval module (for example, block accommodation sharing approval module 510 in FIG. 5) may include a function (for example, operate including a function) of generating the sharing approval information (for example, sharing approval information 512 in FIG. 5) to the received sharing application information (for example, sharing application information 511 in FIG. 5) and recording tag information (for example, tag information 530 in FIG. 5) with which the generated sharing approval information (for example, sharing approval information 512 in FIG. 5) can be identified or the generated sharing approval information (for example, sharing approval information 512 in FIG. 5) in the form of block data (for example, block data 520 in FIG. 5).

According to the embodiment, the block accommodation sharing application module (for example, block accommodation sharing application module 515 in FIGS. 5 and 11) may further provide, to the user, a function and the like for an interface device that can receive prescribed information as input through an input device such as a keyboard or a mouse to generate the sharing application information (for example, sharing application information 511 in FIG. 5).

According to the embodiment, the block accommodation sharing approval module (for example, block accommodation sharing approval module 510 in FIG. 5) may provide, to the user, a function and the like for an interface device that can receive prescribed information as input through an input device such as a keyboard or a mouse to generate the sharing approval information (for example, sharing approval information 512 in FIG. 5).

In contrast, according to the embodiment of the present disclosure, the electronic device may include a function that can generate the sharing approval information (for example, sharing approval information 512 in FIG. 5) when the administrator or the user who is a party to accommodation sharing receives related information manually input (by click or touch) from a prescribed position on the screen provided by the interface device for a generation procedure of the sharing approval information (for example, sharing approval information 512 in FIG. 5) generated through the block accommodation sharing approval module (for example, block accommodation sharing approval module 510 in FIG. 5).

According to the embodiment, the electronic device may further include a function (for example, operate further including a function) that a software program or a protocol according to a prescribed operation rule is prepared in advance, and when a generation condition for prescribed sharing approval information (for example, sharing approval information 512 in FIG. 5) of the software program or the protocol according to the prescribed operation rule, the sharing approval information (for example, sharing approval information 512 in FIG. 5) is automatically is generated, without depending on the manual operation.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 14.

A block accommodation 1510 (for example, block accommodation 1510 in FIG. 15) for implementing the present invention is presented.

FIG. 15 is a diagram illustrating an electronic device (for example, accommodation sharing device) (for example, electronic device including web server) according to an embodiment of the present disclosure that generates a blockchain.

An electronic device 101 of FIG. 15 may include all or at least some of the configurations of the electronic device 101 of FIG. 5. The electronic device 101 of FIG. 15 may include all or at least some of the configurations of the electronic device 101 of FIG. 6. The electronic device 101 of FIG. 15 may include all or at least some of the configurations of the electronic device 101 of FIG. 7. The electronic device 101 of FIG. 15 may include all or at least some of the configurations of the electronic device 101 of FIG. 8. The electronic device 101 of FIG. 15 may include all or at least some of the configurations of the electronic device 101 of FIG. 9. The electronic device 101 of FIG. 15 may include all or at least some of the configurations of the electronic device 101 of FIG. 10. The electronic device 101 of FIG. 15 may include all or at least some of the configurations of the electronic device 101 of FIG. 11. The electronic device 101 of FIG. 15 may include all or at least some of the configurations of the electronic device 101 of FIG. 12. The electronic device 101 of FIG. 15 may include all or at least some of the configurations of the electronic device 101 of FIG. 13. The electronic device 101 of FIG. 15 may include all or at least some of the configurations of the electronic device 101 of FIG. 14.

The electronic device 101 of FIG. 15 may include all or at least some of the configurations of the electronic device 101 of FIG. 14.

Referring to FIG. 15, the electronic device 101 (for example, accommodation sharing device) (for example, electronic device including web server) according to the embodiment of the present disclosure may generate a block accommodation 1510.

The present disclosure is not limited thereto, and the block accommodation 1510 may be generated even in an electronic device (for example, terminal) of a user and/or an electronic device (for example, terminal) of an operator.

According to the embodiment, the block accommodation 1510 may mean an accommodation or a room (or house) to be identified by the possession right encryption code (for example, possession right encryption code 1120 in FIG. 11) and the block data (for example, block data 520 in FIG. 5) among the accommodations or the rooms (or houses) provided by the hotel and the travelers of the provision candidate accommodation integrated information (for example, provision candidate accommodation integrated information 721 in FIG. 8) generated by the block accommodation sharing approval module (for example, block accommodation sharing approval module 510 in FIG. 5). The block accommodation 1510 may further include an accommodation provided by at least one hotel and a room (or house) provided by at least one traveler.

A blank accommodation management device 1520 of the electronic device 101 (for example, accommodation sharing system) (for example, accommodation sharing device) (for example, electronic device including web server) according to the embodiment of the present invention is presented. The electronic device 101 (for example, accommodation sharing device) (for example, electronic device including web server) according to the embodiment of the present disclosure may include the blank accommodation management device 1520.

According to the embodiment, the blank accommodation management device 1520 may include a function of selling rooms (or houses) provided to the hotel by the travelers, settling and transferring a sales amount, and managing the rooms (or houses).

The electronic device 101 (for example, accommodation sharing device) (for example, electronic device including web server) according to the embodiment of the present disclosure may include a blank accommodation management console 1530.

According to the embodiment, the blank accommodation management console 1530 may mean an interface device that outputs the function of settling the sales amount of the rooms (or houses) provided to the hotel by the travelers for sharing and managing the rooms (or houses) on the screen of the user terminal.

According to the embodiment, the blank accommodation rent (sale) account access module (for example, blank accommodation rent account access module 1210 in FIG. 12) may provide a function of accessing the blank accommodation management console 1530 to the hotel (or prescribed user account) to use the function or the like of managing the rooms (or houses) provided to the hotel by the travelers through the blank accommodation management console 1530. To this end, the blank accommodation rent (sale) account access module may include a function (for example, operate including a function) of identifying a unique ID or the like for the user account (for example, user account 1402 in FIG. 14) for access, permitting access of a user account (for example, user account 1402 in FIG. 14) corresponding to the unique ID, and generating information on permission.

According to the embodiment, the blank accommodation provision account access module (for example, blank accommodation provision account access module 1220 in FIG. 12) may provide a function of accessing the blank accommodation management console (for example, blank accommodation management console 1530 in FIG. 15) to the travelers (or prescribed user account) to use the function or the like of managing the rooms (or houses) provided to the hotel by the travelers for sharing through the blank accommodation management console 1530. To this end, the blank accommodation provision account access module may include a function (for example, operate including a function) of identifying a unique ID or the like for the user account (for example, user account 1402 in FIG. 14) for access, permitting access of a user account (for example, user account 1402 in FIG. 14) corresponding to the unique ID, and generating information on permission.

According to the embodiment, a blank accommodation purchase account access module (for example, blank accommodation purchase account access module 1230 in FIG. 12) may provide a function of accessing the blank accommodation management console (for example, blank accommodation management console 1530 in FIG. 15) to a netizen (or prescribed user account) to use a function capable of purchasing authority to use rooms (or houses) provided to the hotel by the travelers for sharing through the blank accommodation management console 1530. To this end, the blank accommodation purchase account access module may include a function (for example, operate including a function) of identifying a unique ID or the like for the user account (for example, user account 1402 in FIG. 14) for access, permitting access of a user account (for example, user account 1402 in FIG. 14) corresponding to the unique ID, and generating information on permission.

According to the embodiment, the electronic device 101 (for example, accommodation sharing device) (for example, electronic device including web server) may include a blank accommodation contents information indicator 1540.

According to the embodiment, the blank accommodation contents information indicator 1540 may include a function (for example, operate including a function) of outputting, on a screen of a user terminal, contents information on images, videos, audio, and the like for the rooms (or houses) provided by the travelers among the rooms (or houses) to be identified through the possession right encryption code (for example, possession right encryption code 1120 in FIG. 11) and the block data (for example, block data 520 in FIG. 5).

According to the embodiment, the electronic device 101 (for example, accommodation sharing device) (for example, electronic device including web server) may include a blank accommodation management information indicator 1550.

According to the embodiment, the blank accommodation management information indicator 1550 may include a function (for example, operate including a function) of outputting, on the screen of the user terminal, information such as a list, position information, check-in/check-out, sharing period information, presence or absence of vacancy, states of repair and maintenance, and information on the occurrence of defects, sales price information, and sales amount deposit information of the rooms (or houses) provided by the travelers among the rooms (or houses) to be identified through the possession right encryption code (for example, possession right encryption code 1120 in FIG. 11) and the block data (for example, block data 520 in FIG. 5).

According to the embodiment, the blank accommodation check-in information generation module (for example, blank accommodation check-in information generation module 1260 in FIG. 12) may include a function (for example, operate including a function) of generating blank accommodation check-in information 1560 with which check-in to the rooms (or houses) provided by the travelers among the rooms (or houses) to be identified through the possession right encryption code (for example, possession right encryption code 1120 in FIG. 11) and the block data (for example, block data 520 in FIG. 5) can be identified, and transmitting the generated blank accommodation check-in information 1560 to the blank accommodation management information indicator 1550.

According to the embodiment, the blank accommodation check-out information generation module (for example, blank accommodation check-out information generation module 1270 in FIG. 12) may include a function (for example, operate including a function) of generating blank accommodation check-out information 1570 with which check-out of the rooms (or houses) provided by the travelers among the rooms (or houses) to be identified through the possession right encryption code (for example, possession right encryption code 1120 in FIG. 11) and the block data (for example, block data 520 in FIG. 5) can be identified, and transmitting the generated blank accommodation check-out information 1570 to the blank accommodation management information indicator (for example, blank accommodation management information indicator 1550 in FIG. 15).

According to the embodiment, the electronic device 101 (for example, accommodation sharing device) (for example, electronic device including web server) may include a blank accommodation defect occurrence information generation module 1580.

According to the embodiment, the blank accommodation defect occurrence information generation module 1580 may include a function (for example, operate including a function) generating blank accommodation defect occurrence information 1585 with which the occurrence of defects for the rooms (or houses) provided by the travelers among the rooms (or houses) to be identified through the possession right encryption code (for example, possession right encryption code 1120 in FIG. 11) and the block data (for example, block data 520 in FIG. 5) can be identified, and transmitting the generated blank accommodation defect occurrence information 1585 to the blank accommodation management information indicator (for example, blank accommodation management information indicator 1550 in FIG. 15).

According to the embodiment, the electronic device 101 (for example, accommodation sharing device) (for example, electronic device including web server) may include a blank accommodation defect information management messenger 1590.

According to the embodiment, the blank accommodation defect information management messenger 1590 may include a function of allowing an online message to be transmitted and received between a user account (for example, user account 1402 in FIG. 14) that accesses through the blank accommodation purchase account access module (for example, blank accommodation purchase account access module 1230 in FIG. 12) and a user account (for example, user account 1402 in FIG. 14) that accesses through the blank accommodation rent (sale) account access module (for example, blank accommodation rent account access module 1210 in FIG. 12) or the blank accommodation provision account access module (for example, blank accommodation provision account access module 1220 in FIG. 12).

The function of generating information with which the occurrence of a defect for a prescribed accommodation or room (or house) for implementing the present invention can be identified may further include a function (for example, operate further including a function) of generating information for the following things or services.

For example, when a user who provides an accommodation to be used for accommodation sharing for implementing the present invention does not provide any item or service that the user has promised to provide to the other party such as a bedroom, a bed, a bathroom, a kitchen, a TV, heating, air conditioning, a breakfast, indoor, a fireplace, a dedicated workspace, a crib, a highchair, a projector, pets-allowed, smoking-allowed, an outdoor shower facility, wireless internet, self-check-in, a digital door lock, parking availability, a swimming pool, a barbecue grill, a billiard table, an indoor fireplace, exercise equipment, a fire alarm, a first aid kit, a carbon monoxide alarm, a fire extinguisher, a security camera, and the like in the accommodation contrary to the promise, even though provided, any item or service is broken (or does not work) or contaminated to an extent that any item is service cannot be used, the other party cannot use the item or service. Even in such a case, the function of generating information with which the occurrence of a defect can be identified may further include a function (for example, operate further including a function) of generating information on the occurrence of a defect.

Information on the occurrence of a defect may further include a function (for example, operate further including a function) of generating information on the occurrence of a defect for check-in or check-out.

For example, when the user who originally provides an accommodation (or room or house) to be used for accommodation sharing for implementing the present invention does not provide the accommodation to the other party on the date and time on which the user has promised to provide the accommodation to the other party, and even though provided, the accommodation (facility) is broken or contamination to an extent that the accommodation cannot be used, the other party cannot use the accommodation. Even in such a case, the function of generating information with which the occurrence of a defect can be identified may further include a function (for example, operate further including a function) of generating information on the occurrence of a defect.

In addition, when a user who has completed to use an accommodation used for accommodation sharing for implementing the present invention does not return the accommodation to the owner of the accommodation on the date and time on which the user has promised to return the accommodation, and even though the accommodation is returned, the accommodation (or facility) is damaged or contaminated to an extent that a next user cannot use the accommodation, it should be considered that the user does not return or is not able to return the accommodation. Even in such a case, the function of generating information with which the occurrence of a defect can be identified may further include a function (for example, operate further including a function) of generating information on the occurrence of a defect.

According to the embodiment, the function of generating information on the occurrence of a defect may further include a function (for example, operate further including a function) of generating information through the blank accommodation defect occurrence information generation module 1580.

According to the embodiment, to prepare for compensation when a defect occurs in a house (for example, accommodation, room, or hotel guestroom), the present invention may further include a function (for example, operate further including a function) of generating an FT when related information is recorded in the electronic copy (for example, electronic copy 1110 in FIG. 11) in the form of block data (for example, block data 520 in FIG. 5).

On the other hand, to prepare for compensation when sharing may not be smoothly performed due to a large difference in value between accommodations or rooms (or houses) in the process of exchanging the accommodations or the rooms (or houses), the present invention may further include a function (for example, operate further including a function) of generating an FT when related information is recorded in the electronic copy (for example, electronic copy 1110 in FIG. 11) in the form of block data (for example, block data 520 in FIG. 5).

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 15.

FIG. 16 is a diagram illustrating an electronic device (for example, accommodation sharing device) (for example, electronic device including web server) according to an embodiment of the present disclosure.

An electronic device 101 of FIG. 16 may include all or at least some of the configurations of the electronic device 101 of FIG. 5. The electronic device 101 of FIG. 16 may include all or at least some of the configurations of the electronic device 101 of FIG. 6. The electronic device 101 of FIG. 16 may include all or at least some of the configurations of the electronic device 101 of FIG. 7. The electronic device 101 of FIG. 16 may include all or at least some of the configurations of the electronic device 101 of FIG. 8. The electronic device 101 of FIG. 16 may include all or at least some of the configurations of the electronic device 101 of FIG. 9. The electronic device 101 of FIG. 16 may include all or at least some of the configurations of the electronic device 101 of FIG. 10. The electronic device 101 of FIG. 16 may include all or at least some of the configurations of the electronic device 101 of FIG. 11. The electronic device 101 of FIG. 16 may include all or at least some of the configurations of the electronic device 101 of FIG. 12. The electronic device 101 of FIG. 16 may include all or at least some of the configurations of the electronic device 101 of FIG. 13. The electronic device 101 of FIG. 16 may include all or at least some of the configurations of the electronic device 101 of FIG. 14. The electronic device 101 of FIG. 16 may include all or at least some of the configurations of the electronic device 101 of FIG. 15.

Referring to FIG. 16, the electronic device 101 (for example, accommodation sharing device) (for example, electronic device including web server) according to the embodiment of the present disclosure may include a blank accommodation sales price setting module 1610.

According to the embodiment, the blank accommodation sales price setting module 1610 may include a function that can set a sales price for the rooms (or houses) provided by the travelers among the rooms (or houses) to be identified through the possession right encryption code (for example, possession right encryption code 1120 in FIG. 11) and the block data (for example, block data 520 in FIG. 5).

According to the embodiment, the blank accommodation management console (for example, blank accommodation management console 1530 in FIG. 15) may include a function (for example, operate including a function) of requesting to purchase authority to use, which is provided to the user account (for example, user account 1402 in FIG. 14) that accesses through the blank accommodation purchase account access module (for example, blank accommodation purchase account access module 1230 in FIG. 12), through the blank accommodation management console (for example, blank accommodation management console 1530 in FIG. 15), the rooms (or houses) provided by the travelers among the rooms (or houses) to be identified through the possession right encryption code (for example, possession right encryption code 1120 in FIG. 11) and the block data (for example, block data 520 in FIG. 5) and generating prescribed information on the purchase request.

According to the embodiment, the blank accommodation sales amount deposit information generation module (for example, blank accommodation sales amount deposit information generation module 680 in FIG. 8) may include a function (for example, operate including a function) of generating "blank accommodation sales amount deposit information (for example, blank accommodation sales amount deposit information 681 in FIG. 8)" including information on a prescribed standard when an NFT (for example, NFT 1140 in FIG. 11) (or FT) according to the possession right encryption code (for example, possession right encryption code 1120 in FIG. 11) corresponding to the sales price set by the blank accommodation sales price setting module 1610 is received in a sales amount saving device 1620.

According to the embodiment, the blank accommodation management information database (for example, blank accommodation management information database 1250 in FIG. 12) may include a function (for example, operate including a function) of recording each piece of information through each module, device, means, or the like of the blank accommodation management terminal (for example, blank accommodation management terminal 1240 in FIG. 12) and linking, identifying, transmitting, receiving, generating, changing, deleting, and recording prescribed information to be identified through the related possession right encryption code (for example, possession right encryption code 1120 in FIG. 11) and the block data (for example, block data 520 in FIG. 5), through each module, device, means, or the like for the present invention.

According to the embodiment, the sales amount saving device 1620 may include a function (for example, operate including a function) of receiving real currency such as dollar, won, yen, or euro through a bank account using an electronic method and recording prescribed information for certification or receiving the NFT (for example, NFT 1140 in FIG. 11) (or FT) corresponding to the possession right encryption code (for example, possession right encryption code 1120 in FIG. 11) and recording prescribed information for certification.

According to the embodiment, the sales amount saving device 1620 may further include a function (for example, operate further including a function) of receiving an NFT (for example, NFT 1140 in FIG. 11) (or FT) with a different kind of blockchain other than the blockchain of the present invention and recording prescribed information for certification.

According to the embodiment, the sales amount saving device 1620 may further include a function (for example, operate further including a function) that is by a sales amount saving device generation module 1630 and a sales amount saving device generation trigger 1640 or is generated with a sales amount saving device identification code 1650 with which the sales amount saving device (for example, sales amount saving device 1620 in FIG. 16) can be identified, according to the rule stored in the block generation protocol (for example, block generation protocol 501 in FIGS. 5 and 10).

According to the embodiment, a sales amount saving device identification code 650 may be cryptography (or post-quantum cryptography), may include characters, numbers, symbols, and the like, and may further include a function (for example, operate further including a function) that is generated through a hash function. The related cryptography may further include a function (for example, operate further including a function) that is generated according to the rule stored in the block generation protocol (for example, block generation protocol 501 in FIGS. 5 and 10).

In some cases, the sales amount saving device identification code 1650 may be implemented further including a function of cryptography having the post-quantum cryptography, and the post-quantum cryptography has an effect capable of preparing a case where the possession right encryption code (for example, possession right encryption code 1120 in FIG. 11) for implementing the present invention is disabled, through a quantum computer.

According to the embodiment, the post-quantum cryptography may further include (for example, operate including) a quantum random number generator that is connected to each device, means, or the like for implementing the present invention on the network.

According to the embodiment, upon generation of the sales amount saving device identification code 1650, the sales amount saving device identification code 1650 may further include a function (for example, operate further including a function) that is generated with a sales amount verification code 1660 for verifying authenticity of the block data (for example, block data 520 in FIG. 5) in which information related to the sales amount saving device 1620 for implementing the present invention is recorded.

According to the embodiment, the sales amount saving device 1620 may provide a function that can access through a prescribed terminal on the network, and the access path may further include a function that can access through a URL, an IP address, or a QR code (or one-dimensional or two-dimensional code).

According to the embodiment, the sales amount saving device generation module 1630 and the sales amount saving device generation trigger 1640 for implementing the present invention are presented.

According to the embodiment, the sales amount saving device generation trigger 1640 refers to an interface device that is visible by a user through a screen of a prescribed terminal (PC, smartphone terminal, or the like) connected on the network, and may transmit, if a signal such as a click on the trigger occurs through an input device (keyboard, mouse, a screen touch sensor, or the like) mounted in the prescribed terminal, the signal to the sales amount saving device generation module 1630, and the sales amount saving device generation module 1630 that receives the signal may generate the sales amount saving device (for example, sales amount saving device 1620 in FIG. 16) on the network..

According to the embodiment, the sales amount saving device (for example, sales amount saving device 1620 in FIG. 16) may be generated including, for example, a unique URL (or IP address) such as https://servicegaet.com/8420743202304749020472947204274.ssv or ipfs://ipfs.io/ipfs/servicegaet-com/8420743202304749020472947204274.ssv in generating the sales amount saving device (for example, sales amount saving device 1620 in FIG. 16).

According to the embodiment, the hotel accommodation integrated information database (for example, hotel accommodation integrated information database 550 in FIG. 5) for implementing the present invention is presented. The hotel accommodation integrated information database (for example, hotel accommodation integrated information database 550 in FIG. 5) is a database that is managed in an accommodation facility such as a commercial hotel, and may include a function (for example, operate including a function) of recording or storing contents information, management information, and the like of accommodations that are sold by the hotel.

Specifically, the hotel accommodation integrated information database may include a function (for example, operate including a function) of recording or mainly storing contents information on images, videos, audio, and the like of the rooms (or houses) and management information on a list, position information, check-in/check-out, sharing period information, presence or absence of vacancy, states of repair and maintenance, and the like of the rooms (or houses) as the hotel accommodation integrated information (for example, hotel accommodation integrated information 551 in FIG. 6).

The hotel accommodation integrated information database (for example, hotel accommodation integrated information database 550 in FIG. 5) may further include a function (for example, operate further including a function) of permitting access through the commercial candidate accommodation access gate (for example, commercial candidate accommodation access gate 541 in FIG. 5) to access prescribed information of the hotel accommodation integrated information (for example, hotel accommodation integrated information 551 in FIG. 6) of an accommodation of the existing hotel in operation, and linking, identifying, transmitting, receiving, generating, changing, deleting, and recording related information through each module, device, means, or the like for the present invention.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 16.

FIG. 17 is a diagram illustrating an electronic device (for example, accommodation sharing device) (for example, electronic device including web server) according to an embodiment of the present disclosure.

An electronic device 101 of FIG. 17 may include all or at least some of the configurations of the electronic device 101 of FIG. 5. The electronic device 101 of FIG. 17 may include all or at least some of the configurations of the electronic device 101 of FIG. 6. The electronic device 101 of FIG. 17 may include all or at least some of the configurations of the electronic device 101 of FIG. 7. The electronic device 101 of FIG. 17 may include all or at least some of the configurations of the electronic device 101 of FIG. 8. The electronic device 101 of FIG. 17 may include all or at least some of the configurations of the electronic device 101 of FIG. 9. The electronic device 101 of FIG. 17 may include all or at least some of the configurations of the electronic device 101 of FIG. 10. The electronic device 101 of FIG. 17 may include all or at least some of the configurations of the electronic device 101 of FIG. 11. The electronic device 101 of FIG. 17 may include all or at least some of the configurations of the electronic device 101 of FIG. 12. The electronic device 101 of FIG. 17 may include all or at least some of the configurations of the electronic device 101 of FIG. 13. The electronic device 101 of FIG. 17 may include all or at least some of the configurations of the electronic device 101 of FIG. 14. The electronic device 101 of FIG. 17 may include all or at least some of the configurations of the electronic device 101 of FIG. 15. The electronic device 101 of FIG. 17 may include all or at least some of the configurations of the electronic device 101 of FIG. 16.

Referring to FIG. 17, the electronic device 101 (for example, accommodation sharing device) (for example, electronic device including web server) according to the embodiment of the present disclosure may include a block advertisement management device 1710. The block advertisement management device (for example, block advertisement management device 1710 in FIG. 17) of the electronic device 101 (for example, accommodation sharing system) (for example, accommodation sharing device) (for example, electronic device including web server) according to the embodiment of the present invention is presented.

According to the embodiment, the block advertisement management device 1710 may include (for example, operate including) a block advertisement management console (for example, block advertisement management console 1711 in FIG. 17), an advertisement integrated information database (for example, advertisement integrated information database 1712 in FIG. 17), and a block advertisement sending module (for example, block advertisement sending module 1713 in FIG. 17).

According to the embodiment, the block advertisement management console (for example, block advertisement management console 1711 in FIG. 17) may include an advertiser account access module 1711-1, an advertisement-purpose block tag information input module 1711-2, an advertisement-purpose block radius information input module 1711-3, an advertisement-purpose block retrieval result transmission request information transmission module 1711-4, an advertisement-purpose block retrieval result archive indicator 1711-5, and an advertisement-purpose block selection module 1711-6.

According to the embodiment, the block advertisement management console (for example, block advertisement management console 1711 in FIG. 17) may provide a function that can access an operator who provides a commercial accommodation such as a hotel, may provide a function or the like for an interface device that outputs prescribed information of advertisement integrated information 1712-1 stored in the advertisement integrated information database 1712 on a screen provided in a terminal that accesses each device or means for implementing the present invention, and may further include a function (for example, operate further including a function) of linking, identifying, transmitting, receiving, generating, changing, deleting, and recording information related to the advertisement integrated information 1712-1 through each module, device, means, or the like for the present invention.

According to the embodiment, the electronic device 101 (for example, accommodation sharing device) (for example, electronic device including web server) may further include a function of outputting contents information on images, videos, audio, and the like of rooms (or houses) provided to the hotel by the travelers for sharing and management information on a list, position information, check-in/check-out, sharing period information, presence or absence of vacancy, states of repair and maintenance, and the like of the rooms.

According to the embodiment, the electronic device 101 (for example, accommodation sharing device) (for example, electronic device including web server) may further include an interface device and related functions that output, on a screen of a user terminal, a block (for example, block 911 in FIG. 10) corresponding to a room (or house) in a single form, and allows the block to be selected through an input device such as a mouse of the user terminal.

According to the embodiment, the advertiser account access module 1711-1 may provide a function of accessing a prescribed device, means, or the like that sends a block advertisement for implementing the present invention, to an operator of a hotel for implementing the present invention. To this end, the advertiser account access module 1711-1 may include a function (for example, operate including a function) of identifying a unique ID or the like for the user account (for example, user account 1402 in FIG. 14) for access, permitting access of a user account (for example, user account 1402 in FIG. 14) corresponding to the unique ID, and generating information on permission.

According to the embodiment, the advertiser account access module 1711-1 may further include a function (for example, operate further including a function) of recording tag information (for example, tag information 530 in FIG. 5) with which a user account (for example, user account 1402 in FIG. 14) that accesses the device, means, or the like for the present invention through the advertiser account access module 1711-1 for implementing the present invention can be identified or the user account (for example, user account 1402 in FIG. 14) information in the form of block data (for example, block data 520 in FIG. 5).

According to the embodiment, a block advertisement information input module 1720 may include a function (for example, operate including a function) of inputting information for an advertisement such as a name of a block advertisement, an image, a video, and audio for implementing the present invention.

According to the embodiment, more specifically, the block advertisement information input module 1720 may further include a function (for example, operate further including a function) of inputting the following information.
(1) The block advertisement information input module 1720 may further include a function (for example, operate further including a function) of inputting information on a start date and time and an end date and time on which an advertisement is displayed on a web page.
(2) The block advertisement information input module 1720 may further include a function (for example, operate further including a function) of inputting information on a set language of a web browser that outputs the web page where the advertisement is displayed is output (or information on a country where a prescribed terminal on which the web browser that outputs the web page is output is actually provided).
(3) The block advertisement information input module 1720 may further include a function (for example, operate further including a function) of inputting information on the day of week when the advertisement is displayed on the web page.
(4) The block advertisement information input module 1720 may further include a function (for example, operate further including a function) of inputting information on a tag of the web page where the advertisement is displayed. Here, the information may means tag information (for example, tag information 530 in FIG. 5) that outputs the advertisement on the web page when specific tag information (for example, tag information 530 in FIG. 5) is included (or not included) in setting the web page where the advertisement is output.
   Here, the information may include a function (for example, operate including a function) of permitting, when there are tag information (for example, tag information 530 in FIG. 5) of parenting, markup, exercise, house cleaning, family, movie, music, and the like, the administrator to set a function of displaying an advertisement only on a web page including (not including) specific tag information (for example, tag information 530 in FIG. 5) among various kinds of tag information (for example, tag information 530 in FIG. 5) or permitting the user to set a unit price.
(5) The block advertisement information input module 1720 may further include a function (for example, operate further including a function) of inputting information on a URL of the web page where the advertisement is displayed.
   Here, the information may include a function (for example, operate including a function) of permitting the administrator to display an advertisement on a web page (or smartphone application screen) corresponding to a fixed URL or permitting the user to set the URL.
(6) The block advertisement information input module 1720 may further include a function (for example, operate further including a function) of inputting information on the maximum number of allowable clicks for an advertisement (for example, banner advertisement).
   Here, the information means the maximum number of allowable clicks (or generation of prescribed information with generation of an input signal) for the displayed advertisement from an input device such as a keyboard or a mouse of a prescribed user terminal connected on the network, and may include (for example, operate including) a function of permitting the administrator to set a function of setting a maximum value for the maximum number of allowable clicks, a time limit until the maximum value is reached, or the like or permitting the user to set a maximum value of the time limit. The maximum value of the time limit may include a function that can be set in minutes, seconds, hours, or the like.
(7) The block advertisement information input module 1720 may further include a function (for example, operate further including a function) of inputting information on the unit price of a displayed advertisement per once and a display condition.
   Here, the display for implementing the present invention means a state in which an advertisement to be displayed on a web page (or smartphone application screen) is output on the screen of the prescribed user terminal. In this state, since the user can identify the screen from a viewpoint of an observer, the information serves as information with which whether the condition is satisfied can be identified, and may include a function (for example, operate including a function) of permitting the device or means for the present invention to check such information and permitting the administrator to set information on an amount of money or the like for the unit price of display of an advertisement per once or the user to set the unit price such that the total number of times of display completion is counted to calculate a total expense of the advertisement display when the display condition is satisfied.
(8) The block advertisement information input module 1720 may further include a function (for example, operate further including a function) of inputting information on the unit price of watching of the displayed advertisement per once and a watching condition.

Here, watching completion of an advertisement for implementing the present invention means a state in which an advertisement in the form of a video to be displayed on a web page (or smartphone application screen) is output on the screen of the prescribed user terminal and a viewer satisfies a condition according to a prescribed criterion and complete watching. From such a point, the information serves as information with which whether a watching completion condition of the advertisement can be identified, the device or means for the present invention may include a function (for example, operate including a function) of checking the information and permitting the administrator to set information on an amount of money for the unit price of watching of the advertisement per once or the user to set the unit price such that the total number of times of watching completion is counted to calculate a total watching expense when the watching completion condition is satisfied. In this case, as a condition for a watching completion criterion, for example, a condition for what percentage of a total length of a prescribed video the viewer has watched may be set, and a condition for how many seconds or minutes (or hours) of the total length of the prescribed video the viewer has watched may be set.

The administrator or the user may further include setting the percentage of the screen scrolled on the terminal to set a condition for what percentage of a total size of a prescribed video output on the screen of the prescribed terminal as the condition for the watching completion criterion, for example.

(9) The block advertisement information input module 1720 may further include a function (for example, operate further including a function) of inputting information on the unit price of watching of the advertisement per 1,000 times.

Here, the information serves as information on the unit price of watching of the advertisement per 1,000 times, and the device or means for implementing the present invention may include a function (for example, operate including a function) of permitting the administrator to set the information or the user to set the unit price.

(10) The block advertisement information input module 1720 may further include a function (for example, operate further including a function) of inputting information for limiting the maximum number of visits of a web page (or smartphone application screen) where an advertisement is exposed.

Here, the information is information on the maximum number of times an advertisement can be displayed according to the number of visits when a specific user visits a web page (or smartphone application screen) where the advertisement is displayed to set a condition that the advertisement is displayed, for example or information on the maximum number of times netizens can visit the web page (or smartphone application screen) where the advertisement will be displayed without restrictions on a specific user. The information may include a function (for example, operate including a function) of permitting the administrator or the user to set a function that can be set related information. In setting the maximum number of visits, when the total number of visits of a general web page (or smartphone application screen) or a specific web page (or smartphone application screen) exceeds a total limit, the information may further include a function (for example, operate further including a function) of preventing the advertisement from being no more displayed on the related web page (or a screen of a smartphone application) that the user visits.

(11) The block advertisement information input module 1720 may further include a function (for example, operate further including a function) of inputting information on a criterion of a web page (or smartphone application screen) where an advertisement is displayed.

Here, the information is information with which whether the web page is a web page (or smartphone application screen) generated before the advertisement is displayed or a web page (or smartphone application screen) generated after the advertisement is displayed can be identified, and may include a function (for example, operate including a function) of permitting the administrator to set a function of identifying a generation time and displaying the advertisement or the user to set a relevant value.

(12) The block advertisement information input module 1720 may further include a function (for example, operate further including a function) of inputting information on a login state or a logout state of the user who accesses the web page (or smartphone application screen) where an advertisement is displayed.

Here, the information is information with which the user is logged in at present when the advertisement is displayed can be identified or information with which the user is logged out can be identified, and may include a function (for example, operate including a function) of permitting the administrator to identify the logged-in or logged-out user and displaying the advertisement or the user to set a relevant value.

(13) The block advertisement information input module 1720 may further include a function (for example, operate further including a function) of inputting information on whether the user who accesses the web page (or smartphone application screen) where the advertisement is displayed visits the web page (or smartphone application screen) for the first time..

Here, the information is information with which whether the user who visits the web page (or a screen of a smartphone application at present visits the web page (or smartphone application screen) for the first time when the advertisement is displayed can be identified, and may include a function (for example, operate including a function) of permitting the administrator to set or the user to set a relevant value such that the advertisement is displayed for each user who visits a specific web page (or smartphone application screen) for the first time (or second or more).

(14) The block advertisement information input module 1720 may further include a function (for example, operate further including a function) of inputting information the type of content where an advertisement is displayed and coordinates.

Here, the information is information on coordinates in which a video is output on the screen and that can be designated through a code (for example, HTML) of a web page having a video, an image, or audio output on the web page (or smartphone application screen), among various elements of the web page (or smartphone application screen) when the advertisement is displayed, and may include a function (for example, operate including a function) of permitting the administrator to set a function of displaying the advertisement in the related coordinates or the user to set a value of the coordinates.

According to the embodiment, the coordinates may be implemented further including X, Y, Z values at which the advertisement is displayed, and more specifically, may further include (for example, operate including) coordinate values of top, bottom, right, and left of a frame that is occupied by a video advertisement displayed on the screen of the prescribed terminal.

According to the embodiment, the coordinates may be implemented further including height coordinates in which an advertisement is displayed, and more specifically, may further include a function that an advertisement is displayed only at a height at which the prescribed terminal is actually located or when a prescribed web page (or smartphone application screen) includes information on specific height coordinates (or the information can be identified), an advertisement is displayed on the web page (or smartphone application screen) only at the height (or above the height or below the height).

According to the embodiment, the coordinates may further include a function that, when the prescribed terminal is located at a certain floor of a building, an advertisement is displayed only at the floor (or a floor different from the floor) or when a prescribed web page (or smartphone application screen) includes information on a certain floor of a specific building (or the information can be identified), an advertisement is displayed on the web page (or smartphone application screen) only at the floor.

According to the embodiment, the advertisement-purpose block tag information input module 1711-2 may include a function (for example, operate including a function) of receiving characters, numbers, special characters, a barcode (QR code, one-dimensional barcode, or two-dimensional barcode), or the like as input through input means such as a keyboard, a mouse, or a camera, and temporarily storing the input information by unit (that is, tagged input unit).

According to the embodiment, the advertisement-purpose block tag information input module 1711-2 may provide a function of inputting one or more of an address and a zip code for identifying position information on areas that the travelers will visit (travel), and may include a function (for example, operate including a function) of temporarily storing the address or the zip input through the above-described function.

According to the embodiment, the advertisement-purpose block tag information input module 1711-2 may provide a function that can output an address list or a zip code list of the input addresses or zip codes on the screen of the user terminal, and can select at least one address or zip code from the output address list or zip code list through prescribed input means (keyboard, mouse, or touch on prescribed region of screen), and may further include a function (for example, operate further including a function) of temporarily storing information selected through the above-described function.

According to the embodiment, the advertisement-purpose block tag information input module 1711-2 may include a function (for example, operate including a function) of identifying latitude or longitude information on the selected address or zip code and temporarily storing information on the identified latitude and longitude.

According to the embodiment, the advertisement-purpose block radius information input module 1711-3 may include a function (for example, operate including a function) of receiving information on a radius range from prescribed latitude and longitude as input through various input means such as a keyboard and a mouse, and temporarily storing the input information.

According to the embodiment, the advertisement-purpose block retrieval result transmission request information transmission module 1711-4 may include a function (for example, operate including a function) of identifying block data (for example, block data 520 in FIG. 5) in which information partially or wholly matching or not partially or wholly matching prescribed information (characters, numbers, special characters, and barcode) is recorded or information partially or wholly matching or not partially or wholly matching prescribed information (or latitude and longitude or information on radius range from latitude and longitude), in information input from the advertisement-purpose block tag information input module 1711-2 or the advertisement-purpose block radius information input module 1711-3, and temporarily storing a list of the identified block data (for example, block data 520 in FIG. 5) or related prescribed information.

According to the embodiment, advertisement-purpose block retrieval result transmission request information that is prescribed request information for requesting output in the form of a block (for example, block 911 in FIG. 10) to the advertisement-purpose block retrieval result archive indicator 1711-5 provided in a prescribed user terminal may be generated.

According to the embodiment, the advertisement-purpose block retrieval result transmission request information transmission module may include a function (for example, operate including a function) of transmitting the generated advertisement-purpose block retrieval result transmission request information to a "advertisement-purpose block retrieval result transmission request information reception module 1730" of the "advertisement integrated information database 1712".

According to the embodiment, the advertisement-purpose block retrieval result archive indicator 1711-5 may include a function (for example, operate including a function) of receiving advertisement-purpose block retrieval result information 1750 that is information transmitted from the advertisement-purpose block retrieval result information transmission module 1740, and outputting, on the screen of the user terminal, a list of the blocks (for example, block 911 in FIG. 10) corresponding to the received advertisement-purpose block retrieval result information 1750 or related prescribed information.

According to the embodiment, the advertisement-purpose block selection module 1711-6 may include (for example, operate including) a function of generating, when at least one block (for example, block 911 in FIG. 10) from the list of the blocks (for example, block 911 in FIG. 10) output on the screen through means such as a web page or related prescribed information through various input means such as a keyboard and a mouse, advertisement-purpose block selection information 1760 with which prescribed position information (latitude and longitude, radius information or height information around the latitude and longitude, or information on a floor of a building) related to the selected block (for example, block 911 in FIG. 10) can be identified.

According to the embodiment, the advertisement-purpose block selection module 1711-6 may provide, to the administrator or the user, an interface device that can select the block (for example, block 911 in FIG. 10) output in a single form to be identified on the screen of the user terminal through an input device such as a mouse (or keyboard) of the prescribed terminal to generate the advertisement-purpose block selection information 1760 and a related manual function, and may further include a function (for example, operate further including a function) that advertisement-purpose block selection information 1760 is generated when the block (for example, block 911 in FIG. 10) is generated.

In addition, the embodiment of the present disclosure may further include a function (for example, operate further including a function) of preparing a software program or a protocol according to a prescribed operation rule in advance without using the manual function, and automatically generating the advertisement-purpose block selection information 1760 when a generation condition for prescribed advertisement-purpose block selection information 1760 of the software program or the protocol according to the prescribed operation rule.

According to the embodiment, since the block (for example, block 911 in FIG. 10) for sending an advertisement is selected from the advertisement-purpose block selection module 1711-6, and the block (for example, block 911 in FIG. 10) may include a function that can be accessed through a unique ID with which a prescribed web page (or smartphone application screen) can be identified, can be accessed through a unique URL with which the prescribed web page or the like can be identified, can be accessed through a prescribed IP address with which the prescribed web page or the like can be identified, or can be accessed through a prescribed QR code, a one-dimensional or two-dimensional barcode, or the like with which the prescribed web page or the like can be identified.

According to the embodiment, the prescribed IP address may further include (for example, operate including) a fixed IP address or a dynamic IP address.

Such a function may provide a function of allowing an advertiser or the like to directly select an access path to the block (for example, block 911 in FIG. 10) on a web page to which an advertisement can be sent since there are various access paths to the block (for example, block 911 in FIG. 10) that appears on a web page (or smartphone application screen) for sending an advertisement.

Since such a function provides a function of allowing netizens to access a web page (or smartphone application screen) to which an advertisement is sent through various means (ID, URL, IP address, and QR code) when accessing the related web page, the amount of traffic generated may increase as the access paths vary. Accordingly, the degree of contribution to sales may become greater, and a likelihood of obtaining a higher advertisement effect becomes higher.

The advertisement-purpose block selection module 1711-6 may further include a function (for example, operate further including a function) of recording prescribed information to be identified by the sharing approval information (for example, sharing approval information 512 in FIG. 5) and the block data (for example, block data 520 in FIG. 5) in the form of block data (for example, block data 520 in FIG. 5) in generating the advertisement-purpose block selection information 1760.

On the other hand, the advertisement integrated information database 1712 may be implemented including the advertisement-purpose block retrieval result transmission request information reception module 1730, the advertisement-purpose block retrieval result information 1750, and the advertisement-purpose block retrieval result information transmission module 1740. The advertisement integrated information database 1712 may receive the advertisement-purpose block retrieval result transmission request information transmitted from the advertisement-purpose block retrieval result transmission request information transmission module 1711-4, through the advertisement-purpose block retrieval result transmission request information reception module 1730. The advertisement integrated information database 1712 may include a function (for example, operate including a function) of transmitting the advertisement-purpose block retrieval result information 1750 corresponding to the received advertisement-purpose block retrieval result transmission request information to the advertisement-purpose block retrieval result archive indicator 1711-5 through the advertisement-purpose block retrieval result information transmission module 1740.

According to the embodiment, the advertisement integrated information database 1712 may include a function (for example, operate including a function) of generating or storing advertisement integrated information 1712-1 including information input from the block advertisement information input module 1720 or linking, identifying, transmitting, receiving, generating, changing, deleting, and recording related information through each module, device, means, or the like for the present invention.

According to the embodiment, the advertisement integrated information database 1712 may further include a function (for example, operate further including a function) of recording tag information (for example, tag information 530 in FIG. 5) with which the advertisement integrated information 1712-1 including information input from the block advertisement information input module 1720 can be identified or prescribed information of the advertisement integrated information 1712-1 in the form of block data (for example, block data 520 in FIG. 5).

According to the embodiment, the block advertisement sending module 1713 may include a function (for example, operate including a function) of sending, when a prescribed user terminal is actually located at a position according to position information on the latitude and longitude corresponding to a visit candidate area or position information in radius information around the latitude and longitude to be identified by the block data (for example, block data 520 in FIG. 5) of the block (for example, block 911 in FIG. 10) corresponding to the advertisement block selection information (for example, advertisement-purpose block selection information 1760 in FIG. 17), an advertisement to a web page or a page of an application output through a web browser of the terminal.

According to the embodiment, the block advertisement sending module 1713 may further include a function (for example, operate further including a function) of sending, at the position according to the position information on the latitude and longitude corresponding to the visit candidate area or the position information in the radius information around the latitude and longitude to be identified by the block data (for example, block data 520 in FIG. 5) of the block (for example, block 911 in FIG. 10) corresponding to the advertisement block selection information (for example, advertisement-purpose block selection information 1760 in FIG. 17), an advertisement to a web page or a page of an application including tag information for identifying the position information.

According to the embodiment, the block advertisement sending module 1713 may further include a function (for example, operate further including a function) of sending an advertisement to a web page or a page of an application including prescribed information (or related information) on characters, numbers, special characters, or a barcode to be identified by the block data (for example, block data 520 in FIG. 5) of the block (for example, block 911 in FIG. 10) corresponding to the advertisement block selection information (for example, advertisement-purpose block selection information 1760 in FIG. 17).

According to the embodiment, the advertisement sent from the block advertisement sending module 1713 may be prescribed information or may include (for example, operate including) a function that can send an image, a video, a moving image, audio, or the like.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 17.

FIG. 18 is a diagram illustrating an electronic device (for example, accommodation sharing device) (for example, electronic device including web server) according to an embodiment of the present disclosure.

An electronic device 101 of FIG. 18 may include all or at least some of the configurations of the electronic device 101 of FIG. 5. The electronic device 101 of FIG. 18 may include all or at least some of the configurations of the electronic device 101 of FIG. 6. The electronic device 101 of FIG. 18 may include all or at least some of the configurations of the electronic device 101 of FIG. 7. The electronic device 101 of FIG. 18 may include all or at least some of the configurations of the electronic device 101 of FIG. 8. The electronic device 101 of FIG. 18 may include all or at least some of the configurations of the electronic device 101 of FIG. 9. The electronic device 101 of FIG. 18 may include all or at least some of the configurations of the electronic device 101 of FIG. 10. The electronic device 101 of FIG. 18 may include all or at least some of the configurations of the electronic device 101 of FIG. 11. The electronic device 101 of FIG. 18 may include all or at least some of the configurations of the electronic device 101 of FIG. 12. The electronic device 101 of FIG. 18 may include all or at least some of the configurations of the electronic device 101 of FIG. 13. The electronic device 101 of FIG. 18 may include all or at least some of the configurations of the electronic device 101 of FIG. 14. The electronic device 101 of FIG. 18 may include all or at least some of the configurations of the electronic device 101 of FIG. 15. The electronic device 101 of FIG. 18 may include all or at least some of the configurations of the electronic device 101 of FIG. 16. The electronic device 101 of FIG. 18 may include all or at least some of the configurations of the electronic device 101 of FIG. 17.

Referring to FIG. 18, the electronic device 101 (for example, accommodation sharing system) (for example, accommodation sharing device) (for example, electronic device including web server) according to the embodiment of the present invention may include a block accommodation retrieval and access device (for example, block accommodation retrieval and access device 1810 in FIG. 18).

According to the embodiment, the block accommodation retrieval and access device 1810 may include a function (for example, operate including a function) of enabling retrieval or access for accommodations provided by a hotel or rooms (or houses) provided by travelers in units of the block (for example, block 911 in FIG. 10) on the network through a web page of a user terminal (or a prescribed page of a smartphone application) connected to each device, means, or the like for implementing the present invention.

According to the embodiment, the block accommodation retrieval and access device 1810 may further include (for example, operate including) a block accommodation retrieval and access interface 1811, a block accommodation access module block accommodation access module 1812, and a block accommodation retrieval result archive indicator 1813.

According to an embodiment, the block accommodation retrieval and access interface 1811 may include (for example, operate including) a block accommodation tag information input module 1811-1, a block accommodation radius information input module 1811-2, and a block accommodation identification information transmission module 1811-3.

According to the embodiment, the block accommodation tag information input module 1811-1 may include a function (for example, operate including a function) of receiving characters, numbers, special characters, a barcode, or the like as input through input means such as a keyboard, a mouse, or a camera, and temporarily storing the input information by input unit (that is, tagged input unit).

According to the embodiment, the block accommodation tag information input module 1811-1 may provide a function of inputting one or more of an address and a zip code for identifying position information on areas that the travelers will visit (travel), and may further include a function (for example, operate including a function) of temporarily storing the address or the zip input through the above-described function.

According to the embodiment, the block accommodation tag information input module 1811-1 may provide a function that can output an address list or a zip code list of the input addresses or zip codes on the screen of the user terminal, and can select at least one address or zip code from the output address list or zip code list through prescribed input means (keyboard, mouse, or touch on prescribed region of screen), and may further include a function (for example, operate further including a function) of temporarily storing information selected through the above-described function.

According to the embodiment, the block accommodation tag information input module 1811-1 may further include a function (for example, operate including a function) of identifying latitude or longitude information on the selected address or zip code and temporarily storing information on the identified latitude and longitude.

According to the embodiment, the block accommodation radius information input module 1811-2 may include a function (for example, operate including a function) of receiving information on a radius range from prescribed latitude and longitude as input through various input means such as a keyboard and a mouse, and temporarily storing the input information.

According to the embodiment, the block accommodation identification information transmission module 1811-3 may include a function (for example, operate including a function) of identifying block data (for example, block data 520 in FIG. 5) in which information partially or wholly matching or not partially or wholly matching prescribed information (characters, numbers, special characters, and barcode) is recorded or information partially or wholly matching or not partially or wholly matching prescribed information (or latitude and longitude or information on radius range from latitude and longitude), in information input from the block accommodation tag information input module 1811-1 or the block accommodation radius information input module 1811-2, and temporarily storing a list of the identified block data (for example, block data 520 in FIG. 5) or related prescribed information.

According to the embodiment, the block accommodation retrieval result transmission request information 1820 that is prescribed request information for requesting output in the form of a block (for example, block 911 in FIG. 10) to the block accommodation retrieval result archive indicator 1813 provided in a prescribed user terminal may be displayed may be displayed.

According to the embodiment, the block accommodation identification information transmission module may include a function (for example, operate including a function) of transmitting the generated block accommodation retrieval result transmission request information 1820 to a block accommodation retrieval request information reception module 1831 of the block data linking device 1830.

According to the embodiment, the block accommodation access module 1812 may provide a function of accessing related information of the block (for example, block 911 in FIG. 10) corresponding to the block accommodation retrieval result transmission request information 1820, and may include a function of accessing, if information on selection of a list of the blocks (for example, block 911 in FIG. 10), or block accommodations (for example, block accommodations 1510 in FIG. 15), or block data (for example, block data 520 in FIG. 5) mainly output through means such as a web page or related information through an input device such as a mouse or a keyboard is generated, the list of the blocks (for example, block 911 in FIG. 10), the block accommodations (for example, block accommodations 1510 in FIG. 15), or the block data (for example, block data 520 in FIG. 5) corresponding to the selected information or the related information.

According to the embodiment, through the block accommodation access module 1812, the list of the blocks (for example, block 911 in FIG. 10), the block accommodations (for example, block accommodations 1510 in FIG. 15) or the block data (for example, block data 520 in FIG. 5) or the related information may include a function that can be accessed through a unique ID with which a prescribed web page (or smartphone application screen) can be identified, can be accessed through a unique URL with which the prescribed web page can be identified, can be accessed through a prescribed IP address with which the prescribed web page can be identified, or can be accessed through a QR code, a different one-dimensional or two-dimensional barcode, or the like.

According to the embodiment, the prescribed IP address may further include (for example, operate including) a fixed IP address or a dynamic IP address.

Such a function may provide a function of allowing a user or the like to directly select an access path to the block (for example, block 911 in FIG. 10) or the like since there are various access paths to the block (for example, block 911 in FIG. 10) that appears on a web page (or smartphone application screen) for outputting the list of the blocks (for example, block 911 in FIG. 10), the block accommodations (for example, block accommodations 1510 in FIG. 15), or the block data (for example, block data 520 in FIG. 5) or the related information.

According to the embodiment, since such a function provides a function of allowing netizens to access a web page (or smartphone application screen) to which the block (for example, block 911 in FIG. 10) or the like is sent, through various means (ID, URL, IP address, and QR code) when accessing the related web page to increase a likelihood of accommodation sharing, the amount of traffic generated may increase as the access paths vary. Accordingly, the likelihood of accommodation sharing also becomes greater, and as a result, the likelihood of accommodation sharing becomes higher.

According to the embodiment, the block accommodation retrieval result archive indicator 1813 may receive the block accommodation retrieval result transmission request information 1820 that is information transmitted from the block accommodation identification information transmission module 1811-3. The block accommodation retrieval result archive indicator 1813 may further include a function (for example, operate further including a function) of outputting, on the screen of the user terminal or the like, the list of the blocks (for example, block 911 in FIG. 10) or the related information corresponding to the received block accommodation retrieval result transmission request information 1820.

According to the embodiment, the block data linking device 1830 may operate further including a block accommodation retrieval result transmission request information reception module 1832, block accommodation retrieval result information block accommodation retrieval result information 1833, and a block accommodation retrieval result information transmission module 1834.

For example, the block data linking device 1830 may provide a function of linking prescribed information recorded in the form of the block data (for example, block data 520 in FIG. 5) with the device or means for implementing the present invention or transmitting or receiving the prescribed information for the related device or means.

For example, the block data linking device 1830 may receive the block accommodation retrieval result transmission request information 1820 transmitted from a block accommodation retrieval result transmission request information transmission module 1835, through the block accommodation retrieval result transmission request information reception module 1832. The block data linking device 1830 may further include a function (for example, operate further including a function) of transmitting the block accommodation retrieval result information 1833 corresponding to the received block accommodation retrieval result transmission request information 1820 to the block accommodation retrieval result archive indicator 1813 through the block accommodation retrieval result information transmission module 1834.

To this end, the present invention presents a block accommodation possession right exchange device (for example, block accommodation possession right exchange device 1160 in FIG. 11). The electronic device 101 (for example, accommodation sharing system) (for example, accommodation sharing device) (for example, electronic device including web server) according to the embodiment of the present invention may include a block accommodation possession right exchange device (for example, block accommodation possession right exchange device 1160 in FIG. 11).

According to the embodiment, the block accommodation possession right exchange device (for example, block accommodation possession right exchange device 1160 in FIG. 11) may be provided in a prescribed device (RFID smart card, prescribed means having NFC, RF, IR, or microcomputer function, smartphone having NFC, RF, IR, or microcomputer function, tablet PC, or wearable watch), and may store an NFT (for example, NFT 1140 in FIG. 11) (or FT) corresponding to a possession right encryption code (for example, possession right encryption code 1120 in FIG. 11) in a block management fee saving device (for example, block management fee saving device 1130 in FIG. 11) provided in the prescribed device.

According to the embodiment, the prescribed device may identify the NFT (for example, NFT 1140 in FIG. 11) (or FT) corresponding to the possession right encryption code (for example, possession right encryption code 1120 in FIG. 11) stored in a block management fee saving device (for example, block management fee saving device 1130 in FIG. 11) provided in a different device (or stored in prescribed storage means) through the network.

According to the embodiment, it is possible to allow people to simply perform check-in and check-out for entrance and exit to and from accommodations or rooms (or houses) provided by the hotel and the travelers, and when the invention is implemented worldwide, there is an effect that many people in various areas can mutually transfer possession right (authority to use) of accommodations to the other party using a simple method.

In regard to this, an existing hotel or the like provides a dedicated smart card key for entrance and exit in an existing commercial accommodation.

The hotel registers an unique ID of a dedicated RFID smart card of an accommodation provided to the traveler by the hotel through a guestroom entrance/exit management device (for example, guestroom entrance/exit management device 1920 in FIG. 19) in advance and provides the RFID smart card to the traveler who is approved to enter and exit from the accommodation, and the traveler who receives the RFID smart card can place the RFID card within a prescribed distance at which a door lock of the accommodation can be unlocked, from the door lock, and then, can enter and exit from the accommodation.

The guestroom entrance/exit management device (for example, guestroom entrance/exit management device 1920 in FIG. 19) for the present invention may be used together with a related device that is being used by the existing hotel or include (for example, operate including) separate operation by the operator who implements the present invention.

According to the embodiment, the near field communication (NFC) is a technique that has been developed to enable electronic equipment such as a mobile phone or a smartphone to perform near field radio communication with a smart card and other electronic equipment.

For example, the NFC refers a radio communication technique that can be used at a close distance, means a radio communication technique that allows data exchange at a close distance within 10 cm using a frequency in a 13.56 MHz band, and may provide a function of allowing a person to enter and exit from an accommodation through transmission and reception of related signals.

For example, the radio frequency (RF) is a communication method that emits a radio frequency to exchange information, is a broadband communication method, and may provide a function of allowing a person to enter and exit from an accommodation through transmission and reception of related signals.

For example, the infra-red ray (IR) means an infra-red ray, and may provide a function of allowing a person to enter and exit from an accommodation through transmission and reception of related signal by providing a function capable of adjusting a measurement distance using an infra-red ray (IR) transmission and reception sensor module, an infra-red ray reception module, an infra-red ray emission module, and a variable resistor in prescribed means for implementing the present invention, for example.

For example, the radio frequency Identification (RFID) is also referred to as radio recognition, is a recognition system that reads stored data of a tag, a label, a card, or the like embedded with a semiconductor chip using a radio frequency in a noncontact manner, and may provide a function of allowing a person to enter and exit from an accommodation through transmission and reception of related signals.

For example, the microcomputer is an ultra small-sized computer mounted on a board in which a storage device, an interface circuit with peripheral devices, and the like are attached to a microprocessor in which an operational processor of a computer is configured with one or several large-scale integration (LSI) circuits, and may provide the above-described function through transmission and reception of related signals on entrance and exit to and from an accommodation for implementing the present invention based on related functions.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 18.

FIG. 19 is a diagram illustrating a door lock system that is operated by an electronic device (for example, accommodation sharing device) (for example, electronic device including web server) according to an embodiment of the present disclosure.

Referring to FIG. 19, the block accommodation door lock device 1280 (for example, block accommodation door lock device 1280 in FIG. 12) for the present invention may further include (for example, operate including) emergency operation means 1930 to enable entrance and exit to and from an accommodation regardless of whether the block accommodation door lock device 1280 is connected or not connected to the block accommodation possession right exchange device (for example, block accommodation possession right exchange device 1160 in FIG. 11), the guestroom entrance/exit management device 1920, or the like on the network or whether electric power is supplied or not supplied to the block accommodation door lock device 1280 from a power supply device (for example, battery).

According to the embodiment, the emergency operation means 1930 has an effect that the emergency operation means 1930 enables entrance and exit to and from the accommodation when it is not possible to enter and exit from the accommodation in a state in which electric power is not supplied to the block accommodation door lock device (for example, block accommodation door lock device 1280 in FIG. 12) or the block accommodation door lock device (for example, block accommodation door lock device 1280 in FIG. 12) is not connected on the network.

According to the embodiment, the emergency operation means 1930 has an effect of enabling entrance and exit to and from the accommodation by temporarily supplying emergency electric power to the block accommodation door lock device 1280 (for example, block accommodation door lock device 1280 in FIG. 12) or temporarily downloading a block accommodation entrance/exit protocol (for example, block accommodation entrance/exit protocol 1940 in FIG. 19) thereto.

According to the embodiment, the block accommodation door lock device (for example, block accommodation door lock device 1280 in FIG. 12) may further include a function (for example, operate further including a function) of receiving, from the block accommodation possession right exchange device (for example, block accommodation possession right exchange device 1160 in FIG. 11) or the guestroom entrance/exit management device (for example, guestroom entrance/exit management device 1920 in FIG. 19), a block accommodation entrance/exit protocol 1940 in which information for specifying an operation rule of a drive motor mounted in a door lock for locking or unlocking a locking device mounted in the door lock, and storing the received block accommodation entrance/exit protocol 1940 in a block accommodation entrance/exit protocol storage unit 1950.

According to the embodiment, the block accommodation possession right exchange device (for example, block accommodation possession right exchange device 1160 in FIG. 11) may further include (for example, operate including) a server that can operate on the Internet or a prescribed network (closed or open), performs communication with the device, means, or the like for implementing the present invention, and includes a database configured to perform various calculations.

According to the embodiment, the block accommodation entrance/exit protocol storage unit 1950 may include (for example, operate including) a function that can store the block accommodation entrance/exit protocol 1940.

According to the embodiment, the block accommodation entrance/exit protocol 1940 may further include a function that can be stored in the emergency operation means 1930 or another prescribed device or means (or device) for implementing the present invention.

The block accommodation door lock device (for example, block accommodation door lock device 1280 in FIG. 12) for implementing the present invention may identify a prescribed frequency (low frequency, high frequency, or ultra-high frequency) from the prescribed device that stores the NFT (for example, NFT 1140 in FIG. 11) (or FT) corresponding to the possession right encryption code (for example, possession right encryption code 1120 in FIG. 11) in the block management fee saving device (for example, block management fee saving device 1130 in FIG. 11) for implementing the present invention, through a block accommodation frequency reader 1960 according to the rule stored in the block accommodation entrance/exit protocol 1940.

When the identified frequency matches a frequency set in the rule of the block accommodation entrance/exit protocol 1940 (or conforms to a rule for locking, unlocking, and the like set in the block accommodation entrance/exit protocol 1940, the block accommodation door lock device may transmit a signal for locking the locking device or a block accommodation door emergency locking signal to the related device to operate the drive motor mounted in the door lock for locking or unlocking the locking device mounted in the door lock through the drive motor. The block accommodation door lock device may further include a function (for example, operate further including a function) of transmitting a block accommodation door unlocking signal for unlocking the locking device or a block accommodation door emergency unlocking signal to the related device through the drive motor.

According to the embodiment, the rule for locking, unlocking, and the like set in the block accommodation entrance/exit protocol 1940 corresponding to frequency matching may include (for example, operate including) a function of identifying whether the block management fee saving device identification code (for example, block management fee saving device identification code 1131 FIG. 11) with which the block management fee saving device (for example, block management fee saving device 1130 in FIG. 11) that stores the NFT (for example, NFT 1140 in FIG. 11) (FT) is stored can be identified matches information recorded in the block data (for example, block data 520 in FIG. 5) of the possession right encryption code (for example, possession right encryption code 1120 in FIG. 11) corresponding to the NFT (for example, NFT 1140 in FIG. 11) (FT), and locking, unlocking, and the like the drive motor if the block data verification code (for example, block data verification code 1370 in FIG. 13) of the block management fee saving device (for example, block management fee saving device 1130 in FIG. 11) is input from the prescribed terminal provided with the block management fee saving device (for example, block management fee saving device 1130 in FIG. 11) and matches information.

According to the embodiment, the block accommodation door emergency locking signal or the block accommodation door emergency unlocking signal serves as a master key when entrance and exit to and from the accommodation is impossible because the block accommodation door lock device (for example, block accommodation door lock device 1280 in FIG. 12) is disabled (or due to emergency) and has an effect of enabling entrance and exit to and from the accommodation with no block accommodation door locking signal or block accommodation door unlocking signal.

The block accommodation door lock device 1280 (for example, block accommodation door lock device 1280 in FIG. 12) for implementing the present invention may identify a prescribed frequency (low frequency, high frequency, or ultra-high frequency) from the prescribed device that stores the NFT (for example, NFT 1140 in FIG. 11) (or FT) corresponding to the possession right encryption code (for example, possession right encryption code 1120 in FIG. 11) in the block management fee saving device (for example, block management fee saving device 1130 in FIG. 11) for implementing the present invention, through the block accommodation frequency reader (for example, block accommodation frequency reader 1960 in FIG. 19) according to the rule stored in the block accommodation entrance/exit protocol 1940. The block accommodation door lock device (for example, block accommodation door lock device 1280 in FIG. 12) may identify a prescribed frequency (low frequency, high frequency, or ultra-high frequency) from the prescribed device that stores the NFT (for example, NFT 1140 in FIG. 11) (or FT) corresponding to the possession right encryption code (for example, possession right encryption code 1120 in FIG. 11) in the block management fee saving device (for example, block management fee saving device 1130 in FIG. 11), through the block accommodation frequency reader (for example, block accommodation frequency reader 1960 in FIG. 19) according to the rule stored in the block accommodation entrance/exit protocol 1940.

The block accommodation door lock device 1280 may identify prescribed barcode information (for example, QR code, one-dimensional barcode, or two-dimensional barcode) for implementing the present invention through block accommodation barcode information reader 1970, and may further include a function (for example, operate further including a function) of transmitting the block accommodation door locking signal for locking the locking device or the block accommodation door emergency locking signal to the related device through the drive motor or transmitting the block accommodation door unlocking signal for unlocking the locked state of the locking device or the block accommodation door emergency unlocking signal to the related device through the drive motor to operate the drive motor mounted in the door lock for locking or unlocking the locking device of the door lock when the identified prescribed frequency (low frequency, high frequency, or ultra-high frequency) or barcode information matches a barcode set in the rule of the block accommodation entrance/exit protocol 1940 (or conforms to the rule for locking, unlocking, and the like set in the block accommodation entrance/exit protocol 1940.

According to the embodiment, the block accommodation barcode information reader 1970 may provide a function for linking with a prescribed device (a camera, a scanner, or a smartphone that can be connected to the network) for implementing the present invention, and may further include a function (for example, operate further including a function) of operating according to the rule of the block accommodation entrance/exit protocol 1940.

According to the embodiment, the block accommodation door lock device (for example, block accommodation door lock device 1280 in FIG. 12) may identify a prescribed frequency (low frequency, high frequency, or ultra-high frequency) from the prescribed device that stores the NFT (for example, NFT 1140 in FIG. 11) (or FT) corresponding to the possession right encryption code (for example, possession right encryption code 1120 in FIG. 11) in the block management fee saving device (for example, block management fee saving device 1130 in FIG. 11), through the block accommodation frequency reader 1960 according to the rule stored in the block accommodation entrance/exit protocol 1940.

According to the embodiment, prescribed vision information (for example, whole image information such as face information, iris information, and vein information) for implementing the present invention may be identified through a block accommodation vision information reader 1980. The block accommodation door lock device may further include a function (for example, operate further including a function) of transmitting the block accommodation door locking signal for locking the locking device or the block accommodation door emergency locking signal to the related device through the drive motor or transmitting the block accommodation door unlocking signal for unlocking the locked state of the locking device or the block accommodation door emergency unlocking signal to the related device through the drive motor to operate the drive motor mounted in the door lock for locking or unlocking the locking device of the door lock when the identified prescribed frequency (low frequency, high frequency, or ultra-high frequency) or vision information matches the barcode set in the rule of the block accommodation entrance/exit protocol 1940 (or conforms to the rule for locking, unlocking, and the like set in the block accommodation entrance/exit protocol 1940).

According to the embodiment, the block accommodation vision information reader 1980 may provide a function for linking with a prescribed device (a camera or a smartphone that can be connected to the network) for implementing the present invention, and may further include a function (for example, operate further including a function) of operating according to the rule of the block accommodation entrance/exit protocol 1940.

According to the embodiment, the barcode information and the vision information may be used for the purpose of adding secondary security for the NFT (for example, NFT 1140 in FIG. 11) (or FT) corresponding to the possession right encryption code (for example, possession right encryption code 1120 in FIG. 11) or when the authentication of the NFT (for example, NFT 1140 in FIG. 11) (or FT) corresponding to the possession right encryption code (for example, possession right encryption code 1120 in FIG. 11) for entrance and exit to and from the accommodation is impossible due to a network status.

A barcode information setting module 1990 for implementing the present invention is to set or register the barcode information for locking or unlocking of the block accommodation door lock device (for example, block accommodation door lock device 1280 in FIG. 12), and may operate according to the rule of the block accommodation entrance/exit protocol 1940.

According to the embodiment, the barcode information setting module 1990 may provide a function for linking with the prescribed device (a camera, a scanner, or a smartphone that can be connected to the network) for implementing the present invention, and may further include a function (for example, operate further including a function) of operating according to the rule of the block accommodation entrance/exit protocol 1940.

A vision information setting module 1910 for implementing the present invention is to set or register the vision information for locking or unlocking of the block accommodation door lock device (for example, block accommodation door lock device 1280 in FIG. 12), and may operate according to the rule of the block accommodation entrance/exit protocol 1940.

According to the embodiment, the vision information setting module 1910 may provide a function for linking with the prescribed device (a camera or a smartphone that can be connected to the network) for implementing the present invention, and may further include a function (for example, operate further including a function) of operating according to the rule of the block accommodation entrance/exit protocol (for example, block accommodation entrance/exit protocol 1940 in FIG. 19).

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 19.

FIG. 20 is a diagram illustrating an electronic device (for example, accommodation sharing device) (for example, electronic device including web server) according to an embodiment of the present disclosure.

An electronic device 101 of FIG. 20 may include all or at least some of the configurations of the electronic device 101 of FIG. 5. The electronic device 101 of FIG. 20 may include all or at least some of the configurations of the electronic device 101 of FIG. 6. The electronic device 101 of FIG. 20 may include all or at least some of the configurations of the electronic device 101 of FIG. 7. The electronic device 101 of FIG. 20 may include all or at least some of the configurations of the electronic device 101 of FIG. 8. The electronic device 101 of FIG. 20 may include all or at least some of the configurations of the electronic device 101 of FIG. 9. The electronic device 101 of FIG. 20 may include all or at least some of the configurations of the electronic device 101 of FIG. 10. The electronic device 101 of FIG. 20 may include all or at least some of the configurations of the electronic device 101 of FIG. 11. The electronic device 101 of FIG. 20 may include all or at least some of the configurations of the electronic device 101 of FIG. 12. The electronic device 101 of FIG. 20 may include all or at least some of the configurations of the electronic device 101 of FIG. 13. The electronic device 101 of FIG. 20 may include all or at least some of the configurations of the electronic device 101 of FIG. 14. The electronic device 101 of FIG. 20 may include all or at least some of the configurations of the electronic device 101 of FIG. 15. The electronic device 101 of FIG. 20 may include all or at least some of the configurations of the electronic device 101 of FIG. 16. The electronic device 101 of FIG. 20 may include all or at least some of the configurations of the electronic device 101 of FIG. 17. The electronic device 101 of FIG. 20 may include all or at least some of the configurations of the electronic device 101 of FIG. 19. The electronic device 101 of FIG. 20 may include all or at least some of the configurations of the electronic device 101 of FIG. 19.

Referring to FIG. 20, the electronic device 101 (for example, accommodation sharing system) (for example, accommodation sharing device) (for example, electronic device including web server) may include a block accommodation entrance/exit protocol management device 2010.

According to the embodiment, the block accommodation entrance/exit protocol management device 2010 may provide a function of generating, changing, deleting, and the like prescribed information for the operation rule stored in the block accommodation entrance/exit protocol (for example, block accommodation entrance/exit protocol 1940 in FIG. 19).

According to the embodiment, the drive motor for implementing the present invention may include (for example, operate including) other prescribed means that can exhibit the same effect.

According to the embodiment, the block accommodation door lock device 1280 (for example, block accommodation door lock device 1280 in FIG. 12) may operate in linking with a block accommodation possession right exchange device 2020 and/or a prescribed device.

For example, the prescribed device may include an RFID smart card, prescribed means having NFC, RF, IR, or microcomputer function, a smartphone having NFC, RF, IR, or microcomputer function, a tablet PC, or a wearable watch.

According to the embodiment, the block accommodation possession right exchange device 2020 may include a block accommodation door lock device 1280, a guestroom entrance and exit management device 2020-1, a block accommodation entrance/exit protocol 1940, a block accommodation entrance/exit protocol 1940, a block accommodation frequency reader 1960, a block accommodation barcode information reader 1970, a block accommodation vision information reader 1980, and the block accommodation entrance/exit protocol management device 2020.

According to the embodiment, the block accommodation door lock device 1280 may operate further including emergency operation means to enable entrance and exit to and from an accommodation regardless of whether the block accommodation door lock device 1280 is connected or not connected to the block accommodation possession right exchange device or the guestroom entrance and exit management device on the network or whether electric power is supplied or not supplied from a power supply device (for example, battery).

According to the embodiment, the block accommodation door lock device 1280 may receive a block accommodation entrance/exit protocol from the block accommodation possession right exchange device or the guestroom entrance and exit management device.

According to the embodiment, the memory (for example, memory 130 in FIG. 2 or memory 130 in FIG. 3) may include instructions for the processor (for example, processor 120 in FIG. 2 or server 130 in FIG. 3) to perform the operations of the configurations illustrated in FIG. 20.

According to the embodiment, the block accommodation possession right exchange device may operate further including a server that can operate on the Internet or a prescribed network (closed or open), performs communication with the device, means, or the like for implementing the present invention, and includes a database configured to perform various calculations.

According to the embodiment, the following operations may be performed through the block accommodation possession right exchange device.
(1) A commercial hotel guestroom management server system solution (for example, including a door lock device) for a commercial accommodation can be provided.
(2) A solution (for example, including a door lock device) for entrance/exit and management of rooms of hoses for commercial guesthouse sale uploaded to an existing guesthouse sale platform such as a commercial accommodation can be provided.
(3) A solution (for example, including a door lock device) for entrance/exit and management of rooms of houses uploaded to the electronic device 101 for the purpose of simple house sharing (for example, sharing of houses) can be provided.
(4) A solution (for example, including a door lock device) for entrance/exit and management of rooms of houses uploaded to the electronic device 101 for the purpose of sharing of houses and hotel rooms can be provided.
(5) A solution (for example, including a door lock device) for entrance/exit and management of a room of a house that exists alone in the future in a state in which the electronic device 101 and the operator terminal and/or the user terminal are not connected can be provided.

According to the embodiment, the guestroom entrance and exit management device as one of the components of the block accommodation possession right exchange device may the following operations.
(1) It is possible to perform an operation of a server device that is provided in a building of a hotel to manage guestrooms in the hotel.
(2) It is possible to perform an operation of a server device that is connected via the network such that hosts who provide rooms of houses uploaded to a guesthouse sale platform (for example, Airbnb) by users can manage guesthouses (perform check-in/check-out of rooms of houses or defect management) online.
(3) With the server of the electronic device 101, it is possible to perform an operation of a server that is connected via the network such that hosts who provide rooms of houses uploaded by people for simple house sharing (for example, sharing of a house and a house) can manage house sharing (perform check-in/check-out of rooms of houses or defect management) online.
(4) With the server of the electronic device 101, it is possible to perform an operation of a server device that is connected via the network such that hosts who provide rooms of houses uploaded by users can manage house sharing (check-in/check-out of rooms of houses or defect management) online for house sharing (for example, sharing of a house and a hotel room) and a method in which hotel rooms are used at the same time selling rooms of houses as guesthouses.

In the present disclosure, a hotel room in a general field, and a room of a house uploaded to a platform of another operator such as Airbnb for guesthouse sale are referred to as commercial (candidate) accommodation to bind as a single concept.

In the present disclosure, if the door lock is provided regardless of a house, a hotel, or a guesthouse, and if even a stand-alone house not connected to the network is to be connected to the network, it is possible to achieve sharing of houses, sharing of a hose and a hotel room, and/or sharing of a house and a commercial accommodation through the electronic device 101.

In the present disclosure, when a door of a stand-alone house is provided with the door lock of the present disclosure, it is possible to achieve sharing of houses, sharing of a house and a hotel room, and/or sharing of a house and a commercial accommodation. For example, door locks of all future houses and digital door locks of commercial accommodations may be connected via the network and made into blocks (the blockchain functionality is added to an expanded version).

According to the embodiment, the door lock of the present disclosure may be operated using the following methods.
(1) An RFID smart card, prescribed means having NFC, RF, IR, or microcomputer function, a smartphone (or tablet PC or wearable watch) having NFC, RF, IR, or microcomputer function, or an automobile key that is a node (terminal functionality) that can be linked with a node at which an electronic copy for verification is stored or stores an electronic copy may be used as a smart key of a door lock.
(2) When such a device is placed within an effective distance of the recognition device (frequency or iris) block accommodation door lock device, is made to be recognized or identified by the recognition device, or is put into contact with the recognition device, the door lock may be operated.
(3) When the frequency matches the frequency set in the rule of the block accommodation entrance/exit protocol in the block accommodation entrance/exit protocol storage unit of the door lock or conforms to the rule for locking, unlocking, and the like set in the block accommodation entrance/exit protocol, the door lock may be operated.
(4) When the number of possession right encryption codes identified through the electronic copy of the blockchain stored at the node (terminal) is one (the block is a genesis block), and the node is in an offline state, the door lock may be operated.

For example, since the block management fee saving device stored at the node and the possession right encryption code are identified and synchronized, if the power supply of the node is ON, and only the power supply of the door lock is ON, the recognition/identification device (frequency or iris recognition) of the door lock may be operated. Accordingly, even when the node is in an offline state, the locking device may be unlocked according to the rule defined in the block accommodation entrance/exit protocol stored in the door lock device.

(5) When at least two possession right encryption codes are identified through the electronic copy of the blockchain stored at the node, the electronic copy of the blockchain stored at the node may be compared or verified.

For example, if the block management fee verification code is input to input means of the screen, to identify whether the block management fee saving device in which the NFT is stored is the block management fee saving device corresponding to (matching) the block management fee verification code, the cryptography corresponding to the possession right encryption code may be identified according to the rule stored in the block generation protocol (using coding, encoding, decoding, reverse hashing, and double hashing), and whether the block management fee saving device identification code stored in the block data of the electronic copy of the blockchain stored at each node of each of the parties to accommodation sharing corresponds to the input block management fee verification code may be verified.

For example, it should suffice that at least two of the electronic copies of the blockchains in which the same block data is recorded can be identified, instead of comparing all electronic copies of the blockchains stored at the nodes of the parties who want to share accommodations belonging to the block data. In a certain case, the present invention may operate further including a function that can set the number or ratio of nodes differently by setting the rule stored in the block generation protocol to a different value in advance.

According to the embodiment, to verify whether the possession right encryption code corresponding to the block management fee saving device stored at the node is valid, the block management fee saving device identification code, the block management fee verification code, and the block data verification code may be verified or compared through the electronic copy of the blockchain stored at a different node. If the electronic copy of the blockchain is valid, the door may be opened through the drive motor.

According to the embodiment, the door lock may operate as follows when the power supply has a problem and verification is impossible.

For example, when at least two possession right encryption codes are identified by the electronic copy of the blockchain stored at the node, the electronic copy at a different node should be connected for verification of the encryption code, however, since the door lock does not operate due to the problem in the power supply, the door lock can be operated using the emergency operation means.

An electronic device 101 (for example, accommodation sharing system) (for example, accommodation sharing device) (for example, electronic device including web server) according to an embodiment of the present invention is presented.

The electronic device 101 (for example, accommodation sharing system) (for example, accommodation sharing device) (for example, electronic device including web server) may configure a service gate (for example, service gate 320 in FIGS. 3 and 5), an electronic device 101 (for example, accommodation sharing device) (for example, electronic device including web server), a shared accommodation management device 002, a block accommodation retrieval and access device (for example, block accommodation retrieval and access device 1810 in FIG. 18), and the like.

The electronic device 101 (for example, accommodation sharing system) (for example, accommodation sharing device) (for example, electronic device including web server) may configure a service gate (for example, service gate 320 in FIGS. 3 and 5), an electronic device 101 (for example, accommodation sharing device) (for example, electronic device including web server), a blank accommodation management device (for example, blank accommodation management device 1520 in FIG. 15), a hotel accommodation integrated information database (for example, accommodation integrated information database 550 in FIG. 5), a block advertisement management device (for example, block advertisement management device 1710 in FIG. 17), a block accommodation retrieval and access device (for example, block accommodation retrieval and access device 1810 in FIG. 18), and the like.

The electronic device 101 (for example, accommodation sharing system) (for example, accommodation sharing device) (for example, electronic device including web server) may further include a server that operates on the Internet or a prescribed network (closed or open), performs communication with a device or means for implementing the present invention, and includes a database configured to perform various operations.

The service gate (for example, service gate 320 in FIGS. 3 and 5) may include a function for access of a terminal (a terminal of a netizen, an administrator, or the like) of a prescribed user to a web site for implementing the present invention or the above-described network, a function as an Internet address (or an access address on the network) for access to data on the web site or the like, a function as an IP address (an Internet protocol address) (for example, dynamic IP or fixed IP), a domain, or a uniform resource locator (URL), a function as an interplanetary file system (IPFS), and the like.

The electronic device 101 (for example, accommodation sharing device) (for example, electronic device including web server) for implementing the present invention may configure a provision candidate accommodation generation and management device (for example, provision candidate accommodation generation and management device 810 in FIG. 9), a block generation and operation device (for example, block generation and operation device 910 in FIG. 10), a block data linking device (for example, block data linking device 1830 in FIG. 18), and the like.

The electronic device 101 (for example, accommodation sharing device) (for example, electronic device including web server) for implementing the present invention may configure a commercial candidate accommodation access gate generation module (for example, commercial candidate accommodation access gate generation module 540 in FIG. 6), a commercial candidate accommodation management device (for example, commercial candidate accommodation management device 710 in FIG. 8), a commercial candidate accommodation log database (for example, commercial candidate accommodation log database 591 in FIG. 6), a provision candidate accommodation generation and management device (for example, provision candidate accommodation generation and management device 810 in FIG. 9), a block generation and operation device (for example, block generation and operation device 910 in FIG. 10), a block data linking device (for example, block data linking device 1830 in FIG. 18), and the like.

The commercial candidate accommodation management device (for example, commercial candidate accommodation management device 710 in FIG. 8) may configure a commercial candidate accommodation management console (for example, commercial candidate accommodation management console 580 in FIG. 6), a hotel accommodation contents information synchronization module (for example, hotel accommodation contents information synchronization module 711 in FIG. 8), a hotel accommodation management information synchronization module (for example, hotel accommodation management information synchronization module 712 in FIG. 8), a provision candidate accommodation database synchronization module (for example, provision candidate accommodation database synchronization module 713 in FIG. 8), and the like.

The commercial candidate accommodation management console (for example, commercial candidate accommodation management console 580 in FIG. 6) may configure a commercial candidate accommodation account access module (for example, commercial candidate accommodation account access module 590 in FIG. 6), a commercial candidate accommodation sharing period setting module (for example, commercial candidate accommodation sharing period setting module 610 in FIG. 7), a commercial candidate accommodation POST ID registration module (for example, commercial candidate accommodation POST ID registration module 620 in FIG. 7), a commercial candidate accommodation URL registration module (for example, commercial candidate accommodation URL registration module 630 in FIG. 7), a commercial candidate accommodation IP registration module (for example, commercial candidate accommodation IP registration module 640 in FIG. 7), a commercial candidate accommodation barcode registration module (for example, commercial candidate accommodation barcode registration module 650 in FIG. 7), a commercial candidate accommodation position information registration module (for example, commercial candidate accommodation position information registration module 660 in FIG. 7), a deposit account information input module (for example, deposit account information input module 680 in FIG. 8), a commercial candidate accommodation API setting module (for example, commercial candidate accommodation API setting module 570 in FIG. 6), a commercial candidate accommodation management module (for example, commercial candidate accommodation management module 680 in FIG. 8), and the like.

The provision candidate accommodation generation and management device (for example, provision candidate accommodation generation and management device 810 in FIG. 9) for implementing the present invention may configure a provision candidate accommodation contents information input module (for example, provision candidate accommodation contents information input module 820 in FIG. 9), a provision candidate accommodation sharing period setting module (for example, provision candidate accommodation sharing period setting module 830 in FIG. 9), a provision candidate accommodation management information setting module (for example, provision candidate accommodation management information setting module 840 in FIG. 9), a commercial candidate accommodation identification protocol (for example, commercial candidate accommodation identification protocol 850 in FIG. 9), a provision candidate accommodation integrated information generation module (for example, provision candidate accommodation integrated information generation module 860 in FIG. 9), a provision candidate accommodation database (for example, provision candidate accommodation database 720 in FIG. 8), and the like.

According to an embodiment, the provision candidate accommodation integrated information generation module (for example, provision candidate accommodation integrated information generation module 860 in FIG. 9) may configure a function of generating provision candidate accommodation integrated information (for example, provision candidate accommodation integrated information 721 in FIG. 8) to record information an accommodation input or set through the provision candidate accommodation contents information input module (for example, provision candidate accommodation contents information input module 820 in FIG. 9), the provision candidate accommodation sharing period setting module (for example, provision candidate accommodation sharing period setting module 830 in FIG. 9), and the provision candidate accommodation management information setting module (for example, provision candidate accommodation management information setting module 840 in FIG. 9), and recording the provision candidate accommodation integrated information in the provision candidate accommodation database (for example, provision candidate accommodation database 720 in FIG. 8, or the like.

According to an embodiment, the block generation and operation device (for example, block generation and operation device 910 in FIG. 10) may configure a visit candidate area position information input module (for example, visit candidate area position information input module 920 in FIG. 10), a visit candidate area position information selection module (for example, visit candidate area position information selection module 930 in FIG. 10), a visit candidate area geographical information identification module (for example, visit candidate area geographical information identification module 940 in FIG. 10), a visit candidate area radius setting module (for example, visit candidate area radius setting module 950 in FIG. 10), a visit period setting module (for example, visit period setting module 960 in FIG. 10), a visit candidate accommodation usage unit setting module (for example, visit candidate accommodation usage unit setting module 970 in FIG. 10), a visit candidate accommodation usage period individual setting module (for example, visit candidate accommodation usage period individual setting module 980 in FIG. 10), a block generation protocol (for example, block generation protocol 501 in FIG. 5), a block indicator, a block management fee saving device (for example, block management fee saving device 1130 in FIG. 11), a block management fee unit setting module, a block management fee setting information generation module (for example, block management fee setting information generation module 1340 in FIG. 13), a block management fee transmission module (for example, block management fee transmission module 525 in FIGS. 5 and 13), a block management fee transmission trigger (for example, block management fee transmission trigger 525-1 in FIG. 13), a block penalty transmission trigger (for example, block penalty transmission trigger 1395 in FIG. 13), a block management fee reception module (for example, block management fee reception module 1132 in FIG. 11), a block management fee deposit device (for example, block management fee deposit device 1410 in FIG. 14), a deposit release module (for example, deposit release module 1440 in FIG. 14), and the like.

According to an embodiment, the block indicator may configure a block archive output module (for example, block archive output module 1450 in FIG. 14), a block detail information output module (for example, block detail information output module 1460 in FIG. 14), a block accommodation sharing application module (for example, block accommodation sharing application module 515 in FIGS. 5 and 11), a block accommodation sharing approval module (for example, block accommodation sharing approval module 510 in FIG. 5), and the like.

According to an embodiment, the blank accommodation management device (for example, blank accommodation management device 1520 in FIG. 15) may configure a blank accommodation management terminal (for example, blank accommodation management terminal 1240 in FIG. 12) (hereinafter, referred to as a blank terminal), a blank accommodation management information database (for example, blank accommodation management information database 1250 in FIG. 12), a sales amount saving device (for example, sales amount saving device 1620 in FIG. 16), and the like.

According to an embodiment, the blank accommodation management terminal (for example, blank accommodation management terminal 1240 in FIG. 12) may include (for example, operate including) a blank accommodation management console (for example, blank accommodation management console 1530 in FIG. 15), a blank accommodation rent (sale) account access module (for example, blank accommodation rent account access module 1210 in FIG. 12), a blank accommodation provision account access module (for example, blank accommodation provision account access module 1220 in FIG. 12), a blank accommodation purchase account access module (for example, blank accommodation purchase account access module 1230 in FIG. 12), a blank accommodation contents information indicator (for example, blank accommodation contents information indicator 1540 in FIG. 15), a blank accommodation management information indicator (for example, blank accommodation management information indicator 1550 in FIG. 15), a blank accommodation check-in information generation module (for example, blank accommodation check-in information generation module 1260 in FIG. 12), a blank accommodation check-out information generation module (for example, blank accommodation check-out information generation module 1270 in FIG. 12), a blank accommodation defect occurrence information generation module (for example, blank accommodation defect occurrence information generation module 1580 in FIG. 15), a blank accommodation defect occurrence information deletion module, a blank accommodation defect information management messenger (for example, blank accommodation defect information management messenger 1590 in FIG. 15), a blank accommodation sales price setting module (for example, blank accommodation sales price setting module 1610 in FIG. 16), a blank accommodation purchase module, and a blank accommodation sales amount deposit information generation module.

According to an embodiment, the blank accommodation defect occurrence information deletion module may provide functions only when blank accommodation defect occurrence information (for example, blank accommodation defect occurrence information 1585 in FIG. 15) is generated, and may configure a function of deleting the blank accommodation defect occurrence information (for example, blank accommodation defect occurrence information 1585 in FIG. 15) generated through the blank accommodation defect occurrence information generation module (for example, blank accommodation defect occurrence information generation module 1580 in FIG. 15), generating blank accommodation defect occurrence information deletion information with which the deletion of the blank accommodation defect occurrence information can be identified, and transmitting the generated blank accommodation defect occurrence information deletion information to the blank accommodation management information indicator (for example, blank accommodation management information indicator 1550 in FIG. 15).

According to an embodiment, the shared accommodation management device may include (for example, operate including) a shared accommodation management terminal and a shared accommodation management information database.

According to an embodiment, the shared accommodation management terminal may include (for example, operate including) a shared accommodation management console, a shared accommodation provision account access module, a shared accommodation rental account access module, a shared accommodation contents information indicator, a shared accommodation management information indicator, a shared accommodation check-in information generation module, a shared accommodation check-out information generation module, a shared accommodation defect occurrence information generation module, a shared accommodation defect occurrence information deletion module, and a shared accommodation defect information management messenger.

According to an embodiment, the shared accommodation provision account access module may provide a function for access of a user account (for example, user account 1402 in FIG. 14) providing a room (or a house) to share a room (or a house) for implementing the present invention, and the shared accommodation rental account access module may further include (for example, operate by further including) a function for access of a user account (for example, user account 1402 in FIG. 14) renting a room (or a house) to share a room (or house) for implementing the present invention.

According to an embodiment, the shared accommodation defect occurrence information deletion module may provide functions only when shared accommodation defect occurrence information is generated, and may operate including a function of deleting the shared accommodation defect occurrence information generated through the shared accommodation defect occurrence information generation module, generating shared accommodation defect occurrence information deletion information with which the deletion of the shared accommodation defect occurrence information can be identified, and transmitting the generated shared accommodation defect occurrence information deletion information to the shared accommodation management information indicator.

According to an embodiment of the present invention, as one of other accommodations sharing methods, more specifically, there is provided "a method for generating a block (for example, block 911 in FIG. 10) for shared accommodations" that generates a possession right encryption code (for example, possession right encryption code 1120 in FIG. 11) and/or block data (for example, block data 520 in FIG. 5) corresponding to the block (for example, block 911 in FIG. 10) including rooms (or houses) provided by at least two travelers in a pair to mutually share rooms (or houses) to be provided by travelers. The method includes a step of inputting either of an address or a zip code for identifying latitude and longitude on an area where a traveler will visit (travel), through a visit candidate area position information input module (for example, visit candidate area position information input module 920 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of selecting at least one address or zip code from the address list or the zip code list output on the screen of the user terminal, through a visit candidate area position information selection module (for example, visit candidate area position information selection module 930 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may perform a subsequent step through a visit candidate area geographical information identification module (for example, visit candidate area geographical information identification module 940 in FIG. 10), and may include a step of identifying latitude or longitude information on the address or the zip code selected by the visit candidate area position information selection module (for example, visit candidate area position information selection module 930 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of generating sharing application information (for example, sharing application information 511 in FIG. 5) for pairing rooms (or houses) mutually provided by travelers to share accommodations, through a block accommodation sharing application module (for example, block accommodation sharing application module 515 in FIGS. 5 and 11).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, "the method for generating a block (for example, block 911 in FIG. 10) for shared accommodations" that generates the possession right encryption code (for example, possession right encryption code 1120 in FIG. 11) and/or the block data (for example, block data 520 in FIG. 5) corresponding to the block (for example, block 911 in FIG. 10) may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and generating and recording an encryption code and/or block data (for example, block data 520 in FIG. 5) corresponding to the block (for example, block 911 in FIG. 10) that includes tag information (for example, tag information 530 in FIG. 5) with which contents information on images, videos, audio, and the like related to rooms (or houses) to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or includes the contents information on the images, videos, audio, and the like and the management information on the names, list, position information, check-in/check-out, sharing period information, presence or absence of vacancy, states of repair and maintenance, and the like of the accommodations.

According to an embodiment of the present invention, as one of accommodation sharing methods, more specifically, there is provided "a check-in and check-out method" for a room or a house provided by a traveler. The method may include a step of identifying one ID and a unique ID for a user account (for example, user account 1402 in FIG. 14) of the traveler who provides the room or the house and a unique ID for a user account (for example, user account 1402 in FIG. 14) of a traveler who rents the room or the house provided by the traveler, permitting access for the identified user account (for example, user account 1402 in FIG. 14) on a network, and generating information on permission, through one or more access modules of a shared accommodation provision account access module and a shared accommodation rental account access module of a shared accommodation management terminal.

According to an embodiment, as one of accommodation sharing methods, "the check-in and check-out method" for the room or the house provided by the traveler may include a step of outputting, on a screen of a user terminal, contents information on images, videos, audio, and the like of rooms (or houses) to be identified by a possession right encryption code (for example, possession right encryption code 1120 in FIG. 11) and/or block data (for example, block data 520 in FIG. 5) for implementing the present invention, through a shared accommodation contents information indicator of the shared accommodation management terminal.

According to an embodiment, as one of accommodation sharing methods, "the check-in and check-out method" for the room or the house provided by the traveler may include a step of outputting, on the screen of the user terminal, information such as a list, position information, check-in/check-out, sharing period information, presence or absence of vacancy, states of repair and maintenance, and information on the occurrence of defects for rooms (or houses) to be identified by the possession right encryption code (for example, possession right encryption code 1120 in FIG. 11) and/or the block data (for example, block data 520 in FIG. 5) for implementing the present invention, through the shared accommodation management information indicator.

According to an embodiment, as one of accommodation sharing methods, "the check-in and check-out method" for the room or the house provided by the traveler may include a step of generating shared accommodation check-in information with which check-in to the room (or house) provided by the traveler can be identified, through a shared accommodation check-in information generation module and transmitting the generated shared accommodation check-in information to the shared accommodation management information indicator.

The method may include a step of transmitting shared accommodation check-out information with which check-out of the room (or house) to be identified by the possession right encryption code (for example, possession right encryption code 1120 in FIG. 11) and/or the block data (for example, block data 520 in FIG. 5) for implementing the present invention can be identified, through a shared accommodation check-out information generation module and transmitting the generated shared accommodation check-out information to the shared accommodation management information indicator.

According to an embodiment of the present invention, as one of accommodation sharing methods, more specifically, there is provided "a method for sharing a commercial accommodation in operation" that enables each device or means for implementing the present invention to identify an existing commercial accommodation in operation to be an accommodation eligible to be shared with a room (or a house) provided by a traveler. The method may include a step of identifying a unique ID for a user account (for example, user account 1402 in FIG. 14) of an operator of a commercial accommodation facility such as a hotel and, permitting access for the user account (for example, user account 1402 in FIG. 14) on a network, generating information on permission, and recording the generated information in a commercial accommodation log database, through a commercial candidate accommodation account access module (for example, commercial candidate accommodation account access module 590 in FIG. 6).

According to an embodiment, as one of accommodation sharing methods, "the method for sharing the commercial accommodation in operation" may include a step of providing the commercial accommodation such as a hotel to a traveler, setting a date or a period during which the commercial accommodation is not reserved, to conclude an accommodation sharing transaction between the commercial accommodation facility and the traveler, and recording information on the set date or period in the commercial accommodation log database, through a commercial candidate accommodation sharing period setting module (for example, commercial candidate accommodation sharing period setting module 610 in FIG. 7).

According to an embodiment, as one of accommodation sharing methods, "the method for sharing a commercial accommodation in operation" may include a step of setting prescribed information that allows each device or means for implementing the present invention to identify or access information on a unique ID of a web page related to the existing commercial accommodation in operation such as a hotel, and recording the set information in the commercial accommodation log database, through a commercial candidate accommodation POST ID registration module (for example, commercial candidate accommodation POST ID registration module 620 in FIG. 7). The method may include (for example, operate including) a URL and a dynamic or fixed IP address in addition to the unique ID.

According to an embodiment, as one of accommodation sharing methods, "the method for sharing a commercial accommodation in operation" may include a step of setting prescribed information that allows each device or means for implementing the present invention to identify or access a position of the existing commercial accommodation in operation such as a hotel, and recording the set information in the commercial accommodation log database, through a commercial candidate accommodation position information registration module (for example, commercial candidate accommodation position information registration module 660 in FIG. 7). The method may include information on latitude and longitude, a height above sea level, a height from the ground, and a specific floor of a building as information on the position.

According to an embodiment, as one of accommodation sharing methods, "the method for sharing the commercial accommodation in operation" may include a step of recording, in the commercial accommodation log database, a set value of an application program interface (API) for setting an operation rule of a commercial candidate accommodation access gate (for example, commercial candidate accommodation access gate 541 in FIG. 6) that provides a function of enabling each device or means for implementing the present invention to access or link contents information on images, videos, audio, and the like of existing accommodations in operation and management information on a list, position information, check-in/check-out, sharing period information, presence or absence of vacancy, states of repair and maintenance of accommodations stored in a hotel accommodation integrated information database (for example, hotel accommodation integrated information database 550 in FIG. 6) being managed in the accommodation facility such as a hotel via prescribed access information or the like, through a commercial candidate accommodation API setting module (for example, commercial candidate accommodation API setting module 570 in FIG. 6).

According to an embodiment, as one of accommodation sharing methods, "the method for sharing the commercial accommodation in operation" may include a step of transmitting a request signal to access the contents information on the images, videos, audio, and the like of the existing accommodations in operation and the management information on the list, position information, check-in/check-out, sharing period information, presence or absence of vacancy, states of repair and maintenance of the accommodations stored in the hotel accommodation integrated information database (for example, hotel accommodation integrated information database 550 in FIG. 6) being managed in the accommodation facility such as a hotel to the hotel accommodation integrated information database (for example, hotel accommodation integrated information database 550 in FIG. 5) via the commercial candidate accommodation access gate (for example, commercial candidate accommodation access gate 541 in FIG. 5) according to the operation rule of the commercial candidate accommodation access gate (for example, commercial candidate accommodation access gate 541 in FIG. 5).

According to an embodiment, as one of accommodation sharing methods, "the method for sharing the commercial accommodation in operation" may include a step of receiving, at the hotel accommodation integrated information database (for example, hotel accommodation integrated information database 550 in FIG. 5), a request signal for accessing the contents information on the images, videos, audio, and the like of the existing accommodations in operation and the management information such as the list, position information, check-in/check-out, sharing period information, presence or absence of vacancy, information on states of repair and maintenance of the accommodations from the commercial candidate accommodation access gate (for example, commercial candidate accommodation access gate 541 in FIG. 5), and permitting access from the commercial candidate accommodation access gate (for example, commercial candidate accommodation access gate 541 in FIG. 5).

According to an embodiment of the present invention, as one of accommodation sharing methods, more specifically, there is provided "a method for managing a defect of a shared accommodation" for the room or the house provided by the traveler may include a step of identifying a unique ID for a user account (for example, user account 1402 in FIG. 14) of the traveler, permitting access of the identified user account (for example, user account 1402 in FIG. 14) on a network, and generating information on permission, through one or more access modules of a shared accommodation provision account access module and a shared accommodation rental account access module of a shared accommodation management terminal.

According to an embodiment, as one of accommodation sharing methods, "the method for managing a defect of a shared accommodation" for the room or the house provided by the traveler may include a step of outputting, on a screen of a user terminal, contents information on images, videos, audio, and the like of rooms (or houses) to be identified by a possession right encryption code (for example, possession right encryption code 1120 in FIG. 11) and/or block data (for example, block data 520 in FIG. 5) for implementing the present invention, through a shared accommodation contents information indicator of the shared accommodation management terminal.

According to an embodiment, as one of accommodation sharing methods, "the method for managing a defect of a shared accommodation" for the room or the house provided by the traveler may include a step of outputting, on the screen of the user terminal, information such as a list, position information, check-in/check-out, sharing period information, presence or absence of vacancy, states of repair and maintenance, and information on the occurrence of defects for the rooms (or houses) to be identified by a possession right encryption code (for example, possession right encryption code 1120 in FIG. 11) and/or block data (for example, block data 520 in FIG. 5) for implementing the present invention, through the shared accommodation management information indicator.

According to an embodiment, as one of accommodation sharing methods, "the method for managing a defect of a shared accommodation" for the room or the house provided by the traveler may include a step of generating shared accommodation defect occurrence information with which the occurrence of defects for the rooms (or houses) to be identified by the possession right encryption code (for example, possession right encryption code 1120 in FIG. 11) and/or the block data (for example, block data 520 in FIG. 5) for implementing the present invention can be identified, and transmitting the generated shared accommodation defect occurrence information to the shared accommodation management information indicator, through a shared accommodation defect occurrence information generation module of the shared accommodation management terminal.

According to an embodiment, as one of accommodation sharing methods, "the method for managing a defect of a shared accommodation" for the room or the house provided by the traveler may include a step of generating shared accommodation defect occurrence information deletion information with which deletion of the defect occurrence information for the rooms (or houses) to be identified by sharing approval information (for example, sharing approval information 512 in FIG. 5) and the block data (for example, block data 520 in FIG. 5) can be identified, and transmitting the generated shared accommodation defect occurrence information deletion information to the shared accommodation management information indicator, through a shared accommodation defect occurrence information deletion module of the shared accommodation management terminal.

According to an embodiment, as one of accommodation sharing methods, "the method for managing a defect of a shared accommodation" for the room or the house provided by the traveler may include a step of generating shared accommodation defect occurrence information deletion information with which deletion of defect occurrence information for the rooms (or houses) to be identified by the possession right encryption code (for example, possession right encryption code 1120 in FIG. 11) and the block data (for example, block data 520 in FIG. 5) can be identified, and transmitting the generated shared accommodation defect occurrence information deletion information to the shared accommodation management information indicator, through a shared accommodation defect occurrence information deletion module of the shared accommodation management terminal.

According to an embodiment, as one of accommodation sharing methods, "the method for managing a defect of a shared accommodation" for the room or the house provided by the traveler may include a step of generating shared accommodation defect occurrence information with which the occurrence of defects for the rooms (or houses) to be identified by the possession right encryption code (for example, possession right encryption code 1120 in FIG. 11) and the block data (for example, block data 520 in FIG. 5) for implementing the present invention can be identified, and transmitting the generated shared accommodation defect occurrence information to the shared accommodation management information indicator, through a shared accommodation defect occurrence information generation module of the shared accommodation management terminal.

According to an embodiment, as one of accommodation sharing methods, "the method for managing a defect of a shared accommodation" for the room or the house provided by the traveler may include a step of generating shared accommodation defect occurrence information deletion information with which deletion of defect occurrence information for the rooms (or houses) to be identified by the possession right encryption code (for example, possession right encryption code 1120 in FIG. 11) and the block data (for example, block data 520 in FIG. 5) can be identified, and transmitting the generated shared accommodation defect occurrence information deletion information to the shared accommodation management information indicator, through a shared accommodation defect occurrence information deletion module of the shared accommodation management terminal.

According to an embodiment of the present invention, as one of other accommodation sharing methods, more specifically, there is provided "a method for generating a block (for example, block 911 in FIG. 10) of shared accommodations" that generates block data (for example, block data 520 in FIG. 5) corresponding to a block (for example, block 911 in FIG. 10) including an accommodation provided by at least one hotel and a room or a house provided by at least one traveler in a pair to mutually share existing commercial accommodations in operation and rooms or houses to be provided by travelers. The method may include a step of inputting either of an address or a zip code for identifying latitude and longitude for an area the traveler will visit (travel), through a visit candidate area position information input module (for example, visit candidate area position information input module 920 in FIG. 10).

According to an embodiment, as one of other accommodation sharing methods, "the method for generating a block (for example, block 911 in FIG. 10) of shared accommodations" may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional code, or a two-dimensional code).

According to an embodiment, as one of other accommodation sharing methods, "the method for generating a block (for example, block 911 in FIG. 10) of shared accommodations" may include a step of selecting at least one address or zip code from the address list or the zip code list output on the screen of the user terminal, through a visit candidate area position information selection module (for example, visit candidate area position information selection module 930 in FIG. 10).

According to an embodiment, as one of other accommodation sharing methods, "the method for generating a block (for example, block 911 in FIG. 10) of shared accommodations" may perform a subsequent step through a visit candidate area geographical information identification module (for example, visit candidate area geographical information identification module 940 in FIG. 10), and may include a step of identifying latitude or longitude information for the address or the zip code selected by the visit candidate area position information selection module (for example, visit candidate area position information selection module 930 in FIG. 10).

According to an embodiment, as one of other accommodation sharing methods, "the method for generating a block (for example, block 911 in FIG. 10) of shared accommodations" may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of other accommodation sharing methods, "the method for generating a block (for example, block 911 in FIG. 10) of shared accommodations" may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of other accommodation sharing methods, "the method for generating a block (for example, block 911 in FIG. 10) of shared accommodations" may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of other accommodation sharing methods, "the method for generating a block (for example, block 911 in FIG. 10) of shared accommodations" may include a step of generating sharing application information (for example, sharing application information 511 in FIG. 5) for pairing an accommodation provided by the hotel and a room (or a house) provided by the traveler to share accommodations, through a block accommodation sharing application module (for example, block accommodation sharing application module 515 in FIGS. 5 and 11).

According to an embodiment, as one of other accommodation sharing methods, "the method for generating a block (for example, block 911 in FIG. 10) of shared accommodations" may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of other accommodation sharing methods, "the method for generating a block (for example, block 911 in FIG. 10) of shared accommodations" may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and generating an encryption code and/or block data (for example, block data 520 in FIG. 5) corresponding to the block (for example, block 911 in FIG. 10) that includes tag information (for example, tag information 530 in FIG. 5) with which contents information on images, videos, audio, and the like related to the accommodation provided by at least one hotel and the room (or house) provided by at least one traveler to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or includes the contents information on the images, videos, audio, and the like and the management information on the names, list, position information, check-in/check-out, sharing period information, presence or absence of vacancy, states of repair and maintenance, and the like of the accommodations.

According to an embodiment of the present invention, as a method for retrieving and accessing block accommodations, more specifically, there is provided "a method for retrieving and accessing a block accommodation" that retrieves a list of information related to block data (for example, block data 520 in FIG. 5) corresponding to a block (for example, block 911 in FIG. 10) for identifying rooms (or houses) provided by at least two travelers as a single unit and accesses the list as a retrieval result or a web page of the related information. The method may perform a subsequent step through a block accommodation tag information input module (for example, block accommodation tag information input module in FIG. 18) of a block accommodation retrieval and access interface (for example, block accommodation retrieval and access interface 1811 in FIG. 18), and may include a step of inputting characters, numbers, special characters, a barcode, and the like and temporarily storing the characters, the numbers, the special characters, the barcode, and the like by input unit (that is, tagged input unit).

According to an embodiment, "the method for retrieving and accessing a block accommodation" that retrieves a list of information related to block data (for example, block data 520 in FIG. 5) corresponding to a block (for example, block 911 in FIG. 10) for identifying rooms (or houses) provided by at least two travelers and accesses the list as a retrieval result or a web page of the related information may perform a subsequent step through a block accommodation radius information input module (for example, block accommodation radius information input module in FIG. 18) of the block accommodation retrieval and access interface (for example, block accommodation retrieval and access interface 1811 in FIG. 18), and may include a step of inputting and temporarily storing information on latitude and longitude or a radius range from the latitude and longitude.

According to an embodiment, "the method for retrieving and accessing a block accommodation" that retrieves a list of information related to block data (for example, block data 520 in FIG. 5) corresponding to a block (for example, block 911 in FIG. 10) for identifying rooms (or houses) provided by at least two travelers and accesses the list as a retrieval result or a web page of the related information may perform a subsequent step through a block accommodation identification information transmission module (for example, block accommodation identification information transmission module 1811-3 in FIG. 18) of the block accommodation retrieval and access interface (for example, block accommodation retrieval and access interface 1811 in FIG. 18), and may include a step of identifying block data (for example, block data 520 in FIG. 5) having a value partially or wholly matching (or not matching) prescribed information (or the latitude and longitude or information on the radius range from the latitude and longitude) or partially or wholly including (or not including) the prescribed information (or the latitude and longitude or information on the radius range from the latitude and longitude) among information input from the block accommodation tag information input module (for example, block accommodation tag information input module in FIG. 18) or the block accommodation radius information input module (for example, block accommodation radius information input module in FIG. 18), generating block accommodation retrieval result transmission request information (for example, block accommodation retrieval result transmission request information 1820 in FIG. 18) to output a list of the identified block data (for example, block data 520 in FIG. 5) or relevant information to a screen of a user terminal, through a block accommodation retrieval result archive indicator (for example, block accommodation retrieval result archive indicator 1813 in FIG. 18), and transmitting the generated block accommodation retrieval result transmission request information (for example, block accommodation retrieval result transmission request information 1820 in FIG. 18) to a "block accommodation retrieval request information reception module (for example, block accommodation retrieval request information reception module 1831 in FIG. 18)" operating in linking with a "block archive database".

According to an embodiment, "the method for retrieving and accessing a block accommodation" that retrieves a list of information related to block data (for example, block data 520 in FIG. 5) corresponding to a block (for example, block 911 in FIG. 10) for identifying rooms (or houses) provided by at least two travelers and accesses the list as a retrieval result or a web page of the related information may perform a subsequent step through the block accommodation retrieval result archive indicator (for example, block accommodation retrieval result archive indicator 1813 in FIG. 18) of the block accommodation retrieval and access interface (for example, block accommodation retrieval and access interface 1811 in FIG. 18), and may include a step of receiving the block accommodation retrieval result transmission request information (for example, block accommodation retrieval result transmission request information 1820 in FIG. 18) transmitted from the block accommodation identification information transmission module (for example, block accommodation identification information transmission module 1811-3 in FIG. 18), and outputting a list of the block data (for example, block data 520 in FIG. 5) or the related information corresponding to the received block accommodation retrieval result transmission request information (for example, block accommodation retrieval result transmission request information 1820 in FIG. 18).

According to an embodiment, "the method for retrieving and accessing a block accommodation" that retrieves a list of information related to block data (for example, block data 520 in FIG. 5) corresponding to a block (for example, block 911 in FIG. 10) for identifying rooms (or houses) provided by at least two travelers and accesses the list as a retrieval result or a web page of the related information may include a step of accessing, if information on selection of the list of the block data (for example, block data 520 in FIG. 5) or the relevant information corresponding to the block accommodation retrieval result transmission request information (for example, block accommodation retrieval result transmission request information 1820 in FIG. 18) through an input device such as a mouse or a keyboard is generated, a web page of the list or the related information corresponding to the generated selection information.

According to an embodiment of the present invention, as one of accommodation sharing methods, more specifically, there is provided a method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers. The method may include a step of inputting either of an address or a zip code for identifying latitude and longitude on an area where a traveler will visit (travel), through a visit candidate area position information input module (for example, visit candidate area position information input module 920 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of selecting at least one address or zip code from the address list or the zip code list output on the screen of the user terminal, through a visit candidate area position information selection module (for example, visit candidate area position information selection module 930 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may perform a subsequent step through a visit candidate area geographical information identification module (for example, visit candidate area geographical information identification module 940 in FIG. 10). The method may include a step of identifying latitude or longitude information on the address or the zip code selected by the visit candidate area position information selection module (for example, visit candidate area position information selection module 930 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of generating sharing application information (for example, sharing application information 511 in FIG. 5) for pairing rooms (or houses) provided by travelers to share accommodations, through a block accommodation sharing application module (for example, block accommodation sharing application module 515 in FIGS. 5 and 11).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of accommodation sharing methods, the method for generating block data (for example, block data 520 in FIG. 5) corresponding to a block (for example, block 911 in FIG. 10) including rooms (or houses) to be provided by at least two travelers in a pair to mutually share rooms (or houses) to be provided by travelers may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and recording, in the form of block data (for example, block data 520 in FIG. 5), tag information (for example, tag information 530 in FIG. 5) with which contents information on images, videos, audio, and the like related to rooms (or houses) provided by at least two travelers to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or the contents information on the images, videos, audio, and the like and the management information on the names, list, position information, check-in/check-out, sharing period information, presence or absence of vacancy, states of repair and maintenance, and the like of the accommodations.

According to an embodiment of the present invention, as one of accommodation sharing methods, more specifically, there is provided "a method for checking in to and checking out of a blank accommodation" for a room or a house to be provided to a hotel by a traveler and sold to a netizen. The method may include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permitting access for the identified user account (for example, user account 1402 in FIG. 14) on a network, and generating information on permission, through one or more access modules of a blank accommodation rent (sale) account access module (for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for checking in to and checking out of a blank accommodation" for the room or the house to be provided to the hotel by the traveler and sold to the netizen may include a step of outputting, on a screen of a user terminal, contents information on images, videos, audio, and the like for the room (or house) provided to the hotel by the traveler among accommodations or rooms (or houses) to be identified by sharing approval information (for example, sharing approval information 512 in FIG. 5) and block data (for example, block data 520 in FIG. 5), through a blank accommodation contents information indicator (for example, blank accommodation contents information indicator 1540 in FIG. 15) of the blank accommodation management terminal (for example, blank accommodation management terminal 1240 in FIG. 12).

According to an embodiment, as one of accommodation sharing methods, "the method for checking in to and checking out of a blank accommodation" for the room or the house to be provided to the hotel by the traveler and sold to the netizen may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the sharing approval information (for example, sharing approval information 512 in FIG. 5) and the block data (for example, block data 520 in FIG. 5), through a blank accommodation management information indicator (for example, blank accommodation management information indicator 1550 in FIG. 15).

According to an embodiment, as one of accommodation sharing methods, "the method for checking in to and checking out of a blank accommodation" for the room or the house to be provided to the hotel by the traveler and sold to the netizen may include a step of generating, from the blank accommodation sales amount deposit information generation module (for example, blank accommodation sales amount deposit information generation module 680 in FIG. 8), blank accommodation check-out information (for example, blank accommodation check-out information 1570 in FIG. 15) with which check-out of the room (or house) provided to the hotel by the traveler among the accommodations or the rooms (or houses) to be identified by the sharing approval information (for example, sharing approval information 512 in FIG. 5) and the block data (for example, block data 520 in FIG. 5) can be identified, through a blank accommodation check-out information generation module (for example, blank accommodation check-out information generation module 1270 in FIG. 12), and transmitting the generated blank accommodation check-out information (for example, blank accommodation check-out information 1570 in FIG. 15) to the blank accommodation management information indicator (for example, blank accommodation management information indicator 1550 in FIG. 15).

According to an embodiment, as one of accommodation sharing methods, "the method for checking in to and checking out of a blank accommodation" for the room or the house to be provided to the hotel by the traveler and sold to the netizen may include a step of generating, from the blank accommodation sales amount deposit information generation module (for example, blank accommodation sales amount deposit information generation module 680 in FIG. 8), blank accommodation check-out information (for example, blank accommodation check-out information 1570 in FIG. 15) with which check-out of the room (or house) provided to the hotel by the traveler among the accommodations or the rooms (or houses) to be identified by the sharing approval information (for example, sharing approval information 512 in FIG. 5) and the block data (for example, block data 520 in FIG. 5) can be identified, through a blank accommodation check-out information generation module (for example, blank accommodation check-out information generation module 1270 in FIG. 12), and transmitting the generated blank accommodation check-out information (for example, blank accommodation check-out information 1570 in FIG. 15) to the blank accommodation management information indicator (for example, blank accommodation management information indicator 1550 in FIG. 15).

According to an embodiment of the present invention, as one of accommodation sharing methods, more specifically, there is provided "a method for managing detect of a blank accommodation" for a room or a house to be provided to a hotel by a traveler and sold to a netizen. The method may include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permitting access for the identified user account (for example, user account 1402 in FIG. 14) on a network, and generating information on permission, through one or more access modules of a blank accommodation rent (sale) account access module (for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of outputting, on a screen of a user terminal, contents information on images, videos, audio, and the like for the room (or house) provided to the hotel by the traveler among accommodations or rooms (or houses) to be identified by sharing approval information (for example, sharing approval information 512 in FIG. 5) and block data (for example, block data 520 in FIG. 5), through a blank accommodation contents information indicator (for example, blank accommodation contents information indicator 1540 in FIG. 15) of the blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the sharing approval information (for example, sharing approval information 512 in FIG. 5) and the block data (for example, block data 520 in FIG. 5), through a blank accommodation management information indicator (for example, blank accommodation management information indicator 1550 in FIG. 15).

According to an embodiment, as one of accommodation sharing methods, "the method for managing detect of a blank accommodation" for the room or the house to be provided to the hotel by the traveler and sold to the netizen may include a step of generating blank accommodation defect occurrence information (for example, blank accommodation defect occurrence information 1585 in FIG. 15) with which the occurrence of a defect for the room (or house) provided to the hotel by the traveler among the accommodations or the rooms (or houses) to be identified by the sharing approval information (for example, sharing approval information 512 in FIG. 5) and the block data (for example, block data 520 in FIG. 5) can be identified, and transmitting the generated blank accommodation defect occurrence information (for example, blank accommodation defect occurrence information 1585 in FIG. 15) to the blank accommodation management information indicator (for example, blank accommodation management information indicator 1550 in FIG. 15), through a blank accommodation defect occurrence information generation module (for example, blank accommodation defect occurrence information generation module 1580 in FIG. 15) of the blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of generating blank accommodation defect occurrence information deletion information with which deletion of defect occurrence information for the room (or house) provided to the hotel by the traveler among the accommodations or the rooms (or houses) to be identified by the sharing approval information (for example, sharing approval information 512 in FIG. 5) and the block data (for example, block data 520 in FIG. 5) can be identified, and transmitting the generated blank accommodation defect occurrence information deletion information to the blank accommodation management information indicator (for example, blank accommodation management information indicator 1550 in FIG. 15), through a blank accommodation defect occurrence information deletion module of the blank accommodation management terminal (for example, blank accommodation management terminal 1240 in FIG. 12).

According to an embodiment of the present invention, as one of accommodation sharing methods, more specifically, there is provided "a method for selling and purchasing a blank accommodation" for a room or a house to be provided to a hotel by a traveler and sold to a netizen. The method may include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permits access for the identified user account (for example, user account 1402 in FIG. 14) on a network, and generating information on permission, through one or more access modules of a blank accommodation rent (sale) account access module (for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the sharing approval information (for example, sharing approval information 512 in FIG. 5) and the block data (for example, block data 520 in FIG. 5), through a blank accommodation management information indicator (for example, blank accommodation management information indicator 1550 in FIG. 15) of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of setting a sales price of an authority to use the room (or house) provided to the hotel by the traveler among the accommodations or the rooms (or houses) to be identified by the sharing approval information (for example, sharing approval information 512 in FIG. 5) and the block data (for example, block data 520 in FIG. 5), through a blank accommodation sales price setting module (for example, blank accommodation sales price setting module 1610 in FIG. 16) of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of generating prescribed information for requesting purchase of an authority to use the room (or house) provided to the hotel by the traveler among the accommodations or the rooms (or houses) to be identified by the sharing approval information (for example, sharing approval information 512 in FIG. 5) and the block data (for example, block data 520 in FIG. 5), through a blank accommodation purchase module of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of receiving and storing real currency such as dollar, won, yen, or euro, and recording information for certification in a sales amount saving device (for example, sales amount saving device 1620 in FIG. 16).

According to an embodiment, as one of accommodation sharing methods, "the method for selling and purchasing a blank accommodation" for the room or the house to be provided to the hotel by the traveler and sold to the netizen may include a step of receiving an amount of money corresponding to blank accommodation sales amount deposit information (for example, blank accommodation sales amount deposit information 681 in FIG. 8) generated by a blank accommodation sales amount deposit information generation module (for example, blank accommodation sales amount deposit information generation module 680 in FIG. 8) in a deposit account corresponding to prescribed deposit account information input from a prescribed used for implementing the present invention.

According to an embodiment, as one of accommodation sharing methods, "the method for selling and purchasing a blank accommodation" for the room or the house to be provided to the hotel by the traveler and sold to the netizen may include a step of generating, when an amount of money according to the sales price set by the blank accommodation sales price setting module (for example, blank accommodation sales price setting module 1610 in FIG. 16) is deposited into a sales amount saving device (for example, sales amount saving device 1620 in FIG. 16) configured to deposit the amount of money according to the sales price, "blank accommodation sales amount deposit information (for example, blank accommodation sales amount deposit information 681 in FIG. 8)" with which information corresponding to the deposited amount of money can be identified, through the blank accommodation sales amount deposit information generation module (for example, blank accommodation sales amount deposit information generation module 680 in FIG. 8) of the blank accommodation management terminal (for example, blank accommodation management terminal 1240 in FIG. 12).

According to an embodiment of the present invention, as a method for retrieving and accessing a block accommodation, more specifically, there is provided "a method for retrieving and accessing a block accommodation" that retrieves a list of information related to block data (for example, block data 520 in FIG. 5) corresponding to a block (for example, block 911 in FIG. 10) for identifying an accommodation provided by at least one hotel and a room (or a house) provided by at least one traveler as a single unit and accesses the list as a retrieval result or a web page of the related information. The method may perform a subsequent step through a block accommodation tag information input module (for example, block accommodation tag information input module in FIG. 18) of a block accommodation retrieval and access interface (for example, block accommodation retrieval and access interface 1811 in FIG. 18), and may include a step of inputting characters, numbers, special characters, a barcode, and the like and temporarily storing the characters, the numbers, the special characters, the barcode, and the like by input unit (that is, tagged input unit).

According to an embodiment, as a method for retrieval and accessing a block accommodation, "the method for retrieving and accessing a block accommodation" that retrieves the list of information related to the block data (for example, block data 520 in FIG. 5) corresponding to the block (for example, block 911 in FIG. 10) for identifying the accommodation provided by at least one hotel and the room (or house) provided by at least one traveler as a single unit and accesses the list as a retrieval result or the web page of the related information may perform a subsequent step through a block accommodation radius information input module (for example, block accommodation radius information input module in FIG. 18) of the block accommodation retrieval and access interface (for example, block accommodation retrieval and access interface 1811 in FIG. 18), and may include a step of inputting and temporarily storing information on latitude and longitude or a radius range from the latitude and longitude.

According to an embodiment, as a method for retrieval and accessing a block accommodation, "the method for retrieving and accessing a block accommodation" that retrieves the list of information related to the block data (for example, block data 520 in FIG. 5) corresponding to the block (for example, block 911 in FIG. 10) for identifying the accommodation provided by at least one hotel and the room (or house) provided by at least one traveler as a single unit and accesses the list as a retrieval result or the web page of the related information may perform a subsequent step through a block accommodation identification information transmission module (for example, block accommodation identification information transmission module 1811-3 in FIG. 18) of the block accommodation retrieval and access interface (for example, block accommodation retrieval and access interface 1811 in FIG. 18), and may include a step of identifying block data (for example, block data 520 in FIG. 5) having a value partially or wholly matching (or not matching) prescribed information (or the latitude and longitude or information on the radius range from the latitude and longitude) to be identified by a possession right encryption code (for example, possession right encryption code 1120 in FIG. 11) and block data (for example, block data 520 in FIG. 5) for implementing the present invention or partially or wholly including (or not including) the prescribed information (or the latitude and longitude or information on the radius range from the latitude and longitude) among information input from the block accommodation tag information input module (for example, block accommodation tag information input module in FIG. 18) or the block accommodation radius information input module (for example, block accommodation radius information input module in FIG. 18), generating block accommodation retrieval result transmission request information (for example, block accommodation retrieval result transmission request information 1820 in FIG. 18) for outputting, on a screen of a user terminal, a list of the identified block data (for example, block data 520 in FIG. 5) or related information through a block accommodation retrieval result archive indicator (for example, block accommodation retrieval result archive indicator 1813 in FIG. 18), and transmitting the generated block accommodation retrieval result transmission request information (for example, block accommodation retrieval result transmission request information 1820 in FIG. 18) to a "block accommodation retrieval request information reception module (for example, block accommodation retrieval request information reception module 1831 in FIG. 18)" configured to operate in linking with the "block archive database".

According to an embodiment, as a method for retrieval and accessing a block accommodation, "the method for retrieving and accessing a block accommodation" that retrieves the list of information related to the block data (for example, block data 520 in FIG. 5) corresponding to the block (for example, block 911 in FIG. 10) for identifying the accommodation provided by at least one hotel and the room (or house) provided by at least one traveler as a single unit and accesses the list as a retrieval result or the web page of the related information may perform a subsequent step through a block accommodation retrieval result archive indicator (for example, block accommodation retrieval result archive indicator 1813 in FIG. 18) of the block accommodation retrieval and access interface (for example, block accommodation retrieval and access interface 1811 in FIG. 18), and may include a step of receiving the block accommodation retrieval result transmission request information (for example, block accommodation retrieval result transmission request information 1820 in FIG. 18) transmitted from the block accommodation identification information transmission module (for example, block accommodation identification information transmission module 1811-3 in FIG. 18), and outputting a list of the block data (for example, block data 520 in FIG. 5) or the related information corresponding to the received block accommodation retrieval result transmission request information (for example, block accommodation retrieval result transmission request information 1820 in FIG. 18).

According to an embodiment, as a method for retrieval and accessing a block accommodation, "the method for retrieving and accessing a block accommodation" that retrieves the list of information related to the block data (for example, block data 520 in FIG. 5) corresponding to the block (for example, block 911 in FIG. 10) for identifying the accommodation provided by at least one hotel and the room (or house) provided by at least one traveler as a single unit and accesses the list as a retrieval result or the web page of the related information may include a step of accessing, if information on selection of the list of the block data (for example, block data 520 in FIG. 5) or the relevant information corresponding to the block accommodation retrieval result transmission request information (for example, block accommodation retrieval result transmission request information 1820 in FIG. 18) through an input device such as a mouse or a keyboard is generated, a web page of the list or the related information corresponding to the generated selection information.

According to an embodiment of the present invention, as one of accommodation sharing methods, more specifically, there is provided "a block advertisement method" that sends an advertisement to a screen of a user terminal at a position (or in an area within a prescribed radius around the position) or a room (or a house) provided by a traveler to be identified by block data (for example, block data 520 in FIG. 5) corresponding to a block (for example, block 911 in FIG. 10). The method may include a step of registering contents information on an image, a video, an audio, or the like through an advertisement information registration module of a block advertisement management device (for example, block advertisement management device 1710 in FIG. 17).

According to an embodiment, as one of accommodation sharing methods, "the block advertisement method" that sends the advertisement to the screen of the user terminal at the position (or in the area within the prescribed radius around the position) or the room (or house) provided by the traveler to be identified by the block data (for example, block data 520 in FIG. 5) corresponding to the block (for example, block 911 in FIG. 10) may perform a subsequent step through an advertisement block selection module of the block advertisement management device (for example, block advertisement management device 1710 in FIG. 17), and may include a step of selecting at least one block (for example, block 911 in FIG. 10) corresponding to block data (for example, block data 520 in FIG. 5) generated by an electronic device 101 (for example, accommodation sharing device) (for example, electronic device including web server), and generating "advertisement block selection information (for example, advertisement-purpose block selection information 1760 in FIG. 17)" to be identified by the block data (for example, block data 520 in FIG. 5) corresponding to the selected block (for example, block 911 in FIG. 10).

According to an embodiment, as one of accommodation sharing methods, "the block advertisement method" that sends the advertisement to the screen of the user terminal at the position (or in the area within the prescribed radius around the position) or the room (or house) provided by the traveler to be identified by the block data (for example, block data 520 in FIG. 5) corresponding to the block (for example, block 911 in FIG. 10) may perform a subsequent step through a block advertisement sending module (for example, block advertisement sending module 1713 in FIG. 17) of the block advertisement management device (for example, block advertisement management device 1710 in FIG. 17), and may include a step of sending an advertisement to a page of a web site (or an interface screen of a smartphone application) that is identified by block data (for example, block data 520 in FIG. 5) corresponding to a block (for example, block 911 in FIG. 10) to be identified by the advertisement block selection information (for example, advertisement-purpose block selection information 1760 in FIG. 17) generated by the advertisement block selection module, includes tag information on position information corresponding to a visit candidate area, or is displayed through a web browser installed on a prescribed PC or a user terminal at a position of the area (within a prescribed radius from the position).

According to an embodiment of the present invention, as one of accommodation sharing methods, more specifically, there is provided a method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers. The method may include a step of inputting either of an address or a zip code for identifying latitude and longitude on an area where a traveler will visit (travel), through a visit candidate area position information input module (for example, visit candidate area position information input module 920 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of selecting at least one address or zip code from the address list or the zip code list output on the screen of the user terminal, through a visit candidate area position information selection module (for example, visit candidate area position information selection module 930 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may perform a subsequent step through a visit candidate area geographical information identification module (for example, visit candidate area geographical information identification module 940 in FIG. 10), and may include a step of identifying latitude or longitude information on the address or the zip code selected by the visit candidate area position information selection module (for example, visit candidate area position information selection module 930 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of generating sharing application information (for example, sharing application information 511 in FIG. 5) for pairing the room (or house) provided by the hotel and the room (or house) provided by the traveler to share accommodations, through a block accommodation sharing application module (for example, block accommodation sharing application module 515 in FIGS. 5 and 11).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of accommodation sharing methods, the method for generating an encryption code and/or block data (for example, block data 520 in FIG. 5) corresponding to a block (for example, block 911 in FIG. 10) including an accommodation provided at least one hotel and a room (or a house) provided by at least one traveler in a pair to mutually share existing commercial accommodations in operation and accommodations or rooms (or houses) to be provided by travelers may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and recording, in the form of block data (for example, block data 520 in FIG. 5), tag information (for example, tag information 530 in FIG. 5) with which contents information on images, videos, audio, and the like related to the accommodation provided by at least one hotel and the room (or house) provided by at least one traveler to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or the contents information on the images, videos, audio, and the like and the management information on the names, list, position information, check-in/check-out, sharing period information, presence or absence of vacancy, states of repair and maintenance, and the like of the accommodations.

According to an embodiment of the present invention, as one of accommodation sharing methods, more specifically, there is provided a method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers. The method may include a step of inputting either of an address or a zip code for identifying latitude and longitude on an area where a traveler will visit (travel), through a visit candidate area position information input module (for example, visit candidate area position information input module 920 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of selecting at least one address or zip code from the address list or the zip code list output on the screen of the user terminal, through a visit candidate area position information selection module (for example, visit candidate area position information selection module 930 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may perform a subsequent step through a visit candidate area geographical information identification module (for example, visit candidate area geographical information identification module 940 in FIG. 10). The method may include a step of identifying latitude or longitude information on the address or the zip code selected by the visit candidate area position information selection module (for example, visit candidate area position information selection module 930 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of generating sharing application information (for example, sharing application information 511 in FIG. 5) for pairing rooms (or houses) provided by travelers to share accommodations, through a block accommodation sharing application module (for example, block accommodation sharing application module 515 in FIGS. 5 and 11).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including rooms (or houses) provided by at least two travelers in a pair to mutually share rooms (or houses) to be provided by travelers may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), recording, in the form of block data (for example, block data 520 in FIG. 5), tag information (for example, tag information 530 in FIG. 5) with which contents information on images, videos, audio, and the like related to rooms (or houses) provided by at least two travelers to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or the contents information on the images, videos, audio, and the like and the management information on the names, list, position information, check-in/check-out, sharing period information, presence or absence of vacancy, states of repair and maintenance, and the like of the accommodations or generating a possession right encryption code (for example, possession right encryption code 1120 in FIG. 11) and a non-fungible token (NFT) (for example, NFT 1140 in FIG. 11) according to the possession right encryption code (for example, possession right encryption code 1120 in FIG. 11).

According to an embodiment of the present invention, as one of other accommodation sharing methods, more specifically, there is provided "a method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers. The method may include a step of inputting either of an address or a zip code for identifying latitude and longitude on an area where a traveler will visit (travel), through a visit candidate area position information input module (for example, visit candidate area position information input module 920 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of selecting at least one address or zip code from the address list or the zip code list output on the screen of the user terminal, through a visit candidate area position information selection module (for example, visit candidate area position information selection module 930 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may perform a subsequent step through a visit candidate area geographical information identification module (for example, visit candidate area geographical information identification module 940 in FIG. 10), and may include a step of identifying latitude or longitude information on the address or the zip code selected by the visit candidate area position information selection module (for example, visit candidate area position information selection module 930 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of generating sharing application information (for example, sharing application information 511 in FIG. 5) for pairing an accommodation provided by the hotel and a room (or a house) provided by the traveler to share accommodations, through a block accommodation sharing application module (for example, block accommodation sharing application module 515 in FIGS. 5 and 11).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of other accommodation sharing methods, "the method for generating a block (for example, block 911 in FIG. 10) of shared accommodations" that generates a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by a traveler in a pair to mutually share existing commercial accommodations in operation and rooms or houses to be provided by travelers may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), and generating a possession right encryption code (for example, possession right encryption code 1120 in FIG. 11) and/or a data block corresponding to a block (for example, block 911 in FIG. 10) that includes tag information (for example, tag information 530 in FIG. 5) with which contents information on images, videos, audio, and the like related to the accommodation provided by at least one hotel and the room (or house) provided by at least one traveler to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or includes the contents information on the images, videos, audio, and the like and the management information on the names, list, position information, check-in/check-out, sharing period information, presence or absence of vacancy, states of repair and maintenance, and the like of the accommodations.

According to an embodiment of the present invention, as one of accommodation sharing methods, more specifically, there is provided "a method for checking in to and checking out of a blank accommodation" for a room or a house to be provided to a hotel by a traveler and sold to a netizen. The method may include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permitting access for the identified user account (for example, user account 1402 in FIG. 14) on a network, and generating information on permission, through one or more access modules of a blank accommodation rent (sale) account access module(for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for checking in to and checking out of a blank accommodation" for the room or the house to be provided to the hotel by the traveler and sold to the netizen may include a step of outputting, on a screen of a user terminal, contents information on images, videos, audio, and the like for the room (or house) provided to the hotel by the traveler among accommodations or rooms (or houses) to be identified by a possession right encryption code (for example, possession right encryption code 1120 in FIG. 11) and block data (for example, block data 520 in FIG. 5) for implementing the present invention, through a blank accommodation contents information indicator (for example, blank accommodation contents information indicator 1540 in FIG. 15) of the blank accommodation management terminal (for example, blank accommodation management terminal 1240 in FIG. 12).

According to an embodiment, as one of accommodation sharing methods, "the method for checking in to and checking out of a blank accommodation" for the room or the house to be provided to the hotel by the traveler and sold to the netizen may include may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the possession right encryption code (for example, possession right encryption code 1120 in FIG. 11) and the block data (for example, block data 520 in FIG. 5) for implementing the present invention, through the blank accommodation management information indicator (for example, blank accommodation management information indicator 1550 in FIG. 15).

According to an embodiment, as one of accommodation sharing methods, "the method for checking in to and checking out of a blank accommodation" for the room or the house to be provided to the hotel by the traveler and sold to the netizen may include a step of generating, from a blank accommodation sales amount deposit information generation module (for example, blank accommodation sales amount deposit information generation module 680 in FIG. 8), blank accommodation check-in information (for example, blank accommodation check-in information 1560 in FIG. 15) with which check=in to the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention can be identified, through a blank accommodation check-in information generation module (for example, blank accommodation check-in information generation module 1260 in FIG. 12), and transmitting the generated blank accommodation check-in information (for example, blank accommodation check-in information 1560 in FIG. 15) to the blank accommodation management information indicator (for example, blank accommodation management information indicator 1550 in FIG. 15).

According to an embodiment, as one of accommodation sharing methods, "the method for checking in to and checking out of a blank accommodation" for the room or the house to be provided to the hotel by the traveler and sold to the netizen may include a step of generating, from the blank accommodation sales amount deposit information generation module (for example, blank accommodation sales amount deposit information generation module 680 in FIG. 8), blank accommodation check-out information (for example, blank accommodation check-out information 1570 in FIG. 15) with which check-out of the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention can be identified, through a blank accommodation check-out information generation module (for example, blank accommodation check-out information generation module 1270 in FIG. 12), and transmitting the generated blank accommodation check-out information (for example, blank accommodation check-out information 1570 in FIG. 15) to the blank accommodation management information indicator (for example, blank accommodation management information indicator 1550 in FIG. 15).

According to an embodiment of the present invention, as one of accommodation sharing methods, more specifically, there is provided "a method for managing detect of a blank accommodation" for a room or a house to be provided to a hotel by a traveler and sold to a netizen. The method may include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permitting access for the identified user account (for example, user account 1402 in FIG. 14) on a network, and generating information on permission, through one or more access modules of a blank accommodation rent (sale) account access module(for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of outputting, on a screen of a user terminal, contents information on images, videos, audio, and the like for the room (or house) provided to the hotel by the traveler among accommodations or rooms (or houses) to be identified by a possession right encryption code (for example, possession right encryption code 1120 in FIG. 11) and block data (for example, block data 520 in FIG. 5) for implementing the present invention, through a blank accommodation contents information indicator (for example, blank accommodation contents information indicator 1540 in FIG. 15) of the blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the possession right encryption code (for example, possession right encryption code 1120 in FIG. 11) and the block data (for example, block data 520 in FIG. 5) for implementing the present invention, through the blank accommodation management information indicator (for example, blank accommodation management information indicator 1550 in FIG. 15).

According to an embodiment, as one of accommodation sharing methods, "the method for managing detect of a blank accommodation" for the room or the house to be provided to the hotel by the traveler and sold to the netizen may include a step of generating blank accommodation defect occurrence information (for example, blank accommodation defect occurrence information 1585 in FIG. 15) with which the occurrence of a defect for the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention can be identified, and transmitting the generated blank accommodation defect occurrence information (for example, blank accommodation defect occurrence information 1585 in FIG. 15) to the blank accommodation management information indicator (for example, blank accommodation management information indicator 1550 in FIG. 15), through a blank accommodation defect occurrence information generation module (for example, blank accommodation defect occurrence information generation module 1580 in FIG. 15) of the blank accommodation management terminal (for example, blank accommodation management terminal 1240 in FIG. 12).

According to an embodiment, as one of accommodation sharing methods, "the method for managing detect of a blank accommodation" for the room or the house to be provided to the hotel by the traveler and sold to the netizen may include a step of generating blank accommodation defect occurrence information deletion information with which deletion of defect occurrence information for the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention can be identified, and transmitting the generated blank accommodation defect occurrence information deletion information to the blank accommodation management information indicator (for example, blank accommodation management information indicator 1550 in FIG. 15), through a blank accommodation defect occurrence information deletion module of the blank accommodation management terminal (for example, blank accommodation management terminal 1240 in FIG. 12).

According to an embodiment of the present invention, as one of accommodation sharing methods, more specifically, there is provided "the method for selling and purchasing a blank accommodation" for the room or the house to be provided to the hotel by the traveler and sold to the netizen. The method may include a step of identifying one or more IDs of a unique ID for a user account (for example, user account 1402 in FIG. 14) of the hotel, a unique ID for a user account (for example, user account 1402 in FIG. 14) of the traveler who provides the room (or house) to the hotel, and a unique ID for a user account (for example, user account 1402 in FIG. 14) who wants to purchase an authority to use the room (or house) provided to the hotel by the traveler, permitting access for the identified user account (for example, user account 1402 in FIG. 14) on a network, and generating information on permission, through one or more access modules of a blank accommodation rent (sale) account access module(for example, blank accommodation rent account access module 1210 in FIG. 12), a blank accommodation provision account access module (for example, blank accommodation provision account access module 1220 in FIG. 12), and a blank accommodation purchase account access module (for example, blank accommodation purchase account access module 1230 in FIG. 12) of a blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of outputting, on the screen of the user terminal, information such as a list, position information, check-in/check-out, sharing period information, presence or absence of vacancy, states of repair and maintenance, and information on the occurrence of defects, sales price information, and sales amount deposit information of rooms (or houses) provided to the hotel by travelers among accommodations or rooms (or houses) to be identified by the possession right encryption code (for example, possession right encryption code 1120 in FIG. 11) and the block data (for example, block data 520 in FIG. 5) for implementing the present invention, through the blank accommodation management information indicator (for example, blank accommodation management information indicator 1550 in FIG. 15) of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of setting a sales price of an authority to use the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention, through a blank accommodation sales price setting module (for example, blank accommodation sales price setting module 1610 in FIG. 16) of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of generating prescribed information for requesting purchase of an authority to use the room (or house) provided to the hotel by the traveler among the accommodations or the rooms (or houses) to be identified by the possession right encryption code (for example, possession right encryption code 1120 in FIG. 11) and the block data (for example, block data 520 in FIG. 5) for implementing the present invention, through a blank accommodation purchase module of the blank accommodation management terminal (for example, blank accommodation management terminal 1240 in FIG. 12).

According to an embodiment, as one of accommodation sharing methods, "the method for selling and purchasing a blank accommodation" for the room or the house to be provided to the hotel by the traveler and sold to the netizen may include a step of receiving and storing real currency such as dollar, won, yen, or euro and recording information for certification or receiving and storing an NFT (for example, NFT 1140 in FIG. 11) corresponding to the possession right encryption code (for example, possession right encryption code 1120 in FIG. 11) for implementing the present invention or an NFT (for example, NFT 1140 in FIG. 11) with another kind of blockchain and recording information for certification in a sales amount saving device (for example, sales amount saving device 1620 in FIG. 16) that is a device configured to record information for certification.

According to an embodiment, as one of accommodation sharing methods, "the method for selling and purchasing a blank accommodation" for the room or the house to be provided to the hotel by the traveler and sold to the netizen may include a step of receiving an amount of money corresponding to blank accommodation sales amount deposit information (for example, blank accommodation sales amount deposit information 681 in FIG. 8) generated by a blank accommodation sales amount deposit information generation module (for example, blank accommodation sales amount deposit information generation module 680 in FIG. 8) in a deposit account corresponding to prescribed deposit account information input from a prescribed used for implementing the present invention.

According to an embodiment, as one of accommodation sharing methods, "the method for selling and purchasing a blank accommodation" for the room or the house to be provided to the hotel by the traveler and sold to the netizen may include a step of generating, when an amount of money according to the sales price set by the blank accommodation sales price setting module (for example, blank accommodation sales price setting module 1610 in FIG. 16) is deposited into a sales amount saving device (for example, sales amount saving device 1620 in FIG. 16) configured to deposit the amount of money according to the sales price, "blank accommodation sales amount deposit information (for example, blank accommodation sales amount deposit information 681 in FIG. 8)" with which information corresponding to the deposited amount of money can be identified, through the blank accommodation sales amount deposit information generation module (for example, blank accommodation sales amount deposit information generation module 680 in FIG. 8) of the blank accommodation management terminal (for example, blank accommodation management terminal 1240 in FIG. 12).

According to an embodiment of the present invention, as one of accommodation sharing methods, more specifically, there is provided a method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers. The method may include a step of inputting either of an address or a zip code for identifying latitude and longitude on an area where a traveler will visit (travel), through a visit candidate area position information input module (for example, visit candidate area position information input module 920 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of outputting, on a screen of a user terminal, an address list or a zip code list related to the address or the zip code input through the visit candidate area position information input module (for example, visit candidate area position information input module 920 in FIG. 10) (or an address or a zip code input through a QR code, a one-dimensional barcode, a two-dimensional code, or the like).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of selecting at least one address or zip code from the address list or the zip code list output on the screen of the user terminal, through a visit candidate area position information selection module (for example, visit candidate area position information selection module 930 in FIG. 10).

According to an embodiment, as one of accommodation sharing methods, method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may perform a subsequent step through a visit candidate area geographical information identification module (for example, visit candidate area geographical information identification module 940 in FIG. 10). The method may include a step of identifying latitude or longitude information on the address or the zip code selected by the visit candidate area position information selection module (for example, visit candidate area position information selection module 930 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may perform a subsequent step through a visit candidate area radius setting module (for example, visit candidate area radius setting module 950 in FIG. 10), and may include a step of setting a size of a radius around a position corresponding to the latitude or longitude identified by the visit candidate area geographical information identification module (for example, visit candidate area geographical information identification module 940 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of setting, when a traveler will visit (or travel) a plurality of areas or will share a plurality of accommodations in the areas, a usage start date of an accommodation to share first and a usage end date of an accommodation to share last or setting, when the traveler will visit (or travel) one area or will share one accommodation in the area, a usage start date and a usage end date of the area or the accommodation, through a visit period setting module (for example, visit period setting module 960 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of collectively setting, when there are a plurality of accommodations to share in an area where the traveler will visit (or travel), usage periods on the plurality of accommodations, through a visit candidate accommodation usage unit setting module (for example, visit candidate accommodation usage unit setting module 970 in FIG. 10).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of generating sharing application information (for example, sharing application information 511 in FIG. 5) for pairing the room (or house) provided by the hotel and the room (or house) provided by the traveler to share accommodations, through a block accommodation sharing application module (for example, block accommodation sharing application module 515 in FIGS. 5 and 11).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of transmitting the generated sharing application information (for example, sharing application information 511 in FIG. 5) to a block accommodation sharing approval module (for example, block accommodation sharing approval module 510 in FIG. 5) through a block accommodation sharing application module (for example, block accommodation sharing application module 515 in FIGS. 5 and 11).

According to an embodiment, as one of accommodation sharing methods, the method for generating a possession right encryption code (for example, possession right encryption code 1120 in FIG. 11) and block data (for example, block data 520 in FIG. 5) corresponding to a block (for example, block 911 in FIG. 10) including an accommodation provided by at least one hotel and a room (or a house) provided by at least one traveler in a pair to mutually share existing commercial accommodations in operation and accommodations or rooms (or houses) to be provided by travelers may include a step of receiving the sharing application information (for example, sharing application information 511 in FIG. 5) from the block accommodation sharing application module (for example, block accommodation sharing application module 515 in FIGS. 5 and 11), generating sharing approval information (for example, sharing approval information 512 in FIG. 5) for approving conclusion of a sharing transaction of accommodations related to the received sharing application information (for example, sharing application information 511 in FIG. 5), recording, in the form of block data (for example, block data 520 in FIG. 5), tag information (for example, tag information 530 in FIG. 5) with which contents information on images, videos, audio, and the like related to the accommodation provided by at least one hotel and the room (or house) provided by at least one traveler to be identified by the generated sharing approval information (for example, sharing approval information 512 in FIG. 5) and management information on names, a list, position information, check-in/check-out, sharing period information, presence or absence of vacancy, states of repair and maintenance, and the like of the accommodations can be identified or the contents information on the images, videos, audio, and the like and the management information on the names, list, position information, check-in/check-out, sharing period information, presence or absence of vacancy, states of repair and maintenance, and the like of the accommodations or generating a possession right encryption code (for example, possession right encryption code 1120 in FIG. 11) and an NFT (for example, NFT 1140 in FIG. 11) according to the possession right encryption code (for example, possession right encryption code 1120 in FIG. 11).

According to an embodiment, a block accommodation possession right exchange device (for example, block accommodation possession right exchange device 1160 in FIG. 11) may configure a block accommodation door lock device (for example, block accommodation door lock device 1280 in FIG. 12), a block accommodation entrance/exit protocol (for example, block accommodation entrance/exit protocol 1940 in FIG. 19), block accommodation entrance/exit protocol (for example, block accommodation entrance/exit protocol 1940 in FIG. 19), a block accommodation frequency reader (for example, block accommodation frequency reader 1960 in FIG. 19), a block accommodation barcode information reader (for example, block accommodation barcode information reader 1970 in FIG. 19), a block accommodation vision information reader (for example, block accommodation vision information reader 1980 in FIG. 19), a block accommodation entrance/exit protocol management device (for example, block accommodation entrance/exit protocol management device 2010 in FIG. 20), and the like.

According to an embodiment, the block accommodation possession right exchange device (for example, block accommodation possession right exchange device 1160 in FIG. 11) may configure a guestroom entrance/exit management device (for example, guestroom entrance/exit management device 1920 in FIG. 19), a block accommodation door lock device (for example, block accommodation door lock device 1280 in FIG. 12), a block accommodation entrance/exit protocol (for example, block accommodation entrance/exit protocol 1940 in FIG. 19), a block accommodation entrance/exit protocol (for example, block accommodation entrance/exit protocol 1940 in FIG. 19), a block accommodation frequency reader (for example, block accommodation frequency reader 1960 in FIG. 19), a block accommodation barcode information reader (for example, block accommodation barcode information reader 1970 in FIG. 19), a block accommodation vision information reader (for example, block accommodation vision information reader 1980 in FIG. 19), a block accommodation entrance/exit protocol management device (for example, block accommodation entrance/exit protocol management device 2010 in FIG. 20), and the like.

An electronic device according to an embodiment of the present disclosure is an accommodation sharing device, and may include a communication module configured to perform open or closed communication with external electronic devices, a processor configured to control an operation of the communication module, and a memory operatively connected to the processor. The memory may include instructions. When the instructions are executed by the processor, the electronic device may be configured to generate a unique contents ID (CID) in linking with the Internet or a closed network. When the instructions are executed by the processor, the electronic device may be configured to generate at least two pieces of latitude information and two or more pieces of longitude information. When the instructions are executed by the processor, the electronic device may be configured to generate one unique ID corresponding to any one house or a room of the house positioned in coordinates corresponding to one latitude and one longitude among at least two pieces of latitude information and at least two pieces of longitude information. When the instructions are executed by the processor, the electronic device may be configured to generate one or more pieces of block data including specific service gates with which a position of specific block data on a network is able to be identified or specific tag information with which specific service gates are able to be identified.

According to the embodiment, when the instructions are executed by the processor, the electronic device may be configured to record, in specific block data, one piece of first usage start date information and one piece of last usage end date information as data corresponding to the specific service gate.

According to the embodiment, when the instructions are executed by the processor, the electronic device may be configured to record, in the block data, time information of any one of past, current, and future as data corresponding to the specific service gate.

According to the embodiment, when the instructions are executed by the processor, the electronic device may be configured to identify one latitude and one longitude through any one of an address, a zip code, a QR code, and a barcode. When the instructions are executed by the processor, the electronic device may be configured to record, in one or more pieces of block data, coordinate information corresponding to the identified latitude and longitude as data corresponding to the specific service gate or a specific unique CID.

According to the embodiment, when the instructions are executed by the processor, the electronic device may be configured to generate size information of a radius from coordinates corresponding to one latitude and one longitude. When the instructions are executed by the processor, the electronic device may be configured to record, in one or more pieces of block data, the size information of the radius from the coordinates corresponding to one latitude and one longitude as data corresponding to the specific service gate or a specific unique CID.

According to the embodiment, when the instructions are executed by the processor, the electronic device may be configured to generate height information or information on a floor of a building from coordinates corresponding to one latitude and one longitude for a house or a room of the house. When the instructions are executed by the processor, the electronic device may be configured to record, one or more pieces of block data, the height information or information on the floor of the building from the coordinates corresponding to one latitude and one longitude for the house or the room of the house as data corresponding to the specific service gate or a specific unique CID.

According to the embodiment, when the instructions are executed by the processor, the electronic device may be configured to generate one or more pieces of usage start date information and one or more pieces of usage end date information for a house or a room of the house. When the instructions are executed by the processor, the electronic device may be configured to record, in the block data, one or more pieces of usage start date information and one or more pieces of usage end date information for the house or the room of the house as data corresponding to the specific service gate or a specific unique CID.

According to the embodiment, when the instructions are executed by the processor, the electronic device may further include a function of collectively recording, in block data, usage period information in units of the same number for houses or rooms of the houses corresponding to two or more different unique CIDs as data corresponding to the specific service gate or a specific unique CID.

According to the embodiment, when the instructions are executed by the processor, the electronic device may be configured to generate block data including two or more pieces of latitude information and two or more pieces of longitude information, two or more different unique CIDs, specific service gates, or tag information with which the specific service gate can be identified, in a pair. When the instructions are executed by the processor, the electronic device may be configured to generate sharing approval information corresponding to the block data to be generated. When the instructions are executed by the processor, the electronic device may be configured to record the generated sharing approval information in specific block data.

According to the embodiment, when the instructions are executed by the processor, the electronic device may be configured to generate a dedicated web page on which data of the block data can be accessed when the block data is generated.

According to the embodiment, the electronic device may further include one or more of a load balancer and a cash server that stores the block data or part of data recorded in the block data.

According to the embodiment, when the instructions are executed by the processor, the electronic device may be configured to record, in specific block data, a plurality of pieces of usage start date and a plurality of pieces of usage end date information for allowing multiple users to sequentially share house possession right information without interruption.

According to the embodiment, when the instructions are executed by the processor, the electronic device may be configured to register information on a first candidate house or a room of the house to be provided to a second user by a first user. When the instructions are executed by the processor, the electronic device may be configured to register information on a second candidate house or a room of the house to be provided to the first user by the second user. When the instructions are executed by the processor, the electronic device may be configured to record, in the specific block data, information on the first candidate house or the room of the house and information on the second candidate house or the room of the house if the first candidate house or the room of the house matches the second candidate house or the room of the house, and a first security for securing provision of the first candidate house or the room of the house and a second security for securing provision of the second candidate house or the room of the house are paid.

According to the embodiment, when the instructions are executed by the processor, the electronic device may be configured to register information on a first candidate house or a room of the house to be provided by a first user. When the instructions are executed by the processor, the electronic device may be configured to register information on a room of a commercial candidate accommodation that the first user wants to use. When the instructions are executed by the processor, the electronic device may be configured to record, in the specific block data, information on the first candidate house or the room of the house and information on the room of the commercial candidate accommodation if the first candidate house or the room of the house matches the room of the commercial candidate accommodation.

According to the embodiment, when the instructions are executed by the processor, the electronic device may further include a function of matching the first candidate house or the room of the house and the room of the commercial candidate accommodation if deposit information on a sales amount of a possession right of the first candidate house or the room of the house is confirmed.

An electronic device according to an embodiment of the present disclosure is an accommodation sharing device using a blockchain, and may include a communication module configured to perform open or closed communication with external electronic devices, a processor configured to control an operation of the communication module, and a memory operatively connected to the processor. The memory may include instructions. When the instructions are executed by the processor, the electronic device may be configured to generate a first CID including information on a first house or a room of the house provided by a first user. When the instructions are executed by the processor, the electronic device may be configured to generate a blockchain of block houses including specific tag information with which the first CID can be identified, in a pair if a first security for securing provision of the first house or the room of the house is paid. When the instructions are executed by the processor, the electronic device may be configured to generate a blockchain for transferring a possession right of the first house or the room of the house in a form of a non-fungible token (NFT) and providing the NFT to the first user.

According to the embodiment, when the instructions are executed by the processor, the electronic device may be configured to generate a second CDI including information on a second house or a room of the house provided by a second user after the blockchain is generated. When the instructions are executed by the processor, the electronic device may be configured to match the first house or the room of the house and the second house or the room of the house. When the instructions are executed by the processor, the electronic device may be configured to record, in the blockchain, specific tag information with which the second CID can be identified if a second security for securing provision of the second house or the room of the house is paid. When the instructions are executed by the processor, the electronic device may be configured to generate a blockchain for transferring a possession right of the second house or the room of the house in a form of an NFT and provide the NFT to the second user.

According to the embodiment, the first security and the second security may be paid by designated currency, an NFT, or an FT.

According to the embodiment, when the instructions are executed by the processor, the electronic device may be configured to record, in the blockchain, one piece of first usage start date information and one piece of last usage end date information as data corresponding to the specific service gate.

According to the embodiment, when the instructions are executed by the processor, the electronic device may be configured to identify one latitude and one longitude through one or more of an address, a zip code, a QR code, and a barcode. When the instructions are executed by the processor, the electronic device may be configured to record coordinate information corresponding to the identified latitude and longitude in one or more blockchains.

According to the embodiment, when the instructions are executed by the processor, the electronic device may be configured to generate size information of one radius from coordinates corresponding to one latitude and one longitude. When the instructions are executed by the processor, the electronic device may be configured to record, in one or more blockchains, the size information of one radius from the coordinates corresponding to one latitude and one longitude.

According to the embodiment, when the instructions are executed by the processor, the electronic device may be configured to generate first height information or information on a floor of a building from coordinates corresponding to one latitude and one longitude for the first house or the room of the house. When the instructions are executed by the processor, the electronic device may be configured to generate second height information or information on a floor of a building from coordinates corresponding to one latitude and one longitude for the second house or the room of the house. When the instructions are executed by the processor, the electronic device may be configured to record, in the blockchain, the first height information or the information on the floor of the building for the first house or the room of the house and the second height information or the information on the floor of the building for the second house or the room of the house.

According to the embodiment, when the instructions are executed by the processor, the electronic device may be configured to generate one or more pieces of usage start date information and one or more pieces of usage end date information for the first house or the room of the house. When the instructions are executed by the processor, the electronic device may be configured to generate one or more pieces of usage start date information and one or more pieces of usage end date information for the second house or the room of the house. When the instructions are executed by the processor, the electronic device may be configured to record, in the blockchain, one or more pieces of usage start date information and usage end date information for the first house or the room of the house and one or more pieces of usage start date information and usage end date information for the second house or the room of the house.

According to the embodiment, when the instructions are executed by the processor, the electronic device may be configured to generate block data including two or more pieces of latitude information and two or more pieces of longitude information, two or more different unique CIDs, specific service gates, or tag information with which the specific service gates can be identified, in a pair. When the instructions are executed by the processor, the electronic device may be configured to generate sharing approval information corresponding to the block data to be generated. When the instructions are executed by the processor, the electronic device may record the generated sharing approval information in the blockchain.

According to an embodiment, when the instructions are executed by the processor, the electronic device may be configured to generate, when a plurality of pieces of usage start date information and usage end date information are recorded in a blockchain, block houses for transferring a possession right of a specific house or a room of the house to multiple users in a form of a blockchain in an order of recorded date.

According to the embodiment, when the instructions are executed by the processor, the electronic device may be configured to verify an electronic copy of a blockchain corresponding to an NFT for transferring a possession right of the first house or the room of the house and the second house or the room of the house using an open network. As means for verifying validity of the electronic copy, at least one of a possession right encryption code, a block management fee saving device identification code, and service gate information may be used.

According to the embodiment, when the instructions are executed by the processor, the electronic device may be configured to verify an electronic copy of a blockchain corresponding to an NFT for transferring a possession right of the first house or the room of the house and the second house or the room of the house. A first node of the first user and a second node of the second user may be directly connected via the closed network. When the instructions are executed by the processor, the electronic device may be configured to decode a possession right encryption code at the first node and the second node to verify the electronic copy of the NFT.

According to the embodiment, the NFT for transferring the possession right of the first house or the room of the house and the second house or the room of the house may further include a function that can transfer the whole or a part of a usage period of an available house or a room or the house or a room of a commercial accommodation.

According to the embodiment, the NFT for transferring the possession right of the first house or the room of the house and the second house or the room of the house may include at least one of a function of selling the NFT, a function of settling profit from the sale of the NFT, and a function of transferring the profit from the sale of the NFT.

According to the embodiment, the NFT for transferring the possession right of the first house or the room of the house and the second house or the room of the house may include a function of depositing a first security for securing provision of the first house or the room of the house, a second security for securing provision of the second house or the room of the house, and/or a third security for securing provision of the room of the commercial accommodation.

According to the embodiment, the NFT may include information for transferring a possession right of the first house or the room of the house of the first user and the second house or the room of the house of the second user or a room of a commercial accommodation. In selling the NF, a security for securing reception of a sales amount according to transmission of the NFT may be deposited by designated currency, an NFT, or an FT.

According to the embodiment, when the instructions are executed by the processor, the electronic device may further include a function of matching the first candidate house or the room of the house and the room of the commercial accommodation if deposit information on the sales amount of the possession right of the first candidate house or the room of the house is confirmed.

According to the embodiment, an electronic copy of the NFT for entrance and exit of the first house or the room of the house and a room of a commercial accommodation may be verified. A first node of the first user and a third node of the room of the commercial accommodation may be connected through the open network or the closed network. A possession right encryption code may be decoded at the first node and the third node to verify the electronic copy of the NFT.

An electronic device according to an embodiment of the present disclosure is an accommodation sharing device using a blockchain, and may include a communication module configured to perform open or closed communication with external electronic devices, a processor configured to control an operation of the communication module, and a memory operatively connected to the processor. The memory may include instructions. When the instructions are executed by the processor, the electronic device may be configured to a first CID including information on a first house or a room of the house provided by a first user. When the instructions are executed by the processor, the electronic device may be configured to generate a blockchain of block houses including specific tag information with which the first CID can be identified, in a pair if a first security for securing provision of the first house or the room of the house is paid. When the instructions are executed by the processor, the electronic device may be configured to generate a blockchain of block houses including specific tag information with which the first CID can be identified, in a pair if a first security for securing provision of the first house or the room of the house is paid. When the instructions are executed by the processor, the electronic device may be configured to generate a blockchain for transferring a possession right of the first house or the room of the house in a form of an NFT. When the instructions are executed by the processor, the electronic device may be configured such that information for operation control of a first door lock device of the first house or the room of the house is included in the NFT. When the instructions are executed by the processor, the electronic device may be configured to provide the NFT to the first user.

According to the embodiment, when the instructions are executed by the processor, the electronic device may be configured to generate a second CID including information on a second house or a room of the house provided by a second user after the blockchain is generated. When the instructions are executed by the processor, the electronic device may be configured to match the first house or the room of the house and the second house or the room of the house. When the instructions are executed by the processor, the electronic device may be configured to record, in the blockchain, specific tag information with which the second CID can be identified if a second security for securing provision of the second house or the room of the house is paid. When the instructions are executed by the processor, the electronic device may be configured to generate a blockchain for transferring a possession right of the second house or the room of the house in a form of an NFT. When the instructions are executed by the processor, the electronic device may be configured such that information for operation control of a second door lock device of the second house or the room of the house is included in the NFT.

According to the embodiment, the electronic device may further include an automobile key that can store an electronic copy as a first node for an operation of the first door lock device and a second node for an operation of the second door lock device.

According to the embodiment, the automobile key may include at least one of an RFID smart card, an NFC, an RF, an IR, and a microcomputer function.

According to the embodiment, when the instructions are executed by the processor, the electronic device may be configured to record, in the blockchain, one piece of first usage start date information and one piece of last usage end date information as data corresponding to the specific service gate.

According to the embodiment, when the instructions are executed by the processor, the electronic device may be configured to identity one latitude and one longitude through one or more of an address, a zip code, a QR code, and a barcode. When the instructions are executed by the processor, the electronic device may be configured to record coordinate information corresponding to the identified latitude and longitude in one or more blockchains.

According to the embodiment, when the instructions are executed by the processor, the electronic device may be configured to generate size information of one radius from coordinates corresponding to one latitude and one longitude. When the instructions are executed by the processor, the electronic device may be configured to record the size information of one radius from the coordinates corresponding to one latitude and one longitude in one or more of blockchains.

According to the embodiment, when the instructions are executed by the processor, the electronic device may be configured to generate first height information or information on a floor of a building from coordinates corresponding to one latitude and one longitude for the first house or the room of the house. When the instructions are executed by the processor, the electronic device may be configured to generate second height information or information on a floor of a building from coordinates corresponding to one latitude and one longitude for the second house or the room of the house. The first height information or the information on the floor of the building for the first house or the room of the house and the second height information or the information on the floor of the building for the second house or the room of the house may be recorded in the blockchain.

According to the embodiment, when the instructions are executed by the processor, the electronic device may be configured to generate one or more pieces of usage start date information and one or more pieces of usage end date information for the first house or the room of the house. One or more pieces of usage start date information and one or more pieces of end date information for the second house or the room of the house may be generated. When the instructions are executed by the processor, the electronic device may be configured to record, in the blockchain, one or more pieces of usage start date information and one or more pieces of usage end date information for the first house or the room of the house and one or more pieces of usage start date information and one or more pieces of usage end date information for the second house or the room of the house.

According to the embodiment, when the instructions are executed by the processor, the electronic device may be configured to generate block data including two or more pieces of latitude information and two or more pieces of longitude information, two or more different unique CIDs, specific service gates, or tag information with which the specific service gates can be identified, in a pair. When the instructions are executed by the processor, the electronic device may be configured to generate sharing approval information corresponding to the block data to be generated. When the instructions are executed by the processor, the electronic device may be configured to record the generated sharing approval information in the blockchain.

According to the embodiment, when the instructions are executed by the processor, the electronic device may be configured to generate, when a plurality of pieces of usage start date information and a plurality of pieces of usage end date information are recorded in a blockchain, block accommodations for transferring a possession right of a specific house or a room of the house to multiple users in a form of a blockchain in an order of recorded date.

According to the embodiment, when the instructions are executed by the processor, the electronic device may be configured to verify an electronic copy of a blockchain corresponding to an NFT for transferring a possession right of the first house or the room of the house and the second house or the room of the house using an open network. When the instructions are executed by the processor, the electronic device may be configured such that at least one of a possession right encryption code, a block management fee saving device identification code, and service gate information is used as means for verifying validity of the electronic copy.

According to the embodiment, when the instructions are executed by the processor, the electronic device may be configured to verify an electronic copy of a blockchain corresponding to an NFT for transferring a possession right of the first house or the room of the house and the second house or the room of the house. A first node of the first user and a second node of the second user may be directly connected via the closed network. When the instructions are executed by the processor, the electronic device may be configured to decode a possession right encryption code at the first node and the second node to verify the electronic copy of the NFT.

According to the embodiment, when the instructions are executed by the processor, the electronic device may be configured such that the NFT for transferring a possession right of the first house or the room of the house and the second house or the room of the house further includes a function capable of a whole or a part of a usage period of an available house or a room of the house or a room of a commercial accommodation.

According to the embodiment, when the instructions are executed by the processor, the electronic device may be configured such that the NFT for transferring the possession right of the first house or the room of the house and the second house or the room of the house includes at least one of a function of selling the NFT, a function of settling profit from the sale of the NFT, and a function of transferring the profit from the sale of the NFT.

According to the embodiment, the NFT for transferring the possession right of the first house or the room of the house and the second house or the room of the house may include a function of depositing a first security for securing provision of the first house or the room of the house, a second security for securing provision of the second house or the room of the house, and/or a third security for securing provision of the room of the commercial accommodation.

According to the embodiment, the NFT may include information for transferring a possession right of a first house or a room of the house of the first user and a second house or a room of the house of the second user or a room of a commercial accommodation. In selling the NF, a security for securing reception of a sales amount according to transmission of the NFT may be deposited by designated currency, an NFT, or an FT.

According to the embodiment, when the instructions are executed by the processor, the electronic device may further include a function of matching the first candidate house or the room of the house and the room of the commercial accommodation if deposit information on a sales amount of a possession right of the first candidate house or the room of the house is confirmed.

According to the embodiment, when the instructions are executed by the processor, the electronic device may be configured such that information for controlling an operation of a third door lock device of the room of the commercial accommodation may be included in the NFT.

According to the embodiment, an electronic copy of the NFT for entrance and exit of the first house or the room of the house and the room of the commercial accommodation may be verified. A first node of the first user and a third node of the room of the commercial node may be connected via the open network or the closed network. The possession right encryption code may be decoded at the first node and the third node to verify the electronic copy of the NFT.

According to the present invention, since travelers for travel purposes mutually provide rooms (or houses) for free, there is an effect of allowing people to share their houses (or rooms) that are blank during travel.

With a function of configuring two or more rooms (or houses) as a single accommodation, even for a shared accommodation having more rooms (or houses), since a single web page is generated per shared accommodation configured as a single accommodation, there is an effect of further reducing the loss of network resources compared to the related art in which a web page is generated per individual accommodation.

There is an effect of preventing unilateral information change on the usage conditions of rooms (or houses) while travelers are moving to rooms (or houses) at long distances by airplane to visit the rooms (or house) or are using the rooms (or houses) after a transaction of mutual sharing rooms (or houses) provided by the travelers is concluded.

As described above, according to the present invention, it can be understood that commercial hotels or the like are intended to provide accommodations to people who use the facilities for fees, and are not basically intended to share accommodations with houses (or rooms) of people for travel purposes.

Nevertheless, according to the present invention, since accommodation facilities such as commercial hotels provide rooms to people for travel purposes for free, there is an effect of allowing people to share their houses (or rooms) that are blank during travel, with rooms of commercial accommodation facilities such as hotels.

Furthermore, there is an effect of allowing travelers with rooms from a hotel to have the hotel sell their houses (or rooms) that are blank during travel, as guesthouses.

When an accommodation facility such as a commercial hotel provides rooms to travelers for free, there is significant social impact, and the hotel can obtain enormous public relations effects during which the rooms are provided to the travelers.

In addition, the hotel can obtain public relations effect not only in an area where the hotels are located, but also in each area where the house (or room) provided by the traveler is located or each time the hotel uses the room (or house) provided by the traveler.

Moreover, the hotel can cover part of the cost of guestrooms provided to people by the hotel by selling the rooms (or houses) provided to the hotel by the travelers as guesthouses or can obtain a profit in some cases.

There is an effect of preventing unilateral information change on the usage conditions of rooms (or houses) while travelers are moving to rooms (or houses) at long distances by airplane to visit the rooms (or house) or are using the rooms (or houses) after a transaction of sharing rooms (or houses) mutually provided by the travelers is concluded.

There is an effect of reducing the loss of network resources due to advanced computer calculation required to interpret cryptography for maintaining an electronic copy of a blockchain stored at each of several nodes as the same information to prevent unilateral information change or forgery and falsification.

There is an effect of preventing unilateral information change or forgery and falsification on the usage conditions of accommodations or rooms (or houses) while travelers are moving to accommodations or rooms (or houses) at long distances by airplane or are using the accommodations or the rooms (or houses) after a transaction for sharing accommodations provided by a hotel and rooms (or houses) provided by travelers is concluded.

There is an effect of reducing the loss of network resources due to advanced computer calculation required to interpret cryptography for maintaining an electronic copy of a blockchain stored at each of several nodes as the same information to prevent unilateral information change or forgery and falsification.

According to the present invention, since travelers for travel purposes mutually provide rooms for free, there is an effect of allowing people to share their houses (or rooms) that are blank during travel.

Furthermore, there is an effect of simply transferring the whole or a part of an available period through an NFT (for example, NFT 1140 in FIG. 11) with respect to a possession right of a room (or a house) for sharing.

In addition, there is an effect of allowing a person to simply enter a door lock of a room (or a house) for sharing through means capable of carrying an NFT (for example, NFT 1140 in FIG. 11).

Moreover, there is an effect of reducing the loss of network resources with consumption of advanced computer calculation ability required to interpret cryptography for electronic copies mutually connected.

There is an effect of transferring the whole or a part of an available period to another person through an NFT (for example, NFT 1140 in FIG. 11) with respect to a possession right of an accommodation provided by a hotel or a room (or a house) provided by a traveler for sharing.

There is an effect of allowing a person to simply enter an accommodation using a function of unlocking or locking a door lock of an accommodation or a room (or a house) for sharing through a prescribed terminal in which an NFT (for example, NFT 1140 in FIG. 11) is stored.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 (for example, accommodation sharing device, electronic device including web server)). For example, a processor (e.g., the processor 120) of the machine (e.g., the electronic device 101 (for example, accommodation sharing device, electronic device including web server)) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Effects that may be obtained in the present disclosure are not limited to the effects described above, and other effects that are not described herein will become apparent to those skilled in the art from the description.

## Claims

1. An electronic device that is an accommodation sharing device using a blockchain, the electronic device comprising:
a communication module configured to perform open or closed communication with external electronic devices;
a processor configured to control an operation of the communication module; and
a memory operatively connected to the processor,
wherein the memory includes instructions, and
when the instructions are executed by the processor, the electronic device is configured to generate a first CID including information on a first house or a room of the first house provided by a first user,
generate a blockchain for block houses including specific tag information with which the first CID is able to be identified, in a pair if a first security for securing the first house or the room of the house is paid, and
generate a blockchain for transferring a possession right of the first house or the room of the house in a form of a non-fungible token (NFT) and provide the NFT to the first user.

2. The electronic device according to claim 1,
wherein, when the instructions are executed by the processor, the electronic device is configured to after the blockchain is formed,
generate a second CID including information on a second house or a room of the house provided by a second user, match the first house or the room of the house and the second house or the room of the house,
record, in the blockchain, specific tag information with which the second CID is able to be identified, if a second security for securing provision of the second house or the room of the house, and
generate a blockchain for transferring a possession right of the second house or the room of the house in a form of an NFT and provide the NFT to the second user.

3. The electronic device according to claim 1 or 2,
wherein the first security and the second security are paid by designated currency, an NFT, or an FT.

4. The electronic device according to any one of claims 1 to 3,
wherein, when the instructions are executed by the processor, the electronic device is configured to
record, in the blockchain, one piece of first usage start date information and one piece of last usage end date information as data corresponding to the specific service gate.

5. The electronic device according to any one of claims 1 to 4,
wherein, when the instructions are executed by the processor, the electronic device is configured to identify one latitude and one longitude through one or more of an address, a zip code, a QR code, and a barcode, and record, in one or more blockchains, coordinate information corresponding to the identified latitude and longitude.

6. The electronic device according to any one of claims 1 to 5,
wherein, when the instructions are executed by the processor, the electronic device is configured to generate size information on one radius from coordinates corresponding to one latitude and one longitude, and
record, in one or more blockchains, the size information on the one radius from the coordinates corresponding to the one latitude and the one longitude.

7. The electronic device according to any one of claims 1 to 6,
wherein, when the instructions are executed by the processor, the electronic device is configured to
generate first height information or information on a floor of a building from coordinates corresponding to one latitude and one longitude of the first house or the room of the house,
generate second height information or information on a floor of a building from coordinates corresponding to one latitude and one longitude of the second house or the room of the house, and
record, in the blockchain, the first height information or the information on the floor of the building of the first house or the room of the house and the second height information or the information on the floor of the building of the second house or the room of the house.

8. The electronic device according to any one of claims 1 to 7,
wherein, when the instructions are executed by the processor, the electronic device is configured to generate at least one piece of usage start date information and at least one piece of usage end date information on the first house or the room of the house,
generate at least one piece of usage start date information and at least one piece of usage end date information on the second house or the room of the house, and
record, in the blockchain, the at least one piece of usage start date information and usage end date information on the first house or the room of the house and the at least one piece of usage start date information and usage end date information on the second house or the room of the house.

9. The electronic device according to any one of claims 1 to 8,
wherein, when the instructions are executed by the processor, the electronic device is configured to
generate two or more pieces of latitude information and two or more pieces of longitude information, two or more different unique CIDs, and block data including specific service gates or tag information with which the specific service gates is able to be identified, in a pair,
generate sharing approval information corresponding to the generated block data, and
record the generated sharing approval information in the blockchain.

10. The electronic device according to any one of claims 1 to 9,
wherein, when the instructions are executed by the processor, the electronic device is configured to
generate, when a plurality of pieces of the usage start date information and usage end date information are recorded in a blockchain, block houses for transferring a possession right of a specific house or a room of the house to multiple users in a form of a blockchain in an order of a recorded date.

11. The electronic device according to any one of claims 1 to 10,
wherein, when the instructions are executed by the processor, the electronic device is configured to
verify an electronic copy of a blockchain corresponding to an NFT for possession right transfer of the first house or the room of the house and the second house or the room of the house using an open network, and
use, as means for verifying validity of the electronic copy, at least one of a possession right encryption code, a block management fee saving device identification code, and service gate information.

12. The electronic device according to any one of claims 1 to 11,
wherein, when the instructions are executed by the processor, the electronic device is configured to
verify an electronic copy of a blockchain corresponding to an NFT for possession right transfer of the first house or the room of the house and the second house or the room of the house,
a first node of the first user and a second node of the second user are directly connected via the closed network, and
the electronic device is configured to decrypt a possession right encryption code at the first node and the second node to verity an electronic copy of the NFT.

13. The electronic device according to any one of claims 1 to 12,
wherein, when the instructions are executed by the processor, the electronic device is configured such that
an NFT for possession right transfer of the first house or the room of the house 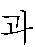 the second house or the room of the house further includes a function capable of transferring a whole or a part of an usage period of an available house or a room of the house and/or a room of a commercial accommodation.

14. The electronic device according to any one of claims 1 to 13,
wherein, when the instructions are executed by the processor, the electronic device is configured such that
an NFT for possession right transfer of the first house or the room of the house and the second house or the room of the house includes at least one of a function of selling the NFT, a function of settling profit from the sale of the NFT, and a function of transferring the profit from the sale of the NFT.

15. The electronic device according to any one of claims 1 to 14,
wherein an NFT for possession right transfer of the first house or the room of the house and the second house or the room of the house includes a function of depositing a first security for securing provision of the first house or the room of the house, a second security for securing provision of the second house or the room of the house, and/or a third security for securing provision of the room of the commercial accommodation.

16. The electronic device according to any one of claims 11 to 15,
wherein the NFT includes information for possession right transfer of the first house or the room of the house of the first user, a second house or a room of the house of the second user, and/or a room of a commercial accommodation, and
upon sale of the NF, a security for securing reception of a sales amount according to transmission of the NFT is deposited by designated currency, an NFT, or an FT.

17. The electronic device according to any one of claims 1 to 16,
wherein, when the instructions are executed by the processor, the electronic device includes
a function of matching, if deposit information on a sales amount of a possession right of the first candidate house or the room of the house is confirmed, the first candidate house or the room of the house and a room of the commercial candidate accommodation.

18. The electronic device according to any one of claims 1 to 17,
wherein an electronic copy of the NFT for entrance and exit of the first house or the room of the house and a room of a commercial accommodation is verified,
a first node of the first user and a third node of the room of the commercial accommodation are connected via the open network or the closed network, and
a possession right encryption code is decoded at the first node and the third node to verify the electronic copy of the NFT.
